# EUROPEAN PATENT APPLICATION

(11) **EP 4 628 384 A1**
(43) Date of publication of application: **08.10.2025**
(21) Application number: 23897529.6
(22) Date of filing: 16.11.2023
(51) Int. Cl.: B61B 13/00, B61B 7/00, B61B 7/02, B61B 13/06, B61D 47/00, B64C 37/00, B64C 39/02, B64D 1/22, B64D 9/00, B64U 10/13, B65G 1/00, B65G 61/00, B65G 67/00, B64U 101/64

(54) **CONVEYOR**

(30) Priority: 28.11.2022 JP 2022189542; 21.02.2023 JP 2023024815; 26.05.2023 JP 2023087122
(71) Applicant: Panasonic Intellectual Property Corporation of America, Torrance, CA 90504 (US)
(72) Inventor: OSHIMA, Mitsuaki, Kadoma-shi, Osaka 571-0057 (JP); AOYAMA, Hideki, Kadoma-shi, Osaka 571-0057 (JP); TAKAHAMA, Takuya, Kadoma-shi, Osaka 571-0057 (JP); MURAMATSU, Fumio, Kadoma-shi, Osaka 571-0057 (JP); SUMI, Yosuke, Kadoma-shi, Osaka 571-0057 (JP); AMAGAI, Ryosuke, Takatsuki-shi, Osaka 569-1194 (JP); KAJIKAWA, Tsuyoshi, Takatsuki-shi, Osaka 569-1194 (JP); IKEUCHI, Junya, Tokyo 163-0451 (JP); TANAKA, Hideki, Konan-shi, Aichi 483-8216 (JP)
(74) Representative: Eisenführ Speiser
(86) International application number: PCT/JP2023/041308
(87) International publication number: WO 2024/116878

(57) **Abstract**

A transport vehicle (3400) that transports packages includes: a first arm (3411); a second arm (3412); a first wheel (3411a) connected to the first arm (3411); a second wheel (3412a) connected to the second arm (3412); at least one actuator; and a controller (control processor (3420)). When the transport vehicle (3400) is slidably hung from the first rail (7a) via the first wheel (3411a) and the second wheel (3412a), the controller controls the at least one actuator (arm actuator (3413), roller actuation motor (3415)) to disengage the first wheel (3411a) from the first rail (7a) and place the first wheel (3411a) on the second rail (7b), and disengage the second wheel (3412a) from the first rail (7a) and place the second wheel (3412a) on the second rail (7b).

## Description

### [Technical Field]

The present disclosure relates to a transport vehicle.

### [Background Art]

Control methods have been proposed to enhance safety during flight of drones, which are unmanned aerial vehicles (see, for example, Patent Literature (PTL) 1).

PTL 1 discloses a technique for detecting abnormal drone flight by various means and recovering the abnormally flying drone using recovery means provided on power lines or utility poles.

### [Citation List]

### [Patent Literature]

[PTL 1] Japanese Unexamined Patent Application Publication No. 2018-12477

### [Summary of Invention]

### [Technical Problem]

The transport vehicle including the unmanned aerial vehicle disclosed in PTL 1 above can be improved upon.

Accordingly, the present disclosure provides a transport vehicle that improves upon the above related art.

### [Solution to Problem]

A transport vehicle according to one aspect of the present disclosure transports a package, and includes: a first arm; a second arm; a first wheel connected to the first arm; a second wheel connected to the second arm; at least one actuator that actuates the first wheel, the second wheel, the first arm, and the second arm; and a controller. When the transport vehicle is slidably hung from a first rail via the first wheel and the second wheel, the controller controls the at least one actuator to disengage the first wheel from the first rail and place the first wheel on a second rail, and disengage the second wheel from the first rail and place the second wheel on the second rail.

These general or specific aspects may be implemented as a transport vehicle, a system, a control method, an integrated circuit, a computer program, a computer-readable recording medium such as a CD-ROM, or any combination thereof.

### [Advantageous Effects of Invention]

The transport vehicle according to the present disclosure is capable of improving upon the related art.

### [Brief Description of Drawings]

[FIG. 1]

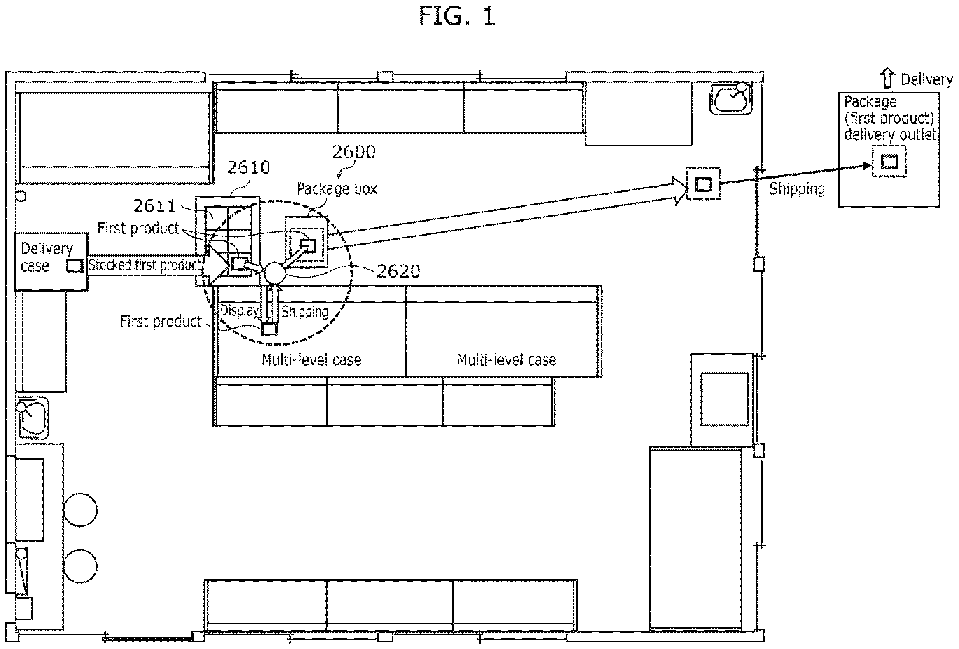

   FIG. 1 illustrates an example of a shipping system according to Embodiment 1.
[FIG. 2]

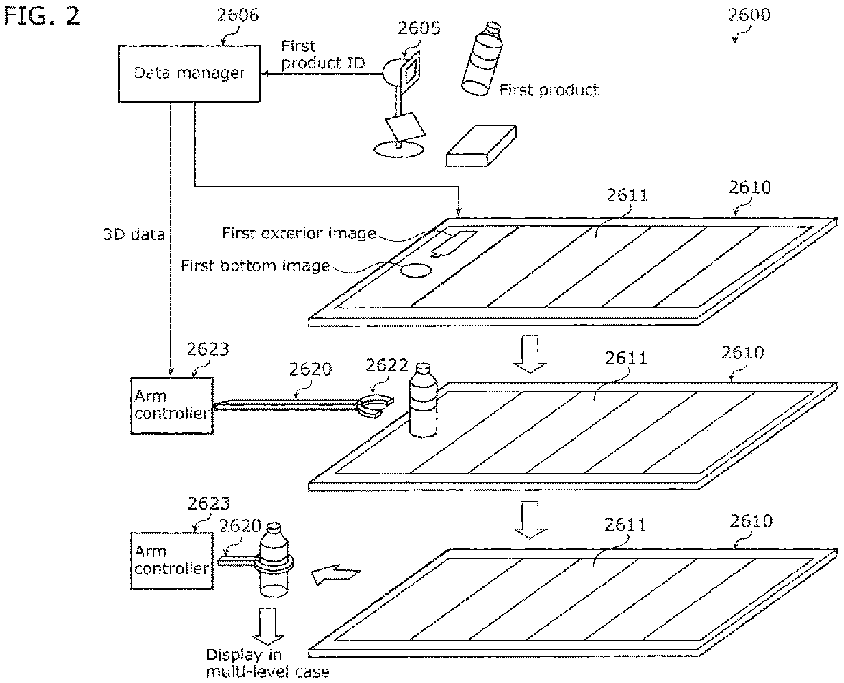

   FIG. 2 illustrates an example of a stocked first product being placed on a display device and displayed in a multi-level case in a shipping system according to Embodiment 1.
[FIG. 3]

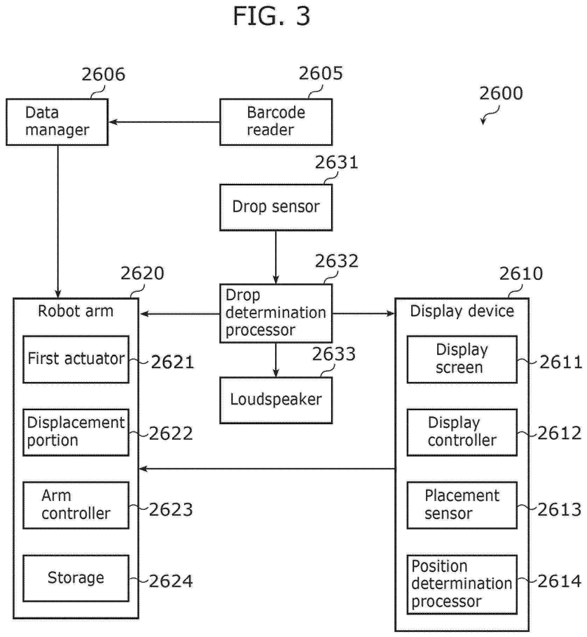

   FIG. 3 is a block diagram illustrating an example of a shipping system according to Embodiment 1.
[FIG. 4]

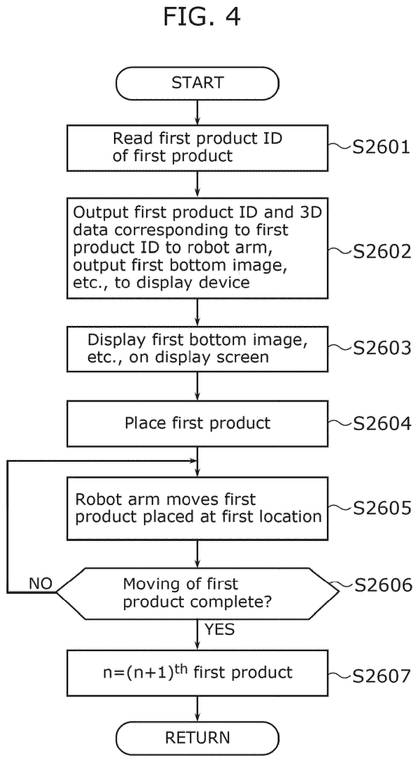

   FIG. 4 is a flowchart illustrating Operation Example 1 of the operation of a shipping system according to Embodiment 1.
[FIG. 5]

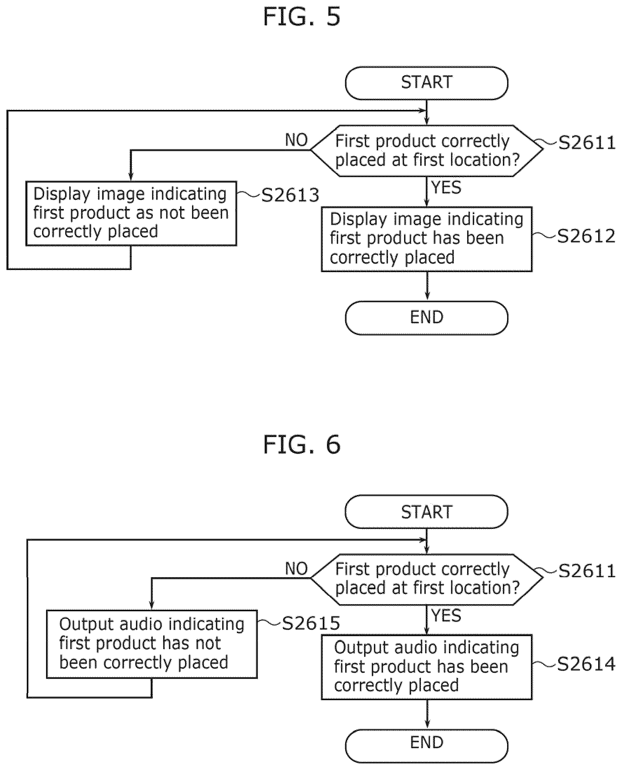

   FIG. 5 is a flowchart illustrating Operation Example 2 of the operation of a shipping system according to Embodiment 1.
[FIG. 6]
   FIG. 6 is a flowchart illustrating Operation Example 3 of the operation of a shipping system according to Embodiment 1.
[FIG. 7]

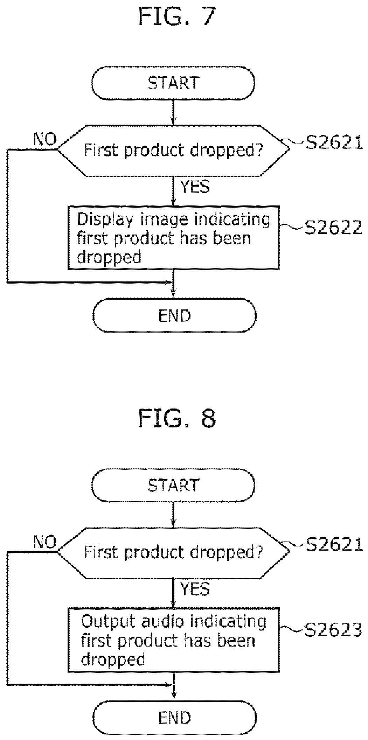

   FIG. 7 is a flowchart illustrating Operation Example 4 of the operation of a shipping system according to Embodiment 1.
[FIG. 8]
   FIG. 8 is a flowchart illustrating Operation Example 5 of the operation of a shipping system according to Embodiment 1.
[FIG. 9A]

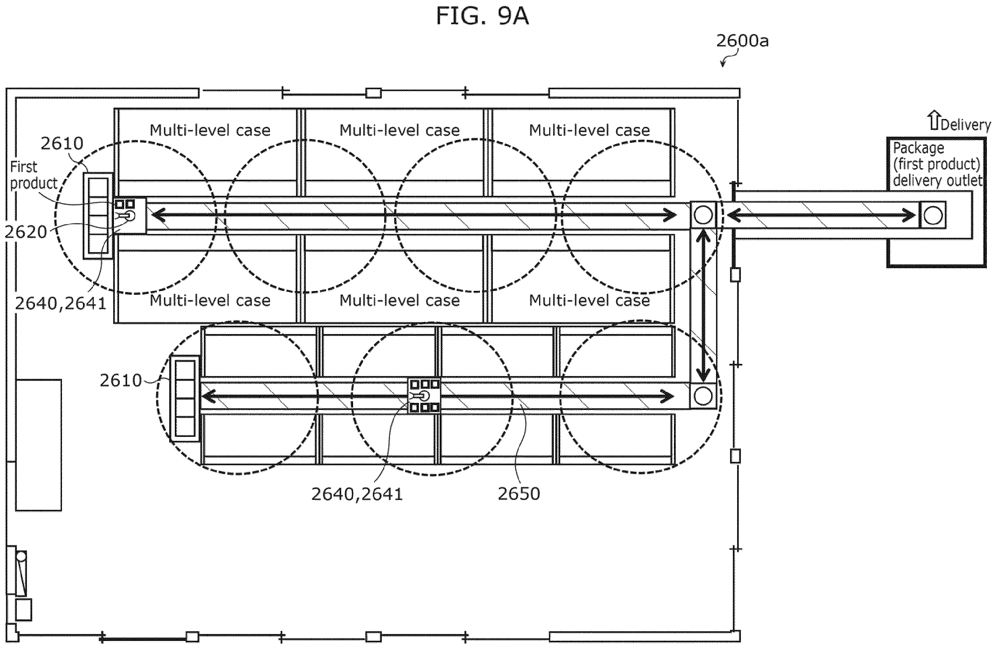

   FIG. 9A illustrates an example of a shipping system according to Variation 1 of Embodiment 1.
[FIG. 9B]

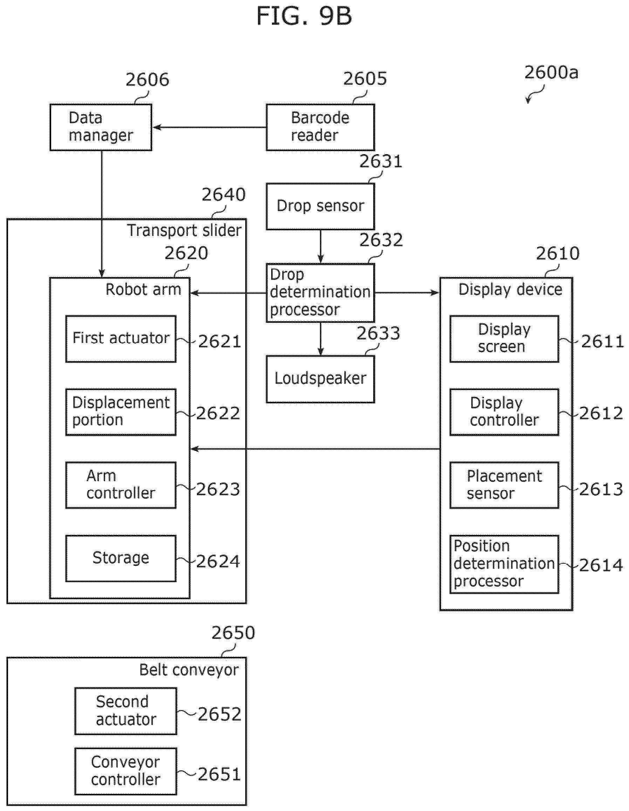

   FIG. 9B is a block diagram illustrating an example of a shipping system according to Variation 1 of Embodiment 1.
[FIG. 10A]

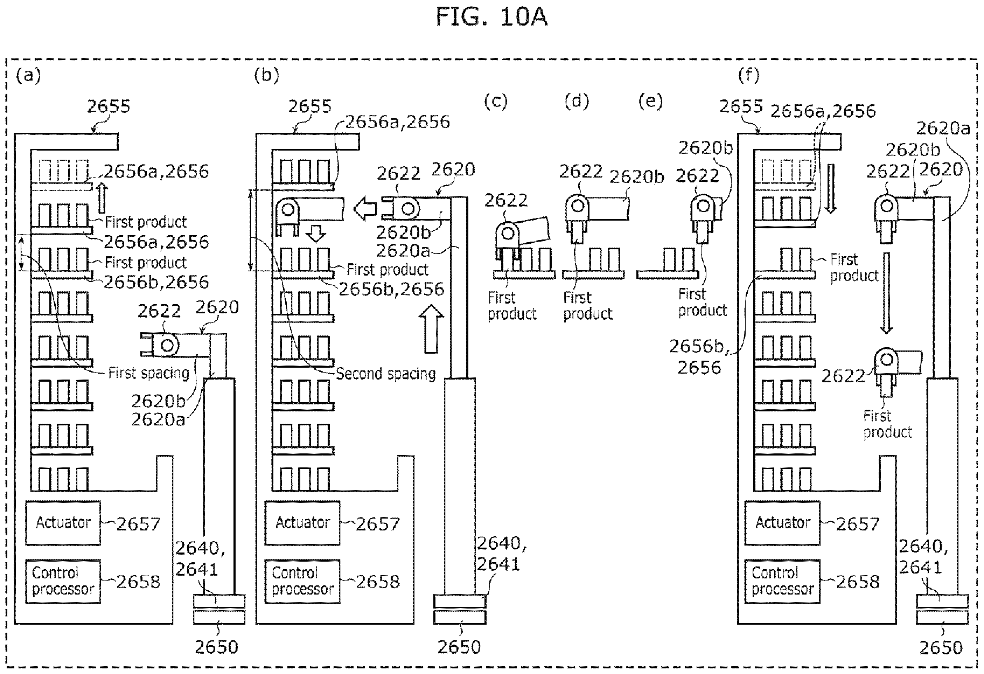

   FIG. 10A illustrates an example of a shipping system according to Variation 2 of Embodiment 1.
[FIG. 10B]

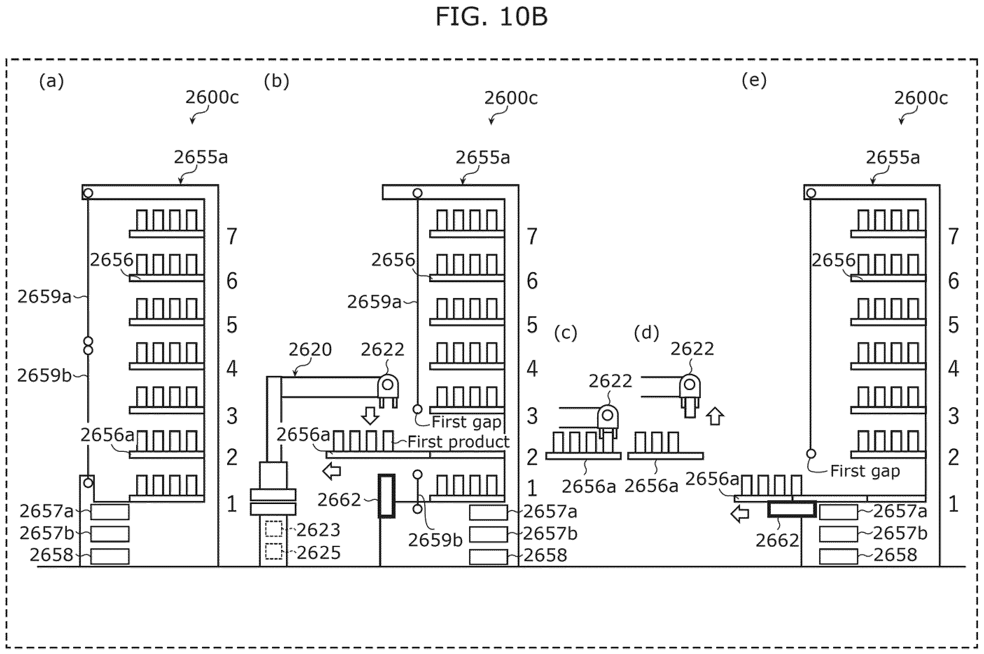

   FIG. 10B illustrates an example of a shipping system according to Variation 3 of Embodiment 1.
[FIG. 11]

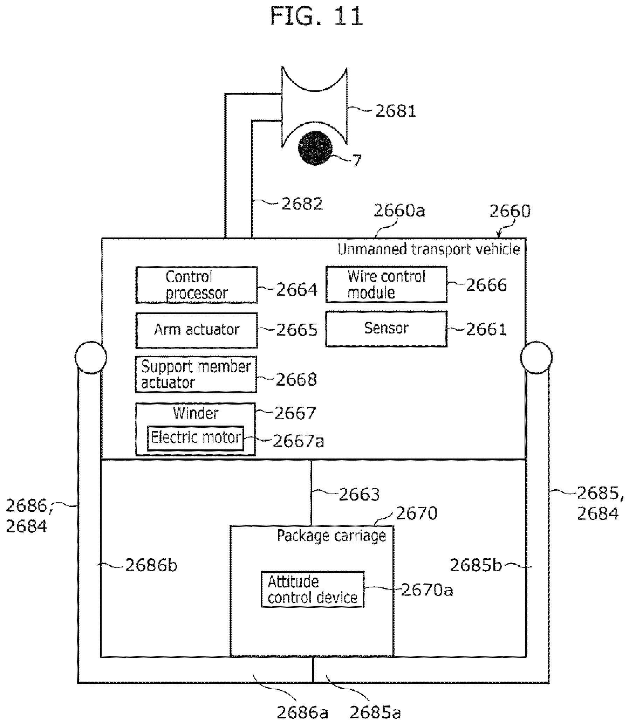

   FIG. 11 is a block diagram illustrating an example of unmanned transport vehicle according to Embodiment 2.
[FIG. 12A]

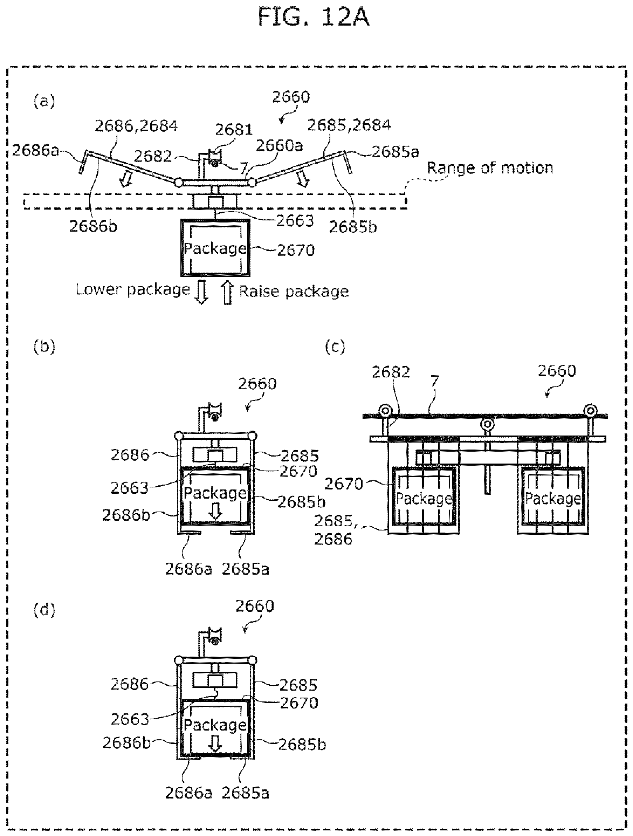

   FIG. 12A illustrates an example of the movement of a support structure and a wire of an unmanned transport vehicle according to Embodiment 2.
[FIG. 12B]

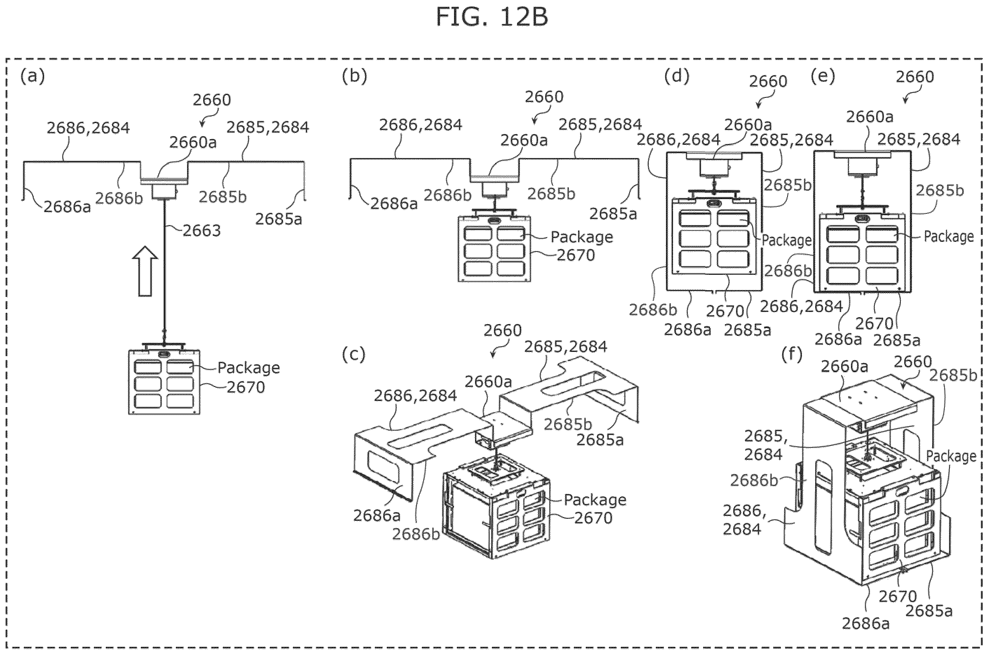

   FIG. 12B illustrates another example of the movement of a support structure and a wire of an unmanned transport vehicle according to Embodiment 2.
[FIG. 13A]

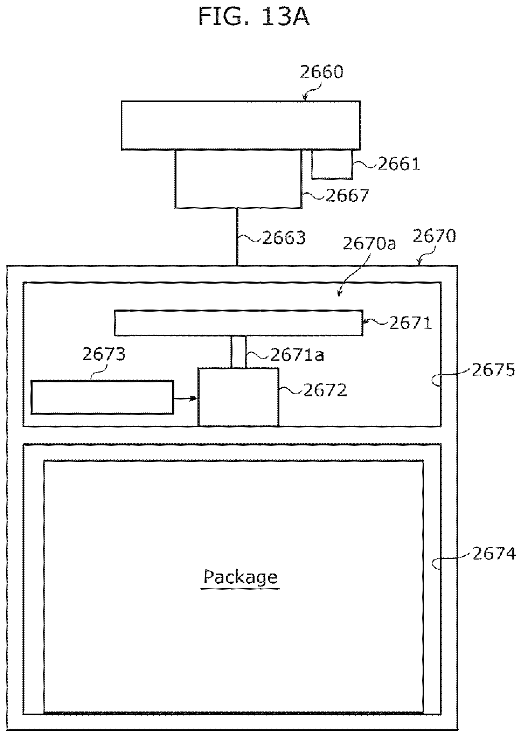

   FIG. 13A illustrates an example of a main body and a package carriage of an unmanned transport vehicle according to Embodiment 2.
[FIG. 13B]

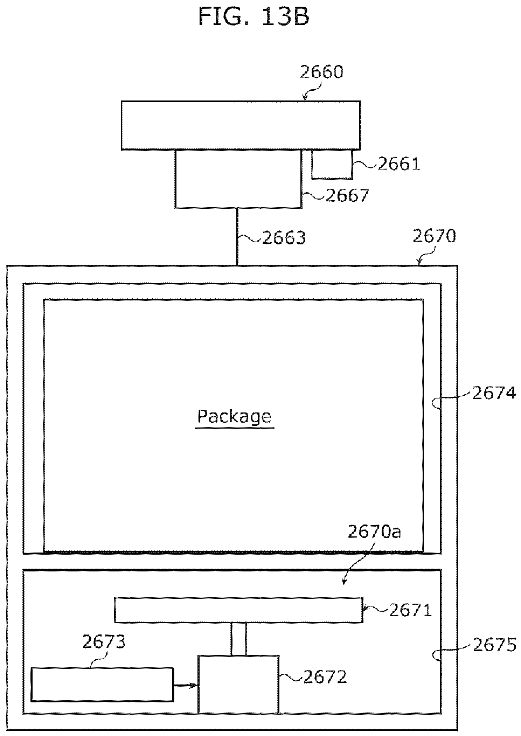

   FIG. 13B illustrates another example of a main body and another package carriage of an unmanned transport vehicle according to Embodiment 2.
[FIG. 14]

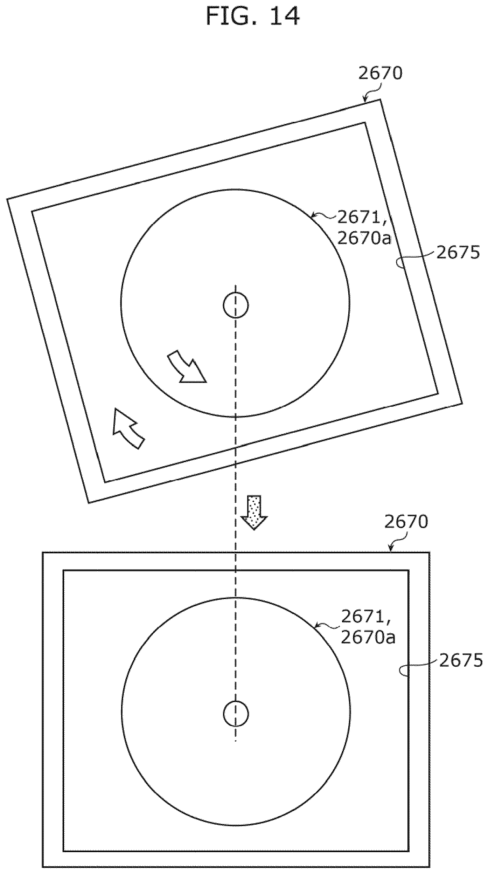

   FIG. 14 illustrates an example of how an attitude control device corrects the attitude of a package carriage of an unmanned transport vehicle according to Embodiment 2.
[FIG. 15]

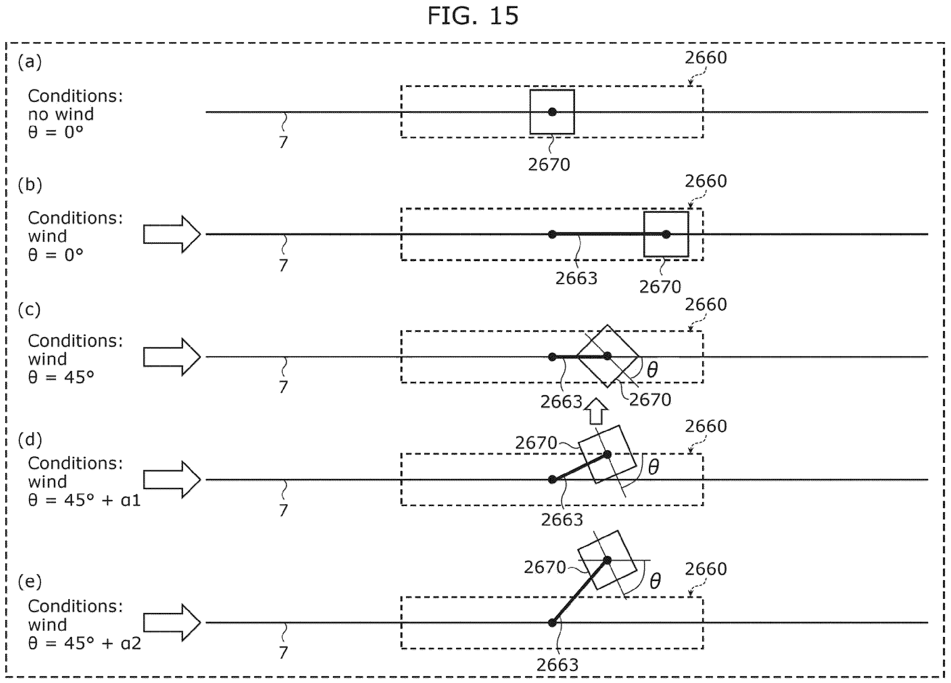

   FIG. 15 illustrates an example of the attitude of a package carriage of an unmanned transport vehicle according to Embodiment 2.
[FIG. 16]

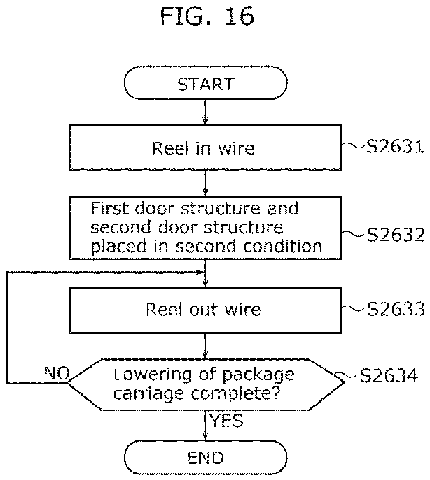

   FIG. 16 is a flowchart illustrating an example of operations performed when a package carriage of an unmanned transport vehicle descends according to Embodiment 2.
[FIG. 17]

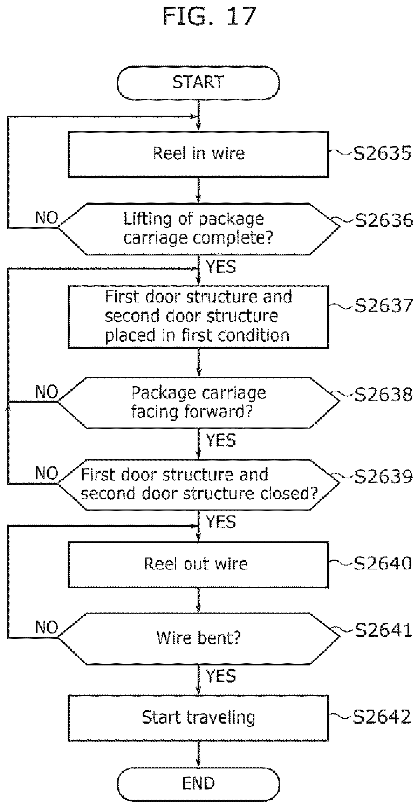

   FIG. 17 is a flowchart illustrating an example of operations from reeling in the wire of the package carriage accommodating a package until the unmanned transport vehicle starts to travel.
[FIG. 18]

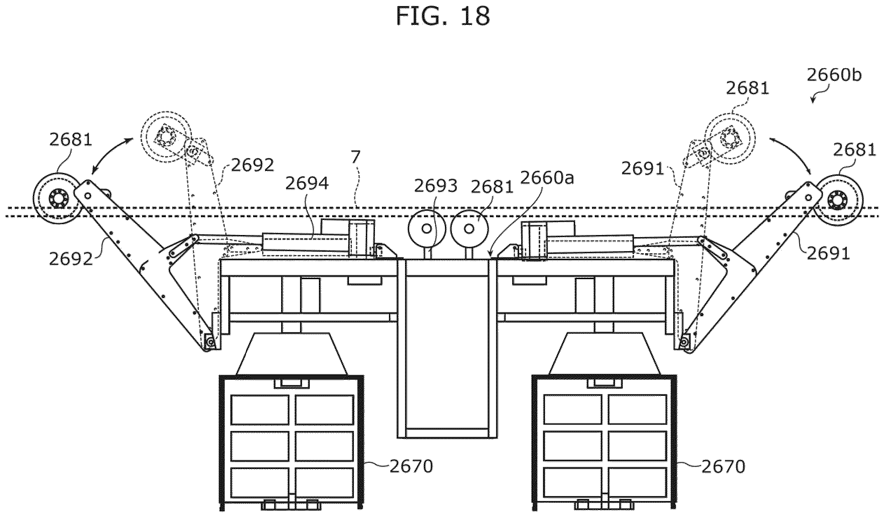

   FIG. 18 illustrates an example of a main body and a package carriage of an unmanned transport vehicle according to a variation of Embodiment 2.
[FIG. 19A]

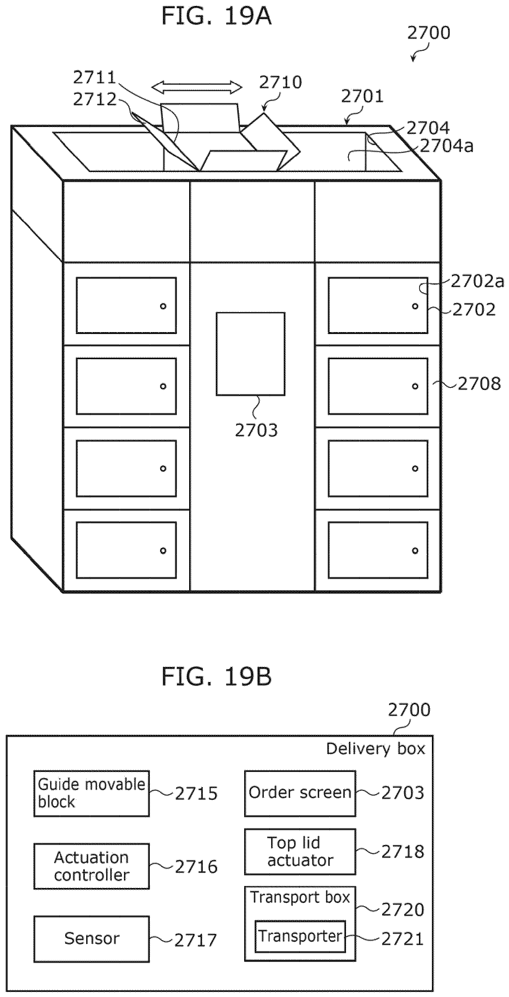

   FIG. 19A is a perspective view illustrating an example of a delivery box according to Embodiment 3.
[FIG. 19B]
   FIG. 19B is a block diagram illustrating an example of the delivery box according to Embodiment 3.
[FIG. 20]

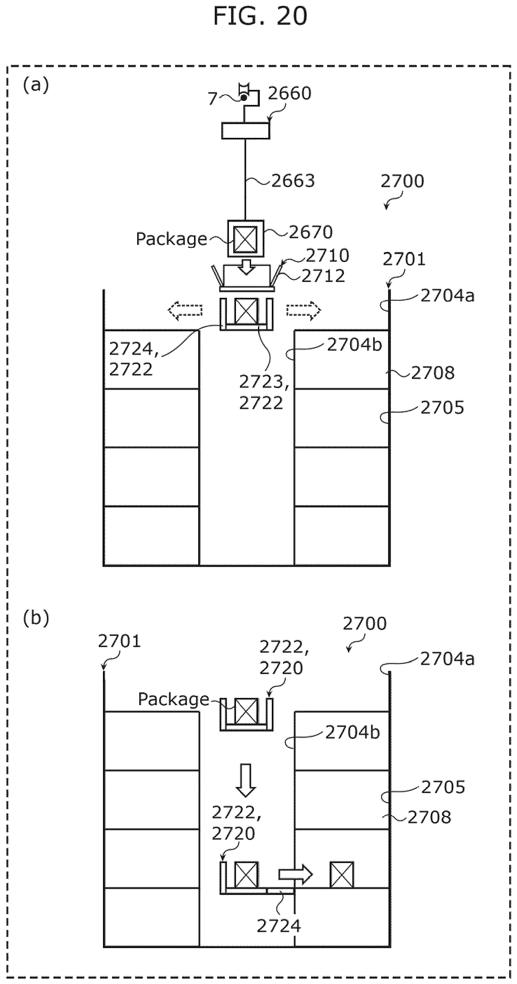

   FIG. 20 illustrates an example of how a delivery box according to Embodiment 3 moves when viewed from the front.
[FIG. 21]

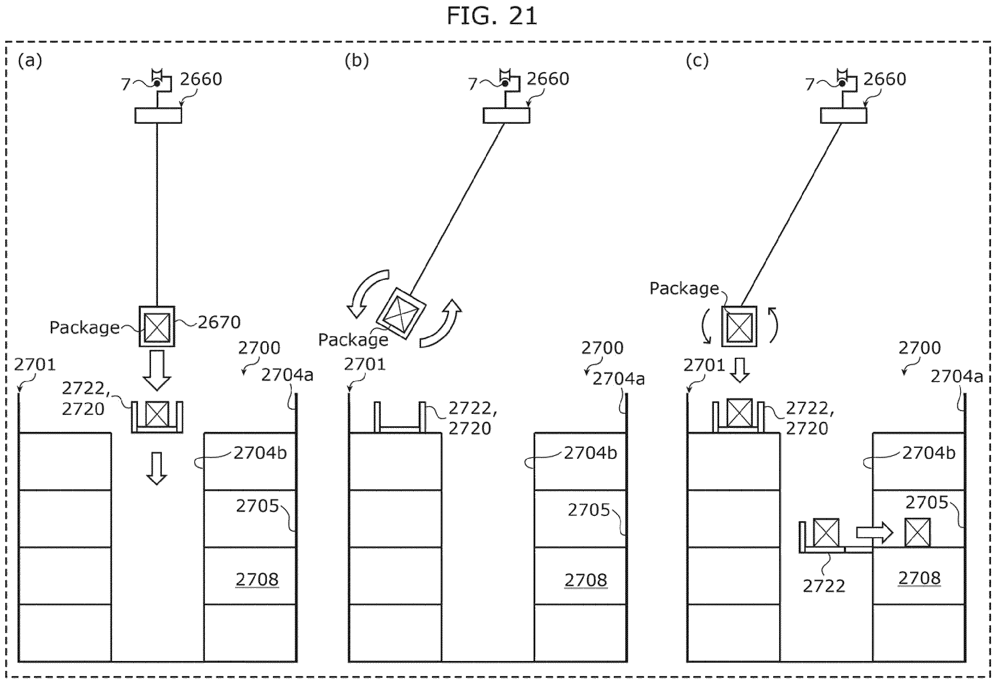

   FIG. 21 illustrates an example of how a package carriage and a delivery box move when viewed from the front.
[FIG. 22]

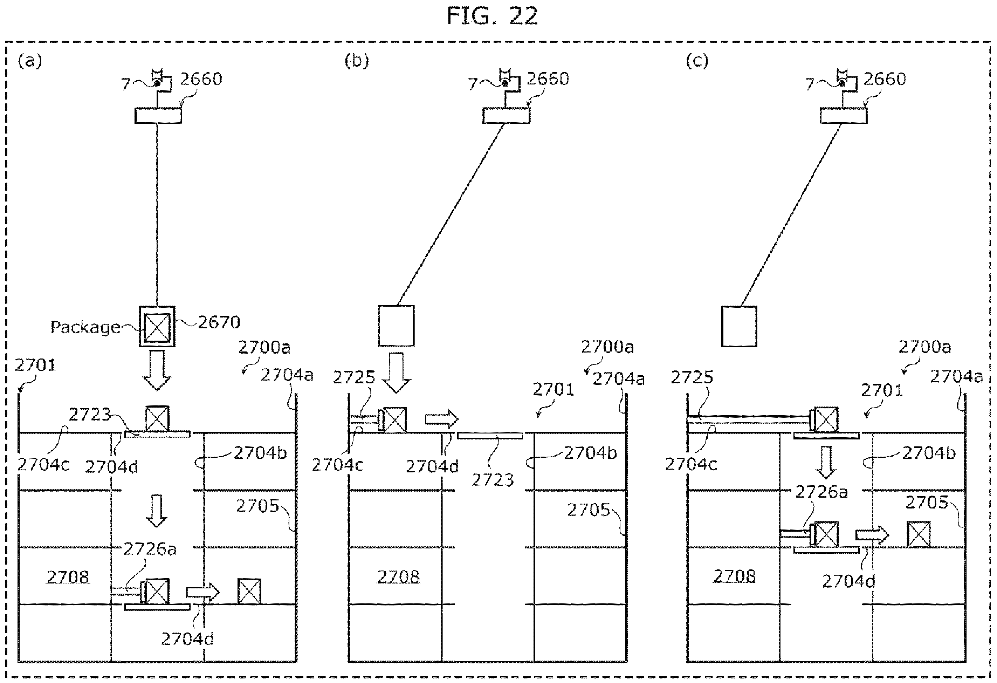

   FIG. 22 illustrates an example of how a package carriage and a delivery box move when wind blows when viewed from the front.
[FIG. 23]

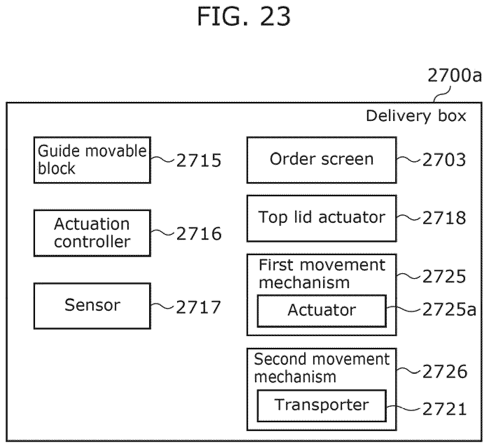

   FIG. 23 is a block diagram illustrating an example of the delivery box according to Variation 1 of Embodiment 3.
[FIG. 24]

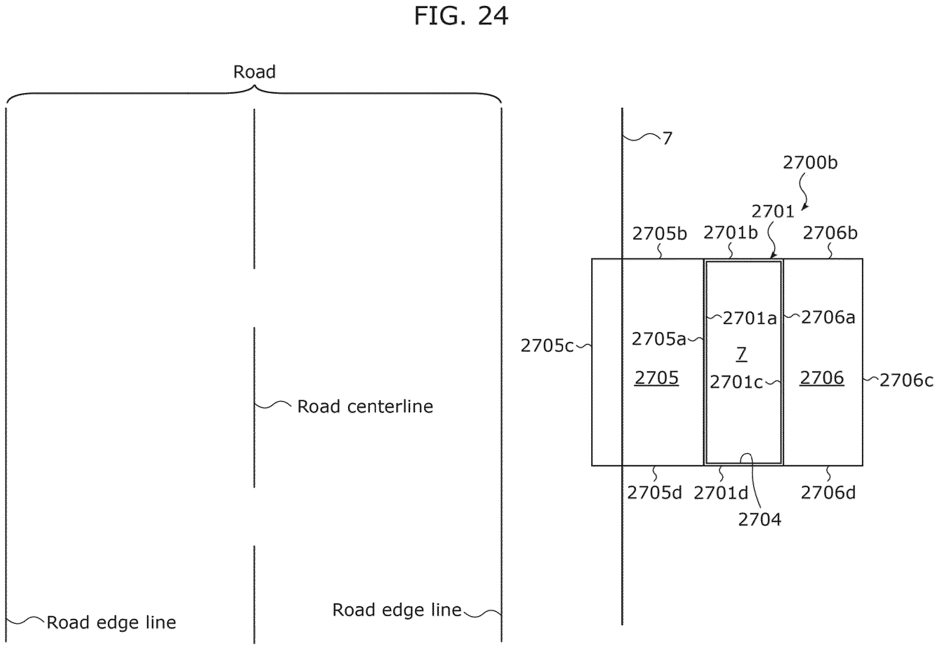

   FIG. 24 is a plan view illustrating an example of a delivery box according to Variation 2 of Embodiment 3.
[FIG. 25]

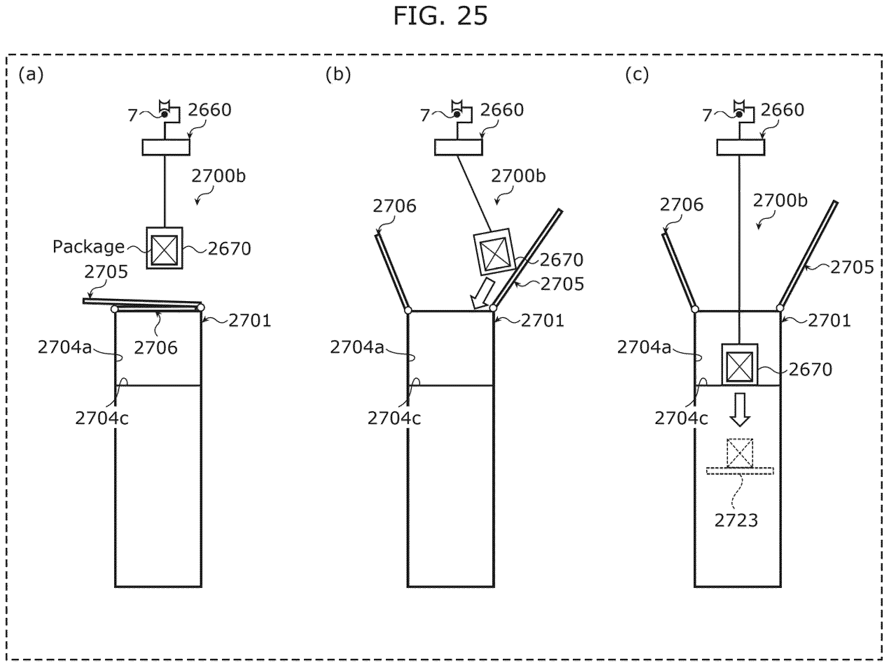

   FIG. 25 is a side view illustrating an example of a delivery box according to Variation 2 of Embodiment 3.
[FIG. 26]

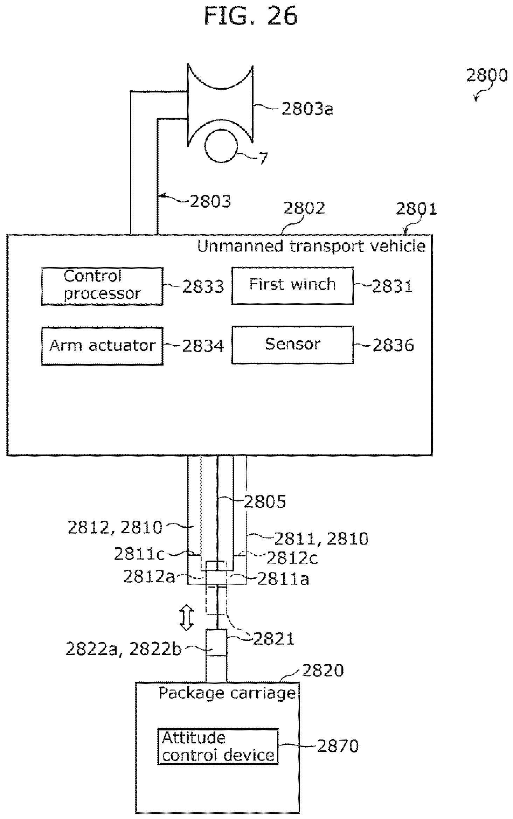

   FIG. 26 is a block diagram illustrating an example of an unmanned transport system according to Embodiment 4.
[FIG. 27A]

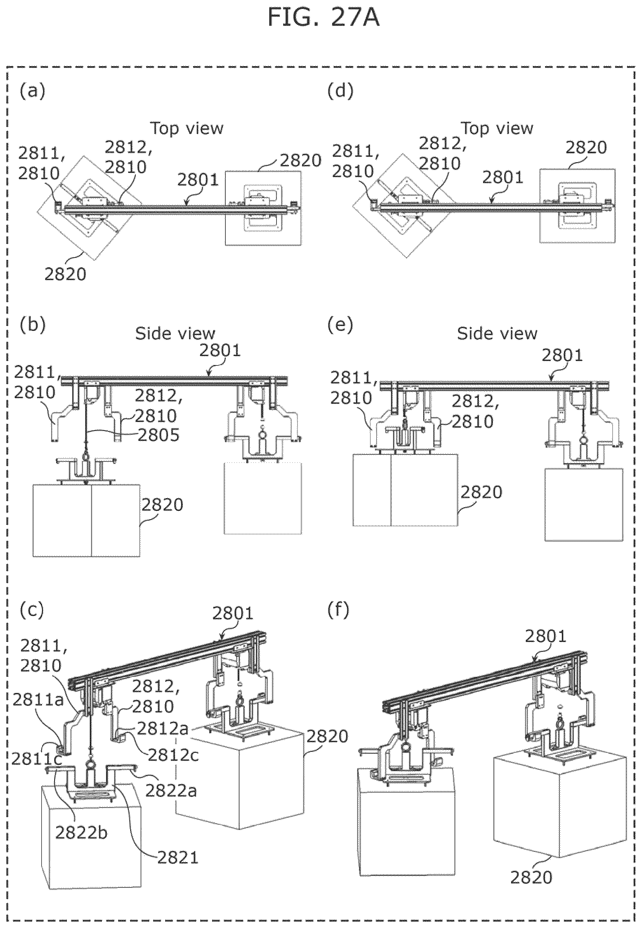

   FIG. 27A illustrates an example of an unmanned transport vehicle and a package carriage in an unmanned transport system according to Embodiment 4.
[FIG. 27B]

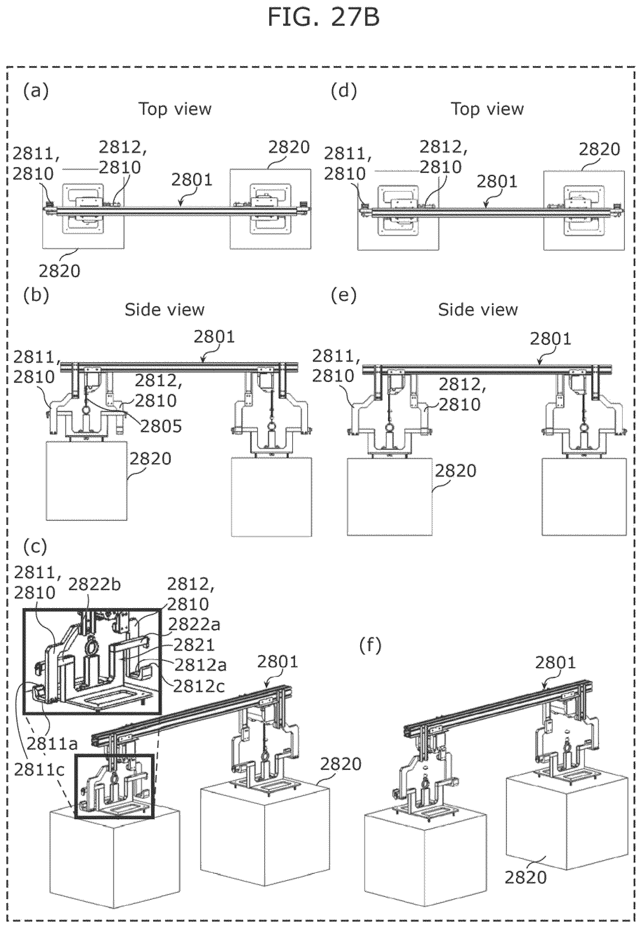

   FIG. 27B illustrates another example of an unmanned transport vehicle and a package carriage in an unmanned transport system according to Embodiment 4.
[FIG. 27C]

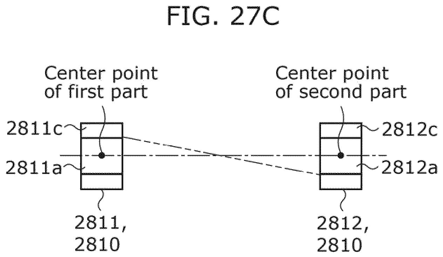

   FIG. 27C is a schematic diagram illustrating an example of the positional relationship between a first other end and a second other end in a support structure.
[FIG. 28]

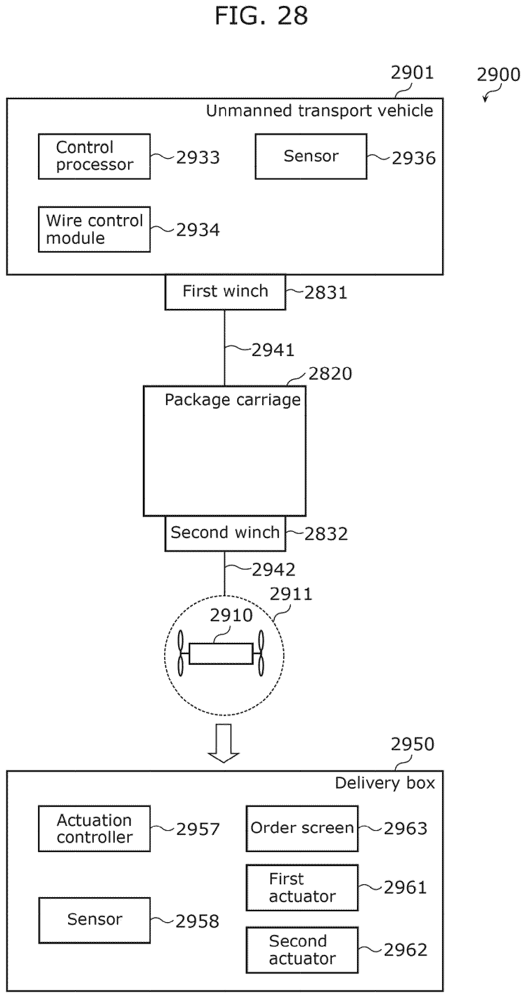

   FIG. 28 is a block diagram illustrating an example of an unmanned aerial vehicle, a package carriage, and a delivery box in an unmanned transport system.
[FIG. 29]

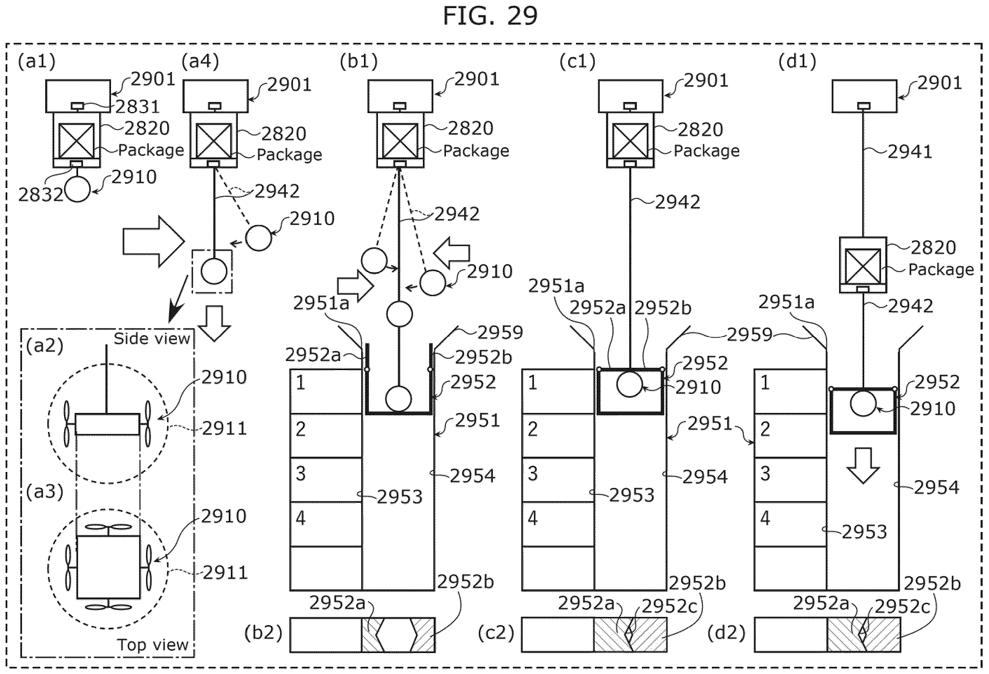

   FIG. 29 illustrates an example of an unmanned aerial vehicle and a package carriage in an unmanned transport system descending.
[FIG. 30]

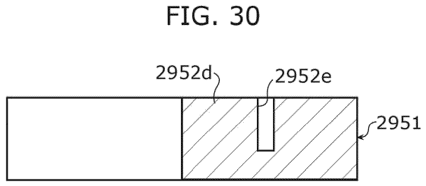

   FIG. 30 illustrates an example of one lid that is openable and closable and includes a slit.
[FIG. 31A]

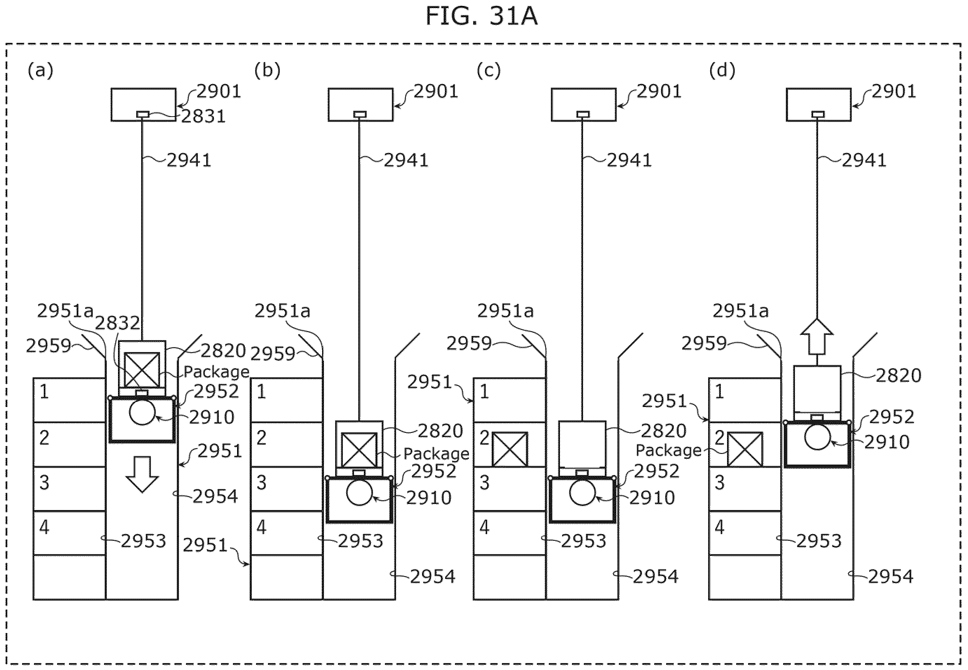

   FIG. 31A illustrates an example of a package being unloaded and a package carriage in an unmanned transport system ascending.
[FIG. 31B]

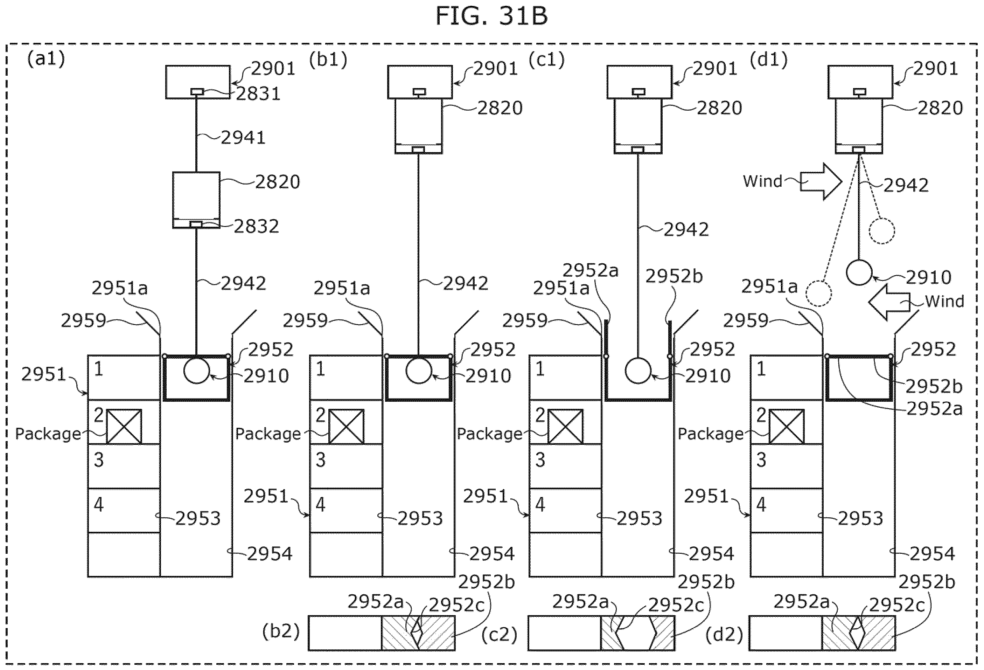

   FIG. 31B illustrates an example of a package carriage and an unmanned aerial vehicle in an unmanned transport system ascending.
[FIG. 31C]

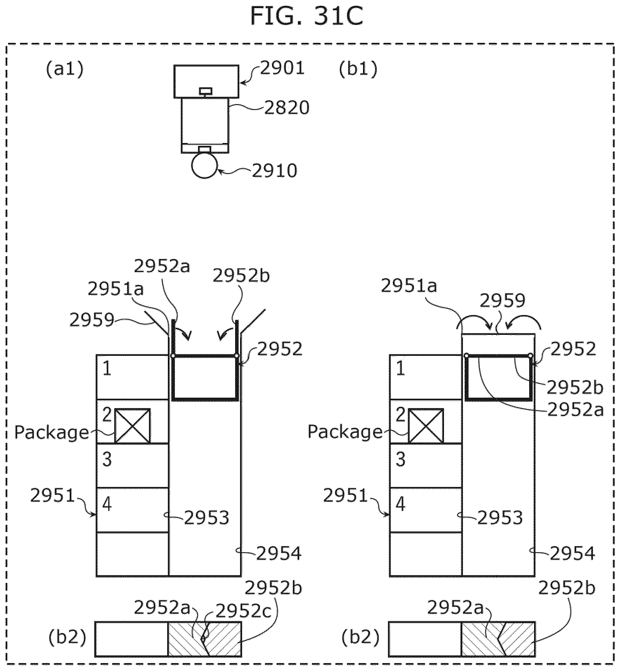

   FIG. 31C illustrates an example of closing a first lid and a second lid and closing a lid of a guide structure of an enclosure.
[FIG. 32A]

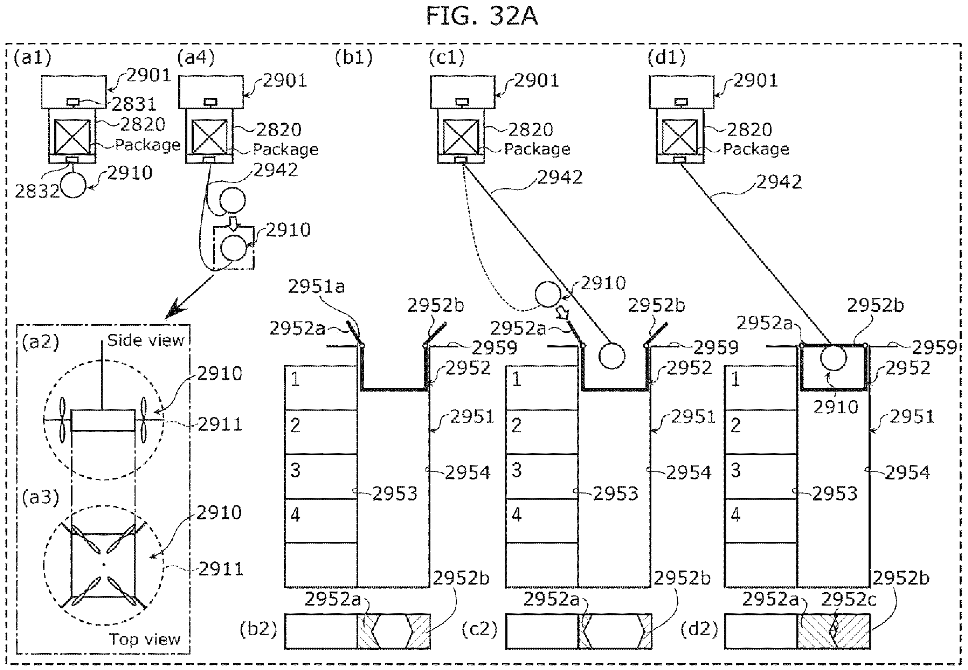

   FIG. 32A illustrates an example of an unmanned aerial vehicle with the capability to fly descending.
[FIG. 32B]

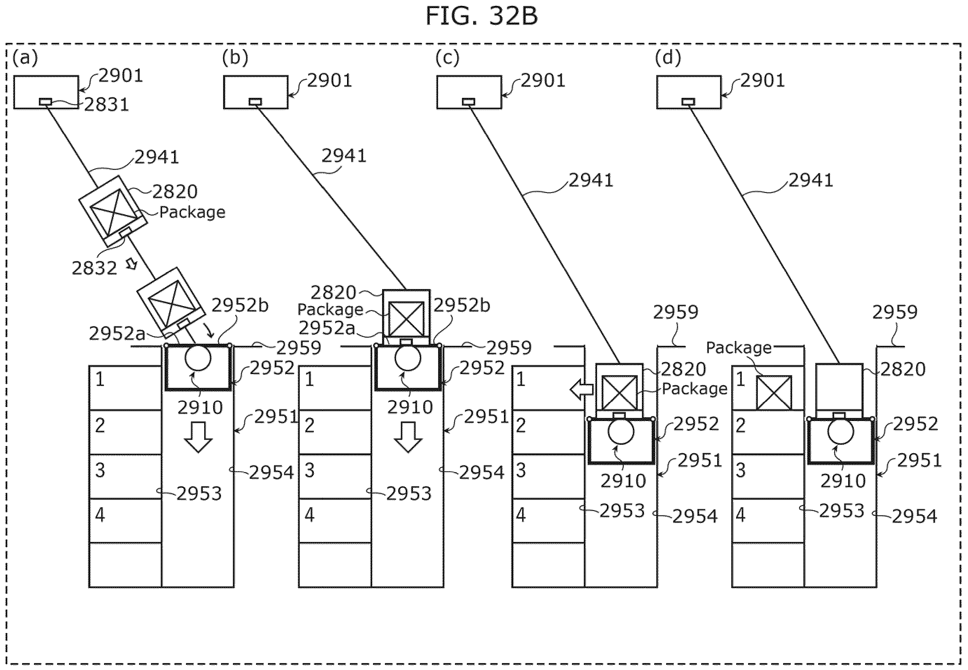

   FIG. 32B illustrates an example of a package carriage descending to unload a package after an unmanned aerial vehicle with the capability to fly has descended.
[FIG. 32C]

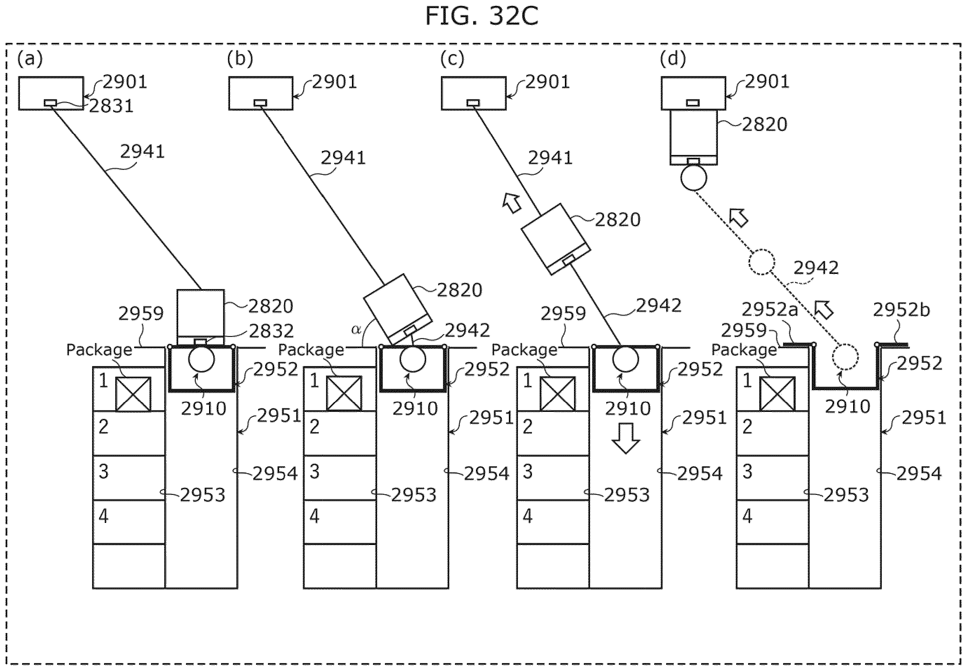

   FIG. 32C illustrates an example of a package being unloaded and a package carriage and an unmanned aerial vehicle in an unmanned transport system ascending.
[FIG. 32D]

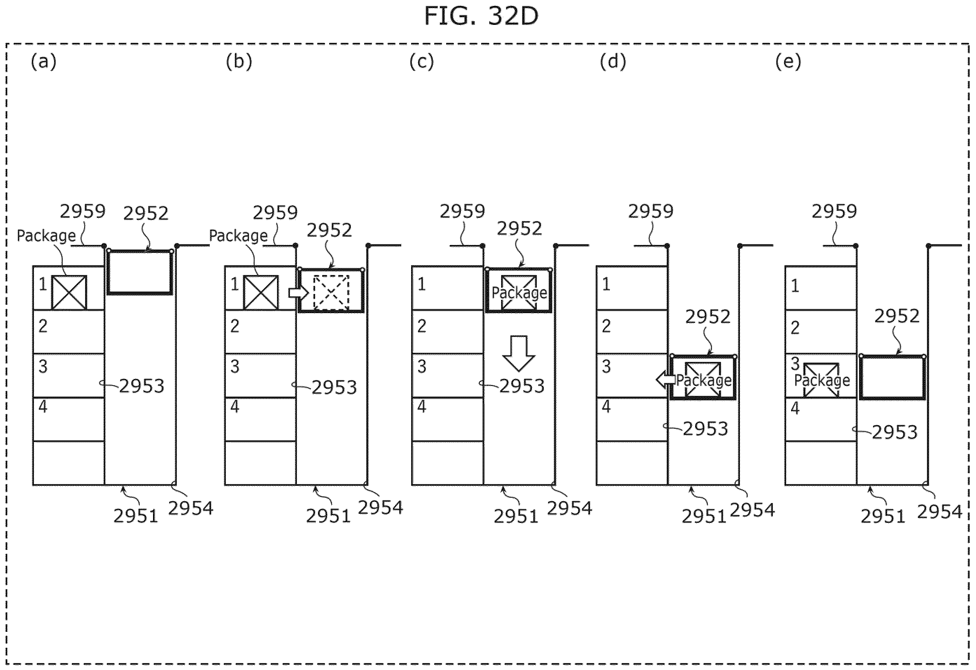

   FIG. 32D illustrates an example of moving a package placed in a temporary storage area to a predetermined package compartment.
[FIG. 33A]

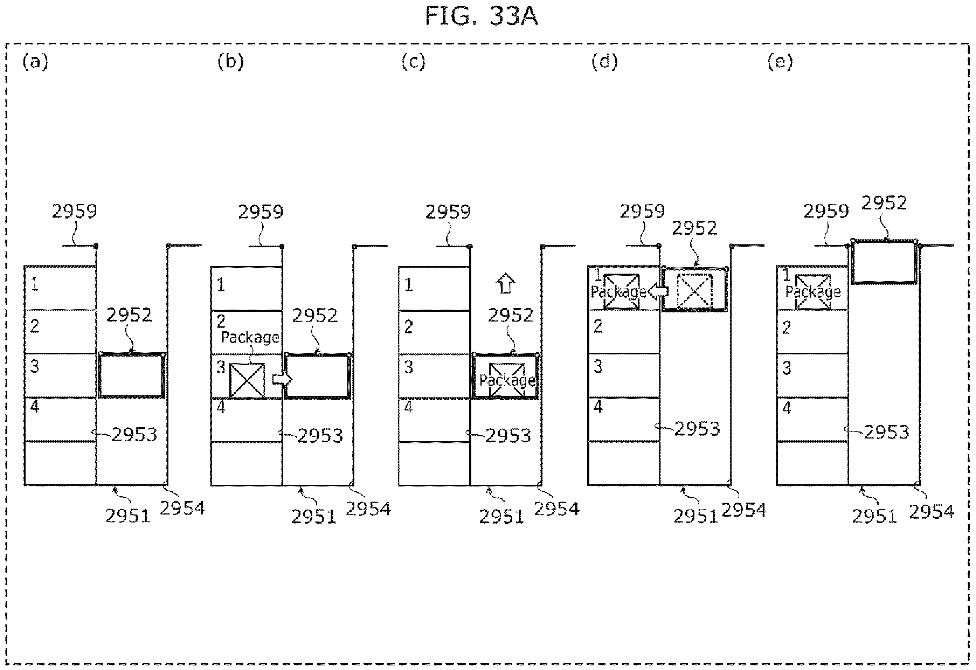

   FIG. 33A illustrates an example of collecting a package.
[FIG. 33B]

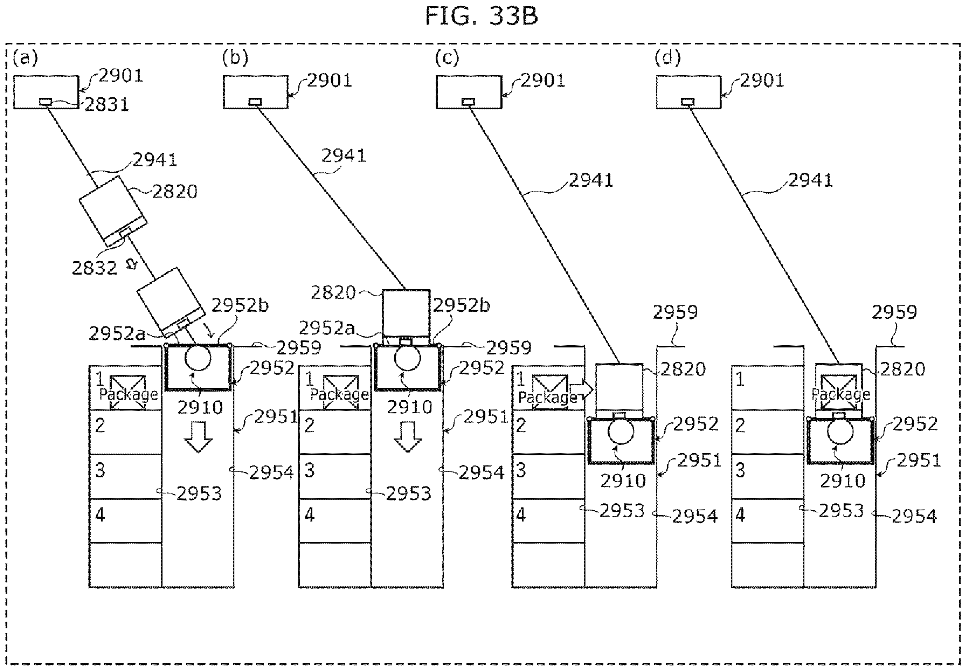

   FIG. 33B illustrates an example of lowering an unmanned aerial vehicle and a package carriage to collect a package.
[FIG. 33C]

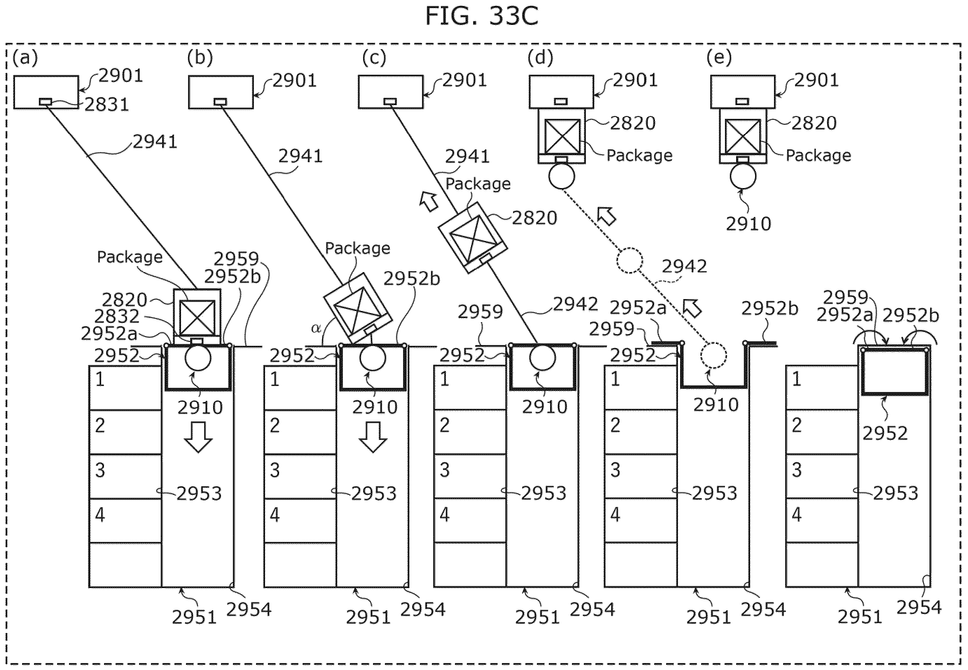

   FIG. 33C illustrates an example of a package carriage and an unmanned aerial vehicle in an unmanned transport system ascending after collecting a package.
[FIG. 34A]

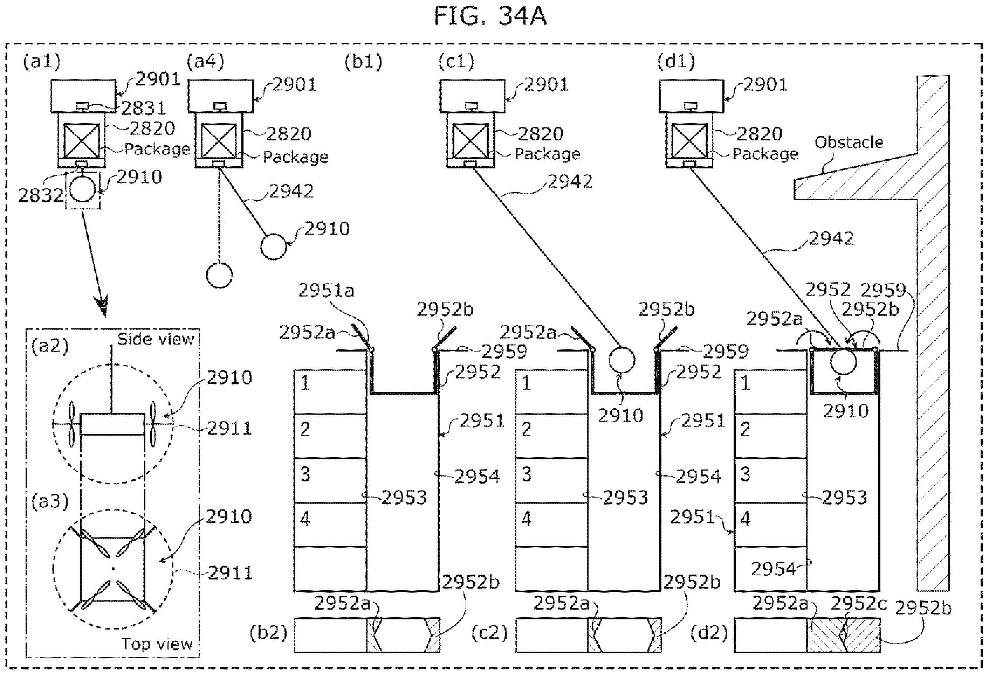

   FIG. 34A illustrates an example of an unmanned aerial vehicle in an unmanned transport system descending while avoiding an obstacle.
[FIG. 34B]

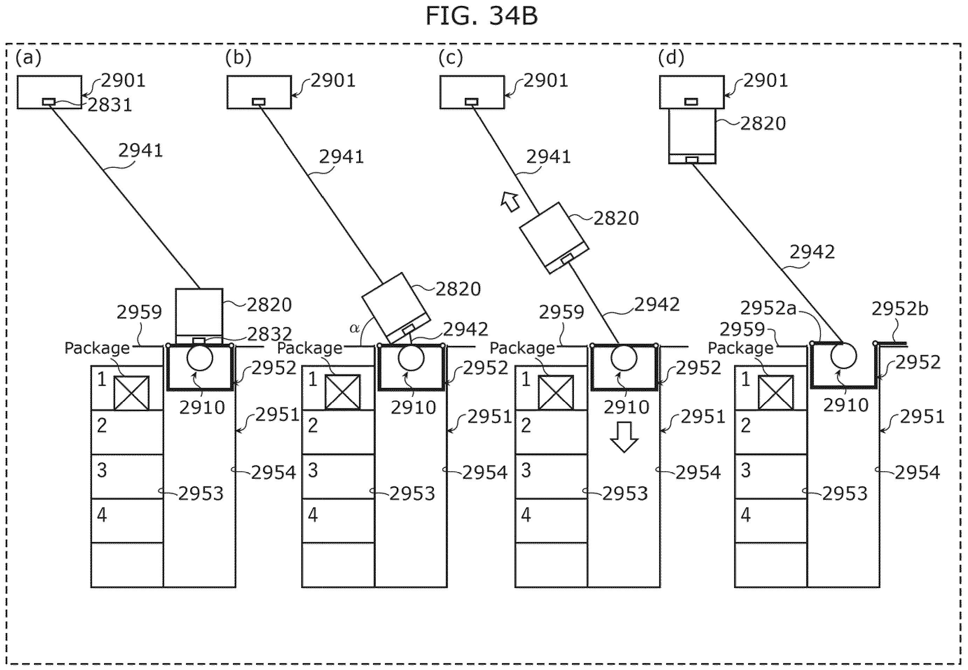

   FIG. 34B illustrates an example of a package being unloaded and a package carriage and an unmanned aerial vehicle in an unmanned transport system ascending.
[FIG. 34C]

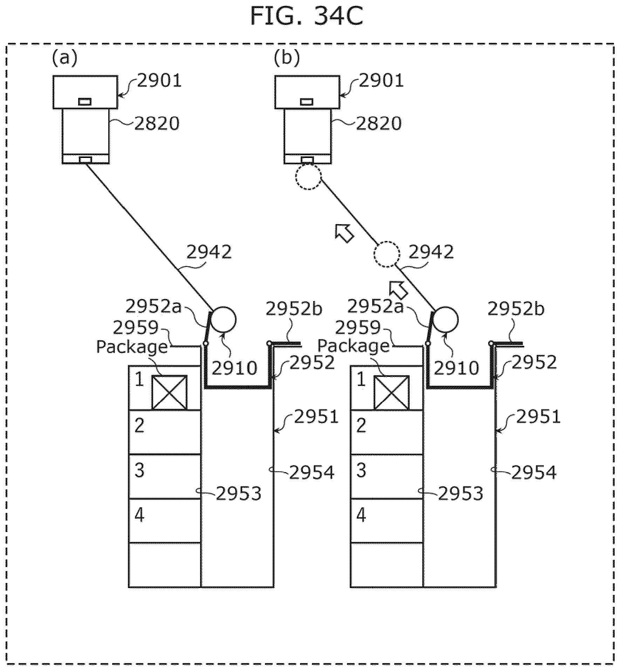

   FIG. 34C illustrates an example of a package being unloaded and an unmanned aerial vehicle in an unmanned transport system ascending.
[FIG. 35]

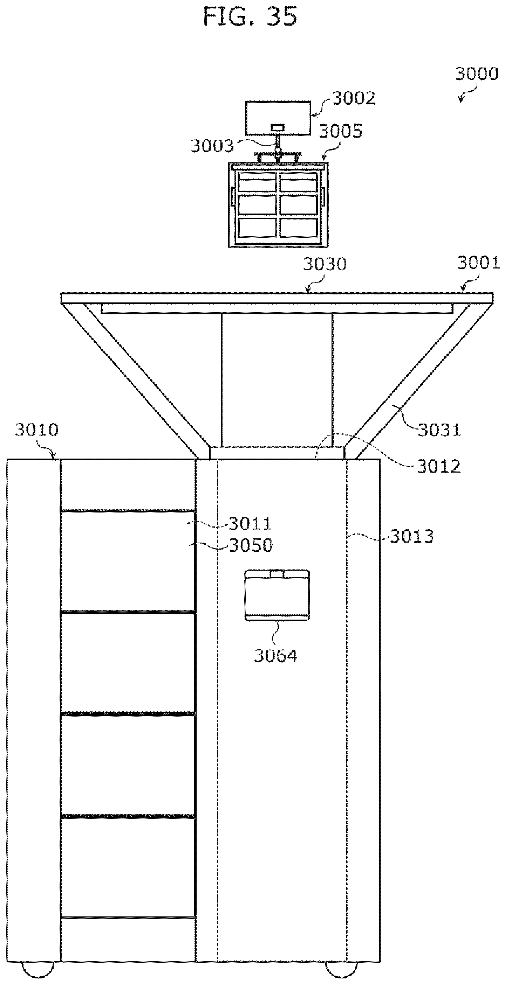

   FIG. 35 is a schematic diagram illustrating an unmanned transport vehicle, a package carriage, and a delivery box.
[FIG. 36]

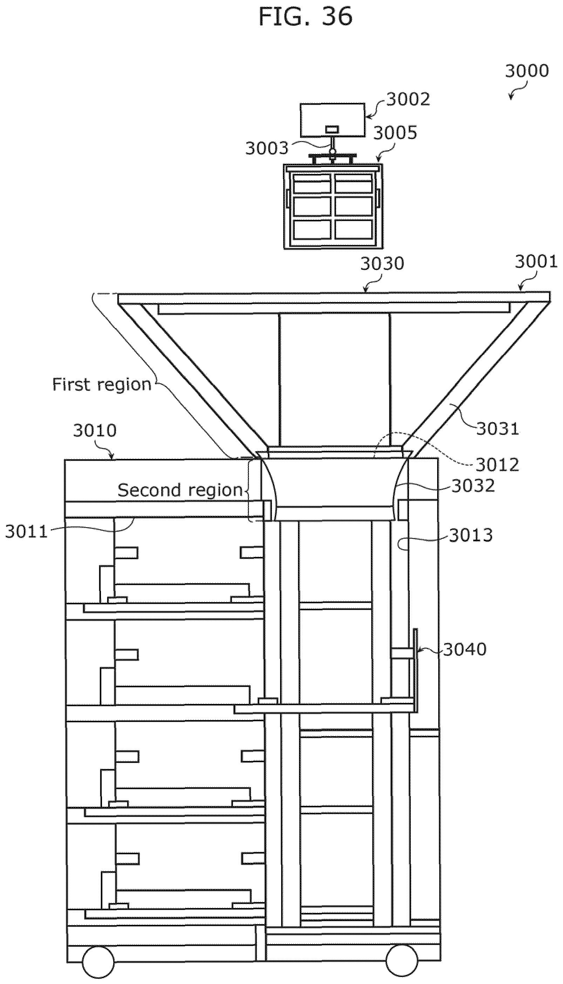

   FIG. 36 is a schematic diagram illustrating the internal structure of a delivery box in an unmanned transport system.
[FIG. 37]

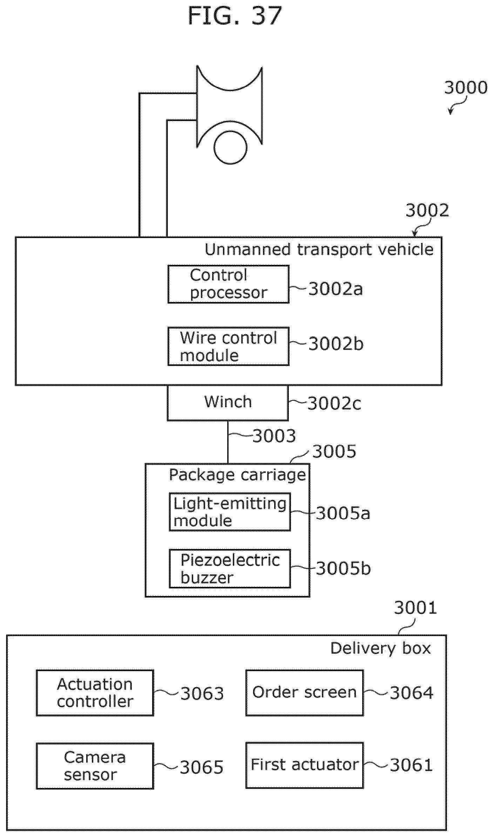

   FIG. 37 is a block diagram illustrating an unmanned transport system.
[FIG. 38]

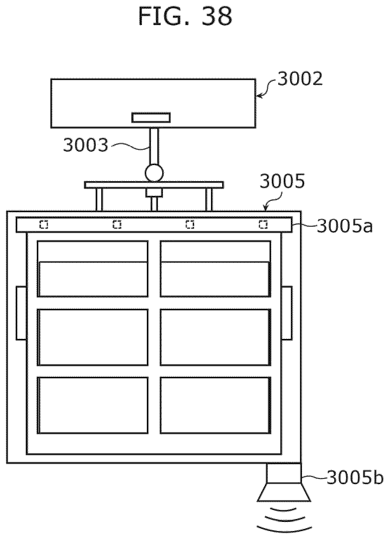

   FIG. 38 is a side view illustrating a package carriage.
[FIG. 39]

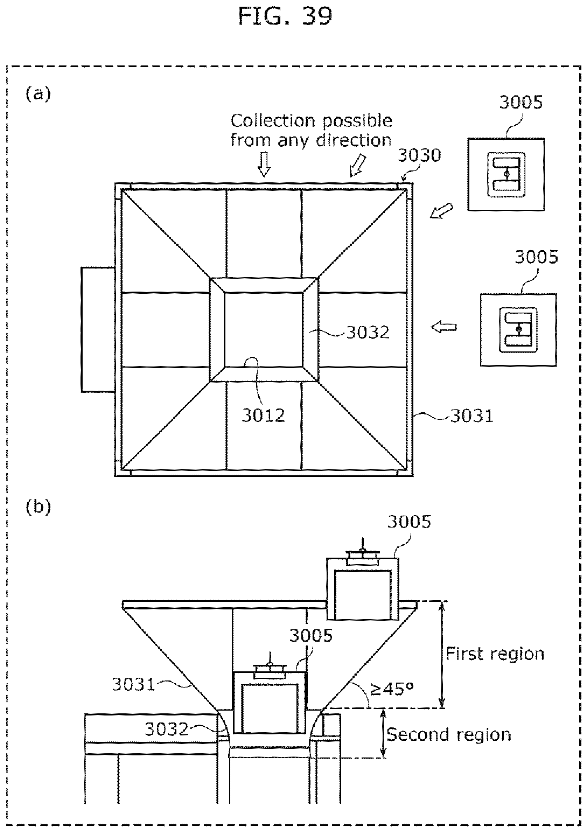

   FIG. 39 is a schematic diagram illustrating a package carriage entering a guide structure.
[FIG. 40A]

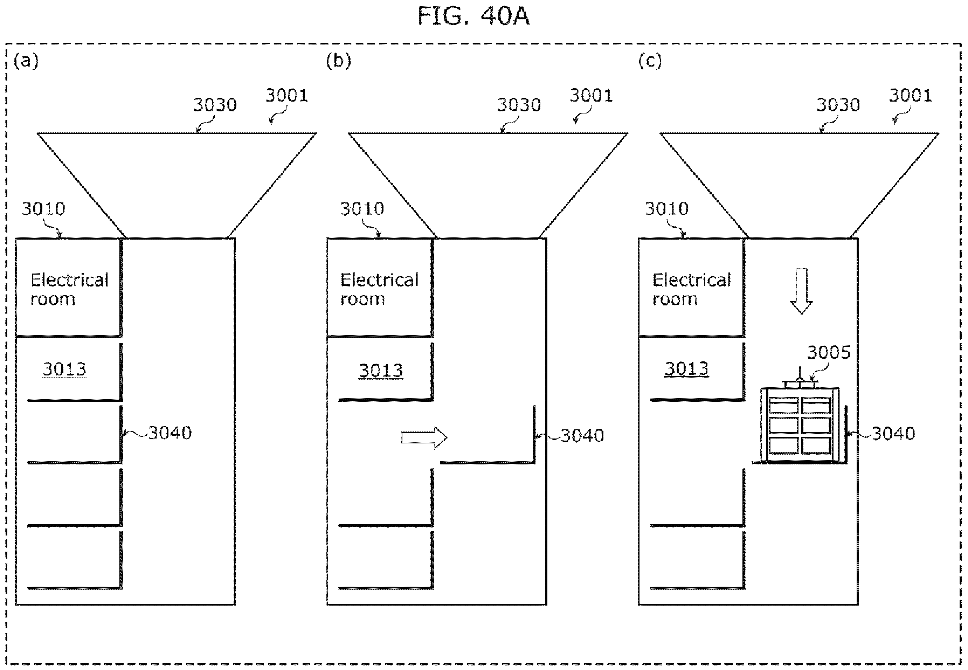

   FIG. 40A illustrates a transport body in the delivery box moving to an elevator path and a package carriage being placed on the transport body.
[FIG. 40B]

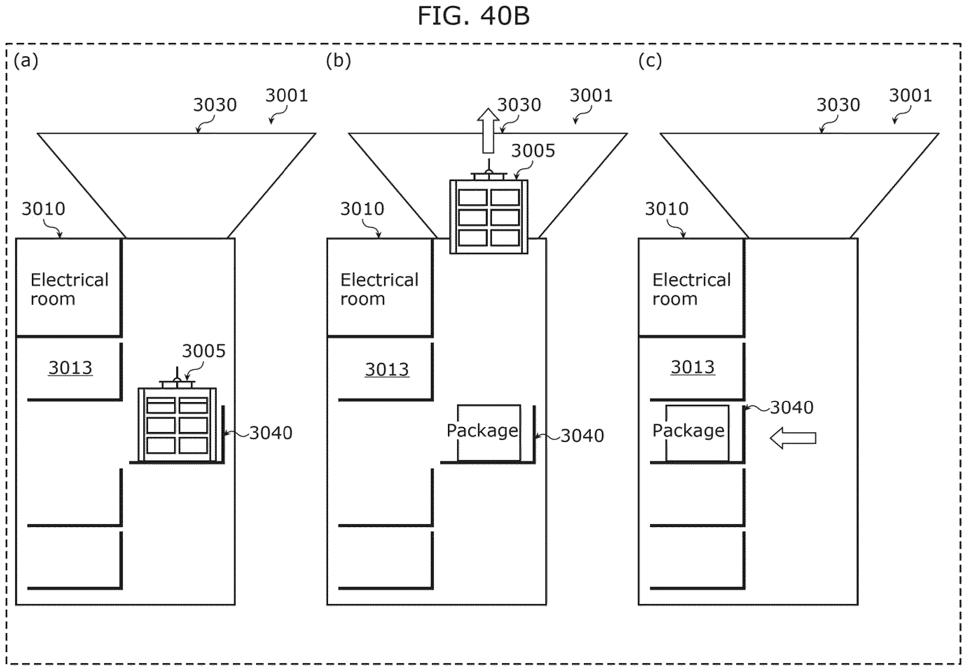

   FIG. 40B illustrates a package being placed on a transport body in a delivery box, a package carriage rising, and the transport body returning to a package compartment.
[FIG. 40C]

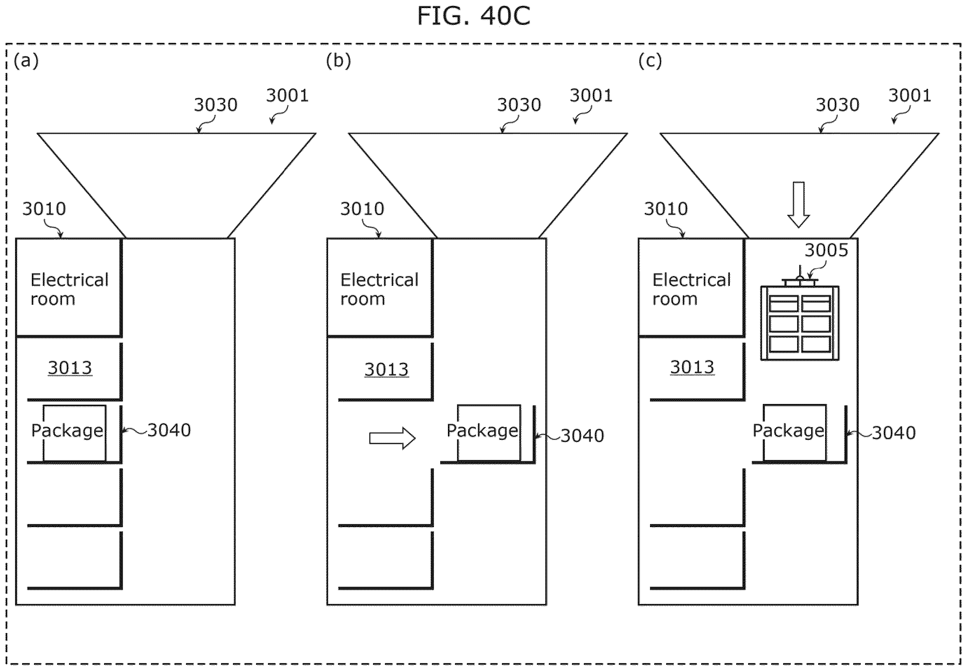

   FIG. 40C illustrates a transport body with a package for collection moving to an elevator path and a package carriage descending towards the transport body.
[FIG. 40D]

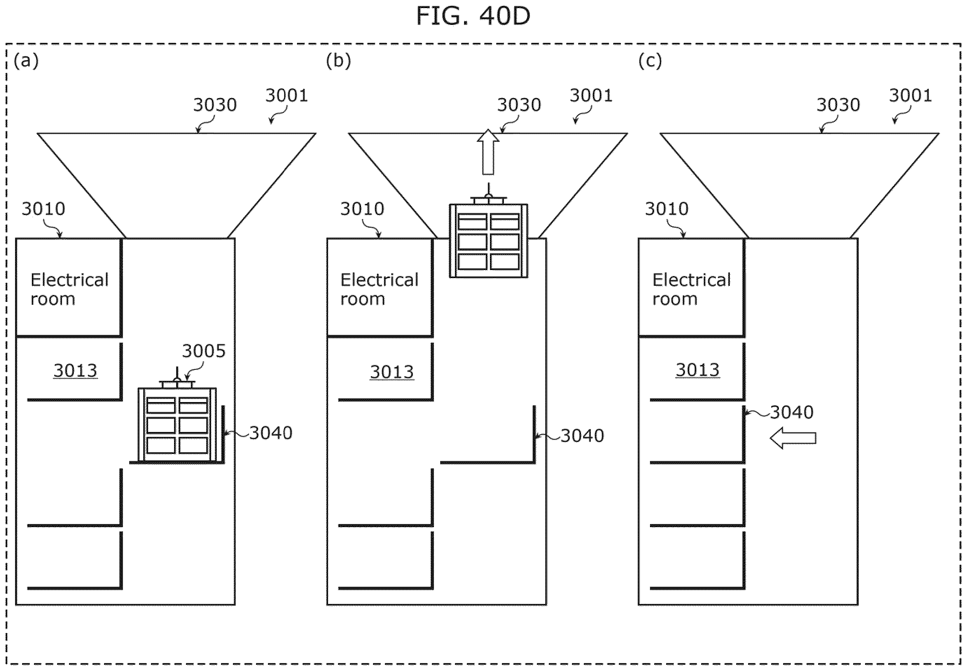

   FIG. 40D illustrates a package carriage that has collected a package rising, and a transport body returning to a package compartment.
[FIG. 41A]

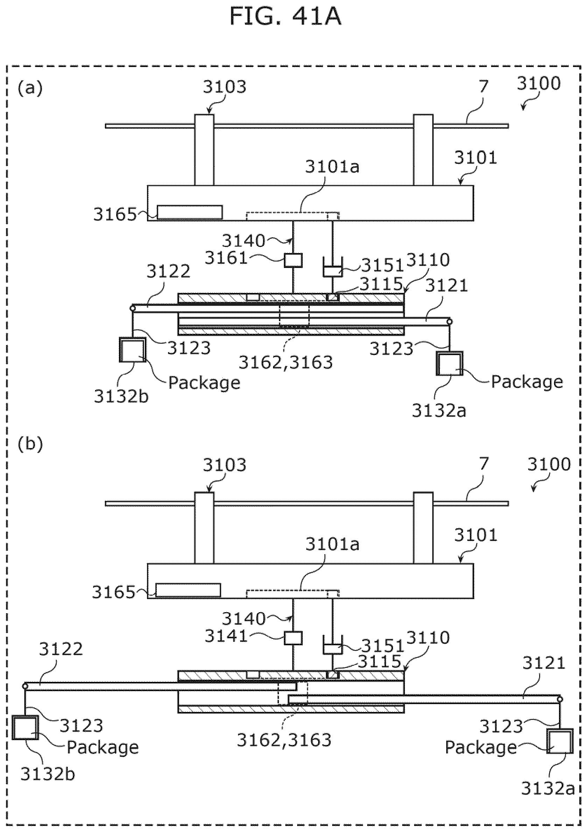

   FIG. 41A is a schematic diagram illustrating a first vehicle main body and a second vehicle main body.
[FIG. 41B]

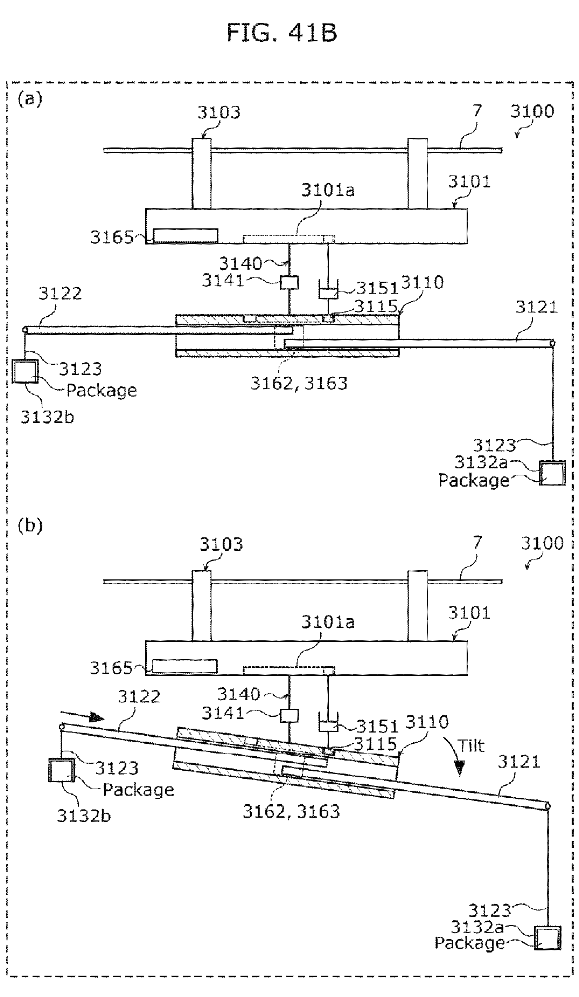

   FIG. 41B illustrates the sliding movement of a first slider and a second slider in order to lower a package carriage.
[FIG. 41C]

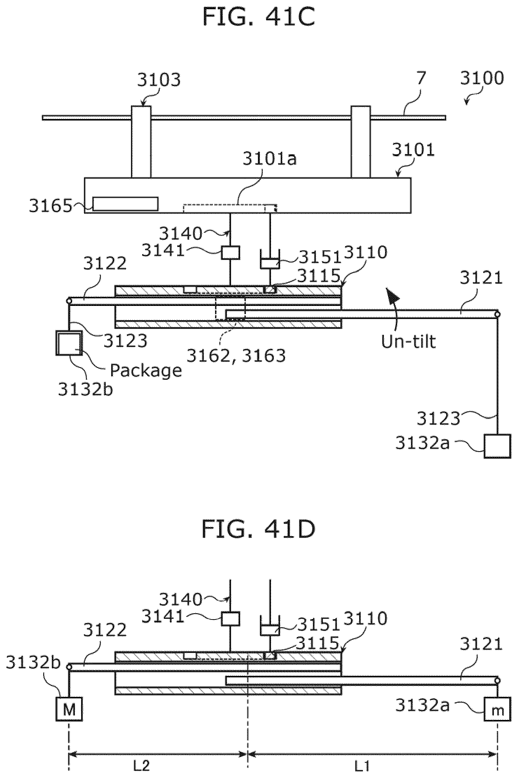

   FIG. 41C illustrates a first slider and a second slider after a package has been unloaded.
[FIG. 41D]
   FIG. 41D illustrates the rotational moment occurring in a first slider and a second slider.
[FIG. 42]

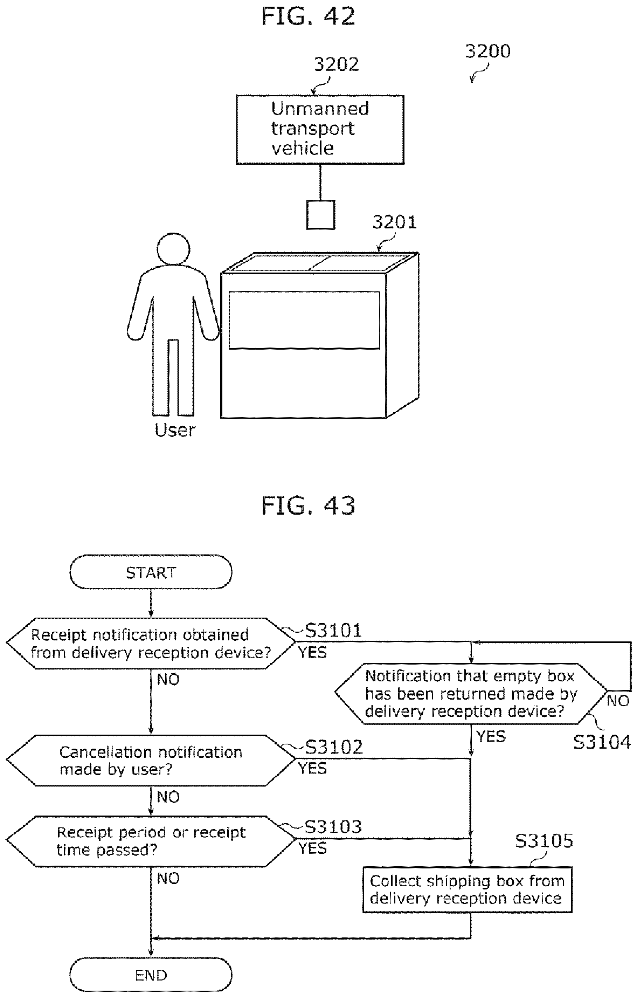

   FIG. 42 is a block diagram illustrating an example of an unmanned aerial vehicle and a delivery box in an unmanned transport system.
[FIG. 43]
   FIG. 43 is a flowchart illustrating operations according to Embodiment 8.
[FIG. 44]

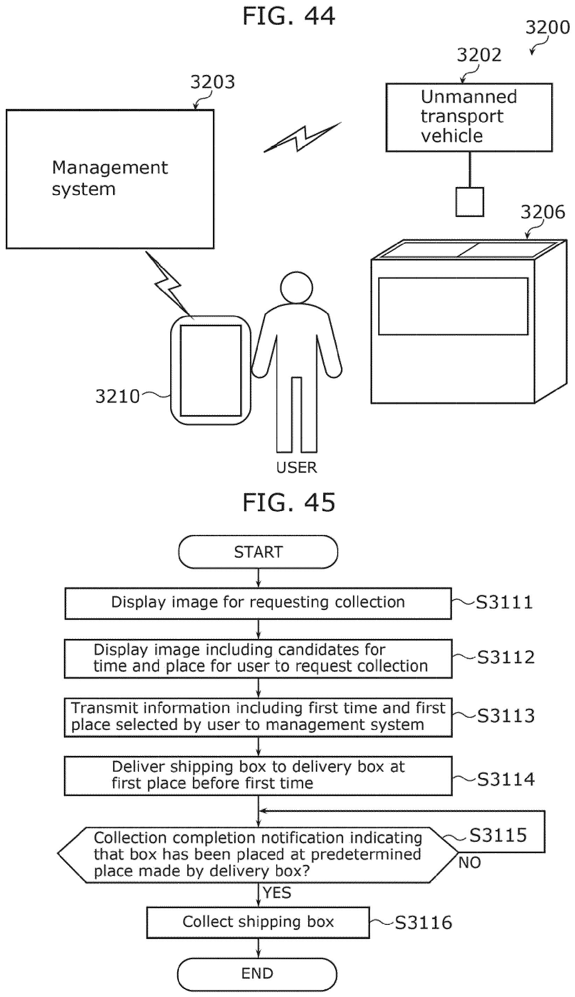

   FIG. 44 is a block diagram illustrating a management system, an information terminal, an unmanned transport vehicle, and a delivery box.
[FIG. 45]
   FIG. 45 is a flowchart illustrating operations according to Embodiment 9.
[FIG. 46]

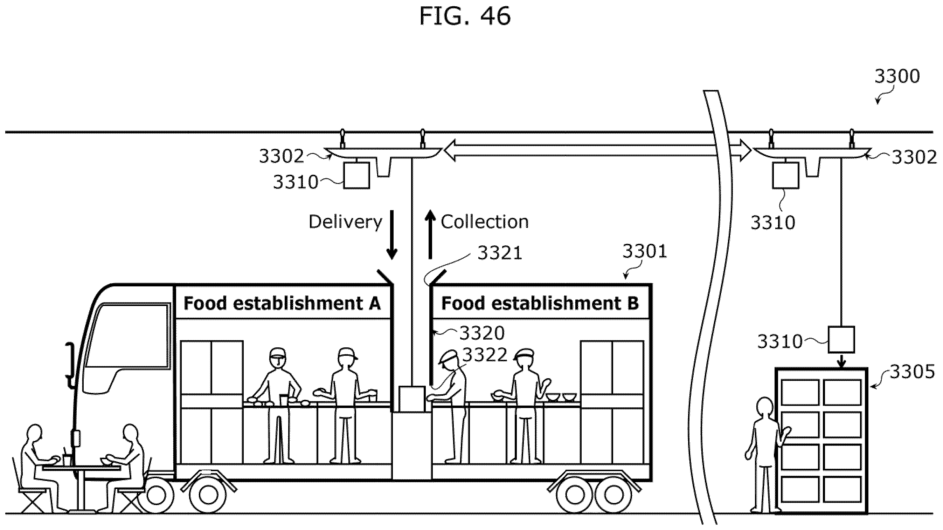

   FIG. 46 is a schematic diagram illustrating a mobile food vendor according to Embodiment 10.
[FIG. 47]

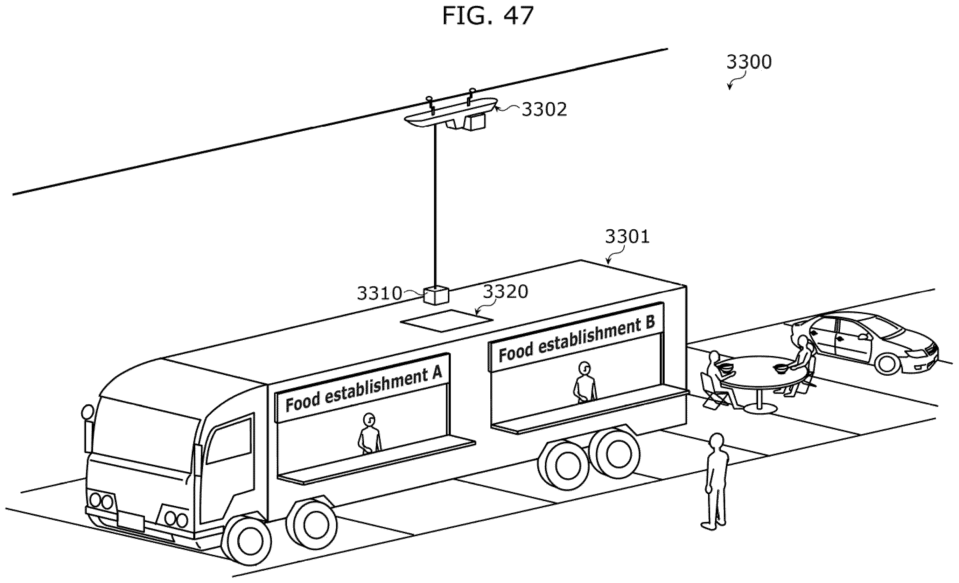

   FIG. 47 is a schematic diagram illustrating an example of how an unmanned transport vehicle unloads a package at the mobile food vendor according to Embodiment 10.
[FIG. 48]

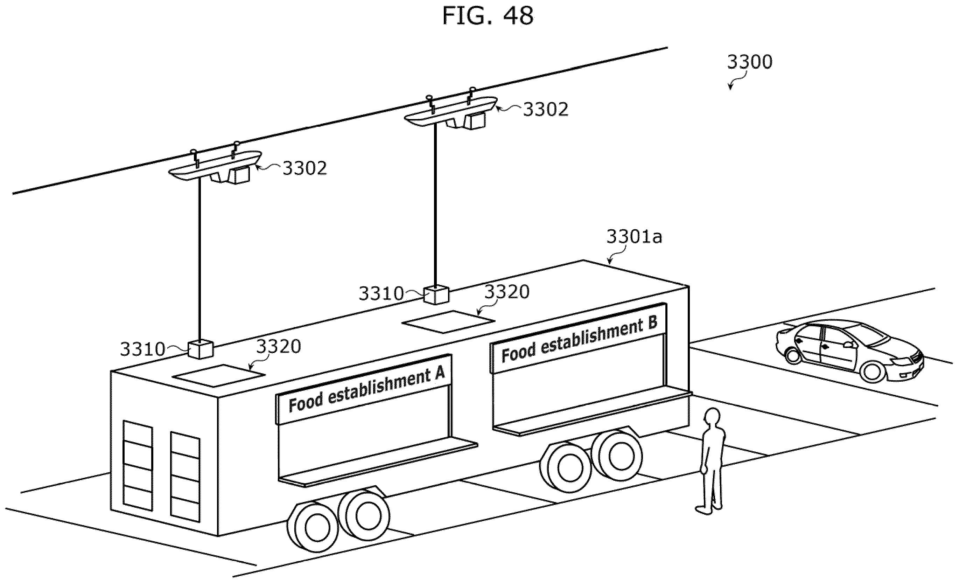

   FIG. 48 is another schematic diagram illustrating an example of how an unmanned transport vehicle unloads a package at the mobile food vendor according to Embodiment 10.
[FIG. 49]

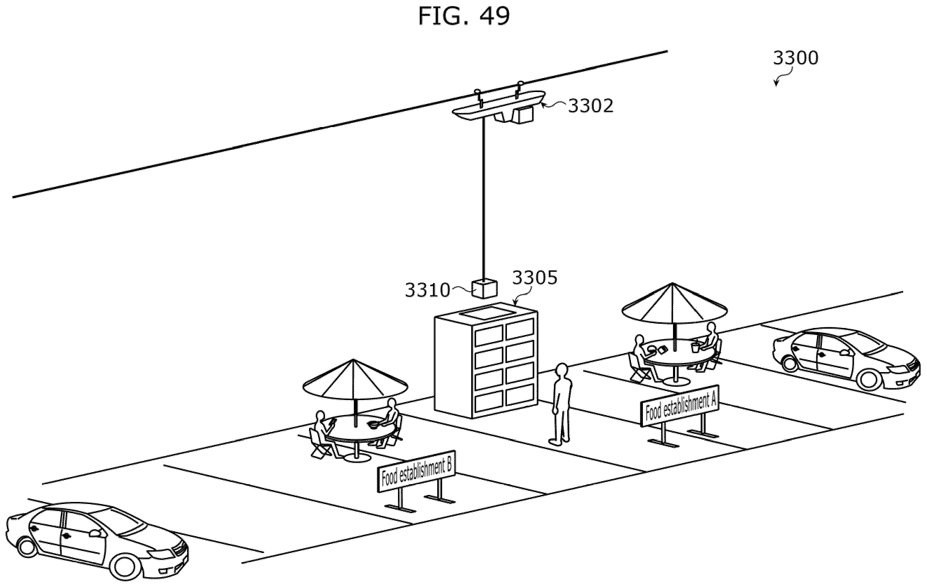

   FIG. 49 is a schematic diagram illustrating an example of how an unmanned transport vehicle unloads a package in the delivery box according to Embodiment 10.
[FIG. 50]

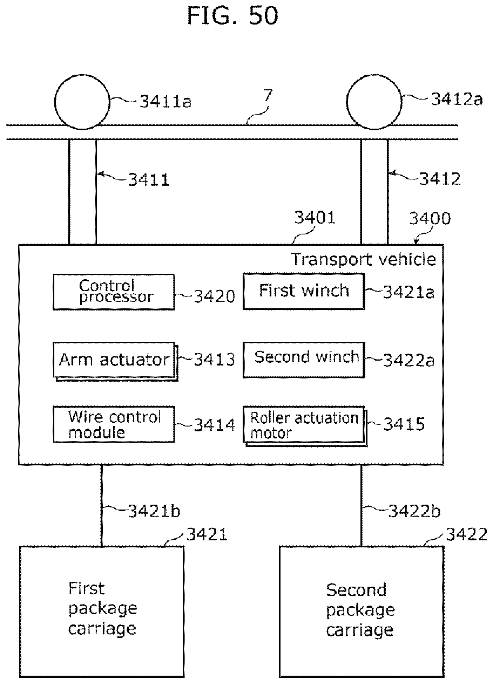

   FIG. 50 is a block diagram illustrating a transport vehicle according to Embodiment 11.
[FIG. 51]

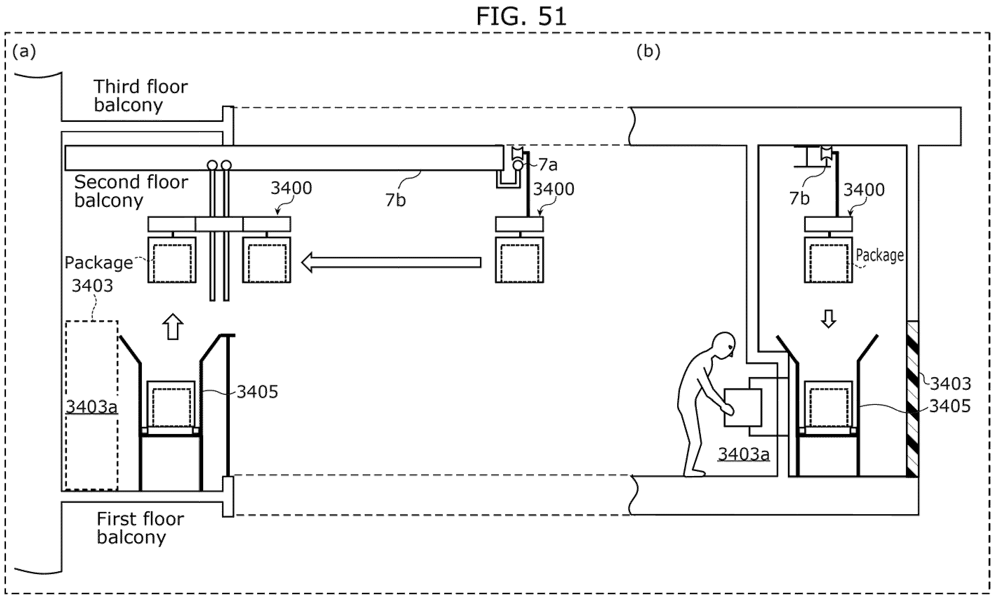

   FIG. 51 illustrates an example of a transport vehicle simultaneously collecting and delivering packages on a balcony.
[FIG. 52]

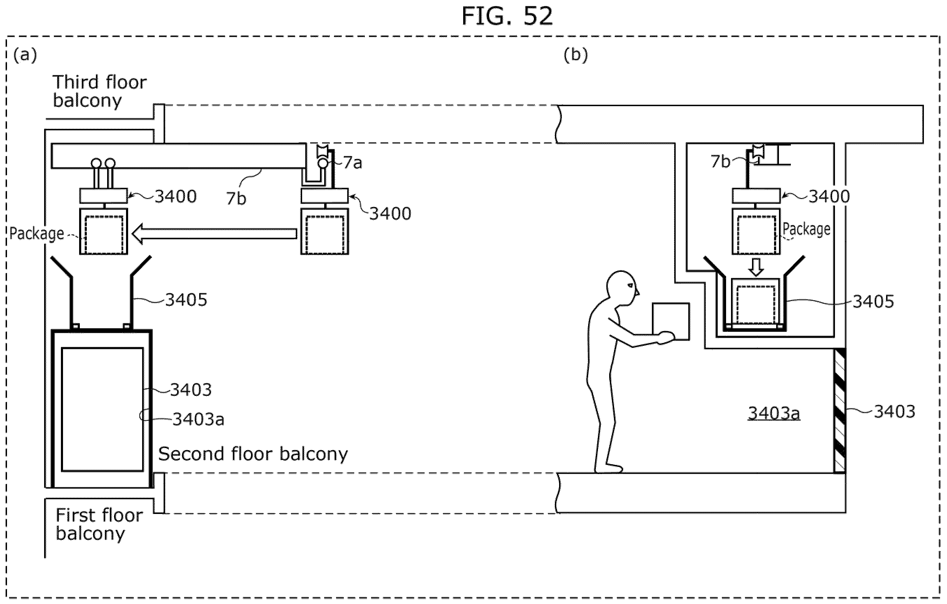

   FIG. 52 illustrates an example of a small transport vehicle delivering a package on a balcony where a delivery box is placed in a location away from an emergency door.
[FIG. 53]

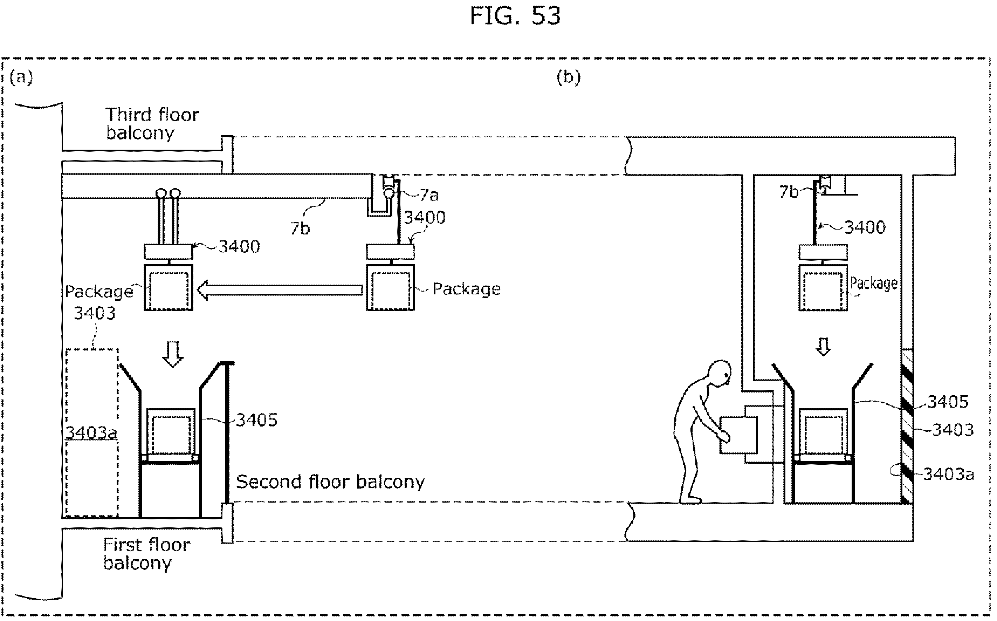

   FIG. 53 illustrates an example of a small transport vehicle delivering a package on a balcony where a delivery box is placed in front of an emergency door.
[FIG. 54]

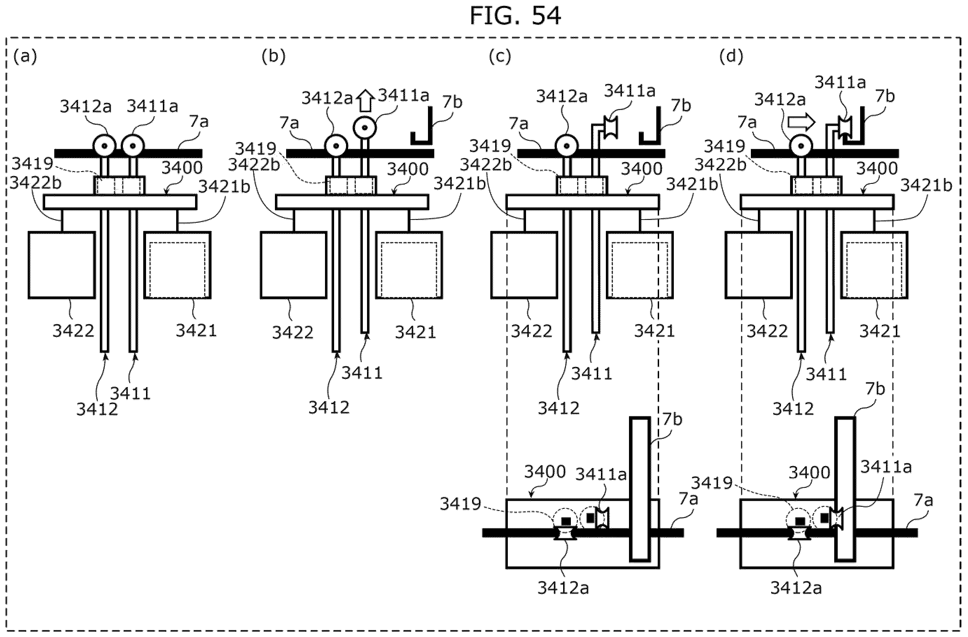

   FIG. 54 illustrates the transport vehicle according to Embodiment 11 starting to transition from the first rail to the second rail.
[FIG. 55]

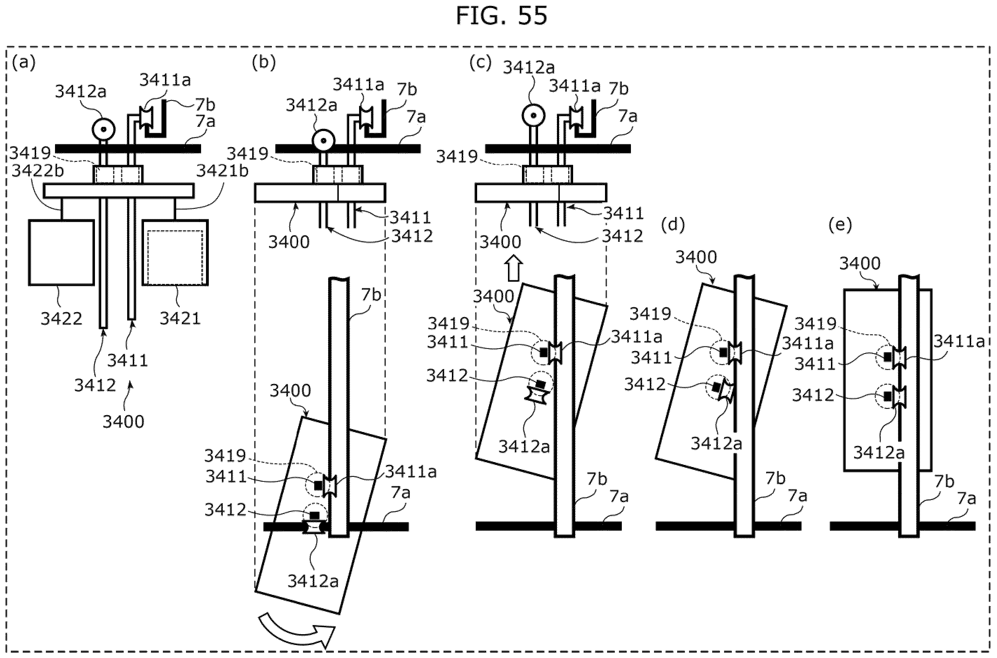

   FIG. 55 illustrates the transport vehicle according to Embodiment 11 from the start to the completion of transitioning from the first rail to the second rail.
[FIG. 56]

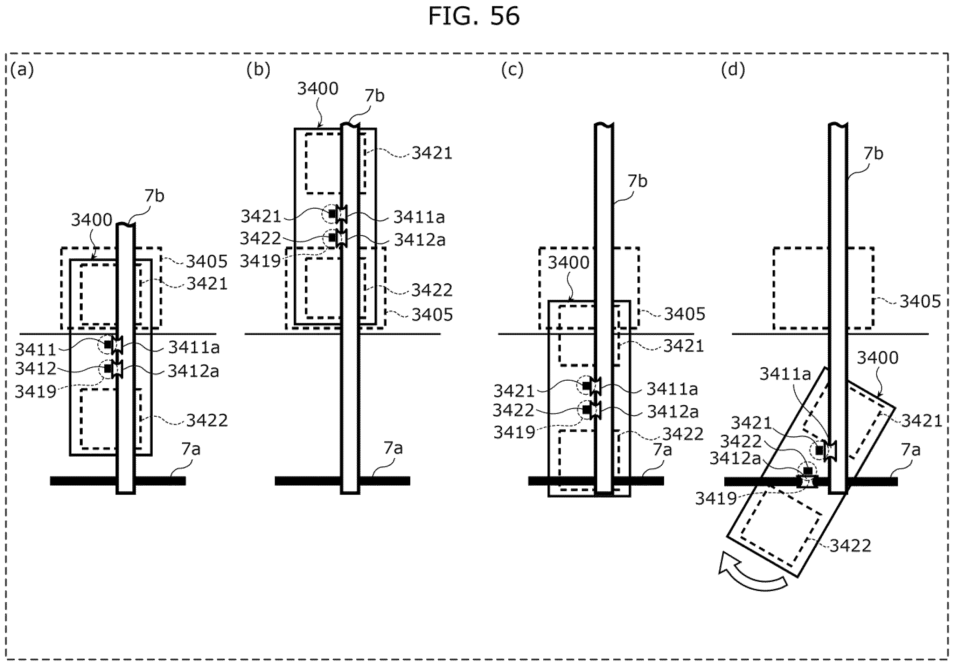

   FIG. 56 illustrates a transport vehicle according to Embodiment 11, showing a first package carriage collecting a package while the package in second package carriage is being stored in delivery box.
[FIG. 57]

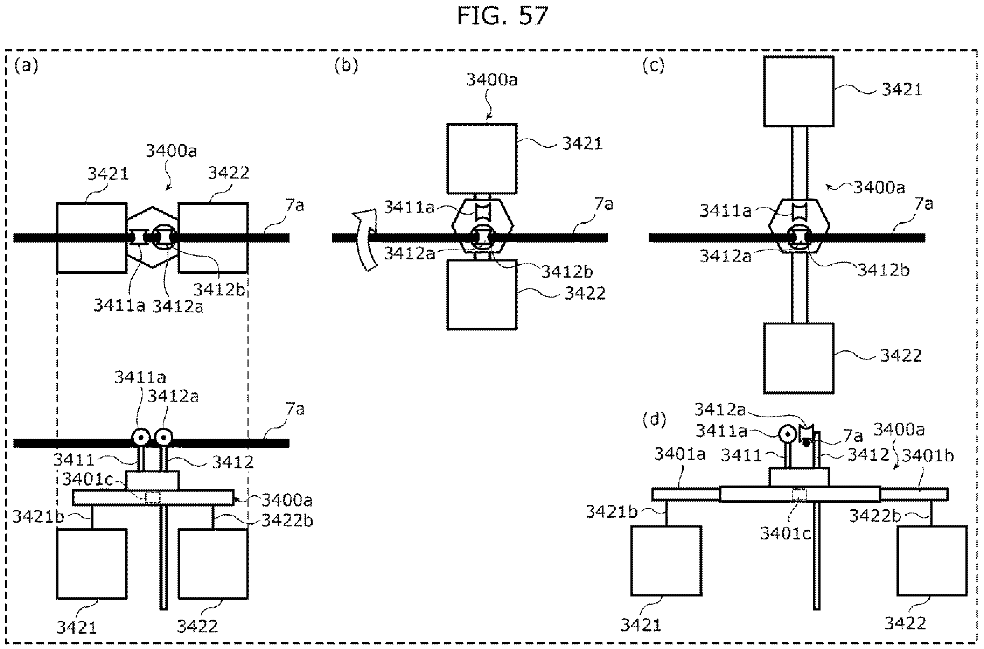

   FIG. 57 illustrates a transport vehicle according to Embodiment 12 extending a first slider and a second slider.
[FIG. 58A]

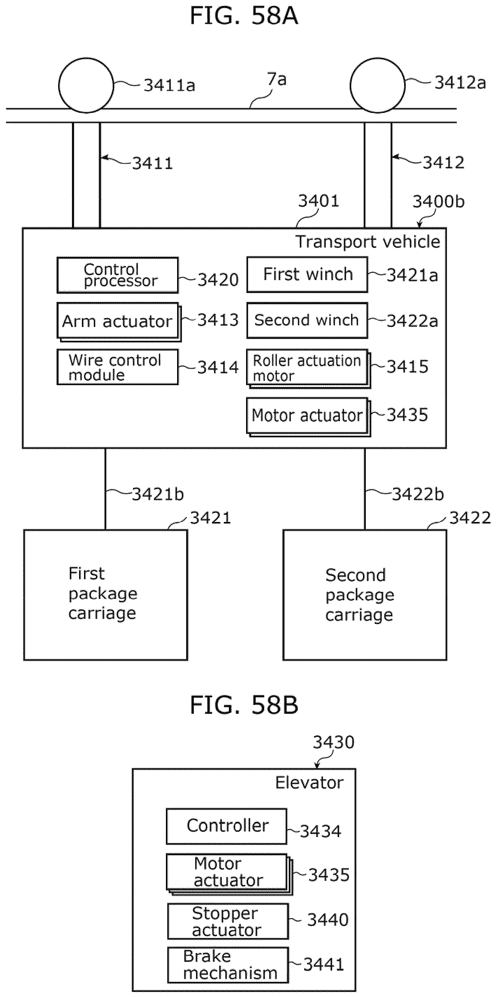

   FIG. 58A is a block diagram illustrating an example of the transport vehicle according to Embodiment 13.
[FIG. 58B]
   FIG. 58B is a block diagram illustrating elevator 3430 according to Embodiment 13.
[FIG. 59]

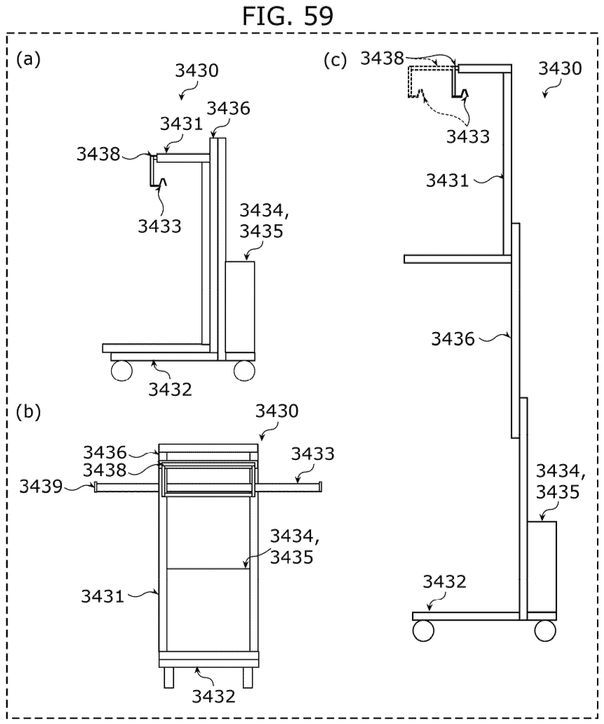

   FIG. 59 is a schematic diagram illustrating an elevator according to Embodiment 13.
[FIG. 60]

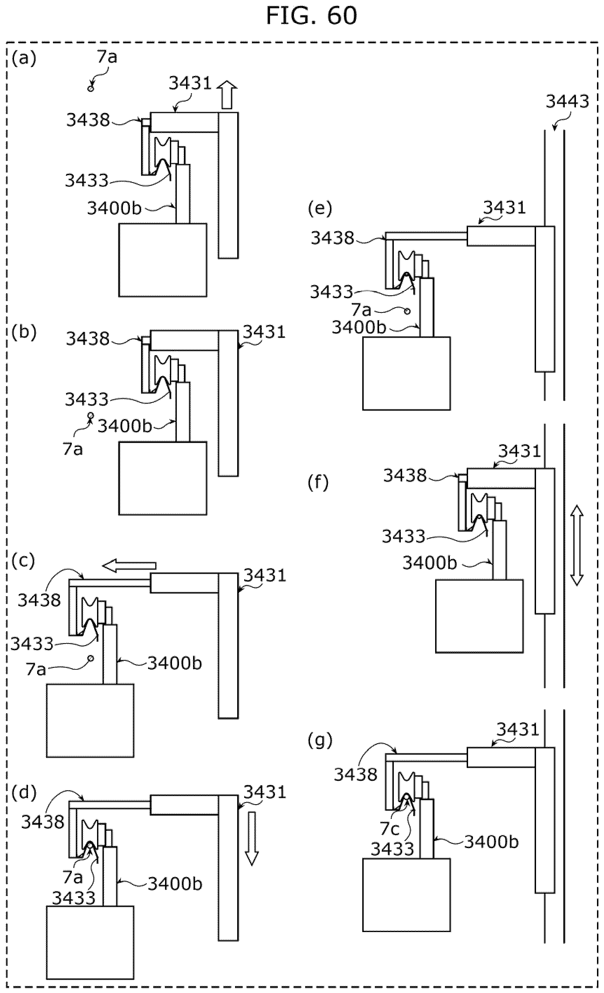

   FIG. 60 is a schematic diagram illustrating how the wheels of the transport vehicle are placed on the first member of the elevator and moved according to Embodiment 13.
[FIG. 61A]

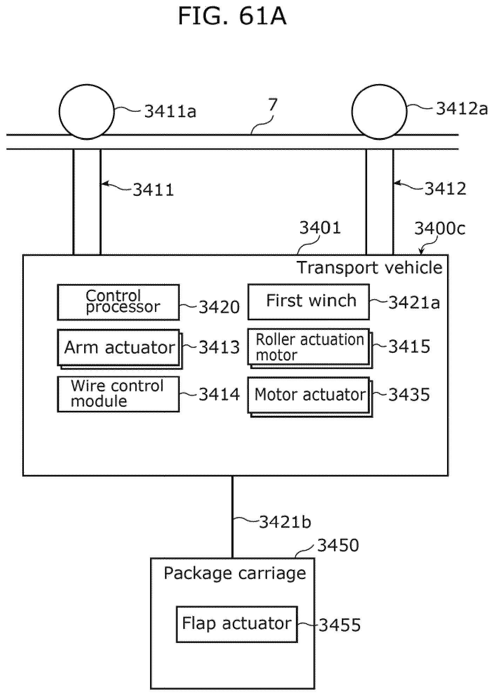

   FIG. 61A is a block diagram illustrating the transport vehicle according to Embodiment 14.
[FIG. 61B]

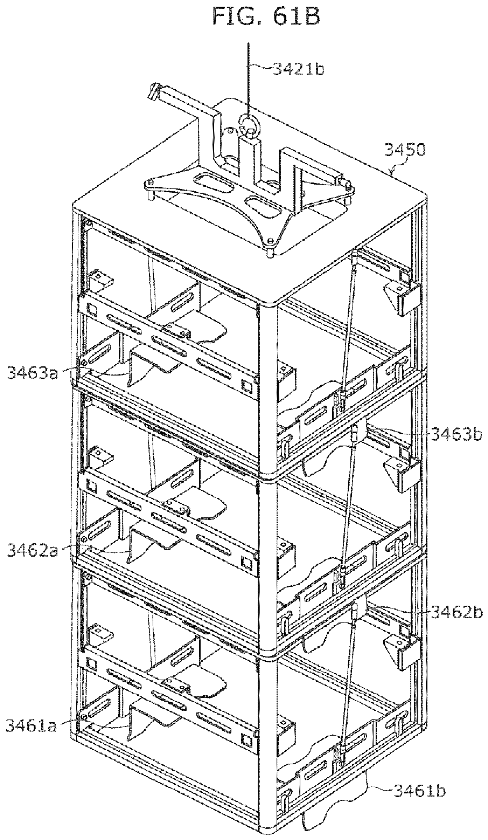

   FIG. 61B is a perspective view illustrating the package carriage according to Embodiment 14.
[FIG. 62]

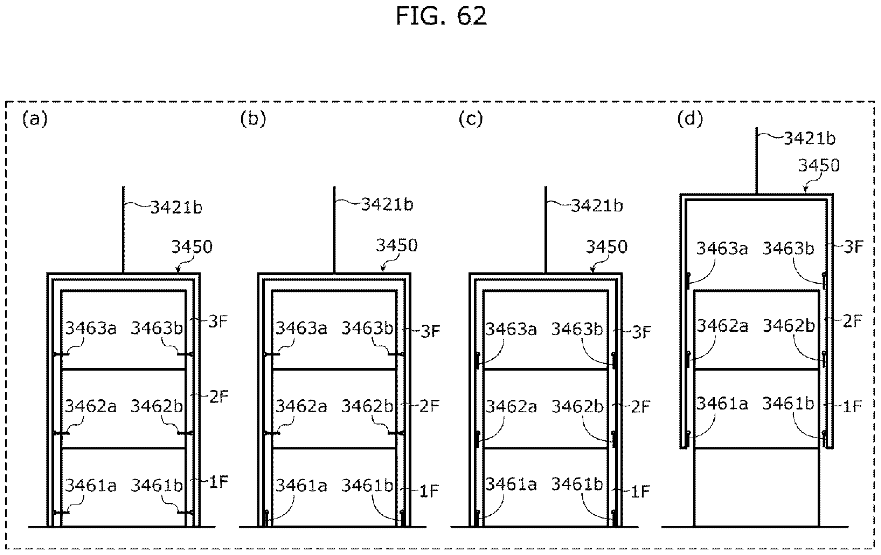

   FIG. 62 illustrates a package carriage accommodating a first package, a second package, and a third package delivering the first package to a first location.
[FIG. 63]

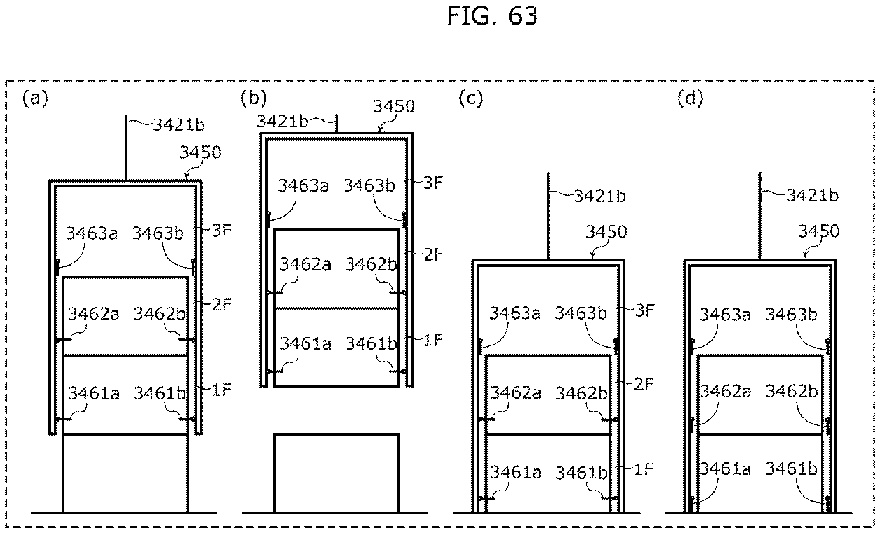

   FIG. 63 illustrates a package carriage accommodating a second package and a third package delivering the second package to a second location after delivering a first package to a first place.
[FIG. 64]

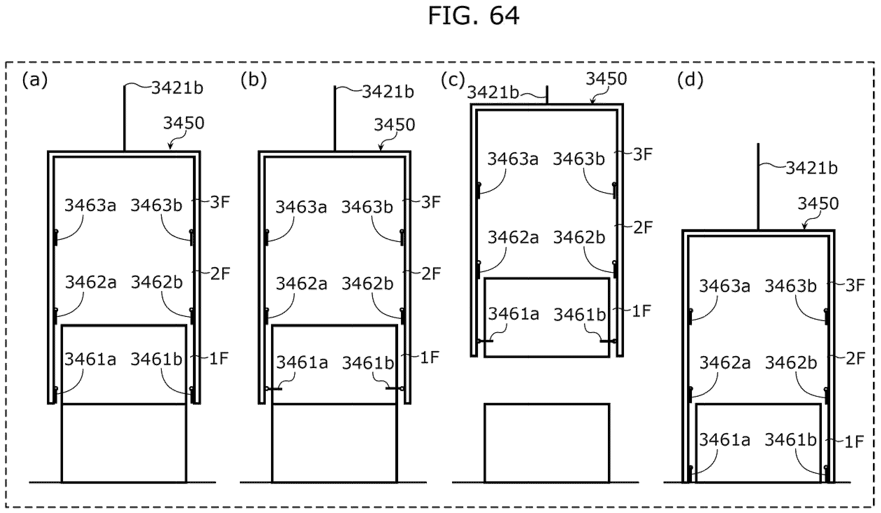

   FIG. 64 illustrates a package carriage accommodating a third package delivering the third package to a third location after delivering a second package to a second location.
[FIG. 65]

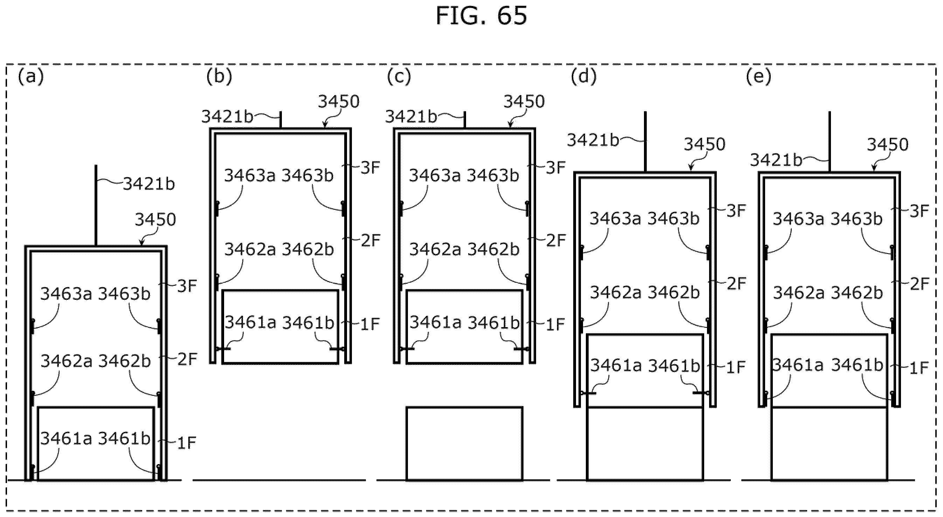

   FIG. 65 illustrates a package carriage, having collected a third package, collecting a second package.
[FIG. 66]

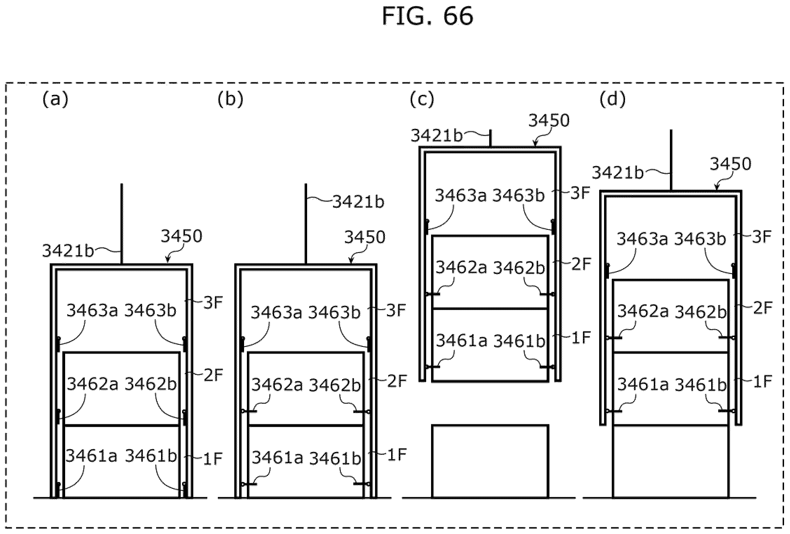

   FIG. 66 illustrates a package carriage, having collected a first package and a second package, starting to collect a third package.
[FIG. 67]

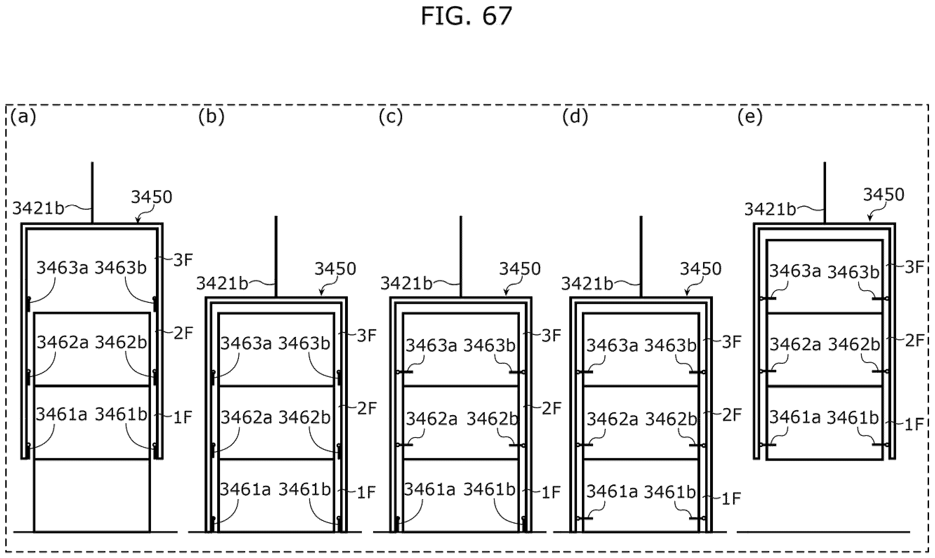

   FIG. 67 illustrates a package carriage, having started collecting a third package, collecting the third package.

### [Description of Embodiments]

These general and specific aspects may be implemented using a system, a method, an integrated circuit, a computer program, or a computer-readable recording medium such as a CD-ROM, or any combination of systems, methods, integrated circuits, computer programs, or computer-readable recording media.

Each embodiment described below shows a general or specific example. The numerical values, shapes, materials, elements, the arrangement and connection of the elements, steps, order of the steps etc., indicated in the following embodiments are mere examples, and therefore do not intend to limit the present disclosure. Therefore, among elements in the following embodiments, those not recited in any of the independent claims are described as optional elements.

In the following embodiments, expressions such as "sheet-shaped," "horizontal direction," and "approximately parallel" are used. For example, the terms "sheet-shaped", "horizontal direction", and "approximately parallel" do not only refer to exactly sheet-shaped, precisely horizontal direction, and precisely parallel, but also to shapes substantially similar to a sheet, directions substantially similar to the horizontal direction, and approximately parallel, that is, including variations of approximately a few percent. The terms "sheet-shaped", "horizontal direction", and "approximately parallel" refer to sheets, horizontal directions and parallel to the extent that the advantageous effects of the present disclosure can be achieved. The same applies to other expressions using "shape", "direction", or "approximately".

Hereinafter, embodiments are specifically described with reference to the drawings.

### [Embodiment 1]

Hereinafter, shipping system 2600 according to the present embodiment will be described with reference to FIG. 1 through FIG. 3. The configurations of each embodiment may be applied to the present embodiment.

FIG. 1 illustrates an example of shipping system 2600 according to Embodiment 1. FIG. 2 illustrates an example of a stocked first product being placed on display device 2610 and displayed in a multi-level case in shipping system 2600 according to Embodiment 1. The dashed line in FIG. 2 illustrates the range of motion of robot arm 2620. FIG. 3 is a block diagram illustrating an example of shipping system 2600 according to Embodiment 1.

As illustrated in FIG. 1 through FIG. 3, when a user orders a first product via a terminal device and order information indicating the ordered first product is obtained, shipping system 2600 is used, for example, to ship (pick) the first product indicated in the obtained order information or to display the stocked first product in a multi-level case. Therefore, in shipping system 2600, the first product ordered by the user is first stocked and displayed in a multi-level case, and then the first product ordered by the user is delivered by the unmanned aerial vehicle, package transport vehicle, etc., described in Embodiment 1, etc., above.

More specifically, in a store where the first product is displayed and shipped, this shipping system 2600 allows first products delivered to the store and removed from the delivery case, i.e., stocked first products, to be automatically displayed in a multi-level case using robot arm 2620 and display device 2610, etc. By the worker placing the stocked first product in the placement area, which is display screen 2611 of display device 2610, robot arm 2620 in shipping system 2600 can lift the first product and display it in a predetermined location in the multi-level case. In shipping system 2600, when shipping the ordered first product, robot arm 2620 can remove the ordered first product from the multi-level case and move it into a package box for delivery. Since this allows a worker to carry the first product that has been moved to the package box and attach the first product to the unmanned transport vehicle, the unmanned transport vehicle can deliver the first product to the user who ordered it.

Shipping system 2600 includes barcode reader 2605, data manager 2606, display device 2610, and robot arm 2620.

Barcode reader 2605 is capable of reading the barcode on the stocked first product when the first product is stocked. Barcode reader 2605 can read the barcode on the stocked first product by being used by a worker, but barcode reader 2605 may also be able to automatically read the barcode on the first product. Barcode reader 2605 outputs a unique first product ID associated with the read first product to data manager 2606. Barcode reader 2605 is one example of a sensor.

Data manager 2606 holds first and second databases, which are information on all products that users can order, and manages the first and second databases. Data manager 2606 includes storage 2624 such as memory, and storage 2624 stores the first and second databases.

The first database includes a plurality of items of data, each of which associates a product ID with a bottom image, arranged in a list. The product ID is an ID for identifying a product. The bottom image is an image showing the shape of the bottom of the product corresponding to the associated product ID. The first database may further include a plurality of items of data, each of which associates a product ID with an exterior image, arranged in a list. The product ID is an ID for identifying a product. The exterior image is an image showing the external appearance of the product corresponding to the associated product ID. Stated differently, the first database is a data table in which for each product, at least a product ID is associated with a bottom image, for example. The exterior image of the product may be an orthographic projection such as a plan view or frontal view of the product when the product is viewed from vertically above, or a product image showing the external appearance of the product.

The second database includes a plurality of items of data, each of which associates a product ID, which is an ID for identifying the product, with 3D data of the product corresponding to the product ID, arranged in a list. Stated differently, the second database is a data table in which for each product, a product ID is associated with 3D data of the product. Here, the 3D data includes the three-dimensional shape of the product, the size of the product, the height of the product, etc.

Data manager 2606 can obtain a first product ID identifying the first product based on the sensing data obtained from barcode reader 2605. When data manager 2606 obtains the first product ID from barcode reader 2605, it identifies the first bottom image, first exterior image, and 3D data corresponding to the obtained first product ID, from the first and second databases. Here, the first bottom image is an image showing the shape of the bottom of the first product, and is the bottom image corresponding to the first product ID among the plurality of bottom images included in the first database. The first exterior image is an image showing the external shape of the first product, and is the exterior image corresponding to first product ID among the plurality of exterior images included in the first database. The 3D data is the 3D data of the first product, and is the 3D data corresponding to the first product ID among the plurality of 3D data included in the first database.

Data manager 2606 outputs the identified first product ID and 3D data to robot arm 2620 and outputs the first bottom image and the first exterior image to display device 2610.

Display device 2610 is a display for displaying the first bottom image and the first exterior image of the first product on display screen 2611. For example, when the product is a container such as a PET bottle, if the first bottom image is circular when the PET bottle is upright, display device 2610 can display a first bottom image on display screen 2611 that is similar in shape and size to the bottom of the PET bottle. Display device 2610 displays the first bottom image and the first exterior image of the first product on display screen 2611 after barcode reader 2605 reads the first product ID of the first product.

More specifically, display device 2610 includes display controller 2612 that performs control for displaying the first bottom image and the first exterior image corresponding to the first product for which the first product ID has been read on display screen 2611. Note that display controller 2612 may be configured to display only the first bottom image on display screen 2611. Note that display controller 2612 need not be equipped in display device 2610 and may be a separate device from display device 2610.

More specifically, display device 2610 can obtain the first bottom image of the first product based on the first database and the obtained first product ID. This allows display controller 2612 of display device 2610 to display the first bottom image on display screen 2611, which is in the placement area for placing the first product. The placement area corresponds to the area on the display where the first bottom image is displayed, is the same size and shape as display screen 2611, and is synonymous with display screen 2611.

Note that display device 2610 may include a touch panel in the placement area where the image is displayed on display screen 2611. In such cases, display device 2610 may be configured to make it recognizable that the first product has been placed in the placement area. Display device 2610 may be a projector for projecting the first bottom image onto a screen. In such cases, the placement area corresponds to the area on the screen where the first bottom image is projected, and the area where the first bottom image is projected corresponds to display screen 2611.

Display device 2610 can also obtain the first exterior image, which is an image showing the external appearance of the first product, based on the first database and the obtained first product ID. This allows display controller 2612 of display device 2610 to display the first bottom image and additionally the first exterior image on display screen 2611, which is in the placement area for placing the first product.

Thus, since the first bottom image of the first product is displayed on display screen 2611 of display device 2610 or the first exterior image is displayed on display screen 2611 of display device 2610, a worker can place the first product whose first product ID has been read so that the first product is superimposed on a first location at which the first bottom image or the first exterior image is displayed on display screen 2611.

Display device 2610 further includes position determination processor 2614 that, when the first product is placed in the placement area, determines whether the first product is correctly placed at the first location in the placement area where the first bottom image is displayed on display screen 2611. Note that position determination processor 2614 need not include display device 2610; it is sufficient so long as position determination processor 2614 is included as an element of shipping system 2600. For example, position determination processor 2614 may be a separate device from display device 2610.

If position determination processor 2614 determines that the first product is correctly placed at the first location on the placement area, display controller 2612 controls display screen 2611 so as to display an image on display screen 2611 indicating that the first product is correctly placed at the first location. If position determination processor 2614 determines that the first product is not correctly placed at the first location, display controller 2612 controls display screen 2611 so as to display an image on display screen 2611 indicating that the first product is not correctly placed at the first location.

Shipping system 2600 may include loudspeaker 2633. In such cases, if position determination processor 2614 determines that the first product is correctly placed at the first location on the placement area, it may control loudspeaker 2633 to output audio indicating that the first product is correctly placed at the first location. If position determination processor 2614 determines that the first product is not correctly placed at the first location on the placement area, it may control loudspeaker 2633 to output audio indicating that the first product is not correctly placed at the first location.

In addition to display screen 2611 displaying an image indicating that the first product has been placed correctly, loudspeaker 2633 may output audio indicating that the first product has been placed correctly. In addition to display screen 2611 displaying an image indicating that the first product has not been placed correctly, loudspeaker 2633 may output audio indicating that the first product has not been placed correctly.

Shipping system 2600 may include drop sensor 2631 that detects dropping of the first product. In such cases, shipping system 2600 may further include drop determination processor 2632 that determines whether the first product lifted by robot arm 2620 has been dropped based on sensing data obtained from drop sensor 2631. Drop sensor 2631 is, for example, an infrared sensor or a camera sensor, and is one example of a sensor. Drop sensor 2631 may be installed in the store or on robot arm 2620.

If drop determination processor 2632 determines that the first product lifted by robot arm 2620 has been dropped, display controller 2612 may control display screen 2611 to display an image on display screen 2611 indicating that the first product has been dropped. If drop determination processor 2632 determines that the first product lifted by robot arm 2620 has been dropped, it may control loudspeaker 2633 to output audio indicating that the first product has been dropped.

If the first product lifted by robot arm 2620 has dropped, display screen 2611 may display an image indicating that the first product has dropped, and loudspeaker 2633 may output audio indicating that the first product has dropped.

Shipping system 2600 may include a camera capable of outputting image information, which is information indicating an image capturing the placement area and the first product placed in the placement area. In such cases, position determination processor 2614 may determine whether the first product is correctly placed at the first location based on image information obtained from the camera.

If position determination processor 2614 determines based on image information that the first product is correctly placed at the first location, display controller 2612 may control display screen 2611 so as to display an image on display screen 2611 indicating that the first product is correctly placed at the first location. Additionally, if position determination processor 2614 determines based on image information that the first product is correctly placed at the first location, it may cause loudspeaker 2633 to output audio indicating that the first product is correctly placed at the first location. If position determination processor 2614 determines based on image information that the first product is not correctly placed at the first location, display controller 2612 may control display screen 2611 so as to display an image on display screen 2611 indicating that the first product is not correctly placed at the first location. If position determination processor 2614 determines based on image information that the first product is not correctly placed at the first location, it may cause loudspeaker 2633 to output audio indicating that the first product is not correctly placed at the first location.

When the first product is placed at the first location where the first bottom image is displayed on display screen 2611, display controller 2612 outputs, to robot arm 2620, the first location information, which is information indicating the first location where the first bottom image is displayed in the placement area that is display screen 2611. The first location information is expressed, for example, as the coordinates of the first bottom image on the placement area. These coordinates are the same or substantially the same as the coordinates of the product placed in the placement area. The first location information may further include location information, which is information indicating the location where the first exterior image is displayed.

Display device 2610 may further include placement sensor 2613 that detects the placement of the first product at the first location where the first bottom image and the first exterior image of the first product are displayed on display screen 2611. Placement sensor 2613 is, for example, a camera, a pressure sensor, or an infrared sensor, and is one example of a sensor. When placement sensor 2613 detects the placement of the first product at the first location where the first bottom image and the first exterior image of the first product are displayed on display screen 2611, display controller 2612 stops displaying the first bottom image and the first exterior image of the first product on display screen 2611. Placement sensor 2613 is one example of a camera.

Robot arm 2620 is includes a plurality of arms and a plurality of joints (axles), etc., and can move freely, enabling it to lift and move the first product. Stated differently, robot arm 2620 can move the first product placed in the placement area of display device 2610 to a multi-level case for display, or move the first product displayed in the multi-level case to a package box.

More specifically, robot arm 2620 includes displacement portion 2622, first actuator 2621, arm controller 2623, and storage 2624.

Displacement portion 2622 can be actuated by first actuator 2621 to lift a target first product, which is one or more first products placed in the placement area, and change the position of the first product. Displacement portion 2622 includes a gripping portion capable of holding the first product by pinching the first product, a suction portion capable of holding the first product by sucking in air, or a magnetic portion capable of holding the first product by attracting the first product through magnetic force. In FIG. 2 and the like, an example is illustrated in which a gripping portion is used as one example of displacement portion 2622. Here, a target refers to the product that displacement portion 2622 is to lift.

Displacement portion 2622 can lift the first product placed in the placement area of display device 2610 and move the first product to inside the multi-level case to display it in the multi-level case. Displacement portion 2622 can lift the first product displayed in the multi-level case and move the first product to the package box.

First actuator 2621 can be controlled by arm controller 2623 to actuate displacement portion 2622. For example, under control by arm controller 2623, first actuator 2621 causes displacement portion 2622 to lift the first product placed in the placement area of display device 2610 and move the first product.

Arm controller 2623 can control the actuation of first actuator 2621. Arm controller 2623 can cause displacement portion 2622 to lift the first product by controlling first actuator 2621. More specifically, arm controller 2623 determines a method for lifting the first product using displacement portion 2622 by controlling first actuator 2621, using the second database, the first product ID, and the first location information, which is information indicating the first location where the first bottom image is displayed in the placement area.

Here, arm controller 2623 determining the method for lifting the first product using displacement portion 2622 includes arm controller 2623 determining a first part, which is a part for lifting the first product. More specifically, after the first product is placed at the first location in the placement area, arm controller 2623 controls first actuator 2621 to connect the first part of the first product placed in the placement area to displacement portion 2622. Stated differently, arm controller 2623 determines which part of the first product to connect to displacement portion 2622 in order to move the first product. This makes it less likely for the first product to drop from displacement portion 2622 even if the first product is moved after displacement portion 2622 lifts the first product.

After the first product is placed at the first location in the placement area, arm controller 2623 controls first actuator 2621 to lift the first product placed in the placement area using displacement portion 2622 according to the determined method, and move the first product into the multi-level case for display.

Based on information about the multi-level case stored in storage 2624 of robot arm 2620, control commands for first actuator 2621, etc., arm controller 2623 can link the first product ID with the placement location for the first product stored in multi-level case and store this information in storage 2624 upon robot arm 2620 storing the first product in a predetermined placement location in the multi-level case. Information about the multi-level case is information indicating, for example, the number of shelves in the multi-level case, the height of each shelf, the position of each shelf, the storage space of each shelf, and the distance from robot arm 2620 to each shelf. Therefore, robot arm 2620 can grab the first product having the first product ID indicated in the order information from the multi-level case and move it to the package box without a camera sensor or the like since the position of each first product displayed in the multi-level case is stored in storage 2624. This allows the first product indicated in the order information to be shipped.

Shipping system 2600 configured in this way may be included in, for example, operations management system according to, for example, Embodiment 11.

### Operation Example 1

In this operation example, the operations from reading the first product ID of the stocked first product to displaying the product in the multi-level case will be described with reference to FIG. 4.

FIG. 4 is a flowchart illustrating Operation Example 1 of the operation of shipping system 2600 according to Embodiment 1.

First, as illustrated in FIG. 4, barcode reader 2605 reads the barcode on the stocked nth first product when the first product is stocked (S2601). Barcode reader 2605 outputs the first product ID associated with the read nth first product to data manager 2606.

Next, when data manager 2606 obtains the first product ID from barcode reader 2605, it identifies the first bottom image corresponding to the obtained first product ID from the first database, and identifies the 3D data corresponding to the obtained first product ID from the second database. Data manager 2606 outputs the identified first product ID and 3D data corresponding to the first product ID from the second database to robot arm 2620, and outputs the identified first bottom image from the first database to display device 2610 (S2602). When data manager 2606 obtains the first product ID from barcode reader 2605, it may further identify the first exterior image corresponding to the obtained first product ID, from the first database. In such cases, data manager 2606 may output the first exterior image to display device 2610.

Next, once display device 2610 obtains the first bottom image from data manager 2606, display device 2610 displays the obtained first bottom image on display screen 2611 (S2603). In other words, display controller 2612 of display device 2610 displays the first bottom image at the first location on display screen 2611, which is in the placement area for placing the first product. If display device 2610 obtains the first exterior image from data manager 2606, it may display the obtained first exterior image on display screen 2611. In such cases, display controller 2612 may additionally display the first exterior image at a specified location on display screen 2611, which is in the placement area for placing the first product. Display device 2610 outputs, to robot arm 2620, first location information in which the first bottom image is displayed on the placement area.

Next, the first product whose first product ID has been read by barcode reader 2605 is placed at the first location in the placement area (S2604). Although a worker places the first product whose first product ID has been read at the first location in the placement area in the present embodiment, a robot may place the first product at the first location in the placement area.

Next, robot arm 2620 moves the first product placed at the first location (S2605). More specifically, once the 3D data in the second database that corresponds to the identified first product ID and the first product ID are obtained from data manager 2606 and the first location information is obtained from display device 2610, robot arm 2620 causes displacement portion 2622 to lift and move the first product placed at the first location indicated by the first location information.

Next, robot arm 2620 determines whether or not the moving of the first product is complete (S2606). Stated differently, robot arm 2620 causes displacement portion 2622 to lift the first product placed at the first location and move the first product into the multi-level case by arm controller 2623 controlling first actuator 2621. At this time, robot arm 2620 determines whether the process of displaying the first product in the multi-level case has finished.

If robot arm 2620 determines that the moving of the first product is not complete (NO in S2606), robot arm 2620 returns to and executes step S2605.

However, if robot arm 2620 determines that the moving of the first product is complete (YES in S2606), it sets n = n + 1, which is the next first product (S2607). Shipping system 2600 then returns to step S2601 and repeats the process for the next product, the n+1th first product. Thus, when a first product is delivered to the store, shipping system 2600 reads the respective first product ID of each first product and lifts the first product placed in the placement area to display it in a multi-level case.

### Operation Example 2

In this operation example, the operations for a case in which the result of determining whether the first product has been correctly placed in the first location is displayed in an image in step S2604 of FIG. 4 will be described with reference to FIG. 5.

FIG. 5 is a flowchart illustrating Operation Example 2 of the operation of shipping system 2600 according to Embodiment 1.

First, as illustrated in FIG. 5, when the first product is placed in the placement area, position determination processor 2614 of display device 2610 determines whether the first product is correctly placed at the first location in the placement area where the first bottom image is displayed on display screen 2611 (S2611).

If position determination processor 2614 determines that the first product is correctly placed at the first location on the placement area (YES in S2611), display controller 2612 of display device 2610 controls display screen 2611 so as to display an image on display screen 2611 indicating that the first product is correctly placed at the first location (S2612). The processing in the flowchart of FIG. 5 then ends. As a result, since display device 2610 outputs, to robot arm 2620, first location information, which is information indicating the first location where the first product is placed, robot arm 2620 can lift the first product placed in the first location.

However, if position determination processor 2614 determines that the first product is not correctly placed at the first location (NO in S2611), display controller 2612 controls display screen 2611 so as to display an image on display screen 2611 indicating that the first product is not correctly placed at the first location (S2613), and the processing returns to step S2611 and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 3

In this operation example, the operations for a case in which the result of determining whether the first product has been correctly placed in the first location is outputted as audio in step S2604 of FIG. 4 will be described with reference to FIG. 6. Operations that are the same as in FIG. 5 are assigned with the same reference signs, and repeated description will be omitted as appropriate.

FIG. 6 is a flowchart illustrating Operation Example 3 of the operation of shipping system 2600 according to Embodiment 1.

As illustrated in FIG. 6, if YES in step S2611, shipping system 2600 causes loudspeaker 2633 to output audio indicating that the first product has been correctly placed in the first location (S2614). The processing in the flowchart of FIG. 6 then ends. As a result, since display device 2610 outputs, to robot arm 2620, first location information, which is information indicating the first location where the first product is placed, robot arm 2620 can lift the first product placed in the first location.

If NO in step S2611, shipping system 2600 causes loudspeaker 2633 to output audio indicating that the first product has not been correctly placed in the first location (S2615), and returns to and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 4

In this operation example, the operations for a case in which the result of determining whether the first product has fallen while being lifted and moved is displayed in an image in step S2606 of FIG. 4 will be described with reference to FIG. 7.

FIG. 7 is a flowchart illustrating Operation Example 4 of the operation of shipping system 2600 according to Embodiment 1.

First, as illustrated in FIG. 7, drop determination processor 2632 of shipping system 2600 determines whether the first product lifted by robot arm 2620 has been dropped (S2621).

If drop determination processor 2632 determines that the first product lifted by robot arm 2620 has been dropped (YES in S2621), display controller 2612 controls display screen 2611 so as to display an image on display screen 2611 indicating that the first product has been dropped (S2622). The processing in the flowchart of FIG. 7 then ends. This allows a worker to recognize that a stocked first product has been dropped, and they can have robot arm 2620 grab the stocked first product again. If drop determination processor 2632 determines that the first product lifted by robot arm 2620 has been dropped, it may stop the actuation of robot arm 2620.

However, if drop determination processor 2632 determines that the first product lifted by robot arm 2620 has not been dropped (NO in S2621), the processing in the flowchart of FIG. 7 ends.

### Operation Example 5

In this operation example, the operations for a case in which the result of determining whether the first product has fallen while being lifted and moved is outputted as audio in step S2606 of FIG. 4 will be described with reference to FIG. 8.

FIG. 8 is a flowchart illustrating Operation Example 5 of the operation of shipping system 2600 according to Embodiment 1.

As illustrated in FIG. 8, if YES in step S2621, shipping system 2600 controls display screen 2611 and causes loudspeaker 2633 to output audio indicating that the first product has been dropped (S2623). The processing in the flowchart of FIG. 8 then ends. This allows a worker to recognize that a stocked first product has been dropped, and they can have robot arm 2620 grab the stocked first product again.

However, if drop determination processor 2632 determines that the first product lifted by robot arm 2620 has not been dropped (NO in S2621), the processing in the flowchart of FIG. 8 ends.

### Advantageous Effects

Next, advantageous effects achieved by shipping system 2600 according to the present embodiment will be described.

The control method according to the present embodiment is a control method in a system including display device 2610, and includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; and controlling display device 2610 to display the first bottom image in a placement area for placing the first product.

With this, since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor.

Therefore, with this control method, it is possible to easily presume the location where the first product is placed and inhibit a surge in the cost of the system.

The system according to the present embodiment executes the above-described control method.

This achieves the same above-described advantageous effects achieved by the control method.

The program according to the present embodiment is a program for causing the system to execute the control method.

This achieves the same above-described advantageous effects achieved by the control method.

In the control method according to the present embodiment, the first database further associates and manages product IDs and images, each which of which shows the external appearance of the product corresponding to the product ID. The control method obtains the first bottom image and a first exterior image, which is an image showing the external appearance of the first product, based on the first database and the obtained first product ID, and controls display device 2610 to display the first bottom image and the first exterior image in the placement area.

With this, since display device 2610 can display the first bottom image and the first exterior image, the correct first product can be placed at the location where the first bottom image and the first exterior image are displayed. Therefore, by enabling smooth picking operations, etc., of stocked products, this system can inhibit a surge in the cost of energy, including the system, and human resources.

In the control method according to the present embodiment, the system further includes robot arm 2620. Robot arm 2620 includes displacement portion 2622 that can lift a target first product, which is one or more first products placed in the placement area, and change the position of the first product. Displacement portion 2622 is actuated by first actuator 2621. The control method further includes: determining a method for lifting the first product using displacement portion 2622 using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and after the first product is placed at the first location in the placement area, controlling first actuator 2621 to lift the first product on the placement area using displacement portion 2622 according to the determined method.

With this, robot arm 2620 can lift the first product placed in the placement area of display device 2610 and move it to another location. Accordingly, this allows the stocked first product to be displayed in a predetermined location and allows the first product displayed to be removed and shipped.

The control method according to the present embodiment further includes: when the first product is placed on the placement area, determining whether the first product is correctly placed at the first location; if the first product is determined to be correctly placed at the first location, controlling display device 2610 to display an image on display device 2610 indicating that the first product is correctly placed at the first location; and if the first product is determined to be not correctly placed at the first location, controlling display device 2610 to display an image on display device 2610 indicating that the first product is not correctly placed at the first location.

With this, if the first product is correctly placed at the first location, an image indicating that the first product is correctly placed at the first location can be displayed. If the first product is not correctly placed at the first location, an image indicating that the first product is not correctly placed at the first location can be displayed. Accordingly, a worker can easily recognize whether the first product is correctly placed or not.

In the control method according to the present embodiment, the system further includes loudspeaker 2633. The control method further includes: when the first product is placed on the placement area, determining whether the first product is correctly placed at the first location; if the first product is determined to be correctly placed at the first location, controlling loudspeaker 2633 to cause loudspeaker 2633 to output audio indicating that the first product is correctly placed at the first location; and if the first product is determined to be not correctly placed, controlling loudspeaker 2633 to cause loudspeaker 2633 to output audio indicating that the first product is not correctly placed at the first location.

With this, if the first product is correctly placed at the first location, audio indicating that the first product is correctly placed at the first location can be output. If the first product is not correctly placed at the first location, audio indicating that the first product is not correctly placed at the first location can be output. Accordingly, a worker can easily recognize whether the first product is correctly placed or not.

The control method according to the present embodiment determines whether the first product is correctly placed based on image information obtained from the camera.

With this, it is possible to determine whether the first product is correctly placed or not using a camera. Additionally, it is possible to accurately determine whether the first product is correctly placed or not based on image information.

In the control method according to the present embodiment, displacement portion 2622 includes a gripping portion capable of holding the first product by pinching the first product, a suction portion capable of holding the first product by sucking in air, or a magnetic portion capable of holding the first product by attracting the first product through magnetic force.

With this, any type of first product can be lifted.

In the control method according to the present embodiment, displacement portion 2622 is a device for holding by pinching. In the control method, determining a method for lifting the first product using displacement portion 2622 includes determining a first part, which is a part for lifting the first product. The control method includes, after the first product is placed at the first location in the placement area, controlling the actuator to lift the first part of the first product in the placement area using displacement portion 2622.

With this, by determining a part of the first product by which to lift the first product and lifting the first product, it is possible to inhibit the lifted first product from dropping.

In the control method according to the present embodiment, the system further includes loudspeaker 2633. The control method further includes: determining whether the first product lifted by displacement portion 2622 has been dropped, based on the sensing result obtained from the sensor (drop sensor 2631); and after it is determined that the first product has been dropped, controlling loudspeaker 2633 to output audio indicating that the first product has been dropped.

With this, if the first product lifted by robot arm 2620 is dropped, audio indicating that the first product has been dropped can be output. Since a worker can easily recognize whether the first product is correctly placed or not, the worker can take measures such as collecting the dropped first product.

The control method according to the present embodiment further includes: determining whether the first product lifted by displacement portion 2622 has been dropped, based on the sensing result obtained from the sensor; and after it is determined that the first product has been dropped, controlling display device 2610 to output an image indicating that the first product has been dropped.

With this, if the first product lifted by robot arm 2620 is dropped, an image indicating that the first product has been dropped can be displayed. Since a worker can easily recognize whether the first product is correctly placed or not, the worker can take measures such as collecting the dropped first product.

In the control method according to the present embodiment, display device 2610 is a display for displaying, in the placement area, the first bottom image of the first product. The placement area corresponds to the area on the display where the first bottom image is displayed.

This enables the first bottom image to be displayed using a general-purpose display.

In the control method according to the present embodiment, the area on the display where the first bottom image is displayed includes a touch panel.

With this, by simply placing the stocked first product in the area where the first bottom image is displayed on the display, this can be used when determining whether the first product has been placed correctly.

In the control method according to the present embodiment, display device 2610 is a projector for projecting the first bottom image onto a screen. The placement area corresponds to the area on the screen where the first bottom image is projected.

With this, it is possible to determine whether the first product has been placed correctly or not using a projector.

### VARIATION 1 OF EMBODIMENT 1

Hereinafter, since the basic configuration of shipping system 2600a according to the present variation is the same as the basic configuration of the shipping system according to Embodiment 1, the same reference signs as above are used and repeated description of the basic configuration of shipping system 2600a in the present variation will be omitted where appropriate. The configurations of each embodiment may be applied to the present variation.

The configuration of the present variation will be described with reference to FIG. 9A through FIG. 9B.

FIG. 9A illustrates an example of shipping system 2600a according to Variation 1 of Embodiment 1. The dashed line in FIG. 9A illustrates the range of motion of robot arm 2620 when platform 2641 moves to a predetermined location on belt conveyor 2650. FIG. 9B is a block diagram illustrating an example of shipping system 2600a according to Variation 1 of Embodiment 1.

As illustrated in FIG. 9A and FIG. 9B, shipping system 2600a further includes belt conveyor 2650 for moving robot arm 2620.

Belt conveyor 2650 includes second actuator 2652, conveyor controller 2651, and transport slider 2640.

Belt conveyor 2650 is illustrated by the shaded hatching in FIG. 9A and is arranged along the direction in which the plurality of multi-level cases are lined up. Stated differently, a plurality of multi-level cases are arranged along the lengthwise direction of belt conveyor 2650. Belt conveyor 2650 can be actuated by second actuator 2652 to transport slider 2640 arranged on belt conveyor 2650 in the lengthwise direction of belt conveyor 2650, as indicated by the arrow.

Second actuator 2652 can be controlled by conveyor controller 2651 to actuate belt conveyor 2650. For example, second actuator 2652 can be controlled by conveyor controller 2651 to move transport slider 2640 to the front of a given multi-level case among the plurality of multi-level cases.

Conveyor controller 2651 can control the actuation of second actuator 2652. Conveyor controller 2651 can actuate or stop belt conveyor 2650 by controlling second actuator 2652. With this, since conveyor controller 2651 can control the movement of transport slider 2640 placed on belt conveyor 2650, conveyor controller 2651 can thus move transport slider 2640 to the front of a given multi-level case.

Transport slider 2640 includes platform 2641 that moves with robot arm 2620 by being actuated by belt conveyor 2650. Stated differently, platform 2641 is arranged on belt conveyor 2650 and can be moved by the actuation of belt conveyor 2650. Robot arm 2620 is arranged on platform 2641, and by being actuated by belt conveyor 2650, platform 2641 and robot arm 2620 move to the front of a given multi-level case.

Platform 2641 includes a cache area where a plurality of products can be placed. The cache area corresponds to the area on the upper surface of platform 2641. The cache area can also be said to correspond to the area on the upper surface of platform 2641 connected to robot arm 2620.

When placing a product on platform 2641, displacement portion 2622 of robot arm 2620 moves the first product from the placement area onto the cache area for temporary placement of the first product. Once at least the first product has been placed in the cache area, the cache area of platform 2641 moves with robot arm 2620 in accordance with the actuation of second actuator 2652.

When placing a plurality of products on platform 2641 of transport slider 2640, robot arm 2620 moves the first product, which is the first of the products, from the placement area and places it onto the cache area for temporary placement of the first product. After the second product is placed at the second location in the placement area, robot arm 2620 moves the second product from the placement area onto the cache area according to the determined method. Stated differently, robot arm 2620 moves the second product, which is the second of the products, from the placement area and places it onto the cache area for temporary placement of the second product.

After lifting the first product via displacement portion 2622, shipping system 2600a may actuate second actuator 2652 to move robot arm 2620 on belt conveyor 2650 to a first predetermined location for display. Stated differently, conveyor controller 2651 may control second actuator 2652 to move transport slider 2640 to a first predetermined location for display.

After robot arm 2620 arranged on belt conveyor 2650 moves to the first predetermined location, robot arm 2620 may actuate first actuator 2621 to move the first product lifted by displacement portion 2622 to a second predetermined location, which is a predetermined placement location.

In shipping system 2600a configured in this way, after a worker places the stocked first product in the placement area of display device 2610, robot arm 2620 can move the first product placed in the placement area onto the upper surface of platform 2641. More specifically, once a worker places the first product, which is the first of the products, in the placement area of display device 2610, robot arm 2620 places the first product in the cache area on the upper surface of platform 2641 after lifting the first product using displacement portion 2622. At this time, based on information about platform 2641 stored in storage 2624 and control commands for first actuator 2621, etc., robot arm 2620 can link the first product ID with the placement location for the first product placed in the cache area and store this information in storage 2624 upon placing the first product in the cache area. Information about platform 2641 is information indicating, for example, the height of platform 2641, the location of the cache area, the space of the cache area, and the distance from robot arm 2620 to the cache area. Therefore, robot arm 2620 can move to the first predetermined location, grab the first product having the first product ID placed in the cache area, and move it to the second predetermined location in the multi-level case without a camera sensor or the like, since the position of the first product placed in the cache area is stored in storage 2624. This allows the first product delivered to the store to be displayed in a multi-level case.

When a plurality of products such as the first product and the second product are placed in the cache area, once a worker places the first product, which is the first of the products, in the placement area of display device 2610, robot arm 2620 places the first product in the cache area on the upper surface of platform 2641. Subsequently, once a worker places the second product, which is the second of the products, in the placement area of display device 2610, robot arm 2620 places the second product in the cache area on the upper surface of platform 2641 after lifting the second product using displacement portion 2622. At this time, based on information about platform 2641 stored in storage 2624 and control commands for first actuator 2621, etc., robot arm 2620 can link the second product ID with the placement location for the second product placed in the cache area and store this information in storage 2624 upon placing the second product in the cache area. Therefore, robot arm 2620 can move to the first predetermined location, grab the second product having the second product ID placed in the cache area, and move it to the second predetermined location in the multi-level case without a camera sensor or the like, since the position of the second product placed in the cache area is stored in storage 2624. This allows the second product delivered to the store to be displayed in a multi-level case.

In the present variation, if the first product lifted by robot arm 2620 drops on belt conveyor 2650, belt conveyor 2650 may be actuated to move the first product to an unobstructed position. In such cases, a weight sensor may be provided to detect the first product dropped on belt conveyor 2650.

Next, advantageous effects achieved by shipping system 2600a according to the present variation will be described.

In the control method according to the present variation, the system (shipping system 2600a) further includes belt conveyor 2650 for moving robot arm 2620. Belt conveyor 2650 is actuated by second actuator 2652. The control method further includes: actuating second actuator 2652 to move robot arm 2620 on belt conveyor 2650 to a first predetermined location after the first product is lifted by displacement portion 2622; and after robot arm 2620 on belt conveyor 2650 has moved to the first predetermined location, actuating first actuator 2621 to move the first product lifted by displacement portion 2622 to the second predetermined location.

This allows robot arm 2620 that has lifted the first product to move with the first product on belt conveyor 2650. This allows robot arm 2620 to move the first product to the second predetermined location even if the distance from the placement area to the second predetermined location is far.

The control method according to the present variation is a control method in a system including robot arm 2620 and display device 2610. Robot arm 2620 includes displacement portion 2622 which can lift a target and change the position of the target. Displacement portion 2622 is actuated by first actuator 2621, and the system further includes belt conveyor 2650 for moving robot arm 2620. Belt conveyor 2650 is actuated by second actuator 2652. The control method includes: obtaining a first product ID identifying a first product, based on sensing data obtained from a sensor; obtaining a first bottom image showing the shape of the bottom of the first product, based on (i) a first database that associates and manages product IDs and images, each of which shows a shape of a bottom surface of the product corresponding to the product ID, and (ii) the obtained first product ID; controlling display device 2610 to display the first bottom image in a placement area for placing the product; obtaining a second product ID identifying a second product, based on sensing data obtained from the sensor; obtaining a second bottom image showing the shape of the bottom of the second product, based on the first database and the obtained second product ID; controlling display device 2610 to display the second bottom image in the placement area; determining a method for lifting the first product using displacement portion 2622 using (i) a second database that associates and manages product IDs and 3D data, each item of 3D data being of the product corresponding to the product ID, (ii) the first product ID, and (iii) first location information, which is information indicating the first location in the placement area where the first bottom image is displayed; after the first product is placed in the first location in the placement area, controlling first actuator 2621 to lift the first product in the placement area using displacement portion 2622 according to the determined method; after lifting the first product, controlling first actuator 2621 to move the first product lifted by displacement portion 2622 to a cache area for temporary placement of the first product. The cache area moves with robot arm 2620 in accordance with the actuation of second actuator 2652. The control method further includes: determining a method for lifting the second product using displacement portion 2622 using the second database, the second product ID, and second location information, which is information indicating a second location in the placement area where the second bottom image is displayed; after the second product is placed at the second location in the placement area, controlling first actuator 2621 to lift the second product on the placement area using displacement portion 2622 according to the determined method; after lifting the second product, controlling first actuator 2621 to move the second product lifted by displacement portion 2622 to a cache area for temporary placement of the second product.

For example, if there is no cache area, the robot arm must lift the first product one at a time, move to a predetermined location for placing the first product, and then return after the move.

In contrast, with the present embodiment, it is possible to place a plurality of products on the cache area. This allows robot arm 2620 to collect a plurality of products in a short period of time, efficiently move them to a predetermined location, and place the products after the move.

Since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor. The same applies to the second product. Accordingly, with this control method, it is possible to easily identify the location where the first product and the second product are placed and inhibit a surge in the cost of the system.

Robot arm 2620 can lift the first product placed in the placement area of display device 2610 according to the 3D data of the first product, and can also move the first product to the cache area. After lifting the first product, robot arm 2620 can subsequently lift another second product according to the 3D data of that second product, and can also move that second product to the cache area. Thus, a plurality of products can be placed in the cache area in succession. This makes it possible to place a plurality of stocked products (first and second products) in the cache area, thus allowing a plurality of products to be moved at once. This allows a plurality of products to be displayed in a predetermined location and a plurality of displayed products to be removed and shipped.

Therefore, by enabling smooth picking operations, etc., of stocked products, this system can inhibit a surge in the cost of energy, including the system, and human resources.

In the control method according to the present variation, the cache area corresponds to the area of a part connected to robot arm 2620.

With this, since robot arm 2620 can be placed in the cache area, the first and second products along with robot arm 2620 can be moved to a second predetermined location, and thus a plurality of products can be displayed in a predetermined location and a plurality of displayed products can be removed and shipped. This makes it possible to inhibit an increase in the time required to display and ship a plurality of products.

In the control method according to the present variation, the cache area corresponds to an area on the upper surface of platform 2641 that moves with robot arm 2620 via belt conveyor 2650.

With this, robot arm 2620 can easily place the first and second products it lifted onto the upper surface of the platform.

### VARIATION 2 OF EMBODIMENT 1

Hereinafter, since the basic configuration of shipping system 2600b according to the present variation is the same as the basic configuration of the embodiment described above, the same reference signs as above are used and repeated description of the basic configuration of shipping system 2600b in the present variation will be omitted where appropriate. The configurations of each embodiment may be applied to the present variation.

The configuration of the present variation will be described with reference to FIG. 10A.

FIG. 10A illustrates an example of a shipping system according to Variation 2 of Embodiment 1. In FIG. 10A, (a) illustrates an example of first shelf 2656a, on which the first product is displayed, moving upward. The double-dotted lines indicate first shelf 2656a after it has been raised. In FIG. 10A, (b) illustrates an example of robot arm 2620 extending its second arm 2620b for the first product located at the back of second shelf 2656b. In FIG. 10A, (c) illustrates displacement portion 2622 of robot arm 2620 grabbing the first product. In FIG. 10A, (d) illustrates displacement portion 2622 of robot arm 2620 lifting the first product. In FIG. 10A, (e) illustrates robot arm 2620, which has lifted the first product, shortening its extended second arm 2620b. In FIG. 10A, (f) illustrates robot arm 2620 moving the first product it has lifted.

As illustrated in FIG. 10A, shipping system 2600b further includes multi-level case 2655. Shipping system 2600b may further include belt conveyor 2650 for moving the above-described robot arm 2620.

In multi-level case 2655, a plurality of shelves 2656 are arranged in a plurality of levels in the up-down direction. More specifically, multi-level case 2655 includes a plurality of shelves 2656, actuator 2657 that changes the up-down direction position of each of the plurality of shelves 2656, and control processor 2658 that controls the actuation of actuator 2657. Multi-level case 2655 is one example of a showcase.

Each of the plurality of shelves 2656 is plate-shaped and arranged in an attitude parallel to the horizontal direction. Each of the plurality of shelves 2656 is a shelf for placing the first product. The plurality of shelves 2656 are aligned in a plurality of levels in the up-down direction. The first product is displayed on each of the plurality of shelves 2656 by robot arm 2620.

The plurality of shelves 2656 include first shelf 2656a and second shelf 2656b located one level below first shelf 2656a. In the present embodiment, two of the plurality of shelves 2656 that are adjacent to each other in the up-down direction, namely first shelf 2656a and second shelf 2656b, will be used as an example.

Each of the plurality of shelves 2656 can be moved in the up-down direction by the actuation of actuator 2657 controlled by control processor 2658.

Actuator 2657 can be controlled by control processor 2658 to move each of the plurality of shelves 2656 in the up-down direction. For example, actuator 2657 is controlled by control processor 2658 to move from, among the plurality of shelves 2656, the top shelf 2656 to a specified shelf 2656 in the up-down direction.

Control processor 2658 can change the distance between first shelf 2656a and second shelf 2656b by controlling actuator 2657. More specifically, when control processor 2658 obtains a first signal for requesting a larger spacing in the up-down direction between the first shelf 2656a and the second shelf 2656b, control processor 2658 can control actuator 2657 to change the spacing from a first spacing to a second spacing greater than the first spacing.

For example, as illustrated in (a) in FIG. 10A, when robot arm 2620 is to take the first product displayed on second shelf 2656b, which is the second shelf from the top, upon receiving the first signal from robot arm 2620, control processor 2658 can control actuator 2657 to raise the top shelf, which is first shelf 2656a. Since this causes first shelf 2656a to be raised by actuator 2657, the spacing in the up-down direction from second shelf 2656b changes from the first spacing to the second spacing.

To prevent the first product from contacting the ceiling of multi-level case 2655, before first shelf 2656a is raised, it is preferable that the spacing between first shelf 2656a on which the first product is placed and the ceiling of multi-level case 2655 is a third spacing that is greater than the first spacing. The third spacing may be the same as the second spacing, and, alternatively, may be greater than the second spacing. Stated differently, a space larger than the first spacing is formed between top shelf 2656 in multi-level case 2655 and the ceiling of multi-level case 2655.

As illustrated in (f) in FIG. 10A, when robot arm 2620 is to take the first product displayed at the back on second shelf 2656b, which is the second shelf from the top, upon receiving the second signal from robot arm 2620, control processor 2658 can control actuator 2657 to lower the top shelf, which is first shelf 2656a, back to its original position. Since this causes first shelf 2656a to be lowered by actuator 2657, the spacing in the up-down direction from second shelf 2656b changes from the second spacing to the first spacing.

Next, an operation example of shipping system 2600b according to the present variation will be given.

For example, in shipping system 2600, when shipping a first product based on order information from a user, it may be necessary to remove the first product to be shipped from the back of shelf 2656. Since shipping system 2600 manages all first products and multi-level cases 2655, it manages which first product to be shipped is located on which shelf 2656 of which multi-level case 2655. Upon shipping system 2600 using robot arm 2620 to remove a target first product from the back of shelf 2656, the target first product may be difficult to remove due to a first product located on the front of shelf 2656.

This operation example assumes that robot arm 2620 lifts and removes a target first product that is placed on second shelf 2656b and hidden behind another first product, and then ships the removed first product.

First, as illustrated in (a) in FIG. 10A, by moving transport slider 2640 using belt conveyor 2650, robot arm 2620 moves to the front of multi-level case 2655 that is displaying the target first product. Robot arm 2620 then outputs a first signal for requesting multi-level case 2655 to increase the spacing in the up-down direction between first shelf 2656a and second shelf 2656b. With this, control processor 2658 of multi-level case 2655 obtains the first signal.

Next, as illustrated in (a) and (b) in FIG. 10A, when control processor 2658 obtains the first signal, control processor 2658 controls actuator 2657 to change the spacing in the up-down direction between first shelf 2656a and second shelf 2656b from the first spacing to a second spacing greater than the first spacing. Stated differently, actuator 2657 is controlled by control processor 2658 to raise first shelf 2656a so that the first product does not touch the ceiling of multi-level case 2655. This increases the spacing between second shelf 2656b and first shelf 2656a where the target first product is located, allowing robot arm 2620 to insert displacement portion 2622 between them.

Next, as illustrated in (b) in FIG. 10A, robot arm 2620 extends first arm 2620a upward so that displacement portion 2622 is positioned at a height between first shelf 2656a and second shelf 2656b, and then extends second arm 2620b in the horizontal direction. Robot arm 2620 positions displacement portion 2622 above the target first product, which is located at the back of second shelf 2656b and hidden behind another first product, and displaces displacement portion 2622 to change the attitude of displacement portion 2622 so that the target first product can be grabbed.

Next, as illustrated in (c) and (d) in FIG. 10A, displacement portion 2622 of robot arm 2620 grabs and lifts the target first product.

Next, as illustrated in (e) in FIG. 10A, robot arm 2620 lifts the target first product and retracts the extended second arm 2620b.

Next, as illustrated in (f) in FIG. 10A, after robot arm 2620 removes the target first product, it outputs a second signal for requesting multi-level case 2655 to decrease (return to original) the spacing in the up-down direction between first shelf 2656a and second shelf 2656b. With this, control processor 2658 of multi-level case 2655 obtains the second signal.

Next, when control processor 2658 obtains the second signal, control processor 2658 controls actuator 2657 to change the spacing in the up-down direction between first shelf 2656a and second shelf 2656b from the second spacing to the first spacing. This returns the spacing between second shelf 2656b and first shelf 2656a to the original first spacing.

Next, as illustrated in (f) in FIG. 10A, when second arm 2620b of robot arm 2620 retracts to a predetermined amount, first arm 2620a retracts downward to a predetermined amount.

Robot arm 2620 can then place the lifted first product on platform 2641 of transport slider 2640. Robot arm 2620 does this until the target first product is removed from multi-level case 2655. Robot arm 2620 may move the target first product to the package box while the target first product is lifted, without placing the target first product on platform 2641 of transport slider 2640.

In shipping system 2600b, in cases in which the target first product is to be removed, it may be determined in advance whether the target first product can be removed without raising shelf 2656. If shipping system 2600b determines that shelf 2656 cannot be removed without raising the shelf, the shipping system 2600b may perform the operation example described above.

Although only top shelf 2656 is raised in the example given in the present variation, when, for example, the target first product is placed at the back on the third shelf 2656 from the top and hidden by another first product, upon receiving the first signal, control processor 2658 can control actuator 2657 to change the spacing in the up-down direction between second shelf 2656b and the third shelf (the third shelf 2656 from the top) from the first spacing to the second spacing. Stated differently, actuator 2657 is controlled by control processor 2658 to raise first shelf 2656a and second shelf 2656b so that the first product does not touch the ceiling of multi-level case 2655. This increases the spacing between second shelf 2656b and the third shelf where the target first product is located, allowing robot arm 2620 to insert displacement portion 2622. Thus, in the present variation, when robot arm 2620 takes a first product placed at the back of shelf 2656 and hidden behind another first product, it raises all of the shelves that are positioned above shelf 2656 where the target first product is placed.

Next, advantageous effects achieved by shipping system 2600b according to the present variation will be described.

In the control method according to the present variation, the system (shipping system 2600b) further includes a showcase (multi-level case 2655), the showcase includes a plurality of shelves 2656 for placing a first product, the plurality of shelves 2656 forming a plurality of levels in the up-down direction, and actuator 2657 that changes the position in the up-down direction of each of shelves 2656. The plurality of shelves 2656 include first shelf 2656a and second shelf 2656b located one level below first shelf 2656a. When the system obtains a first signal for requesting a larger spacing in the up-down direction between first shelf 2656a and second shelf 2656b, the system controls actuator 2657 to change the spacing from a first spacing to a second spacing greater than the first spacing.

With this, in the plurality of shelves 2656, even if the first product placed on shelf 2656 is placed at the back of shelf 2656 and hidden by another first product, robot arm 2620 can lift the first product at the back of shelf 2656 by increasing the spacing in the up-down direction between first shelf 2656a and second shelf 2656b. This allows the first product to be displayed in such a way that the space above shelf 2656 is effectively utilized, since the first product can be lifted no matter where the first product is placed on shelf 2656.

### VARIATION 3 OF EMBODIMENT 1

Hereinafter, since the basic configuration of shipping system 2600c according to the present variation is the same as the basic configuration of the embodiment described above, the same reference signs as above are used and repeated description of the basic configuration of shipping system 2600c in the present variation will be omitted where appropriate. The configurations of each embodiment may be applied to the present variation.

The configuration of the present variation will be described with reference to FIG. 10B. FIG. 10B illustrates an example of shipping system 2600c according to Variation 3 of Embodiment 1. In FIG. 10B, (a) illustrates an example of a plurality of shelves 2656 on which the first product is displayed. In FIG. 10B, (b) illustrates an example of robot arm 2620 extending its arm for the first product located at the back of first shelf 2656a. In FIG. 10B, (c) illustrates displacement portion 2622 of robot arm 2620 grabbing the first product. In FIG. 10B, (d) illustrates displacement portion 2622 of robot arm 2620 lifting the first product. In FIG. 10B, (e) illustrates an example of shelf 2656, on which the first product is displayed, sliding after front wall 2662 is rotated and tilted down. Note that the numbers 1 through 7 illustrated next to FIG. 10B indicate the number of levels of shelves 2656.

Shipping system 2600c includes multi-level case 2655a and robot arm 2620. Shipping system 2600c is one example of a showcase system.

As illustrated in (a) and (b) in FIG. 10B, multi-level case 2655a includes a plurality of shelves 2656 forming a plurality of levels in the vertical direction, first actuator 2657a that moves first shelf 2656a included in the plurality of shelves 2656 in the horizontal direction, control processor 2658, first curtain 2659a, second curtain 2659b, and second actuator 2657b. Multi-level case 2655a is one example of a showcase.

Each of the plurality of shelves 2656 is plate-shaped and arranged in an attitude parallel to the horizontal direction. Each of the plurality of shelves 2656 is a shelf for placing the first product. The plurality of shelves 2656 are aligned in the up-down direction. Each of the plurality of shelves 2656 is moved in the horizontal direction by first actuator 2657a.

First shelf 2656a of the plurality of shelves 2656 can be moved to a first position and a second position that is forward of the first position by being actuated by first actuator 2657a. The first position is a position where first shelf 2656a is housed in multi-level case 2655a. The second position is a position where first shelf 2656a slides and extends in the horizontal direction from multi-level case 2655a so as to protrude from multi-level case 2655a.

First curtain 2659a is located on the front of the plurality of shelves 2656 and extends from the upper area of multi-level case 2655a to the lower area. More specifically, the top end of first curtain 2659a is connected to the top plate of multi-level case 2655a, and the bottom end of first curtain 2659a can contact the top end of second curtain 2659b.

Second curtain 2659b is located on the front of the plurality of shelves 2656 and extends from the lower area of multi-level case 2655a to the upper area. More specifically, the bottom end of second curtain 2659b is connected to the bottom plate of multi-level case 2655a, and the top end of second curtain 2659b can contact the bottom end of first curtain 2659a.

The opening of multi-level case 2655a is covered by the bottom end of first curtain 2659a and the top end of second curtain 2659b contacting each other.

Second actuator 2657b actuates first curtain 2659a and second curtain 2659b. With this, the bottom end of first curtain 2659a and the top end of second curtain 2659b can move in the up-down direction. By separating the bottom end of first curtain 2659a from the top end of second curtain 2659b, the inside of multi-level case 2655a can be opened, exposing the plurality of shelves 2656. Note that second actuator 2657b may be provided for each of first curtain 2659a and second curtain 2659b.

Second actuator 2657b is controlled by control processor 2658 of multi-level case 2655a. When control processor 2658 obtains a signal instructing that first shelf 2656a should be moved forward, control processor 2658 controls first actuator 2657a to move first shelf 2656a from the first position to the second position. More specifically, when the opening of multi-level case 2655a is covered, when control processor 2658 obtains a signal instructing that first shelf 2656a should be moved forward, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. Control processor 2658 is one example of the controller.

Robot arm 2620 includes displacement portion 2622, arm controller 2623, and arm actuator 2625.

Displacement portion 2622 can be actuated by arm actuator 2625 to lift a target product (the first product), which is one or more products placed on first shelf 2656a, and change the position of the target product. Displacement portion 2622 includes a gripping portion capable of holding the first product by pinching the first product, a suction portion capable of holding the first product by sucking in air, or a magnetic portion capable of holding the first product by attracting the first product through magnetic force.

Displacement portion 2622 can lift the first product placed on shelf 2656 and move the first product to inside multi-level case 2655a to display it on another shelf 2656 or in another multi-level case 2655a.

Arm actuator 2625 actuates displacement portion 2622. More specifically, arm actuator 2625 can be controlled by arm controller 2623 to actuate displacement portion 2622. "Arm actuator 2625" may be read as "first actuator 2621" described above. Therefore, arm actuator 2625 may have the same functional configuration as first actuator 2621.

When arm controller 2623 obtains a signal instructing it to remove the first product on first shelf 2656a, the first actuator is controlled by control processor 2658 to move first shelf 2656a from the first position to the second position, and arm actuator 2625 is controlled to displace the position of the first product on first shelf 2656a using displacement portion 2622.

When the opening (the front retrieval opening) of multi-level case 2655a is covered by first curtain 2659a and second curtain 2659b, when control processor 2658 obtains a signal instructing to remove the first product from first shelf 2656a, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. Arm controller 2623 (3) controls arm actuator 2625 to displace the position of the first product on first shelf 2656a using displacement portion 2622.

Next, an operation example of shipping system 2600c according to the present variation will be given.

As illustrated in (b) in FIG. 10B, for example, in shipping system 2600c, when shipping a first product based on order information from a user, it may be necessary to remove the first product to be shipped from the back of shelf 2656. Since shipping system 2600c manages all first products and multi-level cases 2655a, it manages which first product to be shipped is located on which shelf 2656 of which multi-level case 2655a. Upon shipping system 2600c using robot arm 2620 to remove a target first product from the back of shelf 2656, the target first product may be difficult to remove due to a first product located on the front of shelf 2656.

This operation example assumes that robot arm 2620 lifts and removes a target first product by moving shelf 2656, and then ships the removed first product.

First, as illustrated in (a) in FIG. 10B, there are times when the opening of multi-level case 2655a is covered. Therefore, when robot arm 2620 goes to remove the first product, control processor 2658 obtains a signal from the data manager instructing that first shelf 2656a should be moved forward when the opening of multi-level case 2655a is covered.

As illustrated in (b) of FIG. 10B, when control processor 2658 obtains a signal instructing that first shelf 2656a should be moved forward, control processor 2658 controls second actuator 2657b to form a first gap between the bottom end of first curtain 2659a and the top end of second curtain 2659b. Control processor 2658 controls second actuator 2657b so as to form a first gap in front of the shelf from which the first product is to be removed (first shelf 2656a). This separates the bottom end of first curtain 2659a from the top end of second curtain 2659b, creating a first gap in front of first shelf 2656a from which the first product is to be removed. In (b) in FIG. 10B, an example is illustrated in which the first gap is formed in front of the second shelf 2656 from the bottom.

Next, based on a signal instructing that first shelf 2656a should be moved forward, control processor 2658 controls first actuator 2657a to move first shelf 2656a from the first position to the second position through the first gap. This causes first shelf 2656a, from which the first product is to be removed, to slide and move in the horizontal direction from the first position to the second position. This allows first shelf 2656a to protrude from multi-level case 2655a along with the first product, whereby robot arm 2620 can grab the first product from above.

Next, as illustrated in (b) in FIG. 10B, when arm controller 2623 obtains a signal instructing it to remove the first product on first shelf 2656a, it controls arm actuator 2625 to move displacement portion 2622 to a position vertically above the first product to be removed. More specifically, robot arm 2620 moves displacement portion 2622 in the horizontal direction to a position vertically above the first product to be removed.

Next, as illustrated in (c) and (d) in FIG. 10B, displacement portion 2622 of robot arm 2620 descends, grabs, and lifts the target first product to be retrieved.

This results in arm controller 2623 controlling arm actuator 2625 to displace the position of the first product on first shelf 2656a using displacement portion 2622.

In this way, displacement portion 2622 can lift the first product placed on first shelf 2656a and place it into a package box for shipping.

Note that as illustrated in (d) in FIG. 10B, for example, when horizontally sliding and moving shelf 2656 located at the lowest level among the plurality of shelves 2656 of multi-level case 2655a (i.e., moving it from the first position to the second position), it comes into contact with front wall 2662 of multi-level case 2655a. Therefore, when horizontally sliding and moving shelf 2656 that comes into contact with front wall 2662 of multi-level case 2655a among the plurality of shelves 2656, a configuration in which front wall 2662 of multi-level case 2655a is rotated and tilted down to inhibit contact between front wall 2662 of multi-level case 2655a and shelf 2656 is acceptable. More specifically, control processor 2658 may control another actuator of multi-level case 2655a to rotate front wall 2662 in cases in which shelf 2656 which would come into contact with front wall 2662 of multi-level case 2655a is to be moved from the first position to the second position.

### [Embodiment 2]

Hereinafter, operations performed by unmanned transport vehicle 2660 according to the present embodiment will be described. Configurations similar to the basic configuration of the above-described embodiments are denoted with the same reference signs, and repeated description will be omitted as appropriate. The configurations of each embodiment may be applied to the present embodiment.

First, the control method of the delivery system including unmanned transport vehicle 2660 according to the present embodiment will be described with reference to FIG. 11 through FIG. 15.

FIG. 11 is a block diagram illustrating an example of unmanned transport vehicle 2660 according to Embodiment 2. FIG. 12A illustrates an example of the movement of support structure 2684 and wire 2663 of unmanned transport vehicle 2660 according to Embodiment 2. In (a) in FIG. 12A, an example in which first door structure 2685 and second door structure 2686 are in an open state (the second state) is illustrated. In (b) in FIG. 12A, an example in which first door structure 2685 and second door structure 2686 are in a closed state (the first state) is illustrated. In FIG. 12A, (c) illustrates an example of a side view of unmanned transport vehicle 2660 in the state in (b) in FIG. 12A. In (d) in FIG. 12A, an example in which first door structure 2685 and second door structure 2686 are in the first door state is illustrated. FIG. 12B illustrates another example of the movement of support structure 2684 and wire 2663 of unmanned transport vehicle 2660 according to Embodiment 2. FIG. 13A illustrates an example of vehicle main body 2660a and package carriage 2670 of unmanned transport vehicle 2660 according to Embodiment 2. FIG. 13B illustrates an example of vehicle main body 2660a and another package carriage 2670 of unmanned transport vehicle 2660 according to Embodiment 2. FIG. 14 illustrates an example of how attitude control device 2670a corrects the attitude of package carriage 2670 of unmanned transport vehicle 2660 according to Embodiment 2. FIG. 15 illustrates an example of the attitude of package carriage 2670 of unmanned transport vehicle 2660 according to Embodiment 2.

As illustrated in FIG. 11 and FIG. 12A, the delivery system uses a control method of the system that includes unmanned transport vehicle 2660. The delivery system is a system capable of delivering a package from a sender to a receiver using unmanned transport vehicle 2660. For example, the delivery system can deliver a package to a receiver by unmanned transport vehicle 2660 carrying the package flying or traveling. The sender is the party that sends the package, and the receiver is the party that receives the package. In the present embodiment, the sender is a distribution center, such as a facility of a courier company or a store like a convenience store that serves as a relay point. In the present embodiment, the receiver is the party receiving the package, i.e., the destination, such as a home, a convenience store that serves as a relay point, or a delivery box provided at a home or a convenience store or the like. The delivery system according to the present embodiment is one example of a system. The delivery box is one example of a delivery reception box.

Delivery system includes unmanned transport vehicle 2660 and package carriage 2670.

Unmanned transport vehicle 2660 is, for example, a flying body such as a drone or a mobile body equipped with wheel 2681. Unmanned transport vehicle 2660 not only flies in the air, but can also travel along rails 7 provided above the ground. While coupled to wire 2663, unmanned transport vehicle 2660 can transport packages by traveling along rail 7 in a state in which it is coupled to package carriage 2670. In the present embodiment, the delivery system may include rail 7 as an element.

Rail 7 is, for example, located at a height of several meters to several tens of meters above the ground surface and is fixed in place by a support pillar implanted in the ground or a facility or the like. Rails 7 may be provided across the entire area of above the ground or just around at least the receiver. Rails 7 are provided along the road, for example. Rails 7 may include a connection point. The connection point is a portion where one rail 7 connects to another rail 7. A sheet-, net-, or plate-shaped structure may be arranged directly below the connection point.

Unmanned transport vehicle 2660 includes vehicle main body 2660a, control processor 2664, suspension arm 2682, arm actuator 2665, wheel 2681, wire control module 2666, winder 2667, support structure 2684, and support member actuator 2668. Note that vehicle main body 2660a may include wire 2663 as an element.

Vehicle main body 2660a is a rectangular mobile body. Vehicle main body 2660a supports control processor 2664, suspension arm 2682, arm actuator 2665, wheel 2681, wire control module 2666, winder 2667, support structure 2684, and support member actuator 2668 at a predetermined attitude. Note that when vehicle main body 2660a is capable of attaching package carriage 2670, vehicle main body 2660a may support package carriage 2670 in a predetermined attitude. Vehicle main body 2660a is one example of the main body.

Note that vehicle main body 2660a may include a plurality of propellers. In such cases, vehicle main body 2660a may provide thrust to unmanned transport vehicle 2660 via the rotational actuation of the propeller actuation motor provided in vehicle main body 2660a.

Suspension arm 2682 is a hook capable of connecting to rail 7, and can therefore be hooked onto rail 7. The bottom end of suspension arm 2682 is coupled to vehicle main body 2660a, and wheel 2681, which can rotate and make contact with rail 7, is coupled to the other end, i.e., the leading end of suspension arm 2682. In the present embodiment, vehicle main body 2660a is provided with a plurality of suspension arms 2682. Note that suspension arm 2682 may be provided with a motor that rotates the rotary shaft of wheel 2681. The arm, hook, connector, etc., described in the above embodiments may be used for suspension arm 2682 in the present embodiment. Suspension arm 2682 is one example of an arm.

Arm actuator 2665 can displace suspension arm 2682 to change the attitude of suspension arm 2682 by actuating suspension arm 2682. More specifically, arm actuator 2665 can be controlled by control processor 2664 to rotate suspension arm 2682 around an axis extending in the lengthwise direction of rail 7, thereby making wheel 2681 contact rail 7 and connecting suspension arm 2682 to rail 7. Arm actuator 2665, when controlled by control processor 2664, can rotate suspension arm 2682 around an axis extending in the lengthwise direction of rail 7, thereby separating wheel 2681 from rail 7 and disconnecting from rail 7. Arm actuator 2665 is one example of a second actuator for actuating suspension arm 2682.

Wheel 2681 is a roller that can contactably rotate freely with respect to rail 7, allowing it to travel on rail 7. The rotary shaft of wheel 2681 extends in a direction orthogonal to the lengthwise direction of rail 7. When suspension arm 2682 is connected to rail 7, wheel 2681 provided on suspension arm 2682 rotates around the axis of the rotary shaft.

Control processor 2664 can control the flying state of unmanned transport vehicle 2660, adjust the position of unmanned transport vehicle 2660, and control the reeling in and out of wire 2663.

Flying states of unmanned transport vehicle 2660 include forward, backward, rotate right, rotate left, hovering, etc. More specifically, control processor 2664 controls the inclination of vehicle main body 2660a of unmanned transport vehicle 2660 relative to the horizontal direction and controls the rotation rates of the propellers by controlling the propeller actuation motors, based on the position information, the angular speed information, the acceleration information, and the speed information.

Adjusting the position of unmanned transport vehicle 2660 involves displacing the position of vehicle main body 2660a of unmanned transport vehicle 2660 relative to rail 7. More specifically, unmanned transport vehicle 2660 can transition between a third state where the distance between vehicle main body 2660a and rail 7 is a first distance, and a fourth state where the distance between vehicle main body 2660a and rail 7 is a second distance greater than the first distance, by the actuation by arm actuator 2665. While unmanned transport vehicle 2660 is traveling, control processor 2664 controls arm actuator 2665 to place unmanned transport vehicle 2660 in the third state. When unmanned transport vehicle 2660 is traveling, the distance between vehicle main body 2660a and rail 7 decreases while the distance between vehicle main body 2660a and the ground surface increases, making it easier for vehicle main body 2660a to avoid obstacles. While unmanned transport vehicle 2660 is unloading a package, control processor 2664 controls arm actuator 2665 to place unmanned transport vehicle 2660 in the fourth state. When unmanned transport vehicle 2660 is unloading a package, the distance between vehicle main body 2660a and rail 7 increases while the distance between vehicle main body 2660a and the ground surface decreases, making unloading easier.

The reeling out and in of wire 2663 are performed by wire control module 2666 controlling winder 2667. That is, when wire control module 2666 obtains a reel-out instruction for wire 2663 from control processor 2664, it may control winder 2667 to reel out wire 2663 and separate package carriage 2670 from unmanned transport vehicle 2660. When wire control module 2666 obtains a reel-in instruction for wire 2663 from control processor 2664, it may control winder 2667 to reel in wire 2663 and collect package carriage 2670.

Wire control module 2666 can control electric motor 2667a of winder 2667 to reel in wire 2663 until the length of wire 2663 extending from vehicle main body 2660a to package carriage 2670 becomes a first length, as illustrated in (a) and (b) in FIG. 12A. After wire 2663 has reached the first length, control processor 2664 controls support member actuator 2668 to change support structure 2684 from a second door state to a first door state. As illustrated in (d) in FIG. 12A, after support structure 2684 has transitioned to the first door state, wire control module 2666 controls electric motor 2667a of winder 2667 to reel out wire 2663 so that the length of wire 2663 extending from vehicle main body 2660a to package carriage 2670 becomes a second length longer than the first length. When the length of wire 2663 extending from vehicle main body 2660a to package carriage 2670 becomes the second length, package carriage 2670 is supported by end portion 2685a of first door structure 2685 of support structure 2684 and end portion 2686a of second door structure 2686 of support structure 2684. Note that wire control module 2666 may be able to recognize the length of wire 2663 based on the rotation amount of the rotary shaft of electric motor 2667a, and may be able to recognize the length of wire 2663 by using a sensor.

The sensor is, for example, a camera sensor. The camera sensor is provided on vehicle main body 2660a and is an imaging device capable of capturing images of the package and the delivery box, etc., from above, as well as capturing images of wire 2663. The camera sensor captures an image of the package, the delivery box, and wire 2663, and outputs image information, which is the captured image(s), to control processor 2664. For example, the image information includes information indicating the relative position (distance) between the package and the delivery box, the distance from vehicle main body 2660a to the package, the distance from vehicle main body 2301 to the delivery box, the height from the ground surface to the opening of the delivery box, and the length of wire 2663. The camera sensor may be, for example, a time-of-flight (TOF) camera or a range finding sensor or the like.

Here, wire 2663 is configured to be freely reeled out and in by the actuation of electric motor 2667a of winder 2667. Wire 2663 can extend to a length at least five times the height (thickness) of unmanned transport vehicle 2660 via the actuation of electric motor 2667a.

As illustrated in FIG. 11 and FIG.12A, winder 2667 includes electric motor 2667a, and by reeling in or out wire 2663 via the actuation of electric motor 2667a, it can adjust the length of wire 2663 extending from vehicle main body 2660a of unmanned transport vehicle 2660 to package carriage 2670. In the present disclosure, winder 2667 may also be referred to as a reel or a winch. Electric motor 2667a of winder 2667 can rotate a reel capable of reeling out and in wire 2663. Winder 2667 may be actuated and controlled by wire control module 2666 based on a reel-out instruction for wire 2663 or a reel-in instruction for wire 2663 from control processor 2664. Electric motor 2667a is one example of the motor.

Support structure 2684 is a support member capable of supporting package carriage 2670. Support structure 2684 can be actuated by support member actuator 2668 to change between the first door state in which package carriage 2670 is supported by support structure 2684 without the tension of wire 2663 and the second door state in which package carriage 2670 is suspended by the tension of wire 2663.

More specifically, support structure 2684 is pivotably connected to vehicle main body 2660a and includes first door structure 2685 and second door structure 2686. Note that support structure 2684 may include wire 2663 as an element.

First door structure 2685 is coupled to one crosswise side of vehicle main body 2660a that is elongated along rail 7. First door structure 2685 includes plate portion 2685b pivotably supported on vehicle main body 2660a, and end portion 2685a connected to the front end of plate portion 2685b and bent with respect to plate portion 2685b. Second door structure 2686 is coupled to the other crosswise side of vehicle main body 2660a that is elongated along rail 7. Second door structure 2686 is coupled to the other crosswise side of vehicle main body 2660a that is elongated along rail 7. Second door structure 2686 includes plate portion 2686b pivotably supported on vehicle main body 2660a, and end portion 2686a connected to the front end of plate portion 2686b and bent with respect to plate portion 2686b. Plate portion 2685b may correspond to portion A, and plate portion 2686b may correspond to portion C. End portion 2685a may correspond to portion B, and end portion 2686a may correspond to portion D.

First door structure 2685 and second door structure 2686 are hook-shaped support arms capable of supporting package carriage 2670. First door structure 2685 and second door structure 2686 have one end coupled to vehicle main body 2660a, and are pivotable about the coupling portion as a fulcrum. First door structure 2685 and second door structure 2686 can support package carriage 2670 with their other ends, namely end portions 2685a and 2686a. Therefore, first door structure 2685 and second door structure 2686 can support package carriage 2670 by assuming a closed orientation in the first door state, and can open package carriage 2670 by assuming an open orientation in the second door state. Stated differently, by first door structure 2685 and second door structure 2686 being placed in the first door state, plate portion 2685b and plate portion 2686b sandwich package carriage 2670, while end portion 2685a and end portion 2686a are positioned vertically below package carriage 2670, thereby supporting package carriage 2670. By first door structure 2685 and second door structure 2686 being placed in the second door state, plate portion 2685b, plate portion 2686b, end portion 2685a, and end portion 2686a move away from package carriage 2670, thereby allowing package carriage 2670 to be in an open state.

Here, the first door state corresponds to a state in which first door structure 2685 and second door structure 2686 are close to package carriage 2670. Stated differently, the first door state is a state in which first door structure 2685 and second door structure 2686 are in the closed orientation. In the first door state, end portion 2685a of first door structure 2685 and end portion 2686a of second door structure 2686 are positioned below package carriage 2670, and they support package carriage 2670 by contacting the bottom of package carriage 2670. End portion 2685a of first door structure 2685 is one example of a first part of first door structure 2685. End portion 2686a of second door structure 2686 is one example of a second part of second door structure 2686.

Here, the second door state corresponds to a state in which first door structure 2685 and second door structure 2686 are away from package carriage 2670. Stated differently, the second door state is a state in which first door structure 2685 and second door structure 2686 are not supporting package carriage 2670. In the second door state, it is possible that end portion 2685a of first door structure 2685 and end portion 2686a of second door structure 2686 are not positioned below package carriage 2670.

Support member actuator 2668 is capable of actuating support structure 2684. More specifically, support member actuators 2668 are provided to correspond to each of first door structure 2685 and second door structure 2686. One support member actuator 2668 is capable of pivoting first door structure 2685 around the fulcrum of vehicle main body 2660a. The other support member actuator 2668 is capable of pivoting second door structure 2686 around the fulcrum of vehicle main body 2660a. With this, support member actuators 2668 can displace support structure 2684 to an open orientation or to a closed orientation. Support member actuator 2668 is one example of a first actuator for actuating support structure 2684.

Package carriage 2670 is connected to wire 2663 extending downward from the main body of unmanned transport vehicle 2660. Package carriage 2670 can accommodate a package to be delivered by unmanned transport vehicle 2660.

As illustrated in FIG. 13A and FIG. 13B, package carriage 2670 includes first accommodation space 2674 for accommodating a package, and second accommodation space 2675 for accommodating attitude control device 2670a and rotary member 2671.

As illustrated in FIG. 13A, in package carriage 2670, attitude control device 2670a may be positioned above first accommodation space 2674. Stated differently, first accommodation space 2674 may be positioned below second accommodation space 2675. In this case, since the package is below attitude control device 2670a, it becomes possible to lower package carriage 2670 suspended by wire 2663 and easily place the package at the destination point, which is the receiver. First accommodation space 2674 is one example of an accommodation space.

As illustrated in FIG. 13B, in package carriage 2670, attitude control device 2670a may be positioned below first accommodation space 2674. Stated differently, first accommodation space 2674 may be positioned above second accommodation space 2675. In such cases, since attitude control device 2670a for heavy objects is below the package, the attitude of package carriage 2670 can be stabilized when reeling out wire 2663 to lower package carriage 2670.

Here, the attitude of package carriage 2670 when unmanned transport vehicle 2660 lowers package carriage 2670 by reeling out wire 2663 will be described.

When unmanned transport vehicle 2660 lowers package carriage 2670 by reeling out wire 2663, package carriage 2670 may shift from the destination point due to disturbances such as wind, or rotate around the connection portion with wire 2663, causing its attitude to shift. In such cases, even if package carriage 2670 is lowered by reeling out wire 2663, it may become difficult to insert it into the top opening of the delivery box, which is the destination point.

For example, as illustrated in (a) in FIG. 15, when there is no wind and the angle between one side of package carriage 2670 and the lengthwise direction of rail 7 is θ = 0°, it is possible to insert package carriage 2670 into the top opening of the delivery box, which is the destination point, even if lowered by reeling out wire 2663. As illustrated in FIG. 14 and in (b) in FIG. 15, when there is wind and the angle between one side of package carriage 2670 and the lengthwise direction of rail 7 is θ = 0°, it is possible to accommodate package carriage 2670 into the delivery box, which is the destination point, even if lowered by reeling out wire 2663, by moving unmanned transport vehicle 2660 and/or moving the position of the opening of the delivery box. As illustrated in FIG. 14 and in (c) in FIG. 15, when there is wind and the angle between one side of package carriage 2670 and the lengthwise direction of rail 7 is θ = 45°, it is difficult to accommodate the package into the delivery box even if lowering package carriage 2670 by reeling out wire 2663, as package carriage 2670 may get stuck on the top opening of the delivery box. As illustrated in (d) and (e) in FIG. 15, when there is wind and the angle between one side of package carriage 2670 and the lengthwise direction of rail 7 is θ = 45° + α1 or θ = 45° + a2, it is difficult to accommodate the package into delivery box even if lowering package carriage 2670 by reeling out wire 2663, as package carriage 2670 is not positioned vertically above the top opening of the delivery box.

Therefore, as illustrated in FIG. 14, package carriage 2670 controls its own attitude. More specifically, as illustrated in FIG. 11, FIG. 13A, and FIG. 13B, package carriage 2670 includes attitude control device 2670a that controls the attitude of package carriage 2670 suspended by wire 2663 by controlling rotary member 2671. The rotary member is typically a disc-shaped plate.

Attitude control device 2670a can, for example, correct the attitude of package carriage 2670 to the correct attitude by controlling rotary member 2671, examples of which include a reaction wheel and a flywheel. Attitude control device 2670a includes sensor 2661 that detects the attitude of package carriage 2670, motor actuation controller 2673 that actuates electric motor 2672 based on the sensing result of sensor 2661, and electric motor 2672 that rotates rotary member 2671 by rotating rotary shaft 2671a. Here, controlling rotary member 2671 includes controlling the rotation rate of rotary member 2671 and controlling the direction of the rotary shaft 2671a of rotary member 2671. Note that rotary shaft 2671a may be included as an element of rotary member 2671 or as an element of electric motor 2672.

More specifically, attitude control device 2670a can obtain sensing results from sensor 2661 capable of detecting the attitude of package carriage 2670. Sensor 2661 is, for example, a camera sensor or an angular speed sensor. In the present embodiment, sensor 2661 is provided on vehicle main body 2660a and is a camera sensor capable of capturing images of the space vertically below vehicle main body 2660a.

When unmanned transport vehicle 2660 has arrived at the receiver, attitude control device 2670a can recognize the attitude of package carriage 2670 based on the sensing result from sensor 2661 that sensed the attitude of package carriage 2670. Thus, attitude control device 2670a can determine whether the attitude of package carriage 2670 is a target attitude. Stated differently, attitude control device 2670a can determine whether package carriage 2670 is in an attitude that will allow for accommodation in a delivery box. Here, a target attitude refers to an attitude in which one side of the plan view rectangular package carriage 2670 is parallel to the lengthwise direction of rail 7, i.e., an attitude in which θ is within a predetermined range of angles where the angle between that side and the lengthwise direction of rail 7 is θ = 0° as a reference. In the target attitude, package carriage 2670 is capable of accommodating a package in the delivery box. The target attitude includes an attitude in which the up-down direction parallel to the vertical direction (i.e., in which the vertical direction) and the up-down direction of package carriage 2670 match.

Based on the sensing result obtained by sensor 2661, i.e., the sensing result of the attitude of package carriage 2670 by sensor 2661, attitude control device 2670a can control rotary member 2671 to orient the attitude of package carriage 2670 to the target attitude. For example, if package carriage 2670 rotates counterclockwise by an arbitrary angle in a plan view, attitude control device 2670a rotates rotary member 2671 counterclockwise by an arbitrary angle as indicated by the white arrow, causing package carriage 2670 to rotate clockwise by an arbitrary angle as indicated by the white arrow. Thus, the attitude of package carriage 2670 is corrected to be θ = 0°. For example, although illustration is omitted in the figures, if package carriage 2670 rotates clockwise by an arbitrary angle in a plan view, attitude control device 2670a rotates rotary member 2671 clockwise by an arbitrary angle, causing package carriage 2670 to rotate counterclockwise by an arbitrary angle. Thus, the attitude of package carriage 2670 is corrected to be θ = 0°.

Thus, in unmanned transport vehicle 2660, as illustrated in FIG. 12B, when a package is accommodated in package carriage 2670 of unmanned transport vehicle 2660, it is in attitude where first door structure 2685 and second door structure 2686 are open (second door state). Wire control module 2666 controls electric motor 2667a of winder 2667 to reel in wire 2663 extending from vehicle main body 2660a to package carriage 2670. This lifts package carriage 2670 in which the package is accommodated. When package carriage 2670 approaches vehicle main body 2660a of unmanned transport vehicle 2660, wire control module 2666 controls electric motor 2667a of winder 2667 to stop reeling in wire 2663.

Support member actuators 2668, under control by control processor 2664, pivot first door structure 2685 around the fulcrum of vehicle main body 2660a and pivot second door structure 2686 around the fulcrum of vehicle main body 2660a. With this, first door structure 2685 and second door structure 2686 assume a closed orientation (the first door state). Under control by control processor 2664, wire control module 2666 operates electric motor 2667a of winder 2667 to reel out wire 2663. With this, package carriage 2670 can be placed on end portion 2685a of first door structure 2685 and end portion 2686a of second door structure 2686. Thereafter, when unmanned transport vehicle 2660 starts traveling, it is possible to inhibit swaying of package carriage 2670 due to the travel of unmanned transport vehicle 2660, and first door structure 2685 and second door structure 2686 can inhibit package carriage 2670 from falling.

### Operation Example 1

In the present operation example, the operations from lowering package carriage 2670 to loading a package onto package carriage 2670 will be described with reference to, for example, FIG. 16.

FIG. 16 is a flowchart illustrating an example of operations performed when package carriage 2670 of unmanned transport vehicle 2660 descends according to Embodiment 2.

First, unmanned transport vehicle 2660 is suspended from rail 7 with suspension arm 2682 connected to rail 7, as illustrated in (a) in FIG. 12A and in FIG. 16. To allow a worker to accommodate a package in package carriage 2670 of unmanned transport vehicle 2660, first door structure 2685 and second door structure 2686 are in the first door state. For this reason, wire control module 2666 controls electric motor 2667a of winder 2667 to reel in wire 2663 until the length of wire 2663 extending from vehicle main body 2660a to package carriage 2670 becomes a first length (S2631).

With this, the bottom of package carriage 2670 is spaced apart from end portion 2685a of first door structure 2685 and end portion 2686a of second door structure 2686. Stated differently, package carriage 2670 is suspended by the tension of wire 2663, placing first door structure 2685 and second door structure 2686 in the second door state, which is a state separated from package carriage 2670 (S2632). Support member actuators 2668, under control by control processor 2664, pivot first door structure 2685 around the fulcrum of vehicle main body 2660a and pivot second door structure 2686 around the fulcrum of vehicle main body 2660a.

Next, wire control module 2666 controls electric motor 2667a of winder 2667 to reel out wire 2663 (S2633), thereby lowering package carriage 2670.

Next, control processor 2664 determines whether the lowering of package carriage 2670 has completed (S2634).

If control processor 2664 determines that the lowering of package carriage 2670 is not complete (NO in S2634), the process returns to step S2633.

However, if control processor 2664 determines that the lowering of package carriage 2670 has been completed (YES in S2634), the processing in the flowchart of FIG. 16 ends. This allows a worker to accommodate a package in package carriage 2670.

### Operation Example 2

In the present operation example, the operations from loading a package onto package carriage 2670 to unmanned transport vehicle 2660 starting to travel will be described with reference to, for example, FIG. 17.

FIG. 17 is a flowchart illustrating an example of operations from reeling in wire 2663 of package carriage 2670 accommodating a package until unmanned transport vehicle 2660 starts to travel.

First, as illustrated in (b) and (c) in FIG. 12A and in FIG. 17, after a worker loads a package into package carriage 2670, wire control module 2666 controls the operation of winder 2667 to reel in wire 2663 upon obtaining a reel-in instruction for wire 2663 from control processor 2664 (S2635). For example, wire control module 2666 controls electric motor 2667a of winder 2667 to reel in wire 2663 until the length of wire 2663 extending from vehicle main body 2660a to package carriage 2670 becomes a first length. This lifts package carriage 2670 in which the package is accommodated, bringing it close to the vicinity of vehicle main body 2660a.

Next, control processor 2664 determines whether the lifting of package carriage 2670 has finished (S2636).

If control processor 2664 determines that the lifting of package carriage 2670 has not finished (NO in S2636), the process returns to step S2635.

However, if control processor 2664 determines that the lifting of package carriage 2670 has finished (YES in S2636), support member actuators 2668, under control by control processor 2664, pivot first door structure 2685 around the fulcrum of vehicle main body 2660a and pivot second door structure 2686 around the fulcrum of vehicle main body 2660a. With this, first door structure 2685 and second door structure 2686 assume a closed orientation, i.e., enter the first door state (S2637).

Next, control processor 2664 determines whether package carriage 2670 is facing forward (S2638).

If control processor 2664 determines that package carriage 2670 is not facing forward (NO in S2638), the process returns to step S2637.

However, if control processor 2664 determines that package carriage 2670 is facing forward (YES in S2638), it determines whether first door structure 2685 and second door structure 2686 are closed (completely closed) or not (S2639), as illustrated in (d) in FIG. 12A and in FIG. 17.

If control processor 2664 determines that first door structure 2685 and second door structure 2686 are not closed (NO in S2639), the process returns to step S2637.

However, if control processor 2664 determines that first door structure 2685 and second door structure 2686 are closed (YES in S2639), wire control module 2666 is controlled by control processor 2664 to operate electric motor 2667a of winder 2667 so as to reel out wire 2663 so that the length of wire 2663 extending from vehicle main body 2660a to package carriage 2670 becomes a second length longer than the first length (S2640).

Control processor 2664 determines whether wire 2663 has become bent when it is reeled out (S2641). Whether wire 2663 has become bent or not can be determined by a tension sensor provided in winder 2667. The tension sensor is a sensor that detects the tension of wire 2663. The tension sensor outputs tension information indicating the tension of wire 2663 to control processor 2664.

If control processor 2664 determines that wire 2663 has not become bent when it was reeled out (NO in S2641), the process returns to step S2640.

However, if control processor 2664 determines that wire 2663 has become bent when it was reeled out (YES in S2641), since the length of wire 2663 extending from vehicle main body 2660a to package carriage 2670 becomes the second length, package carriage 2670 is supported by end portion 2685a of first door structure 2685 and end portion 2686a of second door structure 2686. Stated differently, package carriage 2670 is placed on end portion 2685a of first door structure 2685 and end portion 2686a of second door structure 2686.

Next, unmanned transport vehicle 2660 starts traveling (S2642). The processing in the flowchart of FIG. 17 then ends.

### Advantageous Effects

Next, advantageous effects achieved by unmanned transport vehicle 2660 according to the present embodiment will be described.

The system according to the present embodiment is a system including unmanned transport vehicle 2660, and includes: unmanned transport vehicle 2660; a first winch (winder 2667) connected to unmanned transport vehicle 2660 and capable of reeling out and in wire 2663; package carriage 2670 connected to wire 2663, for putting a package to be transported by unmanned transport vehicle 2660 into; and a controller (control processor 2664). Package carriage 2670 includes attitude control device 2670a including a flywheel (rotary member 2671) that rotates around rotary shaft 2671a extending in the vertical direction, and package carriage 2670 includes an accommodation space (first accommodation space 2674) for accommodating the package. The controller obtains a sensing result from sensor 2661 capable of detecting the attitude of package carriage 2670, and based on the obtained sensing result, controls rotation of the flywheel to rotate package carriage 2670 around rotary shaft 2671a and orient package carriage 2670 to the target attitude.

With this, even if the attitude of package carriage 2670 is tilted relative to the horizontal direction or rotates around the vertical direction, attitude control device 2670a can control rotary member 2671 to orient package carriage 2670 to the target attitude. As a result, the package can be delivered to the recipient's delivery reception box (delivery box).

The system according to the present embodiment executes the control method.

This achieves the same above-described advantageous effects achieved by the control method.

The program according to the present embodiment is a program for causing the system to execute the control method.

This achieves the same above-described advantageous effects achieved by the control method.

In the system according to the present embodiment, in package carriage 2670, when viewed from above in the vertical direction, the position of rotary shaft 2671a overlaps the position of wire 2663, and attitude control device 2670a is located above the accommodation space.

With this, since the package is located below attitude control device 2670a, the package can be easily removed from package carriage 2670 when lowering package carriage 2670 by suspension.

Furthermore, because the position of rotary shaft 2671a is set to overlap with the position of wire 2663 when viewed from above in the vertical direction, package carriage 2670 can be rotated stably.

In the system according to the present embodiment, when viewed from above in the vertical direction, the position of rotary shaft 2671a overlaps the position of wire 2663, and in package carriage 2670, attitude control device 2670a is located below the accommodation space.

With this, since attitude control device 2670a for heavy objects is below the package, the attitude of package carriage 2670 can be stabilized when lowering package carriage 2670 by suspension.

Furthermore, because the position of rotary shaft 2671a is set to overlap with the position of wire 2663 when viewed from above in the vertical direction, package carriage 2670 can be rotated stably.

In the system according to the present embodiment, the first winch is capable of extending wire 2663 to a length at least five times the height of unmanned transport vehicle 2660.

With this, even if the attitude of package carriage 2670 is tilted relative to the horizontal direction or rotates around the vertical direction when wire 2663 is lengthily extended, attitude control device 2670a can control rotary member 2671 to orient package carriage 2670 to the target attitude. As a result, the package can be delivered to the recipient's delivery reception box.

In the control method according to the present embodiment, the system further includes: a motor; winder 2667 that adjusts the length of wire 2663 extending from the main body of unmanned transport vehicle 2660 to package carriage 2670 by reeling in or out wire 2663 via actuation by the motor; support structure 2684 for supporting package carriage 2670; and a first actuator (support member actuator 2668) for actuating support structure 2684. Support structure 2684 can be actuated by the first actuator to change between the first door state in which package carriage 2670 is supported by support structure 2684 without the tension of wire 2663 and the second door state in which package carriage 2670 is suspended by the tension of wire 2663.

With this, for example, support structure 2684 can support package carriage 2670 when unmanned transport vehicle 2660 is delivering a package. Furthermore, when unmanned transport vehicle 2660 is unloading a package, it can be lowered using the tension of wire 2663. Thus, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

The system according to the present embodiment further includes a first actuator for actuating support structure 2684. Support structure 2684 includes first door structure 2685 and second door structure 2686 that are pivotably connected to unmanned transport vehicle 2660. First door structure 2685 and second door structure 2686 are transitionable between a first door state and a second door state by the first actuator being controlled. The first door state corresponds to a state in which first door structure 2685 and second door structure 2686 have been pivoted close to package carriage 2670. The second door state corresponds to a state in which first door structure 2685 and second door structure 2686 have been pivoted away from package carriage 2670. The controller (1) controls the first winch (winder 2667) to reel in wire 2663 until a length of wire 2663 extending from unmanned transport vehicle 2660 to package carriage 2670 becomes a second first length, (2) after the length has become the second first length, controls the first actuator to transition support structure 2684 from the second door state to the first door state, and after support structure 2684 has transitioned to the first door state, controls the motor of winder 2667 to reel out wire 2663 so that the length of wire 2663 extending from unmanned transport vehicle 2660 to package carriage 2670 becomes a second length longer than the first length. Package carriage 2670 is supported by the first part of first door structure 2685 located below package carriage 2670 and the first part (end portion 2685a) of second door structure 2686 located below package carriage 2670, and unmanned transport vehicle 2660 is transitioned to the first door state.

With this, when first door structure 2685 and second door structure 2686 are in the first door state, the first part of first door structure 2685 and the second part of second door structure 2686 can support package carriage 2670. Thus, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

Furthermore, the length of wire 2663 can be set to a second length so that package carriage 2670 is supported by support structure 2684. Thus, support structure 2684 can support package carriage 2670 when unmanned transport vehicle 2660 is delivering a package, which can inhibit the degradation of wire 2663. Furthermore, since support structure 2684 supports the package, the package can be optimally supported even while unmanned transport vehicle 2660 is traveling.

In the system according to the present embodiment, the controller transitions unmanned transport vehicle 2660 from the second state to the first state by controlling the first winch to reel in wire 2663, controlling the attitude control device to rotate package carriage 2670, and controlling the first winch to reel out wire 2663.

Accordingly, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

In the system according to the present embodiment, the controller controls the first winch when package carriage 2670 is in the second state to transition package carriage 2670 from the second state to the first state.

This case also achieves the same advantageous effects as described above.

In the system according to the present embodiment, the support structure includes a first part and a second part, wherein the first part of the support structure and the second part of the support structure are separated by a predetermined distance, and package carriage 2670 includes a third part and a fourth part. The controller controls the first winch when package carriage 2670 is in the second state to transition package carriage 2670 to the first state by coupling the third part of package carriage 2670 to the first part of the support structure and coupling the fourth part of package carriage 2670 to the second part of the support structure.

This case also achieves the same advantageous effects as described above.

The system according to the present embodiment further includes a first actuator for actuating the support structure. The support structure includes first door structure 2685 and second door structure 2686 that are pivotably connected to unmanned transport vehicle 2660. The controller is capable of controlling the first actuator to transition first door structure 2685 and second door structure 2686 between a first door state and a second door state. The first door state is a state in which first door structure 2685 and second door structure 2686 are capable of supporting package carriage 2670. The second door state is a state in which package carriage 2670 is supported by wire 2663, and first door structure 2685 and second door structure 2686 are incapable of supporting package carriage 2670.

With this, when first door structure 2685 and second door structure 2686 are in the first door state, the first part of first door structure 2685 and the second part of second door structure 2686 can support package carriage 2670. Thus, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

In the system according to the present embodiment, first door structure 2685 includes portion A extending in a first direction and portion B extending in a second direction, wherein portion B is fixed in a state incapable of pivoting with respect to portion A. When first door structure 2685 is in the first door state, the first direction is approximately parallel to the vertical direction, and the second direction is approximately parallel to the horizontal direction, with portion A of first door structure 2685 positioned above portion B. Second door structure 2686 includes portion C extending in a third direction and portion D extending in a fourth direction, wherein portion D is fixed in a state incapable of pivoting with respect to portion A. When second door structure 2686 is in the first door state, the third direction is approximately parallel to the vertical direction, and the fourth direction is approximately parallel to the horizontal direction, with portion C of second door structure 2686 positioned above portion D.

Thus, first door structure 2685 includes portion A extending in the first direction and portion B extending in the second direction, and portions A and B are integrally fixed in a state incapable of pivoting with respect to each other. Furthermore, second door structure 2686 includes portion C extending in the third direction and portion D extending in the fourth direction, and portions C and D are integrally fixed in a state incapable of pivoting with respect to each other.

Therefore, when the system is transporting package carriage 2670, even if power supply to the first actuator is cut off, since portion B of first door structure 2685 and portion D of second door structure 2686 are below package carriage 2670, it is possible to prevent package carriage 2670 from falling.

In the system according to the present embodiment, in the first door state, the controller controls the first actuator such that first door structure 2685 and second door structure 2686 sandwich both sides of package carriage 2670 and support the lower surface of package carriage 2670.

This case also achieves the same advantageous effects as described above.

In the system according to the present embodiment, first door structure 2685 includes portion A extending in a first direction and portion B extending in a second direction, wherein portion B is fixed in a state incapable of pivoting with respect to portion A. Second door structure 2686 includes portion C extending in a third direction and portion D extending in a fourth direction, wherein portion D is fixed in a state incapable of pivoting with respect to portion A. The controller controls the first actuator such that, when in the first door state, portion A and portion C are arranged so as to sandwich package carriage 2670 from both sides, and portion B and portion D are arranged below package carriage 2670.

This case also achieves the same advantageous effects as described above.

In the control method according to the present embodiment, unmanned transport vehicle 2660 transports the package by traveling along rail 7. Unmanned transport vehicle 2660 further includes: wheel 2681 for traveling on rail 7; an arm (suspension arm 2682) connected to a main body of unmanned transport vehicle 2660 and wheel 2681; and a second actuator (arm actuator 2665) for actuating the arm. Unmanned transport vehicle 2660 is capable of transitioning between a third state and a fourth state via actuation of the second actuator, the third state being a state in which the distance between the main body and rail 7 is a first distance and the fourth state being a state in which the distance between the main body and rail 7 is a second distance greater than the first distance.

With this, the state of unmanned transport vehicle 2660 can be switched between the third state and the fourth state depending on whether unmanned transport vehicle 2660 is traveling or unloading a package.

In the control method according to the present embodiment, while unmanned transport vehicle 2660 is traveling, the second actuator is controlled to place unmanned transport vehicle 2660 in the third state, and while unmanned transport vehicle 2660 is unloading the package, the second actuator is controlled to place unmanned transport vehicle 2660 in the fourth state.

With this, when unmanned transport vehicle 2660 is traveling, the distance between vehicle main body 2660a and rail 7 decreases while the distance between vehicle main body 2660a and the ground surface increases, making it easier for vehicle main body 2660a to avoid obstacles. While unmanned transport vehicle 2660 is unloading a package, control processor 2664 controls arm actuator 2665 to place unmanned transport vehicle 2660 in the fourth state. When unmanned transport vehicle 2660 is unloading a package, the distance between vehicle main body 2660a and rail 7 increases while the distance between vehicle main body 2660a and the ground surface decreases, making unloading easier.

In the control method according to the present embodiment, the target attitude includes an attitude in which an up-down direction parallel to the vertical direction and an up-down direction of package carriage 2670 match.

With this, package carriage 2670 can be corrected to the target attitude, which allows the package to be delivered to the recipient's delivery reception box.

### VARIATION OF EMBODIMENT 2

Hereinafter, unmanned transport vehicle 2660b according to the present variation will be described. Configurations similar to the basic configuration of the above-described embodiments are denoted with the same reference signs, and repeated description will be omitted as appropriate. The configurations of each embodiment may be applied to the present variation.

First, unmanned transport vehicle 2660b according to the present variation will be described with reference to FIG. 18.

FIG. 18 illustrates an example of vehicle main body 2660a and package carriage 2670 of unmanned transport vehicle 2660b according to a variation of Embodiment 2.

As illustrated in FIG. 18, unmanned transport vehicle 2660b can proceed along rail 7. Unmanned transport vehicle 2660b includes first connector 2691, second connector 2692, and third connector 2693. First connector 2691 is positioned on one side in the traveling direction of vehicle main body 2660a of unmanned transport vehicle 2660b, and second connector 2692 is positioned on the other side in the traveling direction of vehicle main body 2660a of unmanned transport vehicle 2660b. Third connector 2693 is positioned at the central portion of vehicle main body 2660a of unmanned transport vehicle 2660b, and is positioned between first connector 2691 and second connector 2692. Wheel 2681 of first connector 2691 and wheel 2681 of second connector 2692 are located on top of rail 7, and wheel 2681 of third connector 2693 is located below rail 7.

In the present variation, first connector 2691 and second connector 2692 can pivot with respect to vehicle main body 2660a by the operation of arm actuator 2694. More specifically, the bottom ends of first connector 2691 and second connector 2692 are provided on vehicle main body 2660a so as to be capable of pivoting around the crosswise direction of vehicle main body 2660a as an axis. Furthermore, each of first connector 2691 and second connector 2692 is coupled to a corresponding arm actuator 2694 at a location between wheel 2681 and the bottom end, and is pivotable with respect to the corresponding arm actuator 2694. Since each arm actuator 2694 is a damper or the like, arm actuators 2694 can be controlled by control processor 2664 to push or pull first connector 2691 and second connector 2692. With this, arm actuators 2694 can pivot first connector 2691 and second connector 2692 with respect to vehicle main body 2660a.

For example, when arm actuators 2694 push first connector 2691 and second connector 2692, first connector 2691 rotates clockwise and second connector 2692 rotates counterclockwise, causing vehicle main body 2660a to approach rail 7, reducing the distance between vehicle main body 2660a and rail 7 and increasing the distance between vehicle main body 2660a and the ground surface. When arm actuators 2694 pull first connector 2691 and second connector 2692, first connector 2691 rotates counterclockwise and second connector 2692 rotates clockwise, increasing the distance between vehicle main body 2660a and rail 7 and reducing the distance between vehicle main body 2660a and the ground surface.

### [Embodiment 3]

Hereinafter, the basic configuration of delivery box 2700 according to the present embodiment will be described. Configurations similar to the basic configuration of each of the above-described embodiments are denoted with the same reference signs, and repeated description will be omitted as appropriate. The configurations of each embodiment may be applied to the present embodiment.

First, a control method that uses delivery box 2700 according to the present embodiment will be described with reference to FIG. 19A through FIG. 20.

FIG. 19A is a perspective view illustrating an example of delivery box 2700 according to Embodiment 3. FIG. 19B is a block diagram illustrating an example of the delivery box according to Embodiment 3. FIG. 20 illustrates an example of how delivery box 2700 according to Embodiment 3 moves when viewed from the front. In FIG. 20, (a) illustrates an example of how carriage structure 2722 of transport box 2720 receives a package when viewed from the front of delivery box 2700, and (b) illustrates an example of how carriage structure 2722 delivers the received package to a predetermined box 2708 among a plurality of boxes 2708. Illustration of guide structure 2710 is omitted in (b) in FIG. 20.

As illustrated in FIG. 19A through FIG. 20, delivery box 2700 is a delivery reception box for receiving packages from unmanned transport vehicle 2660. Delivery box 2700 is included in the shipping system according to the above-described embodiment. Delivery box 2700 may be provided with order screen 2703 via which the ordering of products is possible. Delivery box 2700 is one example of a delivery reception box.

Delivery box 2700 includes enclosure 2701, guide structure 2710, guide movable block 2715, actuation controller 2716, and transport box 2720.

Enclosure 2701 has a rectangular or cylindrical shape and is a container capable of storing a plurality of packages. Enclosure 2701 includes top opening 2704 formed at the top portion in the vertically upward direction of enclosure 2701, reception space 2704a which is a space for receiving packages that have passed through top opening 2704, and elevator path 2704b for delivering a received package to a predetermined box 2708 among the plurality of boxes 2708 arranged in enclosure 2701.

Top opening 2704 is formed on the vertical upper surface of enclosure 2701. Top opening 2704 is located vertically below the rail and elongated in the lengthwise direction of the rail. A package delivered by unmanned transport vehicle 2660 passes through top opening 2704 by being lowered through it. Stated differently, top opening 2704 is an entrance for packages. Top opening 2704 is one example of an opening of enclosure 2701.

Reception space 2704a is continuous with top opening 2704 and is a space formed above the plurality of boxes 2708 arranged in enclosure 2701. In reception space 2704a, packages that have passed through top opening 2704, that is, packages that have been delivered by unmanned transport vehicle 2660, can be received. Transport box 2720, which can receive the package when unmanned transport vehicle 2660 delivers a package to delivery box 2700, is arranged in reception space 2704a. Therefore, in reception space 2704a, packages that have been delivered by unmanned transport vehicle 2660 can be received.

Elevator path 2704b is connected to reception space 2704a. In elevator path 2704b, transport box 2720 that has received a package in reception space 2704a can be allowed to move vertically, similar to an elevator. Stated differently, elevator path 2704b is a passage for transport box 2720 to deliver the package received in reception space 2704a to a predetermined box 2708 among the plurality of boxes 2708.

The plurality of boxes 2708 are arranged along elevator path 2704b so as to correspond one-to-one with the plurality of loading openings that are in communication with elevator path 2704b. In the present embodiment, the plurality of boxes 2708 are arranged in two columns in the vertical direction, with elevator path 2704b disposed therebetween. The loading opening is a reception port for loading packages delivered by transport box 2720. The loading opening may include a loading door that can open and close.

Retrieval opening 2702a through which packages placed in the interior space of box 2708 can be retrieved is formed in each of the plurality of boxes 2708. Each of the plurality of boxes 2708 includes retrieval door 2702 that can open and close retrieval opening 2702a. Retrieval door 2702 can open and close retrieval opening 2702a.

Guide structure 2710 is a frame-like structure that is capable of guiding a package. Guide structure 2710 includes opening 2711 through which packages pass.

Guide structure 2710 includes a plurality of top lids 2712 that can guide package carriage 2670 descending when lowering a package unmanned transport vehicle 2660 delivered, and top lid actuator 2718 that pivots the plurality of top lids 2712.

When actuation controller 2716 obtains the sensing result from sensor 2717, the plurality of top lids 2712 cause opening 2711 to open by actuation controller 2716 controlling top lid actuator 2718 of guide structure 2710. Here, since the plurality of top lids 2712 are maintained at an inclined attitude, when unmanned transport vehicle 2660 lowers package carriage 2670, package carriage 2670 can be guided into opening 2711, that is, guided into top opening 2704. When actuation controller 2716 obtains the sensing result from sensor 2717, the plurality of top lids 2712 cause opening 2711 to close by actuation controller 2716 controlling top lid actuator 2718 of guide structure 2710. Sensor 2717 is, for example, an image sensor.

Here, the sensing result from sensor 2717 is, for example, position information of unmanned transport vehicle 2660, but the sensing result may include information indicating that unmanned transport vehicle 2660 is lowering package carriage 2670, or information indicating that the loading of a package into delivery box 2700 has been completed.

Guide structure 2710 is provided on top opening 2704 of enclosure 2701 and is slidable by being actuated by guide movable block 2715. Stated differently, guide structure 2710 is movable in the lengthwise direction of top opening 2704. Thus, when unmanned transport vehicle 2660 lowers the delivered package, even if package carriage 2670 is blown down by wind or the like, the package can be received by guide structure 2710 moving. Stated differently, guide structure 2710 is located at the upper part of enclosure 2701 and can receive a package in package carriage 2670 that descends via wire 2663 from unmanned transport vehicle 2660 located above delivery box 2700.

Guide movable block 2715 is an actuator that can slide guide structure 2710 disposed at top opening 2704 of enclosure 2701, under control by actuation controller 2716. Guide movable block 2715 is one example of a third actuator.

When package carriage 2670 and the package descend via wire 2663, actuation controller 2716 controls guide movable block 2715, based on the sensing result from sensor 2717, to move guide structure 2710 to cause package carriage 2670 and guide structure 2710 to overlap in a view from above in the vertical direction. Here, the sensing result from sensor 2717 includes obtaining position information indicating the position of package carriage 2670. The position information may include information indicating the relative positional relationship between package carriage 2670 and delivery box 2700, as well as information indicating the relative positional relationship between package carriage 2670 and transport box 2720. The position information may be information obtained based on image information obtained by a camera. The camera may be provided on unmanned transport vehicle 2660 or on package carriage 2670.

When unmanned transport vehicle 2660 is lowering package carriage 2670, actuation controller 2716 can control top lid actuator 2718 of guide structure 2710 to actuate the plurality of top lids 2712 so as to open or close opening 2711 of guide structure 2710.

Under control by actuation controller 2716, transport box 2720 can move through reception space 2704a and elevator path 2704b within enclosure 2701.

For example, as illustrated in (a) in FIG. 20, when unmanned transport vehicle 2660 lowers package carriage 2670, transport box 2720 moves under control by actuation controller 2716 so as to be positioned vertically below guide structure 2710. More specifically, when package carriage 2670 and package descend via wire 2663, actuation controller 2716 controls transporter 2721 of transport box 2720, based on the sensing result from sensor 2717, to move transport box 2720 to cause package carriage 2670 and transport box 2720 to overlap in a view from above in the vertical direction.

Transport box 2720 includes transporter 2721 and carriage structure 2722.

Transporter 2721 can move carriage structure 2722 along the path under control by actuation controller 2716. Stated differently, under control by actuation controller 2716, transporter 2721 can move through reception space 2704a as indicated by the dashed line arrows in (a) in FIG. 20, reach elevator path 2704b, and descend through elevator path 2704b illustrated in (b) in FIG. 20 to move to a location in front of box 2708 that is the receiver. More specifically, by actuation controller 2716 obtaining information indicating the receiver, once a package is received from package carriage 2670, transport box 2720 can move to a location in front of predetermined box 2708 that is the receiver. In this way, after the package moves from package carriage 2670 to transport box 2720, actuation controller 2716 can control transporter 2721 of transport box 2720 to move carriage structure 2722 along the path. Transporter 2721 is one example of an actuator for wire 2663. Reception space 2704a and elevator path 2704b are one example of a path.

Carriage structure 2722 includes base plate 2723 and unloading door 2724. Base plate 2723 can receive a package when unmanned transport vehicle 2660 lowers package carriage 2670, and can place the received package. Unloading door 2724 is a door for unloading a package toward box 2708, and can be opened when accommodating a package into box 2708 and closed after the package is accommodated. Unloading door 2724 can be opened and closed by a door actuator (not shown) provided in transport box 2720 being controlled by actuation controller 2716. When unloading door 2724 is opened, it can guide a package placed on base plate 2723 from base plate 2723 to the loading opening of box 2708. The package placed on base plate 2723 is discharged by a discharge unit (not illustrated in the drawings) that is disposed in carriage structure 2722, and accommodated into predetermined box 2708.

### Operation Example

Next, operation examples will be described with reference to FIG. 21, including an example of operations performed when package carriage 2670 is lowered into delivery box 2700 with the correct attitude and an example of operations performed when the attitude of package carriage 2670 is corrected after being misaligned before being lowered into delivery box 2700.

FIG. 21 illustrates an example of how package carriage 2670 and delivery box 2700 move when viewed from the front. More specifically, in FIG. 21, (a) illustrates an example in which transport box 2720 of delivery box 2700 receives a package when package carriage 2670 is in the correct attitude. In FIG. 21, (b) illustrates an example in which transport box 2720 of delivery box 2700 receives a package after the attitude of package carriage 2670 is corrected from being tilted relative to the horizontal direction. In FIG. 21, (c) illustrates an example in which transport box 2720 of delivery box 2700 receives a package after the attitude of package carriage 2670 is corrected from a state in which it was rotated around the vertical axis. Note that in FIG. 21, guide structure 2710 may be provided in delivery box 2700, and, alternatively may be not provided in delivery box 2700.

In (a) in FIG. 21, when unmanned transport vehicle 2660 lowers package carriage 2670, transport box 2720 moves under control by actuation controller 2716 so as to be positioned vertically below guide structure 2710. With this, as package carriage 2670 descends and is guided by guide structure 2710 to reach transport box 2720, transport box 2720 can receive a package from package carriage 2670.

In (b) in FIG. 21, when unmanned transport vehicle 2660 is lowering package carriage 2670, because the attitude of package carriage 2670 is tilted relative to the horizontal direction, the attitude control device of package carriage 2670, such as the one in the above-described embodiment, can correct the attitude of package carriage 2670 by controlling both the rotation rate of the rotary member and the direction of the rotary shaft of the rotary member. This makes the bottom surface of package carriage 2670 parallel to the horizontal direction.

In (c) in FIG. 21, when unmanned transport vehicle 2660 is lowering package carriage 2670, because the attitude of package carriage 2670 is off due to rotating around the vertical axis, the attitude control device of package carriage 2670, such as the one in the above-described embodiment, can correct the attitude of package carriage 2670 by controlling the rotation rate of the rotary member.

With this, when viewed from above in the vertical direction, package carriage 2670 assumes an attitude in which it is positioned within opening 2711 of guide structure 2710. Therefore, by lowering package carriage 2670, as package carriage 2670 is guided by guide structure 2710 to reach transport box 2720, transport box 2720 can receive a package from package carriage 2670.

### Advantageous Effects

Next, advantageous effects achieved by delivery box 2700 according to the present embodiment will be described.

In the control method according to the present embodiment, the system further includes a delivery reception box (delivery box 2700) for receiving a package from unmanned transport vehicle 2660. Delivery reception box includes: enclosure 2701; guide structure 2710 that is located at the upper part of enclosure 2701 and is for receiving a package in package carriage 2670 that descends via wire 2663 from unmanned transport vehicle 2660 located above the delivery reception box; and a third actuator (guide movable block 2715) for moving guide structure 2710. In the control method, when package carriage 2670 and package descend via wire 2663, the third actuator is controlled to move guide structure 2710 to cause package carriage 2670 and guide structure 2710 to overlap in a view from above in the vertical direction, based on position information indicating the position of package carriage 2670.

With this, even if package carriage 2670 shifts due to wind or the like when unmanned transport vehicle 2660 is lowering a package, since guide structure 2710 moves so that guide structure 2710 and package carriage 2670 overlap, guide structure 2710 can guide package carriage 2670. Therefore, the delivery reception box can receive a package from package carriage 2670.

In the control method according to the present embodiment, the system further includes a delivery reception box for receiving a package from unmanned transport vehicle 2660. The delivery reception box includes: enclosure 2701; and a carriage movement mechanism (transport box 2720) that is located in enclosure 2701, includes carriage structure 2722 and an actuator (transporter 2721), and moves carriage structure 2722 along a path by actuation by the actuator. In the control method, when package carriage 2670 and package descend via wire 2663, the actuator of the carriage movement mechanism is controlled to move carriage structure 2722 to cause package carriage 2670 and carriage structure 2722 to overlap in a view from above in the vertical direction, based on position information indicating the position of package carriage 2670. After the package has been moved from package carriage 2670 to carriage structure 2722, the actuator of the carriage movement mechanism is controlled to move carriage structure 2722 along the path.

With this, even if package carriage 2670 shifts due to wind or the like when unmanned transport vehicle 2660 is lowering a package, since guide structure 2710 moves so that guide structure 2710 and package carriage 2670 overlap, guide structure 2710 can guide package carriage 2670. Therefore, the delivery reception box can receive a package from package carriage 2670. Carriage structure 2722 can move the received package to a predetermined location. This allows a package to be placed in a predetermined location.

### VARIATION 1 OF EMBODIMENT 3

Hereinafter, since the basic configuration of delivery box 2700a according to the present variation is the same as the basic configuration of the delivery box according to Embodiment 3 and the like, regarding the basic configuration of each embodiment mentioned above, the same reference signs as above will be used and repeated description will be omitted where appropriate. The configurations of each embodiment may be applied to the present variation.

First, a control method that uses delivery box 2700a according to the present embodiment will be described with reference to FIG. 22 and FIG. 23.

FIG. 22 illustrates an example of how package carriage 2670 and delivery box 2700a move when wind blows and viewed from the front. FIG. 23 is a block diagram illustrating an example of the delivery box according to Variation 1 of Embodiment 3.

As illustrated in FIG. 22 and FIG. 23, enclosure 2701 of delivery box 2700a includes placement portion 2704c located in enclosure 2701 for placing a package, base plate 2723 located in enclosure 2701 for placing a package, and protrusion 2704d formed in elevator path 2704b.

Placement portion 2704c is the bottom part that can receive and on which the package can be placed when unmanned transport vehicle 2660 delivers a package to delivery box 2700a. Since placement portion 2704c is located at the bottom surface of reception space 2704a, placement portion 2704c and enclosure 2701 together form reception space 2704a. Placement portion 2704c is one example of a first floor.

Base plate 2723 is a movable plate onto which a package that is placed on placement portion 2704c can be placed by being moved by first movement mechanism 2725. Since base plate 2723 can move along elevator path 2704b, functioning like an elevator, as a result of transporter 2721 being actuated under control by actuation controller 2716, the loaded package can be moved to a location in front of predetermined box 2708. Base plate 2723 is one example of a second floor.

Protrusion 2704d is a projection extending outward in a way that narrows a portion of elevator path 2704b. More specifically, protrusion 2704d extends into elevator path 2704b in a way that it does not come into contact with base plate 2723 that moves vertically in elevator path 2704b. A plurality of protrusions 2704d are formed to correspond to the plurality of boxes 2708 arranged vertically. More specifically, protrusion 2704d is formed on the top end edge of each of the plurality of boxes 2708.

Delivery box 2700a further includes first movement mechanism 2725 and second movement mechanism 2726.

First movement mechanism 2725 is located in enclosure 2701 and includes actuator 2725a for moving a package placed on placement portion 2704c. Stated differently, under control by actuation controller 2716, first movement mechanism 2725 causes actuator 2725a to move the package. First movement mechanism 2725 may move a package from placement portion 2704c to base plate 2723 by, for example, operating a push rod using actuator 2725a and pushing the package with the push rod. Placement portion 2704c itself may be a belt conveyor, in which case the package may be moved by actuator 2725a actuating the belt conveyor.

Second movement mechanism 2726 is located in enclosure 2701, includes transporter 2721, and can move base plate 2723 along the path via the actuation of transporter 2721. Stated differently, under control by actuation controller 2716, second movement mechanism 2726 causes transporter 2721 to move the package. Transporter 2721 is one example of an actuator for second movement mechanism 2726.

After a package in package carriage 2670 that descends via wire 2663 from unmanned transport vehicle 2660 located above delivery box 2700a is placed on placement portion 2704c, actuation controller 2716 can control actuator 2725a of first movement mechanism 2725 to move the package from placement portion 2704c to base plate 2723.

After the package has moved to base plate 2723, second movement mechanism 2726 can control transporter 2721 to move base plate 2723 along the path.

Next, operation examples will be described with reference to FIG. 22, including an example of operations performed when package carriage 2670 has been lowered onto base plate 2723 and an example of operations performed when the package has shifted from the pickup position from base plate 2723 due to, for example, wind after package carriage 2670 has descended, and the package is moved to base plate 2723.

More specifically, in FIG. 22, (a) illustrates an example in which package carriage 2670 descends onto base plate 2723 without being affected by wind, etc., and a package is received. In FIG. 22, (b) illustrates an example in which the position of a package received from package carriage 2670 has shifted from base plate 2723 due to package carriage 2670 swaying from wind, etc., and the package is moved to base plate 2723. In FIG. 22, (c) illustrates an example of a package that has been moved to base plate 2723 being accommodated into a predetermined box 2708 after base plate 2723 moves to a location in front of the predetermined box 2708.

As illustrated in (a) in FIG. 22, since package carriage 2670 lowered by unmanned transport vehicle 2660 reaches base plate 2723, base plate 2723 can receive a package from package carriage 2670. When base plate 2723 receives a package from package carriage 2670, it moves to a location in front of a predetermined box 2708. The package is moved by another actuator 2726a, rides onto protrusion 2704d from base plate 2723, and is accommodated into predetermined box 2708.

As illustrated in (b) in FIG. 22, due to package carriage 2670 swaying from wind, etc., when package carriage 2670 descends to placement portion 2704c, which is a position shifted from base plate 2723, placement portion 2704c can receive a package from package carriage 2670. First movement mechanism 2725 moves the package from placement portion 2704c onto base plate 2723 by actuating actuator 2725a. More specifically, the package can be moved from placement portion 2704c via protrusion 2704d onto base plate 2723 by actuator 2725a moving the package placed on placement portion 2704c. As a result, a package can be guided onto base plate 2723 without the package getting caught in the gap between base plate 2723 and protrusion 2704d.

As illustrated in (c) in FIG. 22, when a package is placed on base plate 2723, base plate 2723 moves along elevator path 2704b like an elevator as a result of being actuated by transporter 2721 of second movement mechanism 2726 controlled by actuation controller 2716. Base plate 2723 moves to a location in front of predetermined box 2708. The package is moved by another actuator 2726a, rides onto protrusion 2704d from base plate 2723, and is accommodated into predetermined box 2708. More specifically, when base plate 2723 moves to a location in front of predetermined box 2708, the package placed on base plate 2723 can be accommodated into predetermined box 2708 by another actuator 2726a moving the package from base plate 2723 via protrusion 2704d. As a result, a package can be guided onto predetermined box 2708 without the package getting caught in the gap between base plate 2723 and protrusion 2704d.

Next, advantageous effects achieved by the control method in delivery box 2700a according to the present variation will be described.

In the control method according to the present variation, the system further includes a delivery reception box (delivery box 2700a) for receiving a package from unmanned transport vehicle 2660. Delivery reception box includes: enclosure 2701 including a first floor (placement portion 2704c) for placing a package, a second floor (base plate 2723) located in enclosure 2701 for placing a package, first movement mechanism 2725 located in enclosure 2701 that includes actuator 2725a for moving a package placed on the first floor, and second movement mechanism 2726 located in enclosure 2701 that includes an actuator (transporter 2721) and moves the second floor along a path by actuation of the actuator. In the control method, after a package in package carriage 2670, which descends via wire 2663 from unmanned transport vehicle 2660 located above the delivery reception box, is placed on the first floor, actuator 2725a of first movement mechanism 2725 is controlled to move the package from the first floor to the second floor, and after the package has been moved to the second floor, the actuator of second movement mechanism 2726 is controlled to move the second floor along the path.

With this, even if package carriage 2670 shifts due to wind or the like when unmanned transport vehicle 2660 is lowering a package, the package can be received from package carriage 2670 on the first floor. Since the package placed on the first floor can be moved to the second floor by first movement mechanism 2725, the package can be moved to a predetermined location within enclosure 2701.

### VARIATION 2 OF EMBODIMENT 3

Hereinafter, since the basic configuration of delivery box 2700b according to the present variation is the same as the basic configuration of the delivery box according to Embodiment 3 and the like, regarding the basic configuration of each embodiment mentioned above, the same reference signs as above will be used and repeated description will be omitted where appropriate. The configurations of each embodiment may be applied to the present variation.

First, a control method that uses delivery box 2700b according to the present embodiment will be described with reference to FIG. 24 and FIG. 25.

FIG. 24 is a plan view illustrating an example of delivery box 2700b according to Variation 2 of Embodiment 3. FIG. 25 is a side view illustrating an example of delivery box 2700b according to Variation 2 of Embodiment 3. FIG. 24 illustrates an example in which delivery box 2700b is located off to the side of the road, beyond the edge line of the road, and is arranged facing the road.

In a view from above in the vertical direction, enclosure 2701 of delivery box 2700b according to the present variation includes first first side 2701a, first second side 2701b adjacent to first first side 2701a, first third side 2701c adjacent to first second side 2701b, and first fourth side 2701d adjacent to both first third side 2701c and first first side 2701a.

More specifically, in a top view, the shape of enclosure 2701 is rectangular. Even more specifically, first first side 2701a is approximately parallel to first third side 2701c, both first first side 2701a and first third side 2701c are of the same length, both first second side 2701b and first fourth side 2701d are of the same length, and first first side 2701a is longer than first second side 2701b. First second side 2701b is connected to one end of first first side 2701a and one end of first third side 2701c, and first third side 2701c is connected to the other end of first first side 2701a and the other end of first third side 2701c.

Enclosure 2701 includes first flap 2705, which is connected to first first side 2701a and configured to open and close top opening 2704 of enclosure 2701, and second flap 2706, which is connected to first third side 2701c and configured to open and close top opening 2704 of enclosure 2701.

First flap 2705 is a lid that includes second first side 2705a and second second side 2705b adjacent to second first side 2705a. First flap 2705 further includes second third side 2705c that is parallel to second first side 2705a, and second fourth side 2705d that is parallel to second second side 2705b. Second second side 2705b is connected to one end of second first side 2705a and one end of second third side 2705c, and second fourth side 2705d is connected to the other end of second first side 2705a and the other end of second third side 2705c. Second first side 2705a is connected to first first side 2701a. First flap 2705 is positioned below rail 7 when top opening 2704 of enclosure 2701 is opened.

Second flap 2706 is a lid that includes third first side 2706a and third second side 2706b adjacent to third first side 2706a. Second flap 2706 further includes third third side 2706c that is parallel to third first side 2706a, and third fourth side 2706d that is parallel to third second side 2706b. Third second side 2706b is connected to one end of third first side 2706a and one end of third third side 2706c, and third fourth side 2706d is connected to the other end of third first side 2706a and the other end of third third side 2706c. Third first side 2706a is connected to first third side 2701c.

Stated differently, first flap 2705 and second flap 2706 are pivotably connected to enclosure 2701.

**Note** that first flap 2705 and second flap 2706 may have a configuration similar to the aforementioned top lid and may be pivoted by the top lid actuator.

Second second side 2705b is set to be longer than third second side 2706b. Stated differently, as illustrated in FIG. 25, the length of first flap 2705 is set to be longer than the length of second flap 2706 in a view of first flap 2705 and second flap 2706 from the side.

In delivery box 2700b configured in this way, delivery box 2700b is positioned such that first first side 2701a is parallel to rail 7 in a view of the road, delivery box 2700b, and rail 7 on which unmanned transport vehicle 2660 travels from above in the vertical direction. Delivery box 2700b is further positioned such that rail 7, first first side 2701a, and first third side 2701c are arranged in this order in the direction moving away from the centerline of the road. Stated differently, because first flap 2705 is positioned facing the road more than enclosure 2701 relative to second flap 2706, even if package carriage 2670 shifts due to wind or the like when unmanned transport vehicle 2660 is lowering a package, first flap 2705 and second flap 2706 can guide the package. This makes it possible to inhibit packages from falling onto the road.

Next, advantageous effects achieved by the control method in delivery box 2700b according to the present variation will be described.

In the control method according to the present variation, in a view from above in the vertical direction, enclosure 2701 includes first first side 2701a, first second side 2701b adjacent to first first side 2701a, first third side 2701c adjacent to first second side 2701b, and first fourth side 2701d adjacent to both first third side 2701c and first first side 2701a, and enclosure 2701 includes first flap 2705 connected to first first side 2701a and configured to open and close top opening 2704 of enclosure 2701, and second flap 2706 connected to first third side 2701c and configured to open and close top opening 2704 of enclosure 2701.

With this, first flap 2705 and second flap 2706 can be arranged along first first side 2701a and first third side 2701c of enclosure 2701. Therefore, when a package is being accommodated from top opening 2704 of enclosure 2701, even if package carriage 2670 shifts due to wind or the like when unmanned transport vehicle 2660 is lowering a package, first flap 2705 and second flap 2706 can guide the package.

In the control method according to the present variation, first first side 2701a and first third side 2701c have a same length, first second side 2701b and first fourth side 2701d have a same length, first first side 2701a is longer than first second side 2701b, and delivery reception box (delivery box 2700b) is arranged facing a road. In a view of the road, the delivery reception box, and rail 7 from above in the vertical direction, first first side 2701a is parallel to rail 7, and the delivery reception box is further arranged to have rail 7, first first side 2701a, and first third side 2701c arranged in listed order in a direction moving away from a centerline of road. First flap 2705 includes second first side 2705a and second second side 2705b adjacent to second first side 2705a, second first side 2705a is connected to first first side 2701a, second flap 2706 includes third first side 2706a and third second side 2706b adjacent to third first side 2706a, third first side 2706a is connected to first third side 2701c, and second second side 2705b is longer than third second side 2706b.

With this, because first flap 2705 including second second side 2705b that is longer than third second side 2706b can be arranged adjacent to the road side, even if package carriage 2670 shifts due to wind or the like when unmanned transport vehicle 2660 is lowering a package, first flap 2705 and second flap 2706 can guide the package. This makes it possible to inhibit packages from falling onto the road.

### [Embodiment 4]

Unmanned transport system 2800 according to the present embodiment differs from Embodiment 2 and the like in that support structure 2810 is provided on vehicle main body 2802 of unmanned transport vehicle 2801, and package carriage 2820 includes first metal structure 2811 and second metal structure 2812. Hereinafter, since the basic configuration of unmanned transport system 2800 according to the present embodiment is the same as the basic configuration of each of the above-described embodiments, regarding the basic configuration of the unmanned transport vehicle according to the present embodiment, the same reference signs as above will be used and repeated description will be omitted where appropriate. The configurations of each embodiment may be applied to the present embodiment.

### Function and Configuration

First, unmanned transport system 2800 according to the present embodiment will be described with reference to FIG. 26 and FIG. 27A through FIG. 27C.

FIG. 26 is a block diagram illustrating an example of unmanned transport system 2800 according to Embodiment 4. FIG. 27A illustrates an example of unmanned transport vehicle 2801 and package carriage 2820 in unmanned transport system 2800 according to Embodiment 4. FIG. 27B illustrates another example of unmanned transport vehicle 2801 and package carriage 2820 in unmanned transport system 2800 according to Embodiment 4. Note that illustration of rail 7 and connector 2803 is omitted in FIG. 27A and FIG. 27B. FIG. 27C is a schematic diagram illustrating an example of the positional relationship between first other end 2811c and second other end 2812c in support structure 2810.

### Function and Configuration

As illustrated in FIG. 26 through FIG. 27B, unmanned transport system 2800 includes unmanned transport vehicle 2801, support structure 2810, package carriage 2820, first winch 2831, and control processor 2833. Unmanned transport system 2800 is one example of a system.

Unmanned transport vehicle 2801 can proceed along rail 7. Stated differently, unmanned transport vehicle 2801 can transport package carriage 2820 by traveling along rail 7.

More specifically, unmanned transport vehicle 2801 is provided with vehicle main body 2802 and connector 2803. Although unmanned transport vehicle 2801 according to the present embodiment includes two connectors 2803 (for example, the first connector and the second connector), unmanned transport vehicle 2801 may include three or more connectors 2803. Connector 2803 is one example of an arm.

Vehicle main body 2802 is elongated in the lengthwise direction of rail 7. Vehicle main body 2802 is provided with a first connector, a second connector, support structure 2810, etc. Vehicle main body 2802 according to the present embodiment, which is structured to include two support structures 2810, may include a first recess for placing one support structure 2810 and package carriage 2820, and a second recess for placing the other support structure 2810 and package carriage 2820. Due to such a configuration, when viewing the side of vehicle main body 2802 in the crosswise direction of vehicle main body 2802, vehicle main body 2802 may be T-shaped.

First connector is positioned on one side in the traveling direction of vehicle main body 2802 of unmanned transport vehicle 2801, and second connector is positioned on the other side in the traveling direction of vehicle main body 2802 of unmanned transport vehicle 2801.

First connector includes wheel 2803a for traveling along rail 7, and an arm to which wheel 2803a is connected and which is connected to vehicle main body 2802 of unmanned transport vehicle 2801. Second connector also includes wheel 2803a for traveling along rail 7, and an arm to which wheel 2803a is connected and which is connected to vehicle main body 2802 of unmanned transport vehicle 2801.

Wheel 2803a of the first connector and wheel 2803a of the second connector are arranged above rail 7 when unmanned transport vehicle 2801 travels along rail 7. Wheel 2803a of the first connector is disposed at the top end of the first connector on one side of the first connector. Wheel 2803a of the second connector is disposed at the top end of the second connector on one side of the second connector. In other words, wheel 2803a of the first connector and wheel 2803a of the second connector are disposed on the same side of each connector.

In the present embodiment, the bottom ends of the arm-shaped first connector and the arm-shaped second connector are provided on vehicle main body 2802 so as to be capable of pivoting around the crosswise direction of vehicle main body 2802 as an axis. In the present embodiment, the arm-shaped first connector and the arm-shaped second connector can pivot with respect to vehicle main body 2802 by actuation by each arm actuator 2834 (one example of an actuator) for actuating the connectors.

Each arm actuator 2834 can be controlled by control processor 2833 to push or pull the first connector and the second connector. With this, arm actuators 2834 can pivot the first connector and the second connector with respect to vehicle main body 2802. For example, unmanned transport vehicle 2801 can transition between a first distance state where the distance between vehicle main body 2802 and rail 7 is a first distance, and a second distance state where the distance between vehicle main body 2802 and rail 7 is a second distance greater than the first distance, by the actuation by an actuator.

Support structure 2810 is provided on vehicle main body 2802 and is coupleable to package carriage 2820. Support structure 2810 is capable of supporting package carriage 2820 connected to unmanned transport vehicle 2801. Accordingly, package carriage 2820 is attached to vehicle main body 2802 by support structure 2810.

Support structure 2810 includes first metal structure 2811 that includes first part 2811a, and second metal structure 2812 that includes second part 2812a.

First metal structure 2811 extends from a first one end connected to unmanned transport vehicle 2801 towards first part 2811a of support structure 2810 located vertically downwards, turns back at first part 2811a of support structure 2810, and then extends to first other end 2811c located vertically upwards. Stated differently, first metal structure 2811 includes a long section that extends in the vertical direction from the lower surface of vehicle main body 2802, first part 2811a that bends and extends in a direction intersecting the long section from the bottom end of the long section, and a protrusion that projects vertically upwards from the leading end of first part 2811a. The first one end is coupled to the lower surface of vehicle main body 2802.

Second metal structure 2812 extends from a second one end connected to unmanned transport vehicle 2801 towards second part 2812a of support structure 2810 located vertically downwards, turns back at second part 2812a of support structure 2810, and then extends to second other end 2812c located vertically upwards. Stated differently, second metal structure 2812 includes a long section that extends in the vertical direction from the lower surface of vehicle main body 2802, second part 2812a that bends and extends in a direction intersecting the long section from the bottom end of the long section, and a protrusion that projects vertically upwards from the leading end of second part 2812a. The second one end is coupled to the lower surface of vehicle main body 2802.

Second part 2812a extends in a direction opposite to that of first part 2811a. First part 2811a and second part 2812a extend along the crosswise direction of vehicle main body 2802, in a direction away from vehicle main body 2802.

Accordingly, as illustrated in FIG. 27C, first metal structure 2811 and second metal structure 2812 are arranged symmetrically. In this case, in a view of support structure 2810 from above in the vertical direction, it can be said that first metal structure 2811 and second metal structure 2812 are arranged such that the straight single-dotted line connecting first other end 2811c and second other end 2812c intersects the straight double-dotted line connecting the center point of first part 2811a of support structure 2810 and the center point of second part 2812a of support structure 2810.

In the present embodiment, support structure 2810 is a pair of hooks that includes first part 2811a and second part 2812a. One set of the pair of hooks includes one hook arranged on one side of vehicle main body 2802 and the other hook arranged on the other side of vehicle main body 2802. Since support structure 2810 can attach one package carriage 2820, two package carriages 2820 can be attached to vehicle main body 2802. Note that one pair or three or more pairs of hooks (support structures 2810) may be provided on vehicle main body 2802.

Support structure 2810 is arranged on the bottom end surface of vehicle main body 2802. Package carriage 2820 is coupled to support structure 2810 by the pair of couplers 2821 of package carriage 2820 engaging with the pair of hooks (support structure 2810) one-to-one.

In the present embodiment, support structure 2810 is not limited to a pair of hooks. Support structure 2810 may be an engaging structure capable of grabbing package carriage 2820, and may be a clamping structure capable of clamping package carriage 2820. Support structure 2810 may be a simple columnar member, and may be a ring-shaped member. Stated differently, package carriage 2820 may be capable of hooking onto support structure 2810.

In the present embodiment, package carriage 2820 includes a pair of couplers 2821. The pair of couplers 2821 includes third part 2822a and fourth part 2822b. The pair of couplers 2821 may be a pair of hooks capable of coupling one-to-one with the pair of hooks (support structure 2810), may be an engaging structure capable of grabbing support structure 2810, and may be a clamping structure capable of clamping support structure 2810. The pair of couplers 2821 may be columnar members or ring-shaped members capable of hooking onto support structure 2810.

First part 2811a of the pair of hooks (support structure 2810) and second part 2812a of the pair of hooks (support structure 2810) are arranged a predetermined length apart from each other. Stated differently, first part 2811a and second part 2812a are disposed spaced apart from each other. Third part 2822a of the pair of couplers 2821 and fourth part 2822b of the pair of couplers 2821 are arranged a predetermined length apart from each other. Stated differently, third part 2822a and fourth part 2822b are disposed spaced apart from each other.

Due to the configuration of support structure 2810 and the pair of couplers 2821, first part 2811a of support structure 2810 couples with third part 2822a of the pair of couplers 2821, and second part 2812a of support structure 2810 couples with fourth part 2822b of the pair of couplers 2821. In this case, package carriage 2820 is in a first state in which it is supported by support structure 2810. When package carriage 2820 is in the first state, unmanned transport vehicle 2801 travels along rail 7.

When first winch 2831 of unmanned transport vehicle 2801 reels in wire 2805, the coupling between first part 2811a of support structure 2810 and third part 2822a of the pair of couplers 2821 is released, and the coupling between second part 2812a of support structure 2810 and fourth part 2822b of the pair of couplers 2821 is released. In such cases, package carriage 2820 is in a second state in which it is not supported by support structure 2810 and is suspended by wire 2805. When package carriage 2820 is in the second state, package carriage 2820 is lowered toward the destination point located vertically below unmanned transport vehicle 2801 via wire 2805.

Here, the control of the reeling of wire 2805 is executed by control processor 2833. Control processor 2833 is one example of the controller.

For example, to transition package carriage 2820 from the second state to the first state, control processor 2833 (1) controls first winch 2831 to reel in wire 2805 until the length of wire 2805 extending from unmanned transport vehicle 2801 to package carriage 2820 becomes a first length. With this, the height of third part 2822a of package carriage 2820 becomes higher than the position of first part 2811a of support structure 2810, and the height of fourth part 2822b of package carriage 2820 becomes higher than the position of second part 2812a of support structure 2810.

Next, control processor 2833 (2) controls attitude control device 2870 to rotate package carriage 2820. With this, third part 2822a of package carriage 2820 is positioned directly above first part 2811a of support structure 2810, and fourth part 2822b of package carriage 2820 is positioned directly above second part 2812a of support structure 2810.

Next, control processor 2833 (3) controls first winch 2831 to reel out wire 2805. With this, third part 2822a of package carriage 2820 is coupled to first part 2811a of support structure 2810, and fourth part 2822b of package carriage 2820 is coupled to second part 2812a of support structure 2810, thereby changing package carriage 2820 to the first state.

A package to be transported by unmanned transport vehicle 2801 can be put in package carriage 2820. Stated differently, package carriage 2820 includes an accommodation space for accommodating a package.

The upper surface of package carriage 2820 is connected to wire 2805. Since control processor 2833 controls first winch 2831 to reel out or reel in wire 2805, package carriage 2820 can ascend by the reeling in of wire 2805 and descend by the reeling out of wire 2805.

Package carriage 2820 includes attitude control device 2870 that controls the attitude of package carriage 2820 suspended by wire 2805 by controlling the rotary member. Attitude control device 2870 can, for example, correct the attitude of package carriage 2820 to the correct attitude by controlling the rotary member, examples of which include a reaction wheel and a flywheel.

First winch 2831 is connected to unmanned transport vehicle 2801 and is capable of reeling out and in wire 2805. Stated differently, first winch 2831, under control by control processor 2833, reels out wire 2805 to raise package carriage 2820 and reels in wire 2805 to lower package carriage 2820. First winch 2831, under control by control processor 2833, can change package carriage 2820 between the first state and the second state. In the present disclosure, the "winch" may be read as a "reel".

The correction of the attitude of package carriage 2820 is executed by control processor 2833.

For example, control processor 2833 obtains the sensing result from sensor 2836 capable of detecting the attitude of package carriage 2820, and based on the obtained sensing result, controls the rotary member of attitude control device 2870 to orient package carriage 2820 to the target attitude. Stated differently, attitude control device 2870 can recognize the attitude of package carriage 2820 based on the sensing result from sensor 2836 that sensed the attitude of package carriage 2820. Based on the sensing result, if the attitude of package carriage 2820 is not in the target attitude, control processor 2833 controls attitude control device 2870 to orient package carriage 2820 to the target attitude. Sensor 2836 is, for example, a camera sensor or an angular speed sensor.

### Advantageous Effects

Next, advantageous effects achieved by unmanned transport system 2800 according to the present embodiment will be described.

As described above, in unmanned transport system 2800 according to the present embodiment, unmanned transport vehicle 2801 transports package carriage 2820 by traveling along rail 7. Unmanned transport vehicle 2801 further includes support structure 2810 that is connected to unmanned transport vehicle 2801 and is for supporting package carriage 2820. Unmanned transport vehicle 2801 and package carriage 2820 can transition between the first state in which package carriage 2820 is supported by support structure 2810 and the second state in which package carriage 2820 is not supported by support structure 2810 and is suspended by wire 2805. Unmanned transport vehicle 2801 and package carriage 2820 are in the first state when traveling along rail 7, and in the second state when lowering package carriage 2820 toward the destination point located vertically below unmanned transport vehicle 2801 via wire 2805.

With this, as a result of package carriage 2820 entering the first state, unmanned transport vehicle 2801 can travel while supporting package carriage 2820. Unmanned transport vehicle 2801 can therefore deliver the package accommodated inside package carriage 2820 from the sender to the destination point of the receiver.

As a result of package carriage 2820 entering the second state, stationary unmanned transport vehicle 2801 can lower package carriage 2820, thereby enabling the delivery of the package to the destination point of the receiver.

As described above, in unmanned transport system 2800 according to the present embodiment, support structure 2810 includes first part 2811a and second part 2812a. First part 2811a of support structure 2810 and second part 2812a of support structure 2810 are a predetermined length apart. Package carriage 2820 includes third part 2822a and fourth part 2822b. Third part 2822a of package carriage 2820 and fourth part 2822b of package carriage 2820 are the predetermined length apart. In the first state, first part 2811a of support structure 2810 and third part 2822a of package carriage 2820 are coupled, and second part 2812a of support structure 2810 and fourth part 2822b of package carriage 2820 are coupled. To transition unmanned transport vehicle 2801 and package carriage 2820 to the first state, control processor 2833 (1) controls first winch 2831 to reel in wire 2805 until the length of wire 2805 extending from unmanned transport vehicle 2801 to package carriage 2820 becomes a first length which positions third part 2822a of package carriage 2820 higher than first part 2811a of support structure 2810 and positions fourth part 2822b of package carriage 2820 higher than second part 2812a of support structure 2810, (2) controls attitude control device 2870 to rotate package carriage 2820 to position third part 2822a of package carriage 2820 directly above first part 2811a of support structure 2810 and position fourth part 2822b of package carriage 2820 directly above second part 2812a of support structure 2810, and (3) controls first winch 2831 to reel out wire 2805 to couple third part 2822a of package carriage 2820 to first part 2811a of support structure 2810 and couple fourth part 2822b of package carriage 2820 to second part 2812a of support structure 2810.

With this, control processor 2833 controls first winch 2831 to place package carriage 2820 in the first state. This allows unmanned transport vehicle 2801 to travel while supporting package carriage 2820.

### [Embodiment 5]

Unmanned transport system 2900 according to the present embodiment differs from Embodiment 4 and the like in that package carriage 2820 includes second winch 2832 and the like. Hereinafter, since the basic configuration of unmanned transport system 2900 according to the present embodiment is the same as the basic configuration of the unmanned transport systems according to the above-described embodiments, the same reference signs as above are used and repeated description of the basic configuration of unmanned transport system 2900 according to the present embodiment will be omitted where appropriate. The configurations of each embodiment may be applied to the present embodiment.

### Function and Configuration

First, unmanned transport system 2900 according to the present embodiment will be described with reference to FIG. 28 through FIG. 34C.

FIG. 28 is a block diagram illustrating an example of unmanned aerial vehicle 2910, package carriage 2820, and delivery box 2950 in unmanned transport system 2900. FIG. 29 illustrates an example of unmanned aerial vehicle 2910 and package carriage 2820 in unmanned transport system 2900 descending. FIG. 30 illustrates an example of one lid 2952d that is openable and closable and includes slit 2952e. FIG. 31A illustrates an example of a package being unloaded and package carriage 2820 in unmanned transport system 2900 ascending. FIG. 31B illustrates an example of package carriage 2820 and unmanned aerial vehicle 2910 in unmanned transport system 2900 ascending. FIG. 31C illustrates an example of closing first lid 2952a and second lid 2952b and closing lid 2959 of a guide structure of enclosure 2951. FIG. 32A illustrates an example of unmanned aerial vehicle 2910, which has the capability to fly, descending. FIG. 32B illustrates an example of package carriage 2820 descending to unload a package after unmanned aerial vehicle 2910 with the capability to fly has descended. FIG. 32C illustrates an example of a package being unloaded from package carriage 2820 and unmanned aerial vehicle 2910 in unmanned transport system 2900 ascending. FIG. 32D illustrates an example of moving a package placed in a temporary storage area to predetermined package compartment 2953. FIG. 33A illustrates an example of collecting a package. FIG. 33B illustrates an example of lowering unmanned aerial vehicle 2910 and package carriage 2820 to collect a package. FIG. 33C illustrates an example of package carriage 2820 and unmanned aerial vehicle 2910 in unmanned transport system 2900 ascending after collecting the package. FIG. 34A illustrates an example of unmanned aerial vehicle 2910 in unmanned transport system 2900 descending while avoiding an obstacle. FIG. 34B illustrates an example of a package being unloaded from package carriage 2820 and unmanned aerial vehicle 2910 in unmanned transport system 2900 ascending. FIG. 34C illustrates an example of package being unloaded and unmanned aerial vehicle 2910 in unmanned transport system 2900 ascending. Note that illustration of the rail and the connector according to the present disclosure is omitted in FIG. 28 through FIG. 34C.

As illustrated in FIG. 28 and (a1) through (a3) in FIG. 29, unmanned transport system 2900 includes unmanned transport vehicle 2901, protective case 2911, first winch 2831, package carriage 2820, second winch 2832, unmanned aerial vehicle 2910, control processor 2933, and delivery box 2950.

Unmanned transport vehicle 2901 is, for example, a mobile body equipped with a wheel (omitted from the figure). Unmanned transport vehicle 2901 not only flies in the air, but can also travel along rails provided above the ground. While coupled to first wire 2941, unmanned transport vehicle 2901 can transport packages by traveling along rails in a state in which it is coupled to package carriage 2820. Unmanned transport vehicle 2901 may be a flying body such as a drone. Stated differently, unmanned transport vehicle 2901 may include a propeller, and may be configured not including a propeller.

Unmanned transport vehicle 2901 includes a vehicle main body, control processor 2933, a connector (suspension arm), an arm actuator, a wheel, wire control module 2934, and first winch 2831. Note that the vehicle main body may include first wire 2941 as an element. Illustration of the connector, the arm actuator, and the wheel is omitted in FIG. 28 and the like.

The vehicle main body is a rectangular mobile body. The vehicle main body includes the connector and supports first winch 2831 at a predetermined attitude. Vehicle main body is one example of the main body.

Note that the vehicle main body may include a plurality of propellers. In such cases, the vehicle main body may provide thrust to unmanned transport vehicle 2901 via the rotational actuation of the propeller actuation motor provided in the vehicle main body.

The connector is a hook capable of connecting to a rail, and can therefore be hooked onto the rail. The bottom end of connector is coupled to the vehicle main body, and the wheel, which can rotate and make contact with the rail, is coupled to the other end, i.e., the leading end. The vehicle main body is provided with a plurality of connectors. Note that the connector may be provided with a motor that rotates the wheel. The arm, hook, connector, etc., described in the above embodiments may be used for the connector in the present embodiment. Note that the connector may include both the arm and the wheel, and, alternatively may include only the arm.

The arm actuator can actuate the connector to displace the connector and change the attitude of the connector. More specifically, the arm actuator can be controlled by control processor 2933 to rotate the connector around an axis extending in the lengthwise direction of the rail, thereby making the wheel contact the rail and connecting the connector to the rail. Arm actuator can be controlled by control processor 2933 to rotate the connector around an axis extending in the lengthwise direction of the rail, thereby separating the wheel from the rail and disconnecting from the rail. The arm actuator is one example of a second actuator for actuating connector.

The wheel is a roller that can contactably rotate freely with respect to the rail, allowing it to travel on the rail. The rotary shaft of the wheel extends in a direction orthogonal to the lengthwise direction of the rail. When the connector is connected to the rail, the wheel provided on the connector rotates around the axis of the rotary shaft.

Control processor 2933 can control the flying condition of unmanned transport vehicle 2901. More specifically, flying states of unmanned transport vehicle 2901 include forward, backward, rotate right, rotate left, hovering, etc. Control processor 2933 controls the inclination of the vehicle main body of unmanned transport vehicle 2901 relative to the horizontal direction and controls the rotation rates of the propellers by controlling the propeller actuation motors, based on the position information, the angular speed information, the acceleration information, and the speed information.

Unmanned transport vehicle 2901 is connected to package carriage 2820 via first wire 2941. Stated differently, one end of first wire 2941 is coupled to unmanned transport vehicle 2901, and the other end of first wire 2941 is coupled to unmanned transport vehicle 2901.

By controlling wire control module 2934, control processor 2933 enables wire control module 2934 to reel in and out first wire 2941. Stated differently, the reeling out and in of first wire 2941 are performed by wire control module 2934 actuating and controlling first winch 2831. More specifically, when wire control module 2934 obtains a reel-out instruction for first wire 2941 from control processor 2933, it may control first winch 2831 to reel out first wire 2941 and separate package carriage 2820 from unmanned transport vehicle 2901. When wire control module 2934 obtains a reel-in instruction for first wire 2941 from control processor 2933, it may control first winch 2831 to reel in first wire 2941 and collect package carriage 2820. Wire control module 2934 may be integrally provided with first winch 2831.

First winch 2831 is provided below unmanned transport vehicle 2901 and is capable of reeling out and in first wire 2941. Stated differently, first winch 2831, under control by control processor 2933, reels out first wire 2941 to raise package carriage 2820 and reels in first wire 2941 to lower package carriage 2820.

A package to be transported by unmanned transport vehicle 2901 can be put in package carriage 2820, which is connected to first wire 2941. Stated differently, package carriage 2820 includes an accommodation space for accommodating a package.

The upper surface of package carriage 2820 is connected to first wire 2941. Since control processor 2933 controls first winch 2831 to reel out or reel in first wire 2941, package carriage 2820 can ascend by the reeling in of first wire 2941 and descend by the reeling out of first wire 2941.

Package carriage 2820 is provided with second winch 2832. Second winch 2832 is provided below package carriage 2820 and is capable of reeling out and in second wire 2942. Stated differently, second winch 2832, under control by control processor 2933, reels out second wire 2942 to raise unmanned aerial vehicle 2910 and reels in second wire 2942 to lower unmanned aerial vehicle 2910.

Unmanned aerial vehicle 2910 is a device capable of correcting the position of a package relative to delivery box 2950. Unmanned aerial vehicle 2910 can communicate with the vehicle main body of unmanned transport vehicle 2901 via wire 2941, but may also communicate wirelessly using a communication module or the like. Unmanned aerial vehicle 2910 may be a drone.

Unmanned aerial vehicle 2910 is connected to package carriage 2820 via second wire 2942. Stated differently, one end of second wire 2942 is coupled to package carriage 2820, and the other end of second wire 2942 is coupled to protective case 2911.

Unmanned aerial vehicle 2910 is covered by protective case 2911 for protecting unmanned aerial vehicle 2910. Unmanned aerial vehicle 2910 is fixed to protective case 2911 and is connected to second wire 2942 via protective case 2911. Protective case 2911 covers the entirety of unmanned aerial vehicle 2910. Note that unmanned aerial vehicle 2910 need not be provided with protective case 2911. In such cases, second wire 2942 is directly connected to unmanned aerial vehicle 2910. Note that protective case 2911 may cover only a part of unmanned aerial vehicle 2910.

Unmanned aerial vehicle 2910 is, for example, a flying body capable of flight such as a drone. Unmanned aerial vehicle 2910 flies while coupled to second wire 2942 via protective case 2911. Accordingly, the longer second wire 2942 is unreeled from second winch 2832 of package carriage 2820, the farther unmanned aerial vehicle 2910 can move away from package carriage 2820.

By controlling wire control module 2934, control processor 2933 enables second winch 2832 to reel in and out second wire 2942. Stated differently, the reeling out and in of second wire 2942 are performed by wire control module 2934 actuating and controlling second winch 2832. More specifically, when wire control module 2934 obtains a reel-out instruction for second wire 2942 from control processor 2933, it may control second winch 2832 to reel out second wire 2942 and separate package carriage 2820 from unmanned transport vehicle 2901. When wire control module 2934 obtains a reel-in instruction for second wire 2942 from control processor 2933, it may control second winch 2832 to reel in second wire 2942 and collect package carriage 2820.

Note that wire control module 2934 may include separate modules for actuating and controlling first winch 2831 and for actuating and controlling second winch 2832.

Unmanned aerial vehicle 2910 includes a vehicle main body, a plurality of propeller actuation motors, a plurality of propellers, an actuation controller, and a camera sensor.

The vehicle main body is a support member capable of holding the package at a predetermined attitude by engaging with the upper portion of the package. The vehicle main body attachably and detachably holds a package. The vehicle main body may include a polygonal frame that surrounds the package. The vehicle main body may be able to hold the package at a predetermined attitude by housing the package inside an opening formed in the central region of the vehicle main body and gripping the package around the top edge of the package to clamp the package, or by connecting to the package.

The vehicle main body may be a basket-shaped package carriage. The vehicle main body may be able to accommodate a package inside. The vehicle main body has a plan view shape that corresponds to the shape of the package. In the present embodiment, the vehicle main body has a rectangular shape, which is one example of a polygonal shape.

The vehicle main body supports the plurality of propeller actuation motors. The plurality of propeller actuation motors and the plurality of propellers are provided on the outer peripheral side portions of the vehicle main body. In the present embodiment, two propellers and two propeller actuation motors are provided on each side of the vehicle main body.

The plurality of propeller actuation motors are electric motors that respectively rotate the plurality of propellers by the main bodies of the motors rotating rotary shafts. Each of the plurality of propeller actuation motors is individually controlled to be actuated and stopped by actuation controller. The propeller actuation motors may, for example, be supplied with power from the battery of vehicle main body 2301 of package transport vehicle 10p via first wire 2941 and second wire 2942. The vehicle main body may be provided with a battery, and each of the plurality of propeller actuation motors may be supplied with power from the battery.

The plurality of propeller actuation motors are arranged on the vehicle main body. The plurality of propeller actuation motors are dispersedly arranged so as to surround the vehicle main body and are supported by the vehicle main body.

Each of the plurality of propellers is disposed on the vehicle main body so as to generate a horizontal and/or vertically upward thrust.

The plurality of propellers correspond one-to-one with the rotary shafts of the plurality of propeller actuation motors and are fixed one-to-one with the rotary shafts of the plurality of propeller actuation motors. The plurality of propellers are respectively actuated by the plurality of propeller actuation motors, and generate thrust along the lengthwise direction of the rotary shafts.

A camera sensor is provided on the package side of the vehicle main body, that is, on the vertically downward side, and outputs image information obtained by capturing an image of delivery box 2950 to the actuation controller. A plurality of camera sensors may be provided. Moreover, the camera sensor is not an essential element of unmanned aerial vehicle 2910. Accordingly, unmanned aerial vehicle 2910 need not include a camera sensor.

The actuation controller controls the plurality of propeller actuation motors of unmanned aerial vehicle 2910 to actuate at least one of the plurality of propeller actuation motors during at least part of a period of time during which first wire 2941 and/or second wire 2942 is reeled out.

More specifically, the actuation controller calculates the positions of delivery box 2950 and unmanned aerial vehicle 2910 based on image information obtained from the camera sensor. The actuation controller controls the plurality of propeller actuation motors of unmanned aerial vehicle 2910 so as to position the package vertically above the opening of delivery box 2950, to move unmanned aerial vehicle 2910 and the package so that the package fits inside the opening of delivery box 2950 as viewed from above. More specifically, the actuation controller calculates an error (misalignment) between the opening of delivery box 2950 and the package, and corrects the position of the package relative to the opening of delivery box 2950 so as to correct the calculated error.

The actuation controller also controls the rotation rate of the rotary shafts of the plurality of propeller actuation motors. The actuation controller controls the rotation rate of the rotary shafts by changing the value of the current supplied to the plurality of propeller actuation motors. The actuation controller can also individually control the rotation rate of each of the rotary shafts of the plurality of propeller actuation motors.

Delivery box 2950 is a delivery reception box for receiving packages from unmanned transport vehicle 2901 or for collecting packages. Delivery box 2950 may be provided with order screen 2963 via which ordering of products deliverable to delivery box 2950 or requesting package collection is possible.

As illustrated in FIG. 28 and in (a1) through (b2) in FIG. 29, delivery box 2950 includes enclosure 2951, box structure 2952, a plurality of package compartments 2953, sensor 2958, first actuator 2961, and second actuator 2962.

Enclosure 2951 has a rectangular or tubular shape and is a container capable of storing a plurality of packages. Enclosure 2951 includes top opening 2951a formed at the top portion in the vertically upward direction of enclosure 2951, and elevator path 2954 for delivering a received package to predetermined package compartment 2953 among the plurality of package compartments 2953 arranged in enclosure 2951. Top opening 2951a includes lid 2959 with a guide structure capable of guiding package carriage 2820. Therefore, as illustrated in (b1) in FIG. 29, even if package carriage 2820 sways due to wind and shifts from top opening 2951a, lid 2959 can guide package carriage 2820.

Box structure 2952 includes a lid that can open and close the entrance. The lid includes first lid 2952a and second lid 2952b. In box structure 2952, when first lid 2952a and second lid 2952b are closed, as illustrated in (c2) in FIG. 29, hole 2952c is defined by a part of first lid 2952a and a part of second lid 2952b. The lid moves by first actuator 2961.

First actuator 2961 can be controlled by actuation controller 2957 to open and close the lid of box structure 2952. Stated differently, first actuator 2961 can be controlled by actuation controller 2957 to operate first lid 2952a and second lid 2952b, thereby opening and closing the entrance of box structure 2952. Note that first actuator 2961 may be provided for each of first lid 2952a and second lid 2952b.

Box structure 2952 moves along elevator path 2954 of enclosure 2951 by being actuated by second actuator 2962 controlled by actuation controller 2957.

Elevator path 2954 is a path that extends in the vertical direction, from top opening 2951a of enclosure 2951 to the bottom of enclosure 2951. Top opening 2951a is the upper surface portion vertically above elevator path 2954 through which unmanned aerial vehicle 2910 and package carriage 2820 pass. Elevator path 2954 can house box structure 2952 and package carriage 2820 therein. Elevator path 2954 is one example of a first path.

A plurality of adjacent package compartments 2953 are arranged in elevator path 2954. Each of the plurality of package compartments 2953 is provided in enclosure 2951 and is provided to face elevator path 2954. The plurality of package compartments 2953 are arranged vertically along elevator path 2954.

Second actuator 2962 can move box structure 2952 along elevator path 2954 from a standby position located above enclosure 2951. Stated differently, second actuator 2962 moves box structure 2952 in the vertical direction along elevator path 2954 from the standby position, which is its current position, and stops box structure 2952 within elevator path 2954 so that a package can be accommodated in one of the plurality of package compartments 2953. This enables a package to be accommodated in one of the plurality of package compartments 2953.

Box structure 2952 defines an entrance through which unmanned aerial vehicle 2910 is able to pass, and can restrain unmanned aerial vehicle 2910.

More specifically, when unmanned transport vehicle 2901 is positioned in the airspace above delivery box 2950 in order to store a package in delivery box 2950, control processor 2933 controls unmanned aerial vehicle 2910 to insert unmanned aerial vehicle 2910 into box structure 2952 with the lid open.

More specifically, control processor 2933 controls wire control module 2934 to cause second winch 2832 to reel out second wire 2942, and controls unmanned aerial vehicle 2910 to detach unmanned aerial vehicle 2910 from package carriage 2820. Control processor 2933 controls unmanned aerial vehicle 2910 so as to cause unmanned aerial vehicle 2910 to enter through the entrance of box structure 2952.

As illustrated in FIG. 28 and in (c1) and (c2) in FIG. 29, after unmanned aerial vehicle 2910 passes through the entrance of box structure 2952 and unmanned transport vehicle 2901 enters into box structure 2952, delivery box 2950 obtains an entrance notification from unmanned aerial vehicle 2910. Stated differently, delivery box 2950 and unmanned aerial vehicle 2910 are equipped with a communicator (not illustrated in the figures). Upon receiving the entrance notification, actuation controller 2957 controls first actuator 2961 to close first lid 2952a and second lid 2952b of box structure 2952. When unmanned aerial vehicle 2910 lands at the bottom of box structure 2952, actuation controller 2957 may control first actuator 2961 to close first lid 2952a and second lid 2952b of box structure 2952. With first lid 2952a and second lid 2952b closed, second wire 2942, which connects protective case 2911 of unmanned aerial vehicle 2910 and package carriage 2820, is inserted through hole 2952c defined by a part of first lid 2952a and a part of second lid 2952b, preventing unmanned aerial vehicle 2910 from passing through hole 2952c. Hole 2952c is smaller than unmanned transport vehicle 2901, so unmanned transport vehicle 2901 cannot pass through hole 2952c. Stated differently, it can be said that the size (opening area) of hole 2952c is smaller than the projected area of unmanned aerial vehicle 2910 in a plan view. As a result, when first lid 2952a and second lid 2952b of box structure 2952 are closed, unmanned aerial vehicle 2910 is restrained within box structure 2952.

Although an example using first lid 2952a and second lid 2952b have been given, the present disclosure is not limited to this example. For example, as illustrated in FIG. 30, the lid may be formed from one lid 2952d that is openable and closable and includes slit 2952e. The size (opening area) of slit 2952e may be such that it allows for the insertion of second wire 2942 but prevents unmanned aerial vehicle 2910 from passing through.

As illustrated in FIG. 28 and in (d1) and (d2) in FIG. 29, after first lid 2952a and second lid 2952b of box structure 2952 are closed, control processor 2933 controls wire control module 2934 to actuate first winch 2831 and second winch 2832 to adjust the length of first wire 2941 and second wire 2942 and move package carriage 2820 towards a location above the lid of box structure 2952.

As illustrated in FIG. 28 and in (a) through (c) in FIG. 31A, after package carriage 2820 moves to the lid of box structure 2952 and is placed on the lid, actuation controller 2957 controls second actuator 2962 to move package carriage 2820 on box structure 2952 in front of one of the plurality of package compartments 2953 in order to move the package inside box structure 2952 into package compartment 2953. More specifically, after unmanned aerial vehicle 2910 is restrained to box structure 2952, control processor 2933 controls wire control module 2934 to actuate first winch 2831 and second winch 2832 to adjust the length of first wire 2941 and second wire 2942 and place package carriage 2820 on the lid of box structure 2952. Next, control processor 2933 controls wire control module 2934 to actuate first winch 2831 and adjust the length of first wire 2941. Here, actuation controller 2957 controls second actuator 2962 to move package carriage 2820 in front of one of the plurality of package compartments 2953 (a predetermined package compartment 2953). The package can be accommodated in a predetermined package compartment 2953 by moving the package inside package carriage 2820 into the predetermined package compartment 2953. The means for moving the package inside package carriage 2820 into package compartment 2953 can be realized by using means disclosed in the present disclosure or known means.

As illustrated in FIG. 28 and in (d) in FIG. 31A, after moving the package inside package carriage 2820 into the predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 can be raised along elevator path 2954.

As illustrated in FIG. 28 and in (a) through (b2) in FIG. 31B, after box structure 2952 moves to the standby position, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 28 and in (c1) through (d2) in FIG. 31B, after package carriage 2820 moves towards unmanned transport vehicle 2901, actuation controller 2957 controls first actuator 2961 to open first lid 2952a and second lid 2952b. As a result, since unmanned aerial vehicle 2910 is released from box structure 2952, control processor 2933 controls wire control module 2934 to actuate second winch 2832 and raise unmanned aerial vehicle 2910.

As illustrated in FIG. 28 and in (a1) through (b2) in FIG. 31C, when unmanned aerial vehicle 2910 separates from box structure 2952, actuation controller 2957 controls first actuator 2961 to close first lid 2952a and second lid 2952b. Thereafter, actuation controller 2957 controls first actuator 2961 to also close lid 2959 of enclosure 2951. With this, even when it is raining or snowing, by closing first lid 2952a, second lid 2952b, and lid 2959 of enclosure 2951, it is possible to inhibit rain and snow from entering inside delivery box 2950.

Sensor 2958 has the same configuration as the sensor on the delivery box according to the above-described embodiment. For example, when unmanned aerial vehicle 2910 is descending, actuation controller 2957 controls first actuator 2961 based on the sensing result from sensor 2958 to actuate lid 2959 of enclosure 2951 or actuate first lid 2952a and second lid 2952b.

Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Here, a case in which unmanned aerial vehicle 2910 autonomously flies will be described with reference to FIG. 28 and FIG. 32A through FIG. 32C.

As illustrated in FIG. 28 and in (a) through (c2) in FIG. 32A, when unmanned transport vehicle 2901 moves to the airspace above delivery box 2950, unmanned aerial vehicle 2910 moves toward box structure 2952 of delivery box 2950 before unmanned transport vehicle 2901 lowers package carriage 2820. More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. At this time, control processor 2933 controls wire control module 2934 to actuate second winch 2832 to reel out second wire 2942 so as to slacken second wire 2942. As a result, the increase in tension applied to second wire 2942 due to the flight of unmanned aerial vehicle 2910 can be inhibited.

As illustrated in FIG. 28 and in (c1) in FIG. 32A, when unmanned aerial vehicle 2910 enters the entrance of box structure 2952 of delivery box 2950, control processor 2933 controls wire control module 2934 to actuate second winch 2832 and reel in second wire 2942 so that there is no slack in second wire 2942. As a result, when unmanned aerial vehicle 2910 enters the entrance of box structure 2952 of delivery box 2950, the tension applied to second wire 2942 can be increased.

As illustrated in FIG. 28 and in (d1) and (d2) in FIG. 32A, when unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952. Here, control processor 2933 may determine that unmanned aerial vehicle 2910 has landed on the bottom of box structure 2952 by using sensor 2936 provided on unmanned aerial vehicle 2910 to detect the landing of unmanned aerial vehicle 2910 on the bottom of box structure 2952.

Control processor 2933 controls wire control module 2934 to actuate second winch 2832 to reel in second wire 2942 when first lid 2952a and second lid 2952b of box structure 2952 close. With this, unmanned aerial vehicle 2910 is lifted within box structure 2952 and catches on the lid of box structure 2952. Here, second wire 2942 is in a state where the tension has increased and it is being pulled.

As illustrated in FIG. 28 and in (a) and (b) in FIG. 32B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 28 and in (c) and (d) in FIG. 32B, after package carriage 2820 moves to the lid of box structure 2952 and is placed on the lid, actuation controller 2957 actuates and controls box structure 2952 by controlling second actuator 2962 to move package carriage 2820 on box structure 2952 in front of one of the plurality of package compartments 2953. Here, since package carriage 2820 is placed on the lid, control processor 2933 controls wire control module 2934 to actuate first winch 2831 and adjust the length of first wire 2941. The package can be accommodated in a predetermined package compartment 2953 by moving the package inside package carriage 2820 into the predetermined package compartment 2953.

As illustrated in FIG. 28 and in (a) in FIG. 32C, after moving the package inside package carriage 2820 into predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 28 and in (b) in FIG. 32C, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820. For example, the attitude of package carriage 2820 is tilted so that the angle between first wire 2941 and horizontal plane becomes a. As a result, the tension of first wire 2941 increases, and the upper surface of package carriage 2820 faces unmanned transport vehicle 2901.

As illustrated in FIG. 28 and in (c) in FIG. 32C, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 28 and in (d) in FIG. 32C, when package carriage 2820 moves towards unmanned transport vehicle 2901 and package carriage 2820 is attached to unmanned transport vehicle 2901, actuation controller 2957 controls first actuator 2961 to open first lid 2952a and second lid 2952b. This releases unmanned aerial vehicle 2910 from box structure 2952. Next, control processor 2933 controls wire control module 2934 to actuate second winch 2832, and controls unmanned aerial vehicle 2910 to raise unmanned aerial vehicle 2910. Next, when unmanned aerial vehicle 2910 separates from box structure 2952, actuation controller 2957 controls first actuator 2961 to close first lid 2952a and second lid 2952b. Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Next, a case in which the topmost package compartment 2953 among the plurality of package compartments 2953 of delivery box 2950 is set as a temporary storage area will be described with reference to FIG. 28 and FIG. 32D.

As illustrated in FIG. 28 and in (a) in FIG. 32D, the package that was loaded in package carriage 2820 is temporarily accommodated in the topmost package compartment 2953. When package carriage 2820 and unmanned aerial vehicle 2910 are attached to unmanned transport vehicle 2901 and unmanned aerial vehicle 2910 begins moving to the next destination, delivery box 2950 re-accommodates the package from the topmost package compartment 2953 into package compartment 2953 to which the package is intended to be delivered.

Specifically, as illustrated in FIG. 28 and in (a) through (c) in FIG. 32D, actuation controller 2957 of delivery box 2950 moves the package from the uppermost package compartment 2953 into box structure 2952, and controls second actuator 2962 to move box structure 2952 in front of package compartment 2953 to which the package is to be delivered.

Next, as illustrated in FIG. 28 and in (d) and (e) in FIG. 32D, by moving the package inside box structure 2952 into package compartment 2953 to which the package is intended to be delivered, actuation controller 2957 can accommodate the package in package compartment 2953 to which the package is intended to be delivered. The means for moving the package from the uppermost package compartment 2953 into box structure 2952, and the means for moving the package inside package carriage 2820 into package compartment 2953 can be realized by using means disclosed in the present disclosure or known means.

Here, a case in which delivery box 2950 collects a package will be described with reference to FIG. 33A through FIG. 33C.

As illustrated in FIG. 28 and in (a) in FIG. 33A, when user stores a package in predetermined package compartment 2953 of delivery box 2950, actuation controller 2957 of delivery box 2950 controls second actuator 2962 to move box structure 2952 in front of package compartment 2953 from which the package is to be collected.

Next, as illustrated in FIG. 28 and in (b) through (e) in FIG. 33A, actuation controller 2957 moves the package to be collected from package compartment 2953 into box structure 2952, and then controls second actuator 2962 to move box structure 2952 in front of the uppermost package compartment 2953 which serves as a temporary storage area. Actuation controller 2957 can accommodate the package in the uppermost package compartment 2953 by moving the package in box structure 2952 into the uppermost package compartment 2953.

As illustrated in FIG. 28 and in (a) in FIG. 33B, when unmanned transport vehicle 2901 arrives at the airspace above delivery box 2950 for collection, unmanned aerial vehicle 2910 moves toward box structure 2952 of delivery box 2950. More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. When unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952.

As illustrated in FIG. 28 and in (b) in FIG. 33B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 28 and in (c) and (d) in FIG. 33B, after package carriage 2820 moves to the lid of box structure 2952 and is placed on the lid, actuation controller 2957 controls second actuator 2962 to move package carriage 2820 on box structure 2952 in front of uppermost package compartment 2953. Here, since package carriage 2820 is placed on the lid, control processor 2933 controls wire control module 2934 to actuate first winch 2831 and adjust the length of first wire 2941. The package can be accommodated in package carriage 2820 by moving the package inside uppermost package compartment 2953 into package carriage 2820. The means for moving the package from uppermost package compartment 2953 into package carriage 2820 can be realized by using means disclosed in the present disclosure or known means.

As illustrated in FIG. 28 and in (a) in FIG. 33C, after moving the package inside uppermost package compartment 2953 into package carriage 2820, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 28 and in (b) in FIG. 33C, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820. For example, the attitude of package carriage 2820 is tilted so that the angle between first wire 2941 and horizontal plane becomes a. As a result, the tension of first wire 2941 increases, and the upper surface of package carriage 2820 faces unmanned transport vehicle 2901.

As illustrated in FIG. 28 and in (c) and (d) in FIG. 33C, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 in which the package is accommodated ascends from the top of box structure 2952 to unmanned transport vehicle 2901.

As illustrated in FIG. 28 and in (d) and (e) in FIG. 33C, when package carriage 2820 moves towards unmanned transport vehicle 2901 and package carriage 2820 is attached to unmanned transport vehicle 2901, actuation controller 2957 controls first actuator 2961 to open first lid 2952a and second lid 2952b. This releases unmanned aerial vehicle 2910 from box structure 2952. Control processor 2933 controls wire control module 2934 to actuate second winch 2832, and controls unmanned aerial vehicle 2910 to raise unmanned aerial vehicle 2910. When collection is complete and unmanned aerial vehicle 2910 separates from box structure 2952, actuation controller 2957 controls first actuator 2961 to close first lid 2952a and second lid 2952b. Thereafter, actuation controller 2957 controls first actuator 2961 to also close lid 2959 of enclosure 2951.

Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Here, a case in which delivery box 2950 delivers a package and there is an obstacle such as an eave vertically above delivery box 2950 will be described with reference to FIG. 28, FIG. 32B, and FIG. 34A through FIG. 34C. Since operations are the same, FIG. 32B will be used in the explanation between FIG. 34A and FIG. 34B.

As illustrated in FIG. 28 and in (a) through (d2) in FIG. 34A, when unmanned transport vehicle 2901 moves to the airspace above delivery box 2950, unmanned aerial vehicle 2910 moves toward box structure 2952 of delivery box 2950 before unmanned transport vehicle 2901 lowers package carriage 2820. Here, unmanned transport vehicle 2901 is located at a place away from the airspace above delivery box 2950 so as not to contact the obstacle.

More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. At this time, control processor 2933 controls wire control module 2934 to actuate second winch 2832 to reel out second wire 2942. When unmanned aerial vehicle 2910 enters the entrance of box structure 2952 of delivery box 2950, control processor 2933 controls wire control module 2934 to actuate second winch 2832 and reel in second wire 2942 so that there is no slack in second wire 2942. As a result, when unmanned aerial vehicle 2910 enters the entrance of box structure 2952 of delivery box 2950, the tension applied to second wire 2942 can be increased.

As illustrated in FIG. 28 and in (d1) and (d2) in FIG. 34A, when unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952. Next, this will be described with reference to FIG. 28 and FIG. 32B.

As illustrated in FIG. 28 and in (a) in FIG. 32B, control processor 2933 controls wire control module 2934 to actuate second winch 2832 to reel in second wire 2942 when first lid 2952a and second lid 2952b of box structure 2952 close. With this, unmanned aerial vehicle 2910 is lifted within box structure 2952 and catches on the lid of box structure 2952. Here, second wire 2942 is in a state where the tension has increased and it is being pulled.

As illustrated in FIG. 28 and in (b) in FIG. 32B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 28 and in (c) and (d) in FIG. 32B, after package carriage 2820 moves to the lid of box structure 2952 and is placed on the lid, actuation controller 2957 controls second actuator 2962 to move package carriage 2820 on box structure 2952 in front of one of the plurality of package compartments 2953. Here, since package carriage 2820 is placed on the lid, control processor 2933 controls wire control module 2934 to actuate first winch 2831 and adjust the length of first wire 2941. The package can be accommodated in a predetermined package compartment 2953 by moving the package inside package carriage 2820 into the predetermined package compartment 2953. Next, this will be described with reference to FIG. 28 and FIG. 34B.

As illustrated in FIG. 28 and in (a) in FIG. 34B, after moving the package inside package carriage 2820 into predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 28 and in (b) in FIG. 34B, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820.

As illustrated in FIG. 28 and in (c) and (d) in FIG. 34B, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 28 and in (a) in FIG. 34C, when package carriage 2820 moves towards unmanned transport vehicle 2901 and package carriage 2820 is attached to unmanned transport vehicle 2901, actuation controller 2957 controls first actuator 2961 to close the lid on the package carriage 2820 side and open the other lid out of first lid 2952a and second lid 2952b. Here, actuation controller 2957 controls wire control module 2934 to actuate second winch 2832 while controlling first actuator 2961 to gradually open the lid on the package carriage 2820 side. Unmanned aerial vehicle 2910 is slowly released from box structure 2952. With this, unmanned transport vehicle 2901 slowly moves towards unmanned aerial vehicle 2910 as the length of second wire 2942 is adjusted.

As illustrated in FIG. 28 and in (b) in FIG. 34C, actuation controller 2957 controls first actuator 2961 to maintain the attitude of the lid on the package carriage 2820 side so as to guide unmanned aerial vehicle 2910 towards unmanned transport vehicle 2901. The attitude of the lid on the package carriage 2820 side may be maintained so that the lid on the package carriage 2820 side becomes a predetermined angle with the horizontal plane. Unmanned aerial vehicle 2910 is guided by the lid on the package carriage 2820 side due to the actuation of second winch 2832. In this way, unmanned aerial vehicle 2910 moves to the lower surface side of package carriage 2820, and both unmanned aerial vehicle 2910 and package carriage 2820 are attached to unmanned transport vehicle 2901.

Note that package carriage 2820 according to the present embodiment may be attached to the slider portion of the present disclosure (for example, slider portion 2310 in FIG. 2, rail slider portion 2510 in FIG. 54, etc.). Stated differently, first winch 2831, first wire 2941, package carriage 2820, second winch 2832, and unmanned aerial vehicle 2910 may be attached to the slider portion of the present disclosure. Here, for example, package holder 2315 in FIG. 2 or package holder 2555 in FIG. 54 may correspond to first winch 2831.

### Advantageous Effects

Next, advantageous effects achieved by unmanned transport system 2900 according to the present embodiment will be described.

For example, in a case in which a package carriage transported by an unmanned transport vehicle is lowered toward a delivery box vertically below the unmanned transport vehicle, the package carriage may sway due to the influence of wind or the like. As a result, it may become difficult to lower the package carriage toward the entrance of the delivery box, which is the destination point. In cases in which the delivery box is located in a place other than vertically below the unmanned transport vehicle, it may become difficult to lower the package carriage toward the entrance of the delivery box from the unmanned transport vehicle.

As described above, unmanned transport system 2900 according to present embodiment further includes: second winch 2832 that is connected to package carriage 2820 and can reel out and reel in second wire 2942; and unmanned aerial vehicle 2910 that is connected to second wire 2942.

With this, unmanned aerial vehicle 2910 can be inserted into delivery box 2950 by reeling out second wire 2942 with respect to package carriage 2820 before inserting package carriage 2820 into delivery box 2950. As a result, package carriage 2820 can be guided to the entrance of delivery box 2950. As a result, package carriage 2820 can be lowered toward the entrance of delivery box 2950 more easily compared to conventional techniques.

Unmanned transport system 2900 according to present embodiment further includes: unmanned aerial vehicle 2910 that is connected to second wire 2942; and a delivery reception box (delivery box 2950). The delivery reception box includes: enclosure 2951; box structure 2952 that defines an entrance through which unmanned aerial vehicle 2910 is able to pass and restrains unmanned aerial vehicle 2910; first actuator 2961 that opens and closes the lid of box structure 2952; and second actuator 2962 that moves box structure 2952 along a first path from a standby position above enclosure 2951. Box structure 2952 includes a lid that can open and close the entrance. Lid includes first lid 2952a and second lid 2952b. When first lid 2952a and second lid 2952b are closed, hole 2952c is defined by a part of first lid 2952a and a part of second lid 2952b. The controller: controls unmanned aerial vehicle 2910 to insert unmanned transport vehicle 2901 into box structure 2952 in a state in which the lid is open; controls first actuator 2961 to close first lid 2952a and second lid 2952b after unmanned transport vehicle 2901 is inserted in box structure 2952, wherein in a state in which first lid 2952a and second lid 2952b are closed, second wire 2942 is inserted through hole 2952c, hole 2952c is smaller than unmanned transport vehicle 2901, and unmanned transport vehicle 2901 is restrained by box structure 2952, unable to pass through hole 2952c; and after first lid 2952a and second lid 2952b have been closed, actuates first winch 2831 and second winch 2832 connected to package carriage 2820 and capable of reeling out and in second wire 2942, to adjust a length of first wire 2941 and a length of second wire 2942 and move package carriage 2820 towards a location above the lid of box structure 2952.

With this, unmanned aerial vehicle 2910 can be inserted into delivery box 2950 by reeling out second wire 2942 with respect to package carriage 2820 before inserting package carriage 2820 into delivery box 2950. Since unmanned aerial vehicle 2910 restrained by box structure 2952 when inserted into delivery box 2950 unmanned aerial vehicle 2910 is in a state as if fixed to box structure 2952. Stated differently, by unmanned aerial vehicle 2910 catching on the lid of box structure 2952, unmanned aerial vehicle 2910 and second wire 2942 can function similar to a hook that guides package carriage 2820. As a result, package carriage 2820 can be guided to the entrance of delivery box 2950. As a result, package carriage 2820 can be lowered toward the entrance of delivery box 2950 more easily compared to conventional techniques.

### [Embodiment 6]

Unmanned transport system 3000 according to the present embodiment differs from Embodiment 5 and the like in that delivery box 3001 includes guide structure 3030 and the like. Hereinafter, since the basic configuration of unmanned transport system 3000 according to the present embodiment is the same as the basic configuration of each of the above-described embodiments, the same reference signs as above are used and repeated description of the basic configuration of unmanned transport system 3000 according to the present embodiment will be omitted where appropriate. The configurations of each embodiment may be applied to the present embodiment.

### Function and Configuration

First, unmanned transport system 3000 according to the present embodiment will be described with reference to FIG. 35 through FIG. 40D.

FIG. 35 is a schematic diagram illustrating unmanned transport vehicle 3002, package carriage 3005, and delivery box 3001. FIG. 36 is a schematic diagram illustrating the internal structure of delivery box 3001 in an unmanned transport system. FIG. 37 is a block diagram illustrating an unmanned transport system. FIG. 38 is a side view illustrating package carriage 3005. In FIG. 39, (a) illustrates a top view of guide structure 3030 and package carriage 3005 when viewed from above. In FIG. 39, (b) is schematic diagram illustrating package carriage 3005 entering guide structure 3030. FIG. 40A illustrates transport body 3040 in delivery box 3001 moving to elevator path 3013 and package carriage 3005 being placed on transport body 3040. FIG. 40B illustrates a package being placed on transport body 3040 in delivery box 3001, package carriage 3005 rising, and transport body 3040 returning to package compartment 3011. FIG. 40C illustrates transport body 3040 with a package for collection moving to elevator path 3013 and package carriage 3005 descending towards transport body 3040. FIG. 40D illustrates package carriage 3005 that has collected a package rising, and transport body 3040 returning to package compartment 3011.

As illustrated in FIG. 35 through FIG. 37, delivery box 3001 of unmanned transport system 3000 is a delivery reception box for receiving packages from unmanned transport vehicle 3002 or for collecting packages. Delivery box 3001 is provided with order screen 3064 via which ordering of products deliverable to delivery box 3001 or requesting package collection is possible.

Delivery box 3001 includes enclosure 3010, guide structure 3030, a plurality of transport bodies 3040, door 3050, first actuator 3061, and actuation controller 3063.

Enclosure 3010 has a rectangular or tubular shape and is a container capable of storing a plurality of packages. Enclosure 3010 includes an electrical room. Enclosure 3010 includes a plurality of package compartments 3011 aligned in the vertical direction, top opening 3012 formed at the top portion in the vertically upward direction of enclosure 3010, and elevator path 3013 for delivering a received package to predetermined package compartment 3011 among the plurality of package compartments 3011 arranged in enclosure 3010. Top opening 3012 is an opening for receiving a package to be transported by unmanned transport vehicle 3002. Top opening 3012 is one example of an opening. The package is one example of a transported object.

Guide structure 3030 is a tapered tube, specifically, a funnel-shaped tube. Guide structure 3030 is positioned above top opening 3012, is coupled to top opening 3012 of enclosure 3010, and is provided so as to be in communication with top opening 3012. Accordingly, guide structure 3030 is capable of guiding a package toward top opening 3012. Guide structure 3030 may have a mesh or plate-like structure. By giving guide structure 3030 a mesh structure, it is possible to inhibit delivery box 3001 from falling over even if blown by strong winds.

Within delivery box 3001 is elevator path 3013 that extends vertically downward from top opening 3012 so as to span from guide structure 3030 to enclosure 3010, and in which packages can be moved up and down via wire 3003 extended from unmanned transport vehicle 3002.

Elevator path 3013 is a path that extends in the vertical direction, from top opening 3012 of enclosure 3010 to the bottom of enclosure 3010. Top opening 3012 is the upper surface portion vertically above elevator path 3013 through which package carriage 3005 passes. Elevator path 3013 can house package carriage 3005 therein.

A plurality of adjacent package compartments 3011 are arranged in elevator path 3013. Each of the plurality of package compartments 3011 is provided in enclosure 3010 and is provided to face elevator path 3013. The plurality of package compartments 3011 are arranged vertically along elevator path 3013. Elevator path 3013 is one example of a transport space.

When delivery box 3001 is viewed from a direction perpendicular to the vertical direction, guide structure 3030 occupies a first region and a second region in delivery box 3001. The first region is a tapered region that narrows from up to down vertically. The second region is connected to the first region, located vertically below the first region, and is a region having a curved surface shape that bulges towards elevator path 3013. Stated differently, guide structure 3030 includes first guide portion 3031 and second guide portion 3032. First guide portion 3031 is capable of guiding a package carried in from unmanned transport vehicle 3002. First guide portion 3031 has a tapered shape. First guide portion 3031 corresponds to the first region of guide structure 3030. Second guide portion 3032 is connected to the guide portion from vertically below the guide portion, and can guide a package guided by the guide portion to transport body 3040 provided in elevator path 3013. Second guide portion 3032 has a curved surface shape that bulges towards elevator path 3013. The curved surface shape is an arc shape that bulges towards elevator path 3013. Stated differently, second guide portion 3032 has an arc shape that bulges in a way that narrows elevator path 3013. Second guide portion 3032 corresponds to the second region of guide structure 3030.

As illustrated in FIG. 39, when delivery box 3001 is viewed from a direction perpendicular to the vertical direction, the side surface of the first region of guide structure 3030 is at an angle greater than or equal to 45° relative to the horizontal plane. Stated differently, first guide portion 3031, which corresponds to the first region of guide structure 3030, is set up to have an attitude greater than or equal to 45° relative to the horizontal plane.

Transport body 3040 is capable of moving between a first position facing elevator path 3013 and a second position included in elevator path 3013, by being actuated by first actuator 3061. Stated differently, when actuated by first actuator 3061, with a package loaded, transport body 3040 can move in the horizontal direction from elevator path 3013 (the second position) to a predetermined package compartment 3011 (the first position), and can move in the horizontal direction from the predetermined package compartment 3011 (the first position) to elevator path 3013 (the second position).

Transport body 3040 forms package compartment 3011 at the first position. Stated differently, as a result of being accommodated in a predetermined package compartment 3011 among the plurality of package compartments 3011, transport body 3040 forms package compartment 3011. Enclosure 3010 is provided with a plurality of transport bodies 3040. A plurality of transport bodies 3040 are provided in enclosure 3010 so as to correspond one-to-one with the plurality of package compartments 3011. With this, the plurality of transport bodies 3040 can also be said to form the plurality of package compartments 3011 at the first position.

Door 3050 is provided on enclosure 3010 of delivery box 3001 and leads to package compartment 3011. Enclosure 3010 includes an opening through which packages can be inserted or removed. Door 3050 automatically opens and closes the opening by actuation controller 3063 controlling the actuator of door 3050. Door 3050 is automatically locked or automatically unlocked by actuation controller 3063 controlling the actuator of door 3050.

Enclosure 3010 is provided with a plurality of doors 3050. With this, the plurality of doors 3050 are provided in enclosure 3010 so as to correspond one-to-one with the plurality of package compartments 3011. With this, the plurality of doors 3050 are provided so as to correspond one-to-one with the plurality of package compartments 3011.

First actuator 3061 can move transport body 3040 in the horizontal direction between the first position and the second position. Note that first actuator 3061 may move transport body 3040 in the vertical direction in elevator path 3013.

More specifically, first actuator 3061 can move transport body 3040 between package compartment 3011 that includes the first position and faces elevator path 3013, and elevator path 3013 that includes a second position included in elevator path 3013. Stated differently, first actuator 3061 can move transport body 3040 between the first position that forms package compartment 3011 and the second position included in elevator path 3013. This enables transport body 3040 to accommodate a package in one of the plurality of package compartments 3011 or to collect a package accommodated in package compartment 3011.

Actuation controller 3063 controls first actuator 3061 to move transport body 3040. More specifically, when receiving a package from unmanned transport vehicle 3002, actuation controller 3063 controls first actuator 3061 to move transport body 3040 from the first position to the second position. After receiving the package, actuation controller 3063 controls first actuator 3061 to move transport body 3040 from the second position to the first position. Actuation controller 3063 is one example of the controller.

After detecting that a package has entered through door 3050, actuation controller 3063 controls first actuator 3061 to move transport body 3040 from the first position to the second position, after which the package is collected by unmanned transport vehicle 3002.

Here, a case in which delivery box 3001 delivers a package will be described with reference to FIG. 40A and FIG. 40B.

As illustrated in FIG. 37 and in (a) and (b) in FIG. 40A, when unmanned transport vehicle 3002 moves to the airspace above delivery box 3001, delivery box 3001, in response to obtaining an arrival notification from unmanned transport vehicle 3002, moves transport body 3040, which is the receiver for the package to be delivered by unmanned transport vehicle 3002, from the first position to the second position.

When unmanned transport vehicle 3002 obtains a ready-to-receive notification from delivery box 3001 indicating that transport body 3040 has moved from the first position to the second position, it lowers package carriage 3005. More specifically, when control processor 3002a of unmanned transport vehicle 3002 obtains a ready-to-receive notification from delivery box 3001, it controls wire control module 3002b to actuate winch 3002c of unmanned transport vehicle 3002 and reel out wire 3003. This lowers package carriage 3005.

Here, as illustrated in FIG. 39, even if package carriage 3005 descends to a position away from top opening 3012 of delivery box 3001, package carriage 3005, is guided to top opening 3012 of delivery box 3001 by first guide portion 3031 while sliding on first guide portion 3031 of guide structure 3030 upon contacting guide structure 3030. Package carriage 3005 is inserted into elevator path 3013 from top opening 3012, proceeds to second guide portion 3032 via first guide portion 3031, and is guided by second guide portion 3032, whereby the attitude of package carriage 3005 is corrected and it is then placed on transport body 3040. Stated differently, in a view of delivery box 3001 from vertically above, the attitude of package carriage 3005 is corrected by package carriage 3005 being guided by guide structure 3030, so that it assumes an attitude in which it perfectly overlaps with top opening 3012 of delivery box 3001.

Note that the means for detecting the placement of package carriage 3005 on transport body 3040 may be any sensor that can detect the placement of package carriage 3005 on transport body 3040, such as a tension sensor that detects the tension of wire 3003, an image sensor that captures images of the space below package carriage 3005, a gravity sensor that detects the gravity on transport body 3040, or a pressure sensor that detects the pressure exerted by package carriage 3005. Moreover, the placement of package carriage 3005 on transport body 3040 may be detected by a known sensor.

Moreover, as illustrated in FIG. 37 and FIG. 38, package carriage 3005 may be equipped with light-emitting module 3005a such as an LED element, piezoelectric buzzer 3005b, etc. Light-emitting module 3005a may be located on the side surface (upper side surface in FIG. 38) of package carriage 3005. Piezoelectric buzzer 3005b may be located on the lower side surface or lower surface of package carriage 3005. Stated differently, piezoelectric buzzer 3005b is arranged on package carriage 3005 in such a way that the directional sound of piezoelectric buzzer 3005b is directed towards the lower side of package carriage 3005. In such cases, control processor 3002a may control light-emitting module 3005a to cause light-emitting module 3005a to emit solid light or blinking light when lowering or raising package carriage 3005. In order to notify the surrounding area that package carriage 3005 is descending, light-emitting module 3005a may emit light in a prominent color such as red. Piezoelectric buzzer 3005b may output a sound when lowering or raising package carriage 3005.

If people are detected in the surrounding area, package carriage 3005 may output an alarm to the people in the surrounding area using sound and/or light through alarm means such as light-emitting module 3005a and/or piezoelectric buzzer 3005b. Note that if people in the surrounding area do not move out of the way despite the alarm being output, control processor 3002a may stop the lowering of package carriage 3005.

As illustrated in FIG. 37 and in (c) in FIG. 40A, when package carriage 3005 is placed on transport body 3040, package carriage 3005 places the package it is carrying inside onto transport body 3040. For example, control processor 3002a controls package carriage 3005 to place the package on transport body 3040.

As illustrated in FIG. 37 and in (a) and (b) in FIG. 40B, when the package is placed on transport body 3040, control processor 3002a controls wire control module 3002b to actuate winch 3002c to reel in wire 3003. With this, package carriage 3005 ascends to unmanned transport vehicle 3002.

As illustrated in FIG. 37 and in (c) in FIG. 40B, after package carriage 3005 ascends towards unmanned transport vehicle 3002, delivery box 3001 moves transport body 3040 from the second position to the first position. For example, when delivery box 3001 obtains, from unmanned transport vehicle 3002, an attachment completion notification indicating that package carriage 3005 has been attached to unmanned transport vehicle 3002, actuation controller 3063 controls first actuator 3061 to move transport body 3040 from the second position to the first position. With this, the package placed on transport body 3040 is accommodated into the predetermined package compartment 3011.

When the user receives a package from delivery box 3001, the user can display an identification code such as a QR Code (registered trademark) on the terminal device the user possesses and have camera sensor 3065 provided in delivery box 3001 read the identification code from the terminal device. The identification code is a code used by the user who ordered the product to receive the product (package), and as disclosed above, when the user orders a product and sets delivery to delivery box 3001, the identification code is transmitted to the user's terminal device.

Actuation controller 3063 of delivery box 3001 reads the identification code from terminal device via camera sensor 3065, and controls the actuator of door 3050 to unlock door 3050 of package compartment 3011 corresponding to the identification code (package compartment 3011 where the product ordered by the user is stored) and automatically open door 3050. This allows the user to retrieve the package from the predetermined package compartment 3011 as door 3050, which is locked, is automatically opened. Upon the user retrieving the package from package compartment 3011, actuation controller 3063 of delivery box 3001 controls the actuator of door 3050 to automatically close and lock door 3050.

Here, a case in which delivery box 3001 collects a package will be described with reference to FIG. 40C and FIG. 40D.

As illustrated in FIG. 37 and in (a) and (b) in FIG. 40C, after the user stores a package in the predetermined package compartment 3011 of delivery box 3001, the package is on transport body 3040. Thereafter, when unmanned transport vehicle 3002 arrives in the airspace above delivery box 3001, actuation controller 3063 of delivery box 3001 controls first actuator 3061 to move transport body 3040 from the first position to the second position.

As illustrated in FIG. 37 and in (c) in FIG. 40C, when unmanned transport vehicle 3002 obtains a ready-to-collect notification from delivery box 3001 indicating that transport body 3040 has moved from the first position to the second position, it lowers package carriage 3005. More specifically, when control processor 3002a of unmanned transport vehicle 3002 obtains a ready-to-collect notification from delivery box 3001, it controls wire control module 3002b to actuate winch 3002c of unmanned transport vehicle 3002 and reel out wire 3003. This lowers package carriage 3005. Here, even if package carriage 3005 descends to a position away from top opening 3012 of delivery box 3001, package carriage 3005, is guided to top opening 3012 of delivery box 3001 by first guide portion 3031 while sliding on first guide portion 3031 of guide structure 3030 upon contacting guide structure 3030. Package carriage 3005 is inserted into elevator path 3013 from top opening 3012, proceeds to second guide portion 3032 via first guide portion 3031, and is guided by second guide portion 3032, whereby the attitude of package carriage 3005 is corrected and it is then placed on transport body 3040.

As illustrated in FIG. 37 and in (a) in FIG. 40D, upon package carriage 3005 being placed on transport body 3040, package carriage 3005 is placed on transport body 3040 while collecting the package placed on transport body 3040. Once package carriage 3005 collects the package placed on transport body 3040, unmanned transport vehicle 3002 obtains a collection completion notification indicating that package carriage 3005 has collected the package from package carriage 3005.

As illustrated in FIG. 37 and in (b) in FIG. 40D, control processor 3002a of unmanned transport vehicle 3002 controls wire control module 3002b to actuate winch 3002c to reel in wire 3003. With this, package carriage 3005 ascends to unmanned transport vehicle 3002.

As illustrated in FIG. 37 and in (c) in FIG. 40D, after package carriage 3005 ascends towards unmanned transport vehicle 3002, delivery box 3001 moves transport body 3040 from the second position to the first position. For example, when delivery box 3001 obtains an attachment completion notification indicating that package carriage 3005 has been attached to unmanned transport vehicle 3002, actuation controller 3063 controls first actuator 3061 to move transport body 3040 from the second position to the first position. With this, the package placed on transport body 3040 is accommodated into the predetermined package compartment 3011.

### Advantageous Effects

Next, advantageous effects achieved by unmanned transport system 3000 according to the present embodiment will be described.

As described above, unmanned transport system 3000 according to the present embodiment further includes a delivery reception box (delivery box 3001). The delivery reception box includes: enclosure 3010 including an opening for receiving a transported object transported by unmanned transport vehicle 3002; and guide structure 3030 located above the opening, for guiding the transported object towards the opening. Within the delivery reception box is provided a transport space (elevator path 3013) that extends vertically downward from the opening and in which the transported object can be moved up and down via wire 3003 extended from unmanned transport vehicle 3002. In a view of the delivery reception box in a direction perpendicular to the vertical direction, guide structure 3030 occupies a first region and a second region of the delivery reception box, the first region being a tapered region that narrows from up to down vertically, the second region being connected to the first region, located vertically below the first region, and having an arc shape that bulges towards the transport space.

With this, even if package carriage 3005 shifts from the opening due to the influence of wind or the like when unmanned transport vehicle 3002 is lowering a package, since guide structure 3030 can guide package carriage 3005, package carriage 3005 can enter through the opening of delivery box 3001.

When package carriage 3005 is in elevator path 3013, wire 3003 may come into contact with guide structure 3030. In such cases, wire 3003 may rub against guide structure 3030, potentially damaging wire 3003. However, according to the present embodiment, since guide structure 3030 includes a second region that is an arc shape bulging towards the transport space, even when package carriage 3005 is in elevator path 3013, damage to wire 3003 can be inhibited by having wire 3003 come into contact with the second region of guide structure 3030. Accordingly, this inhibits wire 3003 from being damaged or package carriage 3005 from falling.

### [Embodiment 7]

Unmanned transport system 3100 according to the present embodiment differs from Embodiment 6 and the like in that, for example, it includes first slider 3121 and second slider 3122 that are extendable. Hereinafter, since the basic configuration of unmanned transport system 3100 according to the present embodiment is the same as the basic configuration of the unmanned transport systems according to the above-described embodiments, the same reference signs as above are used and repeated description of the basic configuration of unmanned transport system 3100 according to the present embodiment will be omitted where appropriate. The configurations of each embodiment may be applied to the present embodiment.

### Function and Configuration

First, unmanned transport system 3100 according to the present embodiment will be described with reference to FIG. 41A through FIG. 41D.

FIG. 41A is a schematic diagram illustrating first vehicle main body 3101 and second vehicle main body 3110. FIG. 41B illustrates the sliding movement of first slider 3121 and second slider 3122 in order to lower package carriage 3132a. FIG. 41C illustrates first slider 3121 and second slider 3122 after a package has been unloaded. FIG. 41D illustrates the rotational moment occurring in first slider 3121 and second slider 3122. FIG. 41A through FIG. 41D illustrate the internal structure of second vehicle main body 3110.

As illustrated in (a) and (b) in FIG. 41A, unmanned transport system 3100 includes an unmanned transport vehicle, first connecting device 3103, second connecting device 3140, damper 3151, first actuator 3161, first slider 3121, second slider 3122, second actuator 3162, third actuator 3163, and control processor 3165.

The unmanned transport vehicle is a mobile body or the like that travels on rail 7. Stated differently, the unmanned transport vehicle can move along rail 7 provided above the ground that it is attached to. This unmanned transport vehicle can carry a package from the sender to the receiver while a plurality of connectors are connected to rail 7.

The unmanned transport vehicle includes first vehicle main body 3101 and second vehicle main body 3110.

First vehicle main body 3101, which is elongated, can move along rail 7 while being connected to rail 7 by at least one first connecting device 3103. First vehicle main body 3101 is one example of the first main body.

First vehicle main body 3101 is provided with at least one first connecting device 3103 that can be suspended from the rail located above the unmanned transport vehicle. In the present embodiment, as first connecting device 3103, a first connector and a second connector provided on the unmanned transport vehicle.

The first connector is located on one side in the lengthwise direction of first vehicle main body 3101 of the unmanned transport vehicle. The second connector is located on the other side in the lengthwise direction of first vehicle main body 3101 of the unmanned transport vehicle.

In a view of first vehicle main body 3101 from vertically above, the bottom surface of first vehicle main body 3101 includes a circular, annular groove centered on second connecting device 3140. The top end of damper 3151 is slidably connected to annular groove 3101a of first vehicle main body 3101.

Second vehicle main body 3110 is elongated and is located below the unmanned transport vehicle. Second vehicle main body 3110 is connected to first vehicle main body 3101 via second connecting device 3140 and damper 3151. More specifically, in a view of second vehicle main body 3110 from vertically above, the upper surface of second vehicle main body 3110 includes a circular, annular groove centered on second connecting device 3140. The bottom end of damper 3151 is slidably connected to annular groove 3115 of second vehicle main body 3110. Annular groove 3115 of second vehicle main body 3110 is formed to correspond to annular groove 3101a of first vehicle main body 3101. Second vehicle main body 3110 is one example of the second main body.

Second connecting device 3140 rotatably connects first vehicle main body 3101 and second vehicle main body 3110. More specifically, second connecting device 3140 is a connector that is elongated in the vertical direction, with its bottom end connected to the central portion in the lengthwise direction of second vehicle main body 3110, and its top end connected to the central portion in the lengthwise direction of first vehicle main body 3101.

Second connecting device 3140 includes first actuator 3161 that is controlled by control processor 3165, and can rotate second vehicle main body 3110 with respect to first vehicle main body 3101. More specifically, when actuated, first actuator 3161 of second connecting device 3140 can rotate second vehicle main body 3110 with respect to first vehicle main body 3101, with the lengthwise direction of second connecting device 3140 as an axis. Therefore, second vehicle main body 3110 can rotate with respect to first vehicle main body 3101 around an axis parallel to the vertical direction.

Damper 3151 is a connector that is elongated in the vertical direction, and is connected between first vehicle main body 3101 and second vehicle main body 3110. Damper 3151 is slidably connected to both first vehicle main body 3101 and second vehicle main body 3110. Note that it is sufficient for damper 3151 to be slidably connected to either first vehicle main body 3101 or second vehicle main body 3110.

More specifically, damper 3151 has its top end slidably connected near second connecting device 3140 in the lengthwise direction of first vehicle main body 3101. Damper 3151 has its bottom end slidably connected near second connecting device 3140 in the lengthwise direction of second vehicle main body 3110. More specifically, the top end of damper 3151 is slidably connected to an annular groove formed on the lower surface of first vehicle main body 3101. The bottom end of damper 3151 is slidably connected to an annular groove formed on the upper surface of second vehicle main body 3110. Accordingly, damper 3151 slides with respect to first vehicle main body 3101 and second vehicle main body 3110 as a result of first actuator 3161 of second connecting device 3140 rotating, and may also circle around second connecting device 3140 with second connecting device 3140 as the center.

Damper 3151 can absorb vibrations. For example, damper 3151 can absorb vibrations that occur when second vehicle main body 3110 is unloading packages, as well as vibrations that occur when second vehicle main body 3110 rotates with respect to first vehicle main body 3101.

First actuator 3161 is a motor that rotates second vehicle main body 3110 with respect to the rail, i.e., first vehicle main body 3101. First actuator 3161 is actuated under control by control processor 3165.

Second vehicle main body 3110 can accommodate first slider 3121 and second slider 3122, and can extend first slider 3121 and second slider 3122 from second vehicle main body 3110.

When actuated by second actuator 3162, first slider 3121 can extend with respect to second vehicle main body 3110 in a first direction that extends in the lengthwise direction of second vehicle main body 3110. More specifically, as a result of being actuated by second actuator 3162, first slider 3121 is arranged on one side of second vehicle main body 3110 and extends from the one side of second vehicle main body 3110 further in a first direction that extends in the lengthwise direction of second vehicle main body 3110. Even more specifically, as a result of being actuated by second actuator 3162, first slider 3121 is coupled on the one side of second vehicle main body 3110, and can extend from the one side of second vehicle main body 3110 along the lengthwise direction of second vehicle main body 3110 so as to move away from second vehicle main body 3110, and can retract into the interior of second vehicle main body 3110.

As a result of being actuated by third actuator 3163, second slider 3122 can extend with respect to second vehicle main body 3110 in a second direction opposite to the first direction. More specifically, as a result of being actuated by third actuator 3163, second slider 3122 is arranged on the other side of second vehicle main body 3110 and extends from the other side of second vehicle main body 3110 further in a second direction that extends in the lengthwise direction of second vehicle main body 3110. Even more specifically, as a result of being actuated by third actuator 3163, second slider 3122 is coupled on the other side of second vehicle main body 3110, and can extend from the other side of second vehicle main body 3110 along the lengthwise direction of second vehicle main body 3110 so as to move away from second vehicle main body 3110, and can retract into the interior of second vehicle main body 3110.

Second actuator 3162 is equipped in second vehicle main body 3110 and can actuate first slider 3121 under control by control processor 3165.

Third actuator 3163 is equipped in second vehicle main body 3110 and can actuate second slider 3122 under control by control processor 3165.

Control processor 3165 can control first actuator 3161, second actuator 3162, and third actuator 3163.

More specifically, when first package carriage 3132a, which accommodates a first package, is connected to first slider 3121, and second package carriage 3132b, which accommodates a second package, is connected to second slider 3122, control processor 3165 controls second actuator 3162 and third actuator 3163 so as to extend first slider 3121 and second slider 3122 in such a manner that the rotational moment generated by first slider 3121 and the rotational moment generated by second slider 3122 are offset by each other.

For example, when control processor 3165 controls second actuator 3162, causing first slider 3121, to which first package carriage 3132a is connected, to extend from second vehicle main body 3110, a rotational moment in the vertical direction of first package carriage 3132a is generated, using the area between second connecting device 3140 and damper 3151 as a fulcrum. Accordingly, when control processor 3165 controls second actuator 3162 and third actuator 3163, causing second slider 3122, to which second package carriage 3132b is connected, to extend from second vehicle main body 3110, a rotational moment in the vertical direction of second package carriage 3132b is generated, using the area between second connecting device 3140 and damper 3151 as a fulcrum. Stated differently, by simultaneously controlling second actuator 3162 and third actuator 3163, control processor 3165 extends first slider 3121 and second slider 3122, thereby offsetting the rotational moments generated by first slider 3121 and second slider 3122.

Here, a case in which second vehicle main body 3110 of the unmanned transport vehicle rotates with respect to first vehicle main body 3101 and then unloads a package will be described with reference to FIG. 41B and FIG. 41C.

When the unmanned transport vehicle moves to the vicinity of the airspace above the delivery box, before the unmanned transport vehicle lowers the package carriage, second vehicle main body 3110 rotates with respect to first vehicle main body 3101. More specifically, before lowering the package at the receiver, control processor 3165 controls first actuator 3161 to rotate second vehicle main body 3110 with respect to first vehicle main body 3101. Here, control processor 3165 actuates first actuator 3161 to rotate second vehicle main body 3110 with respect to first vehicle main body 3101 so that the package carriage (for example, first package carriage 3132a) accommodating the package to be delivered (for example, the first package) faces toward the receiver. Here, damper 3151 slides along annular groove 3101a of first vehicle main body 3101 and annular groove 3115 of second vehicle main body 3110, with second connecting device 3140 as the center, while absorbing vibrations. In the present embodiment, second vehicle main body 3110 is rotated 90° with respect to first vehicle main body 3101. With this, the lengthwise direction of second vehicle main body 3110 is orthogonal to the lengthwise direction of first vehicle main body 3101.

As illustrated in (a) in FIG. 41B, control processor 3165 controls second actuator 3162 to extend first slider 3121 from one side of second vehicle main body 3110, and controls third actuator 3163 to extend second slider 3122 from the other side of second vehicle main body 3110. In the present embodiment, first slider 3121 and second slider 3122 are extended simultaneously. As a result, first slider 3121, when actuated by second actuator 3162, extends in the first direction with respect to second vehicle main body 3110, and second slider 3122, when actuated by third actuator 3163, extends in the second direction with respect to second vehicle main body 3110. Stated differently, control processor 3165 extends first slider 3121 and second slider 3122 in such a manner that the rotational moment generated by first slider 3121 and the rotational moment generated by second slider 3122 are offset by each other.

As illustrated in (b) in FIG. 41B, after extending first slider 3121 and second slider 3122, control processor 3165 controls a wire control module (not illustrated) to reel out wire 3123, thereby lowering first package carriage 3132a. Here, control processor 3165 controls third actuator 3163 to gradually retract second slider 3122 that is on the other side of second vehicle main body 3110 into the interior of second vehicle main body 3110. Stated differently, control processor 3165 extends first slider 3121 and second slider 3122 in such a manner that the rotational moment generated by first slider 3121 becomes greater than the rotational moment generated by second slider 3122. This causes second vehicle main body 3110 to include toward the first package carriage 3132a side relative to the horizontal plane. Here, damper 3151 can absorb vibrations that occur in second vehicle main body 3110.

As illustrated in FIG. 41C, when the package is unloaded from first package carriage 3132a to the destination point, the weight of the package is removed from first package carriage 3132a, causing second vehicle main body 3110 to return to an attitude that is approximately parallel to the horizontal plane. Here, damper 3151 can absorb vibrations that occur in second vehicle main body 3110.

Control processor 3165 controls the wire control module to reel in wire 3123 and raise first package carriage 3132a. Unmanned aerial vehicle then moves to the next destination.

Note that in the present embodiment, the weight of the first package accommodated in first package carriage 3132a and the weight of the second package accommodated in second package carriage 3132b may differ. In such cases, m × L1 ≈ M × L2, where m is the weight of the package in first package carriage 3132a, M is the weight of the package in second package carriage 3132b, L1 is the horizontal distance from first package carriage 3132a to the center of the rotational moment, and L2 is the horizontal distance from second package carriage 3132b to the center of the rotational moment, as illustrated in FIG. 41D. Control processor 3165 may offset the rotational moments generated by first slider 3121 and second slider 3122 by extending first slider 3121 or second slider 3122 by simultaneously controlling second actuator 3162 and third actuator 3163.

### [Embodiment 8]

Unmanned transport system 3200 according to the present embodiment differs from Embodiment 2 and the like in that, for example, unmanned transport vehicle 3202 collects the shipping box of the package delivered by unmanned transport vehicle 3202. Hereinafter, since the basic configuration of unmanned transport system 3200 according to the present embodiment is the same as the basic configuration of each of the above-described embodiments, the same reference signs as above are used and repeated description of the basic configuration of unmanned transport system 3200 according to the present embodiment will be omitted where appropriate. The configurations of each embodiment may be applied to the present embodiment.

### Function and Configuration

First, unmanned transport system 3200 according to the present embodiment will be described with reference to FIG. 42.

FIG. 42 is a block diagram illustrating an example of unmanned transport vehicle 3202 and delivery reception device 3201 of unmanned transport system 3200.

First, as illustrated in FIG. 42, when delivering a package to delivery reception device 3201, which is the receiver of the package, the package may be accommodated in a shipping box for delivery. In such cases, the shipping box may be collected from delivery reception device 3201. Delivery reception device 3201 is, for example, the delivery box or delivery reception box according to the present disclosure.

For example, unmanned transport system 3200 may obtain a signal indicating that a product has been received as a result of the user using delivery reception device 3201 and a signal transmitted from delivery reception device 3201 indicating that an empty box has been returned. In such cases, unmanned transport system 3200 transports unmanned transport vehicle 3202 towards delivery reception device 3201 to collect the shipping box of the package delivered by unmanned transport vehicle 3202 to delivery reception device 3201.

For example, unmanned transport system 3200 may obtain a signal indicating that the user has canceled receipt of the product as a result of the user using delivery reception device 3201. In such cases, unmanned transport system 3200 transports unmanned transport vehicle 3202 towards delivery reception device 3201 to collect the shipping box of the package delivered by unmanned transport vehicle 3202 to delivery reception device 3201.

For example, unmanned transport system 3200 may obtain a signal indicating that the receipt period or receipt time for the user to receive the product has passed as a result of the user using delivery reception device 3201. In such cases, unmanned transport system 3200 transports unmanned transport vehicle 3202 towards delivery reception device 3201 to collect the shipping box of the package delivered by unmanned transport vehicle 3202 to delivery reception device 3201.

### Operation Example

Next, operations for collecting the shipping box will be described with reference to FIG. 43.

FIG. 43 is a flowchart illustrating operations according to Embodiment 8.

First, unmanned transport system 3200 determines whether a receipt notification has been obtained from delivery reception device 3201 (S3101). More specifically, unmanned transport system 3200 determines whether a signal indicating that a product has been received and a signal transmitted from delivery reception device 3201 indicating that an empty box has been returned have been obtained from delivery reception device 3201.

If unmanned transport system 3200 determines that a receipt notification has been obtained from delivery reception device 3201 (YES in S3101), unmanned transport system 3200 determines whether a notification that an empty box has been returned has been made by delivery reception device 3201 (S3104).

If unmanned transport system 3200 determines that a notification that an empty box has been returned has not been made by delivery reception device 3201 (NO in S3104), unmanned transport system 3200 repeats the process of step S3104.

However, if unmanned transport system 3200 determines that a notification that an empty box has been returned has been made by delivery reception device 3201 (YES in S3104), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 43.

If unmanned transport system 3200 determines that a receipt notification has not been obtained from delivery reception device 3201 (NO in S3101), unmanned transport system 3200 determines whether a cancellation notification has been made by the user (S3102). More specifically, unmanned transport system 3200 determines whether a signal indicating that the user has canceled receipt of the product has been obtained from delivery reception device 3201.

If unmanned transport system 3200 determines that a cancellation notification has been made by the user (YES in S3102), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 43.

However, if unmanned transport system 3200 determines that a cancellation notification has not been made by the user (NO in S3102), unmanned transport system 3200 determines whether the receipt period or receipt time has passed (S3103). More specifically, unmanned transport system 3200 determines whether a signal indicating that the receipt period or receipt time for the user to receive the product has passed has been obtained from delivery reception device 3201.

If unmanned transport system 3200 determines that the receipt period or receipt time has passed (YES in S3103), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 43.

However, if unmanned transport system 3200 determines that the receipt period or receipt time has not passed (NO in S3103), the processing in the flowchart of FIG. 43 ends.

### [Embodiment 9]

Hereinafter, information terminal 3210 according to the present embodiment differs from Embodiment 8 and the like in that, for example, it allows a user to specify the time and place where the package is to be collected. Hereinafter, since the basic configuration of unmanned transport system 3200 according to the present embodiment is the same as the basic configuration of each of the above-described embodiments, the same reference signs as above are used and repeated description of the basic configuration of unmanned transport system 3200 according to the present embodiment will be omitted where appropriate. The configurations of each embodiment may be applied to the present embodiment.

### Function and Configuration

First, unmanned transport system 3200 according to the present embodiment will be described with reference to FIG. 44.

FIG. 44 is a block diagram illustrating management system 3203, information terminal 3210, unmanned transport vehicle 3202, and delivery box 3206.

As illustrated in FIG. 44, unmanned transport system 3200 includes information terminal 3210, unmanned transport vehicle 3202, and delivery box 3206.

An application for use in a service for delivering products is installed on information terminal 3210. The user can request the collection of a product via the application on information terminal 3210.

Information terminal 3210 is communicably connected to management system 3203, which is used in a service for delivering products from delivery box 3206 using unmanned transport vehicle 3202. Delivery box 3206 is one example of the collection device.

When the user activates the application, information terminal 3210 can display an image on the display that includes candidates for the time (point in time, period) and place for which the user requests collection. When a user selects (inputs) a candidate for the time and place for requesting collection on information terminal 3210, information terminal 3210 sends information including the selected first time (first point in time, first period) and the selected first place (address, latitude and longitude) to management system 3203.

Management system 3203 receives information including the first time and the first place selected by the user from information terminal 3210 of the user. Based on the information including the first time and the first place, management system 3203 transmits an instruction to unmanned transport vehicle 3202 that instructs unmanned transport vehicle 3202 to arrive at the first place by the first time.

### Operation Example

Next, operations performed by management system 3203 in a case in which a user specifies the time and place for package collection will be described with reference to FIG. 45.

FIG. 45 is a flowchart illustrating operations according to Embodiment 9.

First, when the user opens the application on information terminal 3210, the application for use by the user is displayed on the display of information terminal 3210. The application displays an image for requesting collection (S3111). The user operates the application to request collection.

Next, the application displays an image that includes candidates for the time and place for the user to request collection (S3112). The user selects the candidate time and place for requesting collection.

Next, the application transmits information including the first time and first place selected by the user to management system 3203 via information terminal 3210 (S3113). Management system 3203 obtains information including the first time and the first place, and based on the information including the first time and the first place, sets a departure time for unmanned transport vehicle 3202 that is before the first time.

Next, unmanned transport vehicle 3202 delivers the shipping box to delivery box 3206 at the first place before the first time (S3114). Stated differently, when the current time becomes the departure time set by management system 3203, unmanned transport vehicle 3202 delivers the shipping box to delivery box 3206 at the first place. Note that unmanned transport vehicle 3202 may also serve as a package receiver like delivery box 3206 when delivering the shipping box.

With this, the user accommodates the package in the shipping box delivered to delivery box 3206, and re-accommodates the shipping box containing the package into delivery box 3206. With this, delivery box 3206 transmits a collection completion notification to management system 3203, indicating that the shipping box containing the package has been accommodated inside delivery box 3206 and that the box has been placed at a predetermined location.

Next, management system 3203 determines whether a collection completion notification indicating that the box has been placed at the predetermined location has been made by delivery box 3206 (S3115).

If management system 3203 determines that a delivery completion notification has not been made by unmanned transport vehicle 3202 (NO in S3115), management system 3203 repeats the process of step S3115.

However, if management system 3203 determines that a delivery completion notification has been made by unmanned transport vehicle 3202 (YES in S3115), unmanned transport vehicle 3202 collects the shipping box containing the package (S3116). The processing in the flowchart of FIG. 45 then ends.

### [Embodiment 10]

Unmanned transport system 3300 according to the present embodiment differs from Embodiment 3 and the like in that the delivery box is mobile food vendor 3301. Hereinafter, since the basic configuration of unmanned transport system 3300 according to the present embodiment is the same as the basic configuration of each of the embodiments described above, the same reference signs as above are used and repeated description of the basic configuration of unmanned transport system 3300 according to the present embodiment will be omitted where appropriate. The configurations of each embodiment may be applied to the present embodiment.

### Function and Configuration

First, unmanned transport system 3300 according to the present embodiment will be described with reference to FIG. 46 through FIG. 49.

FIG. 46 is a schematic diagram illustrating mobile food vendor 3301 according to Embodiment 10. FIG. 47 is a schematic diagram illustrating an example of how unmanned transport vehicle 3302 unloads a package at mobile food vendor 3301 according to Embodiment 10. FIG. 48 is another schematic diagram illustrating an example of how unmanned transport vehicle 3302 unloads a package at mobile food vendor 3301 according to Embodiment 10. FIG. 49 is a schematic diagram illustrating an example of how unmanned transport vehicle 3302 unloads a package in delivery box 3305 according to Embodiment 10.

As illustrated in FIG. 46, in the present embodiment, mobile food vendor 3301 also serves as a delivery box. Stated differently, mobile food vendor 3301 functions as a delivery box according to the present disclosure, and includes functions capable of cooking food and providing cooked food and beverages.

Mobile food vendor 3301 configured in this way may also function as a ghost restaurant. Accordingly, mobile food vendor 3301 can move even in areas with poor location conditions where unmanned transport vehicle 3302 has difficulty transporting packages. Delivery box 3305, which is not mobile food vendor 3301, is applied to areas with favorable location conditions where unmanned transport vehicle 3302 can transport packages.

Mobile food vendor 3301 includes a vertically extending elongated tubular loading and unloading portion 3320 for performing delivery and collection of packages from unmanned transport vehicle 3302.

The loading and unloading portion 3320 includes top opening 3321 formed in the ceiling of mobile food vendor 3301 in the vertically upper area, through which packages pass, and loading and unloading port 3322 formed in the vertically lower area for attaching and detaching packages to and from package carriage 3310. Top opening 3321 includes a tapered guide structure for guiding package carriage 3310.

More specifically, when unmanned transport vehicle 3302 delivers a package to mobile food vendor 3301, it lowers package carriage 3310, inserts it into the interior of loading and unloading portion 3320 through top opening 3321, and places it on the base plate of loading and unloading portion 3320. The user, who is a worker of mobile food vendor 3301, removes the package from package carriage 3310 via loading and unloading port 3322. When the package is removed from package carriage 3310, unmanned transport vehicle 3302 raises package carriage 3310 and attaches it to the vehicle main body, then moves to the next destination.

When unmanned transport vehicle 3302 delivers a package to mobile food vendor 3301, it lowers package carriage 3310, inserts it into the interior of loading and unloading portion 3320 through top opening 3321, and places it on the base plate of loading and unloading portion 3320. The user, who is a worker of mobile food vendor 3301, stores the package in package carriage 3310 via loading and unloading port 3322. When a package is accommodated in package carriage 3310, unmanned transport vehicle 3302 raises package carriage 3310 and attaches it to the vehicle main body, then moves to the next destination.

The loading and unloading portion 3320 is provided in the center portion of mobile food vendor 3301.

Mobile food vendor 3301 is provided with a cooking area capable of preparing food. This cooking area sandwiches loading and unloading portion 3320. The user makes a collection request or places the prepared food in package carriage 3310 in order to accommodate the food cooked in the cooking area in package carriage 3310. The user may request delivery of ingredients for cooking, and after making a delivery request, they may take out the delivered package from package carriage 3310.

Mobile food vendor 3301 includes a serving area capable of providing cooked food and beverages. The user can provide the food cooked in the cooking area to people via the serving area.

As illustrated in FIG. 47, mobile food vendor 3301 may be a trailer or truck or the like, and may include a plurality of food establishments. Stated differently, mobile food vendor 3301 may include a plurality of cooking areas and a plurality of sales areas. Mobile food vendor 3301 illustrated in FIG. 47 includes food establishment A and food establishment B.

As illustrated in FIG. 48, mobile food vendor 3301a may be placed in spaces such as parking lots or the like. Mobile food vendor 3301a may include a plurality of loading and unloading portions 3320. In such cases, the number of loading and unloading portions 3320 included in mobile food vendor 3301a may be based on the number of food establishments.

As illustrated in FIG. 49, when there is no mobile food vendor, delivery box 3305 may be placed in spaces such as parking lots or the like.

### [Embodiment 11]

The present embodiment differs from Embodiment 2 and the like in that it explains content related to delivering packages to a balcony using transport vehicle 3400. Hereinafter, since the basic configuration of transport vehicle 3400 according to the present embodiment is the same as the basic configuration of each of the above-described embodiments, regarding the basic configuration of transport vehicle 3400 according to the present embodiment, the same reference signs as above will be used and repeated description will be omitted where appropriate. The configurations of each of the above-described embodiments may be applied to the present embodiment. It goes without saying that in each of the above-described embodiments, packages may also be delivered to a balcony.

### Function and Configuration

First, transport vehicle 3400 according to the present embodiment will be described with reference to FIG. 50 through FIG. 53. FIG. 50 is a block diagram illustrating transport vehicle 3400 according to Embodiment 11. FIG. 51 illustrates an example of transport vehicle 3400 simultaneously collecting and delivering packages on a balcony. In FIG. 51, (a) is a front view of a second-floor balcony, and (b) is a side view of the second-floor balcony. FIG. 52 illustrates an example of a small transport vehicle 3400 delivering a package on a balcony where delivery box 3405 is placed in a location away from emergency door 3403. In FIG. 52, (a) is a front view of a second-floor balcony, and (b) is a side view of the second-floor balcony. FIG. 53 illustrates an example of a small transport vehicle 3400 delivering a package on a balcony where delivery box 3405 is placed in front of emergency door 3403. In FIG. 53, (a) is a front view of a second-floor balcony, and (b) is a side view of the second-floor balcony.

As illustrated in FIG. 50 and (a) and (b) in FIG. 51, transport vehicle 3400 according to the present embodiment is a system used in the systems of the above-described embodiments capable of transporting a package (article) from a sender to a receiver. Transport vehicle 3400 according to the present embodiment may be an unmanned transport vehicle or may be a manned transport vehicle. For example, transport vehicle 3400 can transport packages to balconies provided in facilities such as homes, apartment buildings, and office buildings.

Rail 7 extends along the balcony on the exterior wall of the facility. For example, in apartment buildings, since balconies are arranged in a row on each floor, rail 7 is provided along the direction in which a plurality of balconies are aligned on each floor. A portion of rail 7 is drawn into each balcony and thus provided within the interior of the balcony.

More specifically, rail 7 includes first rail 7a extending horizontally along the direction in which a plurality of balconies are aligned, and second rail 7b extending along the ceiling of the facility's balcony in a direction (for example, a horizontal direction) that perpendicularly intersects the lengthwise direction of first rail 7a, and intruding toward the interior of the balcony relative to first rail 7a. First rail 7a and second rail 7b may be coupled and continuous, but first rail 7a and second rail 7b may also be uncoupled and separate. For example, first rail 7a and second rail 7b intersect three-dimensionally. Transport vehicle 3400 moves along first rail 7a, and when it arrives in front of the balcony of the receiver, it can move from first rail 7a to second rail 7b to delivery packages to the balcony or collect packages.

As illustrated in FIG. 50, transport vehicle 3400 includes vehicle main body 3401, first arm 3411, second arm 3412, first wheel 3411a, second wheel 3412a, at least one actuator, control processor 3420, first package carriage 3421, second package carriage 3422, first winch 3421a, second winch 3422a, and wire control module 3414.

First arm 3411 and second arm 3412 provided on vehicle main body 3401 of transport vehicle 3400. Vehicle main body 3401 may include three or more connectors.

First wheel 3411a that is rotatable with respect to rail 7 when transport vehicle 3400 travels on rail 7 is connected to first arm 3411. The first connector may be configured of first arm 3411 and first wheel 3411a.

Second wheel 3412a that is rotatable with respect to rail 7 when transport vehicle 3400 travels on rail 7 is connected to second arm 3412. The second connector may be configured of second arm 3412 and second wheel 3412a. First wheel 3411a and second wheel 3412a may be collectively referred to simply as wheels.

First arm 3411 and second arm 3412 can be controlled by an actuator to slide in a direction perpendicular to the upper surface of vehicle main body 3401. Stated differently, at least one of first arm 3411 or second arm 3412 can be slid upward so as to be higher than a reference height from vehicle main body 3401, and can be slid downward so as to be lower than the reference height from vehicle main body 3401. In the present embodiment, the direction perpendicular to the upper surface of vehicle main body 3401 is the up-down direction with relative to vehicle main body 3401, but the up-down direction is not limited to the "vertical direction" in the strict sense of the word. In the present disclosure, the up-down direction refers to the upward direction and downward direction relative to vehicle main body 3401.

The actuator actuates at least one of first arm 3411, second arm 3412, first wheel 3411a, or second wheel 3412a.

The actuator may be, for example, arm actuator 3413 capable of sliding first arm 3411 and second arm 3412 in the up-down direction, or rotating first arm 3411 and second arm 3412 with respect to vehicle main body 3401 around an axis extending in the lengthwise direction. In such cases, arm actuator 3413 can be controlled by control processor 3420 to slide first arm 3411 and second arm 3412 in the up-down direction. Optionally, arm actuator 3413 may be provided on each of first arm 3411 and second arm 3412.

The actuator may be, for example, roller actuation motor 3415 capable of actuating and rotating first wheel 3411a and second wheel 3412a. In such cases, roller actuation motor 3415 can be controlled by control processor 3420 to rotate first wheel 3411a and second wheel 3412a, and thereby move transport vehicle 3400. Optionally, roller actuation motor 3415 may be provided on each of first wheel 3411a and second wheel 3412a.

Note that the actuator may be the aforementioned third propeller actuation motor that rotates the propeller provided on vehicle main body 3401 of transport vehicle 3400. In such cases, the third propeller actuation motor can be controlled by control processor 3420 to rotate the side propeller, thereby imparting propulsion force to transport vehicle 3400.

The side propeller is provided on the other side of vehicle main body 3401 (the side opposite the side in the traveling direction). The side propeller provides propulsion force to vehicle main body 3401 in a direction parallel to rail 7. Side propeller provides propulsion force to vehicle main body 3401 by being rotated by third propeller actuation motor. Stated differently, the third propeller actuation motor controls the rotation rate of the side propeller in response to a control instruction from control processor 3420.

In FIG. 50 according to the present embodiment, as an example, transport vehicle 3400 includes, as an actuator, a plurality of arm actuators 3413 capable of sliding first arm 3411 and second arm 3412 in the up-down direction, and a plurality of roller actuation motors 3415 capable of actuating and rotating first wheel 3411a and second wheel 3412a.

Control processor 3420 can control at least one actuator to slide each of first arm 3411 and second arm 3412 individually or collectively in the up-down direction. Control processor 3420 can control at least one actuator to rotate each of first wheel 3411a and second wheel 3412a individually or collectively in a clockwise or counterclockwise direction. Note that each of first arm 3411 and second arm 3412 not only slides in a direction exactly matching the up-down direction, but slides in directions within an error of, for example, approximately several percent, which are essentially recognized as the up-down direction. Control processor 3420 is one example of the controller.

As illustrated in FIG. 50 and (a) and (b) in FIG. 51, when transport vehicle 3400 is slidably hung from first rail 7a via first wheel 3411a and second wheel 3412a, control processor 3420 controls at least one actuator to disengage first wheel 3411a from first rail 7a and place it on second rail 7b, and to disengage second wheel 3412a from first rail 7a and place it on second rail 7b. Stated differently, control processor 3420 controls arm actuator 3413 of first arm 3411 to disengage first wheel 3411a from first rail 7a and place it on second rail 7b, and controls arm actuator 3413 of second arm 3412 to disengage second wheel 3412a from first rail 7a and place it on second rail 7b. With this, first wheel 3411a and second wheel 3412a are connected to second rail 7b, allowing transport vehicle 3400 to transfer from first rail 7a to second rail 7b.

When transport vehicle 3400 is slidably hung from first rail 7a via first wheel 3411a and second wheel 3412a, control processor 3420 controls at least one actuator to rotate first wheel 3411a on first rail 7a after disengaging second wheel 3412a from first rail 7a. With this, as transport vehicle 3400 moves forward, second wheel 3412a is brought closer to second rail 7b, and second wheel 3412a is placed on second rail 7b. Stated differently, control processor 3420 controls arm actuator 3413 of second arm 3412 to extend second arm 3412, causing second wheel 3412a to become disengaged from first rail 7a. Control processor 3420 controls roller actuation motor 3415 of first arm 3411 to rotate first wheel 3411a, causing transport vehicle 3400 to move forward and second wheel 3412a to approach second rail 7b. By second wheel 3412a riding on second rail 7b, transport vehicle 3400 can transfer from first rail 7a to second rail 7b.

First package carriage 3421 is arranged on one side of vehicle main body 3401, and second package carriage 3422 is arranged on the other side of vehicle main body 3401.

First package carriage 3421 is connected to first wire 3421b. First wire 3421b connects vehicle main body 3401 and first package carriage 3421. More specifically, the top end of first wire 3421b is connected to first winch 3421a provided on one side of vehicle main body 3401, and the bottom end of first wire 3421b is connected to the upper surface of first package carriage 3421.

Second package carriage 3422 is connected to second wire 3422b. Second wire 3422b connects vehicle main body 3401 and second package carriage 3422. More specifically, the top end of second wire 3422b is connected to second winch 3422a provided on the other side of vehicle main body 3401, and the bottom end of second wire 3422b is connected to the upper surface of second package carriage 3422.

First winch 3421a is capable of reeling out and in first wire 3421b. First winch 3421a is controlled by control processor 3420. More specifically, the reeling out and in of first wire 3421b are performed by control processor 3420 controlling wire control module 3414 to actuate first winch 3421a. Stated differently, when wire control module 3414 obtains an instruction from control processor 3420, it reels out and reels in first wire 3421b by actuating first winch 3421a.

Second winch 3422a is capable of reeling out and in second wire 3422b. Second winch 3422a is controlled by control processor 3420. More specifically, the reeling out and in of second wire 3422b are performed by control processor 3420 controlling wire control module 3414 to actuate second winch 3422a. Stated differently, when wire control module 3414 obtains an instruction from control processor 3420, it reels out and reels in first wire 3421b by actuating second winch 3422a.

In this way, control processor 3420 can control first winch 3421a and second winch 3422a.

Note that first winch 3421a is provided on vehicle main body 3401, but may be provided on first package carriage 3421. Second winch 3422a is provided on vehicle main body 3401, but may be provided on second package carriage 3422.

In response to instructions from control processor 3420, wire control module 3414 actuates first winch 3421a, causing first winch 3421a to reel out or reel in first wire 3421b. First package carriage 3421 descends by the reeling out of first wire 3421b, and ascends by the reeling in of first wire 3421b.

In response to instructions from control processor 3420, wire control module 3414 actuates second winch 3422a, causing second winch 3422a to reel out or reel in second wire 3422b. Second package carriage 3422 descends by the reeling out of second wire 3422b, and ascends by the reeling in of second wire 3422b.

First package carriage 3421 descends to deliver packages to delivery box 3405 disposed on the balcony, or to collect packages housed in delivery box 3405 disposed on the balcony. After delivering packages to or collecting packages from delivery box 3405, first package carriage 3421 ascends and is attached to vehicle main body 3401.

Second package carriage 3422 descends to deliver packages to delivery box 3405 disposed on the balcony, or to collect packages housed in delivery box 3405 disposed on the balcony. After delivering packages to or collecting packages from delivery box 3405, second package carriage 3422 ascends and is attached to vehicle main body 3401.

Note that, for example, the package carriage may include a flap that can change between a support state supporting a package housed therein and a release state not supporting a package housed in the package carriage. In such cases, control processor 3420 may control a flap actuator that actuates the flap to place the flap in the release state so that the package carriage covers the package, and then place the flap in the support state so that the package carriage houses and supports the package, thereby allowing the package carriage to collect the package. Note that the package may include a recess into which the flap can be fitted.

The package carriage may include a door provided on its side surface. In such cases, the package carriage may collect the package by the package being placed inside the package carriage.

As illustrated in (a) and (b) in FIG. 52 and (a) and (b) in FIG.53, delivery box 3405 is disposed on the balcony, but emergency door 3403 is installed on the balcony. Therefore, delivery box 3405 is arranged at a location other than an emergency space located in front of emergency door 3403 on the balcony. In cases where the facility is an apartment building or the like, since the emergency space is arranged in similar locations on each balcony, in order to secure a path between two adjacent emergency spaces on the same floor, delivery box 3405 may be arranged so as not to be placed on this path.

### Operation Example

Next, specific operations of transport vehicle 3400 will be described with reference to FIG. 54 through FIG. 56.

FIG. 54 illustrates transport vehicle 3400 according to Embodiment 11 starting to transition from first rail 7a to second rail 7b. FIG. 55 illustrates transport vehicle 3400 according to Embodiment 11 from the start to the end of its transition from first rail 7a to second rail 7b. FIG. 56 illustrates transport vehicle 3400 according to Embodiment 11, showing first package carriage 3421 collecting a package while the package in second package carriage 3422 is being stored in delivery box 3405.

This operation example describes the operation after moving from first rail 7a to second rail 7b, until delivering a package to delivery box 3405 or collecting a package from delivery box 3405. This operation example assumes a case where first wheel 3411a is positioned closer to second rail 7b that is drawn into the balcony than second wheel 3412a is. It should be noted that this arrangement may be reversed, and since the explanation would be similar to the following, the explanation will be omitted.

First, as illustrated in (a) in FIG. 54, when transport vehicle 3400 traveling on first rail 7a arrives in front of the balcony of the receiver, transport vehicle 3400 moves to near the boundary between first rail 7a and second rail 7b. Here, transport vehicle 3400 is in a state of being hung from first rail 7a by first wheel 3411a and second wheel 3412a.

Next, as illustrated in (b) in FIG. 54, control processor 3420 controls arm actuator 3413 of first arm 3411 to slide first arm 3411 upward. This causes first wheel 3411a to separate from first rail 7a.

Next, as illustrated in (c) in FIG. 54, control processor 3420 rotates first arm 3411 around an axis extending in the lengthwise direction (up-down direction) of first arm 3411, orienting first wheel 3411a toward second rail 7b so that the extension line of the axis of rotation of first wheel 3411a intersects second rail 7b.

Next, as illustrated in (d) in FIG. 54, control processor 3420 controls roller actuation motor 3415 of second arm 3412 to rotate second wheel 3412a. This causes vehicle main body 3401 to travel forward along first rail 7a. Once first wheel 3411a is positioned above second rail 7b, control processor 3420 controls roller actuation motor 3415 of second arm 3412 to stop the rotation of second wheel 3412a. Control processor 3420 controls arm actuator 3413 of first arm 3411 to slide first arm 3411 downward. This causes first wheel 3411a to ride on second rail 7b.

Next, as illustrated in (a) in FIG. 55, control processor 3420 controls arm actuator 3413 of second arm 3412 to slide second arm 3412 upward, slightly lifting second wheel 3412a from first rail 7a.

Next, as illustrated in (b) in FIG. 55, control processor 3420 controls roller actuation motor 3415 of first arm 3411 to rotate first wheel 3411a. This causes vehicle main body 3401 to travel forward along second rail 7b. Here, second wheel 3412a is placed on first rail 7a, and control processor 3420 controls roller actuation motor 3415 of second arm 3412 to rotate second wheel 3412a and cause second wheel 3412a to travel along first rail 7a. This causes the attitude of vehicle main body 3401 to rotate (in the case of (b) in FIG. 55, rotate counterclockwise). As illustrated in (c) and (d) in FIG. 55, when vehicle main body 3401 rotates, control processor 3420 controls arm actuator 3413 of second arm 3412 to slide second arm 3412 upward, disengaging second wheel 3412a from first rail 7a. Control processor 3420 controls arm actuator 3413 of second arm 3412 to rotate second arm 3412 around an axis extending in the lengthwise direction (up-down direction) of second arm 3412, orienting second wheel 3412a toward second rail 7b so that the extension line of the axis of rotation of second wheel 3412a intersects second rail 7b.

Next, as illustrated in (d) and (e) in FIG. 55, control processor 3420 controls roller actuation motor 3415 of first arm 3411 to rotate first wheel 3411a. With this, as vehicle main body 3401 moves forward, second wheel 3412a approaches second rail 7b, and second wheel 3412a is placed on second rail 7b.

Thus, first wheel 3411a and second wheel 3412a are connected to second rail 7b, allowing transport vehicle 3400 to transfer from first rail 7a to second rail 7b.

Next, as illustrated in (a) in FIG. 56, after transport vehicle 3400 moves along second rail 7b and arrives at the first location, control processor 3420 controls wire control module 3414 to actuate first winch 3421a to reel out first wire 3421b. With this, transport vehicle 3400 lowers and delivers the first package from first package carriage 3421 into delivery box 3405, or collects the first package from inside delivery box 3405 and accommodates it in first package carriage 3421. In FIG. 56, (a) illustrates a case in which a package is collected, so it is assumed that first package carriage 3421 is empty. Control processor 3420 controls wire control module 3414 to actuate first winch 3421a to reel in first wire 3421b. With this, by first package carriage 3421 returning to the first location, first package carriage 3421 is positioned above delivery box 3405. Here, the first location is the region between second rail 7b positioned above delivery box 3405 and delivery box 3405, and the surrounding area, for example, the location of first package carriage 3421 in (a) in FIG. 56.

Next, as illustrated in (b) in FIG. 56, after delivering or collecting the first package and after transport vehicle 3400 moves along second rail 7b and arrives at the second location, control processor 3420 controls wire control module 3414 to actuate second winch 3422a to reel out second wire 3422b. With this, transport vehicle 3400 lowers and delivers the second package from second package carriage 3422 into delivery box 3405, or collects the second package from inside delivery box 3405 and accommodates it in second package carriage 3422. In FIG. 56, (b) illustrates a case in which a package is delivered, so it is assumed that second package carriage 3422 is loaded with a second package. Control processor 3420 controls wire control module 3414 to actuate second winch 3422a to reel in second wire 3422b. With this, by second package carriage 3422 returning to the second location, second package carriage 3422 is positioned above delivery box 3405. Here, the second location is the region between second rail 7b positioned above delivery box 3405 and delivery box 3405, and the surrounding area, which may be the same as or different from the first location.

In this way, transport vehicle 3400 can lower the first package and the second package into delivery box 3405 or collect them. Transport vehicle 3400 then performs the operations in FIG. 55 and FIG. 54, and returns.

Although the present embodiment describes transport vehicle 3400 including two package carriages, as illustrated in FIG. 52 and FIG. 53, transport vehicle 3400 may include one package carriage. In such cases, transport vehicle 3400 includes, for example, either first package carriage 3421, first winch 3421a, and first wire 3421b, or second package carriage 3422, second winch 3422a, and second wire 3422b. In this case as well, the configuration, function, and operation are the same as when delivering or collecting packages to or from delivery box 3405.

FIG. 52 illustrates an example in which a user receives a package delivered by transport vehicle 3400. FIG. 53 illustrates an example in which a user retrieves a package delivered to delivery box 3405.

### [Variation]

Transport vehicle 3400 may further include rotary member 3419 illustrated in FIG. 54 through FIG. 56 for rotating vehicle main body 3401. The configuration of the rotary member or turntable described in the above embodiment may be used for rotary member 3419.

After transport vehicle 3400 according to the present variation moves along second rail 7b and arrives at the first location, control processor 3420 controls wire control module 3414 to actuate first winch 3421a to reel out first wire 3421b. With this, transport vehicle 3400 lowers and delivers the first package from first package carriage 3421 into delivery box 3405, or collects the first package from inside delivery box 3405 and accommodates it in first package carriage 3421. Control processor 3420 controls wire control module 3414 to actuate first winch 3421a to reel in first wire 3421b. With this, by first package carriage 3421 returning to the first location, first package carriage 3421 is positioned above delivery box 3405.

Next, after collecting the first package, control processor 3420 controls rotary member 3419 to rotate vehicle main body 3401.

Next, after rotating vehicle main body 3401 and after transport vehicle 3400 moves along second rail 7b and arrives at the second location, control processor 3420 controls wire control module 3414 to actuate second winch 3422a to reel out second wire 3422b. With this, transport vehicle 3400 lowers and delivers the second package from second package carriage 3422 into delivery box 3405, or collects the second package from inside delivery box 3405 and accommodates it in second package carriage 3422. Control processor 3420 controls wire control module 3414 to actuate second winch 3422a to reel in second wire 3422b. With this, second package carriage 3422 rises and is positioned above delivery box 3405, and second package carriage 3422 returns to the second location.

In this way, transport vehicle 3400 can lower the first package and the second package into delivery box 3405 or collect them.

### Advantageous Effects

Next, advantageous effects achieved by transport vehicle 3400 will be described.

Transport vehicle 3400 according to the present embodiment transports packages and includes: first arm 3411; second arm 3412; first wheel 3411a connected to first arm 3411; second wheel 3412a connected to second arm 3412; at least one actuator that actuates first wheel 3411a, second wheel 3412a, first arm 3411, and second arm 3412; and a controller (control processor 3420). When transport vehicle 3400 is slidably hung from first rail 7a via first wheel 3411a and second wheel 3412a, the controller controls the at least one actuator (arm actuator 3413, roller actuation motor 3415) to disengage first wheel 3411a from first rail 7a and place first wheel 3411a on second rail 7b, and to disengage second wheel 3412a from first rail 7a and place second wheel 3412a on second rail 7b.

With this, even if first rail 7a and second rail 7b are not connected, transport vehicle 3400 can transfer to a different rail 7. Accordingly, since it is not necessary to always connect first rail 7a and second rail 7b, the installation of rail 7 can be simplified. The degree of freedom of the means of movement of transport vehicle 3400 can be increased.

In transport vehicle 3400 according to the present embodiment, first arm 3411 is capable of moving in an up-down direction and capable of rotating around an axis extending in a lengthwise direction of first arm 3411 by being actuated by the at least one actuator. Second arm 3412 is capable of moving in an up-down direction and capable of rotating around an axis extending in a lengthwise direction of second arm 3412 by being actuated by the at least one actuator.

With this, by sliding first arm 3411 and second arm 3412 in the up-down direction, the wheel can be separated from or placed on rail 7 (first rail 7a and second rail 7b).

Control processor 3420 can control first arm 3411 and second arm 3412 to rotate, enabling transport vehicle 3400 to travel on a different rail 7 to which it has moved, whereby the package can be easily delivered.

In transport vehicle 3400 according to the present embodiment, first rail 7a extends horizontally along an exterior wall of a facility. Second rail 7b extends along a ceiling of a balcony of the facility in a direction that perpendicularly intersects a lengthwise direction of first rail 7a.

This allows transport vehicle 3400 to transfer from first rail 7a to second rail 7b and travel along second rail 7b. Second rail 7b is arranged along the ceiling of the balcony, allowing transport vehicle 3400 to deliver the package by placing it on the balcony.

In transport vehicle 3400 according to the present embodiment, when transport vehicle 3400 is slidably hung from first rail 7a via first wheel 3411a and second wheel 3412a, the controller controls at least one actuator to, after disengaging second wheel 3412a from first rail 7a, rotate first wheel 3411a on first rail 7a to move second wheel 3412a closer to second rail 7b and place second wheel 3412a on second rail 7b.

With this, by rotating first wheel 3411a when second wheel 3412a is separated from first rail 7a, transport vehicle 3400 can move forward and bring second wheel 3412a closer to second rail 7b. This allows second wheel 3412a to be placed on second rail 7b. This allows transport vehicle 3400 to transfer from first rail 7a to second rail 7b. By performing a similar operation, it is possible to transfer from second rail 7b to first rail 7a

Transport vehicle 3400 according to the present embodiment further includes: first package carriage 3421 connected to first wire 3421b; second package carriage 3422 connected to second wire 3422b; first winch 3421a capable of reeling out and in first wire 3421b; and second winch 3422a capable of reeling out and in second wire 3422b. The controller: after transport vehicle 3400 moves along second rail 7b and arrives at a first location, controls first winch 3421a to (i) reel out first wire 3421b to lower and deliver a first package inside first package carriage 3421 into delivery box 3405, or collect the first package inside delivery box 3405 into first package carriage 3421, and (ii) reel in first wire 3421b to return first package carriage 3421 to the first location and position first package carriage 3421 above delivery box 3405; and after delivering or collecting the first package and after transport vehicle 3400 moves along second rail 7b and arrives at a second location, controls second winch 3422a to (i) reel out second wire 3422b to lower and deliver a second package into delivery box 3405, or collect the second package inside delivery box 3405 into second package carriage 3422, and (ii) reel in second wire 3422b to return second package carriage 3422 to the second location and position second package carriage 3422 above delivery box 3405.

With this, transport vehicle 3400 equipped with two package carriages (first package carriage 3421 and second package carriage 3422) can deliver two packages in sequence to delivery box 3405, collect two packages in sequence, or alternate between collecting and delivering packages. Since a plurality of packages can be delivered to different receivers, increasing the transport volume makes it possible to increase the number of package deliveries and inhibit congestion of transport vehicle 3400 traveling on rail 7.

Transport vehicle 3400 according to the present embodiment further includes: vehicle main body 3401; first package carriage 3421 connected to vehicle main body 3401 via first wire 3421b; second package carriage 3422 connected to vehicle main body 3401 via second wire 3422b; rotary member 3419 that rotates vehicle main body 3401; first winch 3421a capable of reeling out and in first wire 3421b; and second winch 3422a capable of reeling out and in second wire 3422b. The controller: after transport vehicle 3400 moves along second rail 7b and arrives at a first location, controls first winch 3421a to (i) reel out first wire 3421b to lower and deliver a first package inside first package carriage 3421 into delivery box 3405, or collect the first package inside delivery box 3405 into first package carriage 3421, and (ii) reel in first wire 3421b to return first package carriage 3421 to the first location and position first package carriage 3421 above delivery box 3405; and after delivering or collecting the first package, controls rotary member 3419 to rotate vehicle main body 3401; and after rotating vehicle main body 3401 and after second package carriage 3422 is positioned above delivery box 3405, controls second winch 3422a to reel out second wire 3422b to lower and deliver a second package into delivery box 3405, or collect the second package inside delivery box 3405 into second package carriage 3422.

With this, when packages (first package and second package) are mounted on the front and rear of transport vehicle 3400, after delivering the first package to delivery box 3405, the second package can be positioned in the airspace above delivery box 3405 by rotating transport vehicle 3400. Accordingly, when control processor 3420 controls second winch 3422a to reel out second wire 3422b, the second package can be delivered to delivery box 3405.

Since the attitude of transport vehicle 3400 is already rotated, transport vehicle 3400 can return to the receiver without having to rotate the attitude of transport vehicle 3400. With this, transport vehicle 3400 can smoothly execute the delivery of packages to the delivery box and the operations associated with the return of transport vehicle 3400.

In this case as well, transport vehicle 3400 equipped with two package carriages (first package carriage 3421 and second package carriage 3422) can deliver two packages in sequence to delivery box 3405, collect two packages in sequence, or alternate between collecting and delivering packages. Since a plurality of packages can be delivered to different receivers, increasing the transport volume makes it possible to increase the number of package deliveries and inhibit congestion of transport vehicle 3400 traveling on rail 7.

In transport vehicle 3400 according to the present embodiment, delivery box 3405 is arranged at a location other than an emergency space located in front of emergency door 3403 on a balcony.

This configuration can ensure there is a path for people to pass through the emergency space, and thus ensure safe usage of the emergency space.

### [Embodiment 12]

The present embodiment differs from Embodiment 11 and the like in that transport vehicle 3400a includes a slider. Hereinafter, since the basic configuration of transport vehicle 3400a according to the present embodiment is the same as the basic configuration of each of the embodiments described above, the same reference signs as above are used and repeated description of the basic configuration of transport vehicle 3400a according to the present embodiment will be omitted where appropriate. The configurations of each of the above-described embodiments may be applied to the present embodiment.

### Function and Configuration

First, the functions and configuration of transport vehicle 3400a will be described with reference to FIG. 57. FIG. 57 illustrates transport vehicle 3400a according to Embodiment 12 extending first slider 3401a and second slider 3401b.

Transport vehicle 3400a includes first slider 3401a and second slider 3401b in addition to vehicle main body 3401, first arm 3411, second arm 3412, first wheel 3411a, second wheel 3412a, actuator, control processor 3420, first package carriage 3421, second package carriage 3422, first winch 3421a, second winch 3422a, and wire control module 3414.

First slider 3401a slides with respect to vehicle main body 3401 in the lengthwise direction of vehicle main body 3401. More specifically, first slider 3401a is arranged on one side of vehicle main body 3401, and can extend from the one side of vehicle main body 3401 along the lengthwise direction of vehicle main body 3401, and can be housed inside vehicle main body 3401.

Second slider 3401b slides with respect to vehicle main body 3401 in the lengthwise direction of vehicle main body 3401. More specifically, second slider 3401b is arranged on the other side of vehicle main body 3401, and can extend from the other side of vehicle main body 3401 along the lengthwise direction of vehicle main body 3401, and can be housed inside vehicle main body 3401.

In FIG. 57, (d) illustrates first slider 3401a and second slider 3401b extended along the lengthwise direction of vehicle main body 3401 so as to move away from vehicle main body 3401.

First package carriage 3421 is connected to the leading end of first slider 3401a. First package carriage 3421 is connected to first slider 3401a via first wire 3421b. Stated differently, one end of first wire 3421b is connected to first winch 3421a provided at the leading end portion of first slider 3401a, and the other end of first wire 3421b is connected to first package carriage 3421.

Second package carriage 3422 is connected to the leading end of second slider 3401b. Second package carriage 3422 is connected to second slider 3401b via second wire 3422b. Stated differently, one end of second wire 3422b is connected to second winch 3422a provided at the leading end portion of second slider 3401b, and the other end of second wire 3422b is connected to second package carriage 3422.

Note that first winch 3421a may be provided on first package carriage 3421, and second winch 3422a may be provided on second package carriage 3422.

The actuator actuates at least one of first arm 3411, second arm 3412, first wheel 3411a, second wheel 3412a, first slider 3401a, or second slider 3401b.

For example, the actuator may be arm actuator 3413 capable of sliding first arm 3411 and second arm 3412 in the up-down direction, or rotating first arm 3411 and second arm 3412 with respect to vehicle main body 3401 around an axis extending in the lengthwise direction. Arm actuator 3413 may be provided on transport vehicle 3400a so as to correspond to each of first arm 3411 and second arm 3412.

Note that arm actuator 3413 may rotate at least one of first arm 3411 or second arm 3412 with respect to vehicle main body 3401 around an axis extending in the lengthwise direction.

The actuator may be, for example, roller actuation motor 3415 capable of actuating and rotating first wheel 3411a and second wheel 3412a. Roller actuation motor 341 may be provided on transport vehicle 3400a so as to correspond to each of first wheel 3411a and second wheel 3412a.

The actuator may be, for example, motor actuator 3401c capable of sliding first slider 3401a and second slider 3401b in the lengthwise direction of vehicle main body 3401. Motor actuator 3401c may be provided on transport vehicle 3400a so as to correspond to each of first slider 3401a and second slider 3401b.

In FIG. 57 according to the present embodiment, as an example, transport vehicle 3400a includes, as an actuator, arm actuators 3413 illustrated in FIG. 50 that are capable of sliding first arm 3411 and second arm 3412 in the up-down direction, roller actuation motors 3415 illustrated in FIG. 50 that are capable of actuating and rotating first wheel 3411a and second wheel 3412a, and motor actuator 3401c illustrated in FIG. 50 that are capable of sliding first slider 3401a and second slider 3401b.

When transport vehicle 3400a is slidably hung from first rail 7a via first wheel 3411a and second wheel 3412a, control processor 3420 controls at least one actuator to disengage first wheel 3411a from first rail 7a. When transport vehicle 3400a is hung from first rail 7a by only second wheel 3412a, control processor 3420 rotates second arm 3412 with respect to vehicle main body 3401 around an axis extending in the lengthwise direction of second arm 3412, and after rotating second arm 3412 with respect to vehicle main body 3401, extends first slider 3401a and second slider 3401b. Second arm 3412 is connected to rotary member 3412b and is thus rotatable around the axis.

More specifically, control processor 3420 controls arm actuator 3413 of first arm 3411 to slide first arm 3411 upward, disengaging first wheel 3411a from first rail 7a. Here, since transport vehicle 3400a is hung from first rail 7a by second wheel 3412a, control processor 3420 controls arm actuator 3413 of second arm 3412 to rotate second arm 3412 with respect to vehicle main body 3401 around an axis extending in the lengthwise direction of second arm 3412. This causes vehicle main body 3401 to rotate with respect to first rail 7a. After rotating second arm 3412 with respect to vehicle main body 3401, that is, after vehicle main body 3401 has rotated with respect to first rail 7a, control processor 3420 controls motor actuator 3401c of first slider 3401a and second slider 3401b to extend first slider 3401a and second slider 3401b.

### Operation Example

Next, specific operations of transport vehicle 3400a will be described with reference to FIG. 57.

This operation example describes operations until vehicle main body 3401 is rotated and first slider 3401a and second slider 3401b are extended.

First, as illustrated in (a) in FIG. 57, when transport vehicle 3400a traveling on first rail 7a arrives at the destination, transport vehicle 3400a stops traveling. Here, transport vehicle 3400a is in a state of being slidably hung from first rail 7a by first wheel 3411a and second wheel 3412a.

Next, as illustrated in (b) in FIG. 57, control processor 3420 controls arm actuator 3413 of first arm 3411 to slide first arm 3411 upward. This causes first wheel 3411a to separate from first rail 7a. Here, transport vehicle 3400a is in a state of being hung from first rail 7a by second wheel 3412a and second arm 3412.

Next, as illustrated in (c) in FIG. 57, control processor 3420 controls arm actuator 3413 of second arm 3412 to rotate second arm 3412 with respect to vehicle main body 3401 around an axis extending in the lengthwise direction of second arm 3412. This causes vehicle main body 3401 to rotate with respect to first rail 7a, so that the lengthwise direction of vehicle main body 3401 becomes orthogonal to the lengthwise direction of first rail 7a.

Next, as illustrated in (d) in FIG. 57, after rotating second arm 3412 with respect to vehicle main body 3401, that is, after vehicle main body 3401 has rotated with respect to first rail 7a, control processor 3420 controls motor actuator 3401c of first slider 3401a and second slider 3401b to extend first slider 3401a and second slider 3401b.

By extending first slider 3401a and second slider 3401b in opposite directions with respect to vehicle main body 3401, the attitude of vehicle main body 3401 is maintained. This allows the attitude of vehicle main body 3401 to be maintained while positioning the package carriage (first package carriage 3421 or second package carriage 3422) in the airspace above delivery box 3405 at the receiver. Even if delivery box 3405 is positioned away from first rail 7a, by extending first slider 3401a and second slider 3401b in opposite directions with respect to vehicle main body 3401, it is possible to lower the package carriage while maintaining the attitude of the package carriage, thereby allowing packages to be lowered and delivered into delivery box 3405 or collected from inside delivery box 3405.

### Advantageous Effects

Next, advantageous effects achieved by transport vehicle 3400a will be described.

Transport vehicle 3400a according to the present embodiment transports packages and includes: first arm 3411; second arm 3412; first wheel 3411a connected to first arm 3411; second wheel 3412a connected to second arm 3412; vehicle main body 3401 connected to first arm 3411 and second arm 3412; first slider 3401a that extends with respect to vehicle main body 3401; second slider 3401b that extends with respect to vehicle main body 3401; first package carriage 3421 connected to first slider 3401a via first wire 3421b; second package carriage 3422 connected to second slider 3401b via second wire 3422b; at least one actuator that actuates first wheel 3411a, second wheel 3412a, first arm 3411, second arm 3412, first slider 3401a, and second slider 3401b; and a controller (control processor 3420). First arm 3411 is capable of moving in an up-down direction relative to vehicle main body 3401 by being actuated by the at least one actuator. Second arm 3412 is capable of rotating with respect to vehicle main body 3401 around an axis extending in the lengthwise direction of second arm 3412 by being actuated by the at least one actuator. When transport vehicle 3400a is slidably hung from first rail 7a by first wheel 3411a and second wheel 3412a, the controller controls at least one actuator to disengage first wheel 3411a from first rail 7a, and when transport vehicle 3400a is hung from first rail 7a by only second wheel 3412a, rotates second arm 3412 with respect to vehicle main body 3401 around an axis extending in the lengthwise direction of second arm 3412, and after rotating second arm 3412 with respect to vehicle main body 3401, extends first slider 3401a and second slider 3401b.

With this, by rotating second arm 3412 around the axis extending in the lengthwise direction, it is possible to rotate vehicle main body 3401 with respect to first rail 7a. Accordingly, even if delivery box 3405 is positioned at a location away in a direction perpendicular to the lengthwise direction of first rail 7a, by rotating vehicle main body 3401, it is possible to house the package in delivery box 3405.

If delivery box 3405 is positioned far away in a direction perpendicular to the lengthwise direction of first rail 7a, it is possible to house the package in delivery box 3405 by extending first slider 3401a and second slider 3401b. Here, since the sliders can be extended in opposite directions, it is possible to inhibit vehicle main body 3401 from tilting. When first rail 7a is viewed from above and delivery boxes 3405 are positioned on both sides of first rail 7a, it is possible to deliver packages simultaneously to each delivery box 3405. This makes it possible to improve the delivery efficiency of transport vehicle 3400a.

### [Embodiment 13]

The present embodiment differs from Embodiment 11 and the like in that it includes elevator 3430 for moving transport vehicle 3400b. Hereinafter, since the basic configuration of transport vehicle 3400b according to the present embodiment is the same as the basic configuration of each of the embodiments described above, the same reference signs as above are used and repeated description of the basic configuration of transport vehicle 3400b according to the present embodiment will be omitted where appropriate. The configurations of each of the above-described embodiments may be applied to the present embodiment.

### Function and Configuration

First, transport vehicle 3400b according to the present embodiment will be described with reference to FIG. 58A through FIG. 59. FIG. 58A is a block diagram illustrating transport vehicle 3400b according to Embodiment 13. FIG. 58B is block diagram illustrating elevator 3430 according to Embodiment 13. FIG. 59 is a schematic diagram illustrating elevator 3430 according to Embodiment 13. In FIG. 59, (a) is a side view of elevator 3430. In FIG. 59, (b) is a front view of elevator 3430. In FIG. 59, (c) is a side view illustrating elevator 3430 with lifting body 3431 and sliding mechanism 3436 extended. Additionally, the dashed line illustrates a state where slider 3438 is extended.

As illustrated in FIG. 58A through FIG. 59, elevator 3430 is an elevator for moving transport vehicle 3400b on first rail 7a. First rail 7a is provided on the balconies of each floor of the facility. When it is desired to move transport vehicle 3400b from one floor to another, elevator 3430 can raise or lower transport vehicle 3400b from one floor to another.

More specifically, elevator 3430 includes lifting body 3431, base 3432, first member 3433, at least one actuator, and controller 3434.

Lifting body 3431 is provided on base 3432. Lifting body 3431 can slide in the vertical direction relative to base 3432 by controller 3434 controlling motor actuator 3435. Stated differently, by controller 3434 controlling motor actuator 3435, lifting body 3431 ascends relative to base 3432, or lifting body 3431, which has moved vertically upward, descends to approach base 3432.

Base 3432 includes movable wheels and has L-shape in a side view. Base 3432 supports sliding mechanism 3436 and lifting body 3431 that move in the vertical direction.

Base 3432 includes sliding mechanism 3436 that is extendable in the vertically upward direction. Sliding mechanism 3436 can guide lifting body 3431 that slides in the vertical direction while supporting lifting body 3431. For example, in cases in which lifting body 3431 is to be moved to a high position, controller 3434 of base 3432 controls motor actuator 3435 to extend sliding mechanism 3436.

Motor actuator 3435 can extend sliding mechanism 3436 and slide lifting body 3431 either simultaneously or independently.

The actuator can move first member 3433 in the vertical direction or the horizontal direction. For example, the actuator may be motor actuator 3435 capable of sliding lifting body 3431 in the vertical direction (for example, the up-down direction) relative to sliding mechanism 3436, sliding sliding mechanism 3436 in the up-down direction relative to base 3432, or sliding slider 3438 of lifting body 3431 in a horizontal direction perpendicular to the up-down direction. Motor actuator 3435 may be provided on each of lifting body 3431, sliding mechanism 3436, and slider 3438. Motor actuator 3435 may be provided in plurality, for example, one for movement in the vertical direction and one for movement in the horizontal direction. Stated differently, a plurality of motor actuators 3435 may be provided on elevator 3430 so as to correspond to each of lifting body 3431, sliding mechanism 3436, and slider 3438. The present embodiment presents an example in which motor actuators 3435 are provided on elevator 3430 so as to correspond to each of lifting body 3431, sliding mechanism 3436, and slider 3438.

Lifting body 3431 includes first member 3433. First member 3433 is a rod-like component with a cross-section that forms a convex shape protruding upward, and extends in the first direction. In the present embodiment, first member 3433 is an elongated rod forming an inverted V shape. The first direction is, for example, a horizontal direction.

Lifting body 3431 includes slider 3438. Slider 3438 slides in the horizontal direction relative to lifting body 3431, which means slider 3438 extends in a direction intersecting with the up-down direction in which lifting body 3431 moves. First member 3433 is connected to the leading end of slider 3438. Controller 3434 controls motor actuator 3435 to extend slider 3438 or accommodate it within lifting body 3431, thereby enabling first member 3433 to move in the horizontal direction.

Controller 3434 controls motor actuator 3435, enabling first member 3433 to be arranged on first rail 7a or to support the wheels of transport vehicle 3400b that has traveled on first rail 7a. Since a groove recessed along the direction of rotation is formed on the wheels, the wheels can be hooked onto the top end edge of the convex first member 3433. Therefore, even if transport vehicle 3400b is moved vertically upward together with lifting body 3431, the wheels are unlikely to separate from first member 3433.

First member 3433 further includes at least one stopper 3439. The at least one stopper 3439 can transition between a first state in which the wheels of transport vehicle 3400b are prevented from moving in the first direction on first member 3433, and a second state in which the wheels are allowed to move in the first direction on first member 3433. In the present embodiment, stoppers 3439 are arranged at both ends of first member 3433.

Controller 3434 controls stopper actuator 3440 to place at least one stopper 3439 in the first state after transport vehicle 3400b is hung from first member 3433 by the wheels, and before moving first member 3433. For example, controller 3434 controls stopper actuator 3440 to raise at least one stopper 3439 with respect to first member 3433. With this, even if the wheels of transport vehicle 3400b rotate, stopper 3439 raised with respect to first member 3433 functions as a wheel chock. In the present embodiment, when moving transport vehicle 3400b by hooking the wheels onto first member 3433, each of stoppers 3439 arranged at both ends of first member 3433 is placed in the first state.

After moving transport vehicle 3400b by hooking the wheels onto first member 3433, when lowering transport vehicle 3400b from first member 3433, controller 3434 controls stopper actuator 3440 to place stopper 3439 in the second state by laying down stopper 3439 to function like a slope. Here, among stoppers 3439 provided at both ends of first member 3433, it is sufficient to place only stopper 3439 on the side where transport vehicle 3400b moves in the second state.

In this way, stopper 3439 includes both the function of a wheel chock and the function of a slope.

After transport vehicle 3400b is hung from first member 3433 by the wheels, controller 3434 controls motor actuator 3435 to move first member 3433 and place it over first rail 7a. Stated differently, when elevator 3430 moves transport vehicle 3400b vertically upward or vertically downward, controller 3434 controls motor actuator 3435 to cover first rail 7a, from which transport vehicle 3400b is hung, with first member 3433, and controls stopper actuator 3440 to place stopper 3439, which opposes the wheels of transport vehicle 3400b, in the second state. With this, when the wheels rotate and ride onto first member 3433, it is possible to place the wheels of transport vehicle 3400b, which travels along first rail 7a, onto first member 3433.

After the wheels rotate and move from first member 3433 onto first rail 7a and transport vehicle 3400b is hung from first rail 7a by the wheels, controller 3434 controls at least one actuator to move first member 3433 away from first rail 7a. Stated differently, controller 3434 controls motor actuator 3435 to move transport vehicle 3400b vertically upward or vertically downward, cover first rail 7a with first member 3433, and controls stopper actuator 3440 to place stopper 3439, which opposes the wheels of transport vehicle 3400b, in the second state. With this, by the wheels of transport vehicle 3400b rotating, transport vehicle 3400b can move from first member 3433 onto first rail 7a.

Transport vehicle 3400b further includes braking mechanism 3441 capable of stopping the rotation of the wheels. Braking mechanism 3441 can stop the rotation of the wheels to prevent rolling off when transport vehicle 3400b is placed on first member 3433. Braking mechanism 3441 stops the rotation of the wheels under control by control processor 3420.

After transport vehicle 3400b is hung from first member 3433 by the wheels, and before moving first member 3433, the rotation of the wheels is stopped by braking mechanism 3441. For example, lifting body 3431 may be equipped with a pressure sensor capable of detecting that the wheels are on first member 3433. In such cases, the pressure sensor may transmit information indicating that the wheels are on first member 3433 to transport vehicle 3400b via the communicator or the like. Transport vehicle 3400b may be equipped with an image sensor or the like capable of detecting that the wheels are on first member 3433. Control processor 3420 of transport vehicle 3400b may control braking mechanism 3441 to stop the rotation of the wheels by obtaining information indicating that the wheels are on first member 3433. This stops the rotation of the wheels, even if first member 3433 is moved, making it unlikely for the wheels to rotate on first member 3433. This makes it possible to inhibit the wheels from separating from first member 3433.

After first member 3433, on which the wheels are riding, is placed on first rail 7a, the stopping of the rotation of the wheels by braking mechanism 3441 is released. For example, lifting body 3431 may be equipped with an image sensor capable of detecting that first member 3433, on which the wheels are riding, is placed on first rail 7a. In such cases, the image sensor may transmit information indicating that first member 3433, on which the wheels are riding, is placed on first rail 7a to transport vehicle 3400b via the communicator or the like. Transport vehicle 3400b may be equipped with an image sensor or the like capable of detecting that first member 3433, on which the wheels are riding, is placed on first rail 7a. With this, control processor 3420 of transport vehicle 3400b may control braking mechanism 3441 to release the stop of the rotation of the wheels by obtaining information indicating that first member 3433, on which the wheels are riding, is placed on first rail 7a.

### Operation Example

Next, specific operations of elevator 3430 will be described with reference to FIG. 60. FIG. 60 is a schematic diagram illustrating how the wheels of transport vehicle 3400b are placed on first member 3433 of elevator 3430 and moved according to Embodiment 13.

This operation example describes operations until transport vehicle 3400b, which is hung from first rail 7a present on a certain floor, is moved to first rail 7a present on another floor (target floor). The present operation example illustrates a case in which lifting body 3431 is slid upward. Since the same processes apply when sliding lifting body 3431 downward, description thereof will be omitted.

First, as illustrated in (a) in FIG. 60, when transport vehicle 3400b traveling on first rail 7a arrives at the destination, transport vehicle 3400b stops traveling. Here, transport vehicle 3400b is in a state of being slidably hung from first rail 7a by wheels. After transport vehicle 3400b is hung from first member 3433 by the wheels, controller 3434 controls motor actuator 3435 to move first member 3433 and place it over first rail 7a. Controller 3434 controls stopper actuator 3440 to place stopper 3439, which opposes the wheels of transport vehicle 3400b, in the second state. When control processor 3420 of transport vehicle 3400b obtains information indicating that first member 3433 is placed on first rail 7a, it controls roller actuation motor 3415 to rotate the wheels. With this, when vehicle main body 3401 moves, the wheels ride on first member 3433, and transport vehicle 3400b hangs from first member 3433. Controller 3434 controls stopper actuator 3440 to place stopper 3439 in the first state. Control processor 3420 controls braking mechanism 3441 to release the stop of the rotation of the wheels.

Next, as illustrated in (b) in FIG. 60, controller 3434 controls motor actuator 3435 to slide sliding mechanism 3436 upward relative to pedestal 3432, and slide lifting body 3431 upward along sliding mechanism 3436. Controller 3434 controls motor actuator 3435 to stop the sliding movement when first member 3433 reaches a position higher than first rail 7a present on the target floor.

Next, as illustrated in (c) in FIG. 60, controller 3434 controls motor actuator 3435 to slide slider 3438 of lifting body 3431 in a horizontal direction perpendicular to the upward direction. Controller 3434 controls motor actuator 3435 to slide slider 3438 of lifting body 3431 so as to approach first rail 7a present on the target floor in FIG. 60. Controller 3434 controls motor actuator 3435 to arrange first member 3433 on first rail 7c so that it is vertically above first rail 7a of the target floor and the lengthwise direction of first member 3433 is parallel to the lengthwise direction of first rail 7a. In some cases, controller 3434 actuates the wheels of base 3432 to correct the attitude of first rail 7a of the target floor and first member 3433.

Next, as illustrated in (d) in FIG. 60, controller 3434 controls motor actuator 3435 to slide slider 3438 of lifting body 3431 downward. This causes first member 3433 to cover first rail 7a. Controller 3434 controls stopper actuator 3440 to place stopper 3439, which opposes the wheels of transport vehicle 3400b, in the second state. Control processor 3420 controls braking mechanism 3441 to release the stop of the rotation of the wheels. With this, it is possible to place transport vehicle 3400b, which travels along first rail 7a, onto first member 3433. By the wheels of transport vehicle 3400b rotating, transport vehicle 3400b can move from first member 3433 onto first rail 7a of the target floor.

### [Variation]

In the present variation, as illustrated in (e) to (g) in FIG. 60, guide rail 3443 may be provided on the exterior wall of a facility such as an apartment building. In such cases, lifting body 3431 can move in the up-down direction along guide rail 3443.

For example, as illustrated in (e) in FIG. 60, controller 3434 controls motor actuator 3435 to slide lifting body 3431, from which transport vehicle 3400b is hung via wheels on first member 3433, upward to move first member 3433 away from first rail 7a.

Next, as illustrated in (f) in FIG. 60, motor actuator 3435 is controlled to slide slider 3438 of lifting body 3431 in a horizontal direction perpendicular to the upward direction to accommodate slider 3438 in lifting body 3431. Controller 3434 then controls motor actuator 3435 to slide lifting body 3431, from which transport vehicle 3400b is hung via wheels on first member 3433, downward.

Next, as illustrated in (g) in FIG. 60, controller 3434 controls motor actuator 3435 to stop the sliding movement when first member 3433 reaches a position higher than another first rail 7c present on the target floor. Controller 3434 controls motor actuator 3435 to slide slider 3438 of lifting body 3431 in a horizontal direction perpendicular to the upward direction. Controller 3434 controls motor actuator 3435 to slide slider 3438 of lifting body 3431 so as to approach first rail 7a present on the target floor. Controller 3434 controls motor actuator 3435 to arrange first member 3433 on first rail 7c so that it is vertically above first rail 7c of the target floor and the lengthwise direction of first member 3433 is parallel to the lengthwise direction of first rail 7c.

Controller 3434 controls stopper actuator 3440 to place stopper 3439, which opposes the wheels of transport vehicle 3400b, in the second state. With this, by the wheels of transport vehicle 3400b rotating, transport vehicle 3400b can move from first member 3433 onto first rail 7a of the target floor.

### Advantageous Effects

Next, advantageous effects achieved by transport vehicle 3400b will be described.

Elevator 3430 according to the present embodiment is for moving transport vehicle 3400b on first rail 7a, and includes: first member 3433 that has a cross-section forming a convex shape protruding upward and extends in the first direction; at least one actuator that moves first member 3433 in the vertical direction or horizontal direction; and controller 3434. Transport vehicle 3400b includes an arm and a wheel connected to the arm. After transport vehicle 3400b is hung from first member 3433 by the wheel, controller 3434 controls the at least one actuator to move first member 3433 to cover first rail 7a, and after the wheel rotates and moves from first member 3433 onto first rail 7a and transport vehicle 3400b is hung from first rail 7a by the wheel, controller 3434 controls the at least one actuator to move first member 3433 away from first rail 7a.

With this, while it is placed on first member 3433, by raising and lowering transport vehicle 3400b, which has traveled on rails 7 installed on floors of the facility, transport vehicle 3400b can be moved from rail 7 provided on one floor to rail 7 provided on another floor. This eliminates the necessity of having to install additional rails 7 in the facility to connect rails 7 provided on all floors, thereby simplifying the installation of rails 7. This also makes it possible to inhibit an increase in the travel distance of transport vehicle 3400b.

In transport vehicle 3400b according to the present embodiment, first member 3433 further includes at least one stopper 3439. The at least one stopper 3439 can transition between a first state in which the wheel is prevented from moving in the first direction on first member 3433, and a second state in which the wheel is allowed to move in the first direction on first member 3433. After transport vehicle 3400b is hanging from first member 3433 by the wheel, and before moving first member 3433, at least one stopper 3439 is placed in the first state, and after first member 3433 is placed on first rail 7a, stopper 3439 is placed in the second state.

With this, by placing stopper 3439 in the first state, when the wheel of transport vehicle 3400b is placed on first member 3433 and transport vehicle 3400b moves while hanging from first member 3433, it is possible to inhibit the wheel from rotating and detaching from first member 3433. By placing stopper 3439 in the second state when first member 3433, on which the wheel of transport vehicle 3400b is riding, is placed on rail 7, if the wheel rotates, transport vehicle 3400b can move from first member 3433 to rail 7 and hang from rail 7.

In transport vehicle 3400b according to the present embodiment, transport vehicle 3400b further includes braking mechanism 3441 capable of stopping the rotation of the wheel. After transport vehicle 3400b is hung from first member 3433 by the wheel, and before moving first member 3433, the rotation of the wheel is stopped by the braking mechanism. After first member 3433, on which the wheels are riding, is placed on first rail 7a, the stopping of the rotation of the wheels by the braking mechanism is released.

With this, since the rotation of the wheel is stopped by the braking mechanism when the wheel of transport vehicle 3400b is placed on first member 3433 and transport vehicle 3400b moves while hanging from first member 3433, it is possible to inhibit the wheel from rotating and detaching from first member 3433.

After first member 3433, on which the wheel is riding, is placed on first rail 7a, the stopping of the rotation of the wheel is released, allowing the vehicle to rotate and move from first member 3433 onto first rail 7a.

### [Embodiment 14]

The present embodiment differs from Embodiment 11 and the like in that a plurality of packages are loaded stacked in package carriage 3450. Hereinafter, since the basic configuration of transport vehicle 3400c according to the present embodiment is the same as the basic configuration of each of the embodiments described above, the same reference signs as above are used and repeated description of the basic configuration of transport vehicle 3400c according to the present embodiment will be omitted where appropriate. The configurations of each of the above-described embodiments may be applied to the present embodiment. First package, second package, third package, and fourth package may be collectively referred to simply as packages.

### Function and Configuration

First, transport vehicle 3400c according to the present embodiment will be described with reference to FIG. 61A and FIG. 61B. FIG. 61A is a block diagram illustrating transport vehicle 3400c according to Embodiment 14. FIG. 61B is a perspective view illustrating package carriage 3450 according to Embodiment 14.

As illustrated in FIG. 61A and FIG. 61B, transport vehicle 3400c further includes first first flap 3461a, first second flap 3461b, second first flap 3462a, second second flap 3462b, and at least one actuator. Transport vehicle 3400c according to the present embodiment further includes third first flap 3463a and third second flap 3463b.

First first flap 3461a, first second flap 3461b, second first flap 3462a, second second flap 3462b, third first flap 3463a, third second flap 3463b, and at least one actuator are provided in package carriage 3450. Package carriage 3450 can accommodate a plurality of packages arranged in the up-down direction. Note that package carriage 3450 may be configured to accommodate a plurality of packages arranged in the left-right direction or the anteroposterior (horizontal) direction.

In package carriage 3450 according to the present embodiment, a plurality of tiers capable of accommodating a plurality of packages in the are formed up-down direction, such that the tier for accommodating packages at the very bottom of package carriage 3450 is the first tier, and the tier above that is the second tier, and so on. In package carriage 3450 in FIG. 61B, three tiers, namely the first tier, second tier, and third tier, are formed in this order from the bottom. Note two tiers or four or more tiers may be formed in package carriage 3450.

First first flap 3461a, first second flap 3461b, second first flap 3462a, and second second flap 3462b are each connected to the inner wall of package carriage 3450. Second first flap 3462a is positioned above first first flap 3461a. Second second flap 3462b is positioned above first second flap 3461b. For example, first first flap 3461a and first second flap 3461b may be connected to the first tier of the inner wall of package carriage 3450, and second first flap 3462a and second second flap 3462b may be connected to the second tier or third tier of the inner wall of package carriage 3450. First first flap 3461a and first second flap 3461b may be connected to the second tier of the inner wall of package carriage 3450, and second first flap 3462a and second second flap 3462b may be connected to the third tier of the inner wall of package carriage 3450.

First first flap 3461a and first second flap 3461b are respectively arranged on two sides of package carriage 3450, and are arranged at the bottom of the first tier so as to oppose each other. Second first flap 3462a and second second flap 3462b are respectively arranged on two sides of package carriage 3450, and are arranged on the inner wall of the second tier near the boundary between the first tier and the second tier so as to oppose each other.

As is the case according to the present embodiment, third first flap 3463a and third second flap 3463b may be provided on the third tier of package carriage 3450. In such cases, third first flap 3463a and third second flap 3463b may be connected to the third tier inner wall. Third first flap 3463a is positioned above second first flap 3462a. Third second flap 3463b is positioned above second second flap 3462b. Third first flap 3463a and third second flap 3463b are respectively arranged on two sides of package carriage 3450, and are arranged on the inner wall of the third tier near the boundary between the second tier and the third tier so as to oppose each other.

The number of flaps provided may be in accordance with the number of tiers formed in package carriage 3450. In the present embodiment, two flaps are provided for one tier, but one flap may be provided, or three or more flaps may be provided. Note that each flap according to the present embodiment may have the same configuration as the embodiment described above.

First first flap 3461a and first second flap 3461b can transition between a first support state in which a package that has entered package carriage 3450 is supported by first first flap 3461a and first second flap 3461b, and a first release state in which the package is not supported by first first flap 3461a and first second flap 3461b.

Second first flap 3462a and second second flap 3462b can transition between a second support state in which a package that has entered package carriage 3450 is supported by second first flap 3462a and second second flap 3462b, and a second release state in which the package is not supported by second first flap 3462a and second second flap 3462b.

Third first flap 3463a and third second flap 3463b can transition between a third support state in which a package that has entered package carriage 3450 is supported by third first flap 3463a and third second flap 3463b, and a third release state in which the package is not supported by third first flap 3463a and third second flap 3463b.

For example, a support state is a state in which flaps in the release state rotate to be positioned to support the bottom of the package. A release state is a state in which flaps in the support state rotate to be positioned not to support the bottom of the package.

Each package may have a recess capable of fitting flaps such as first first flap 3461a, first second flap 3461b, second first flap 3462a, second second flap 3462b, third first flap 3463a, and third second flap 3463b.

At least one actuator drives first first flap 3461a, first second flap 3461b, second first flap 3462a, and second second flap 3462b. In the present embodiment, at least one actuator actuates third first flap 3463a and third second flap 3463b.

For example, the actuator is flap actuator 3455 capable of pivoting second second flap 3462b, first first flap 3461a, first second flap 3461b, second first flap 3462a, second second flap 3462b, third first flap 3463a, and third second flap 3463b. In such cases, flap actuator 3455 can be controlled by control processor 3420 to pivot each of first first flap 3461a, first second flap 3461b, second first flap 3462a, second second flap 3462b, third first flap 3463a, and third second flap 3463b. Flap actuator 3455 may be provided on package carriage 3450 so as to correspond to each of the flaps.

Package carriage 3450 according to the present embodiment can carry a plurality of packages stacked in the vertical direction. For example, when package carriage 3450 lowers or collects a package, the following is executed.

The first package is supported by first first flap 3461a and first second flap 3461b, and the second package positioned above the first package is supported by second first flap 3462a and second second flap 3462b, and when transport vehicle 3400c arrives above the first location for unloading the first package, control processor 3420 controls first winch 3421a to reel out first wire 3421b. This places package carriage 3450 in the first location. After placing package carriage 3450 at the first location, control processor 3420 controls at least one actuator (flap actuator 3455) to transition the state of first first flap 3461a and first second flap 3461b from the first support state to the first release state, and further transition the state of second first flap 3462a and second second flap 3462b from the second support state to the second release state. This places the first package in the first location, and the second package is placed over it. After placing the first package at the first place, control processor 3420 controls wire control module 3414 to actuate first winch 3421a to slightly reel in first wire 3421b. This causes package carriage 3450 to move slightly upward to reach the first position. In this way, package carriage 3450 can deliver the first package.

After package carriage 3450 has reached the first position, control processor 3420 controls at least one actuator (flap actuator 3455) to transition the state of first first flap 3461a and first second flap 3461b from the first release state to the first support state. With this, the second package is accommodated in package carriage 3450 by being supported by first first flap 3461a and first second flap 3461b. Stated differently, package carriage 3450 at the first position can collect the second package.

When delivering this second package, when transport vehicle 3400c including package carriage 3450 containing the second package arrives above the second location for unloading the second package, control processor 3420 controls wire control module 3414 to control first winch 3421a to reel out first wire 3421b. This places package carriage 3450 in the second location. After placing package carriage 3450 at the second location, control processor 3420 controls at least one actuator (flap actuator 3455) to transition the state of first first flap 3461a and first second flap 3461b from the first support state to the first release state. This places the second package at the second location. In this way, package carriage 3450 delivers the second package. Note that the first location and the second location are different locations.

When retrieving the third package, when transport vehicle 3400c arrives above the third location for retrieving the third package, control processor 3420 controls wire control module 3414 to control first winch 3421a to reel out first wire 3421b. This causes package carriage 3450 to cover the third package placed in the third location. After package carriage 3450 has covered the third package placed in the third location, control processor 3420 controls at least one actuator (flap actuator 3455) to transition the state of first first flap 3461a and first second flap 3461b from the first release state to the first support state. With this, the third package is accommodated in package carriage 3450 by being supported by first first flap 3461a and first second flap 3461b. In this way, package carriage 3450 can collect the third package. Note that the third location is a different location from the first location and the second location.

When transport vehicle 3400c including package carriage 3450 containing the third package arrives above the fourth location for retrieving the fourth package, control processor 3420 controls wire control module 3414 to actuate first winch 3421a to reel out first wire 3421b. This positions package carriage 3450 over the fourth package placed in the fourth location. After package carriage 3450 is positioned above the fourth package placed in the fourth location, control processor 3420 controls at least one actuator to transition the state of first first flap 3461a and first second flap 3461b from the first support state to the first release state. This places the third package above the fourth package. Stated differently, in package carriage 3450, the third package is arranged above the fourth package.

After placing the third package on the fourth package, control processor 3420 controls wire control module 3414 to actuate first winch 3421a to reel out first wire 3421b. This causes package carriage 3450 to move downward to reach the second position. After package carriage 3450 has reached the second position, control processor 3420 controls at least one actuator (flap actuator 3455) to transition the state of first first flap 3461a and first second flap 3461b from the first release state to the first support state. With this, the fourth package is accommodated in package carriage 3450 by being supported by first first flap 3461a and first second flap 3461b, and furthermore, the state of second first flap 3462a and second second flap 3462b is transitioned from the second release state to the second support state. With this, the third package is accommodated in package carriage 3450 by being supported by second first flap 3462a and second second flap 3462b.

In such cases, when delivering the third package and the fourth package, by performing the same operations as those as described above, the third package and the fourth package can be delivered.

In the present embodiment, how the package is supported can be arbitrarily changed. For example, although the bottom of the package is supported by flaps, what supports the bottom of the package is not limited to a flap. Any known configuration may be used as long as it is capable of supporting the package. Also, instead of supporting the bottom of the package, the package may be supported by clamping both side surfaces of the package; the configuration is not limited to supporting the bottom of the package.

### Operation Example 1

Next, specific operations of transport vehicle 3400c will be described with reference to FIG. 62 through FIG. 64. FIG. 62 illustrates package carriage 3450 accommodating a first package, a second package, and a third package delivering the first package to a first location. FIG. 63 illustrates package carriage 3450 accommodating the second package and the third package delivering the second package to a second location after delivering the first package to the first location. FIG. 64 illustrates package carriage 3450 accommodating the third package delivering the third package to a third location after delivering the second package to the second location.

The present operation example assumes that the first package, the second package, and the third package are delivered to different locations. The present operation example pertains to package carriage 3450 capable of accommodating three packages.

The first package is accommodated in the first tier of package carriage 3450, the second package in the second tier, and the third package in the third tier. Stated differently, the first package is supported by first first flap 3461a and first second flap 3461b, the second package positioned above the first package is supported by second first flap 3462a and second second flap 3462b, and the third package positioned above the second package is supported by third first flap 3463a and third second flap 3463b.

First, as illustrated in (a) and (b) in FIG. 62, when transport vehicle 3400c arrives above the first location for unloading the first package, control processor 3420 controls first winch 3421a to reel out first wire 3421b. This places package carriage 3450 in the first location. After placing package carriage 3450 at the first location, control processor 3420 controls flap actuator 3455 to transition the state of first first flap 3461a and first second flap 3461b from the first support state to the first release state. Placing the first package at the first location in this way allows transport vehicle 3400c to deliver the first package to the first location (for example, the receiver).

Next, as illustrated in (c) in FIG. 62, control processor 3420 controls flap actuator 3455 to transition the state of second first flap 3462a and second second flap 3462b from the second support state to the second release state, and transition the state of third first flap 3463a and third second flap 3463b from the third support state to the third release state. This places the second package above the first package, and the third package is placed over the second package. Note that the first support state, the second support state, and the third support state refer to the same state, except that the flaps are different. Similarly, the first release state, the second release state, and the third release state refer to the same state, except that the flaps are different.

In FIG. 62, (b) and (c) the flaps are shown operating separately, but the flaps may operate together as a single unit. Stated differently, control processor 3420 may control flap actuator 3455 to transition the state of first first flap 3461a and first second flap 3461b from the first support state to the first release state, transition the state of second first flap 3462a and second second flap 3462b from the second support state to the second release state, and transition the state of third first flap 3463a and third second flap 3463b from the third support state to the third release state.

Next, as illustrated in (d) in FIG. 62, control processor 3420 controls first winch 3421a to reel in first wire 3421b. Here, control processor 3420 controls first winch 3421a to reel in first wire 3421b to a position where the first tier of package carriage 3450 corresponds to the second package and the second tier corresponds to the third package, that is, to a position where first first flap 3461a and first second flap 3461b can support the second package, and second first flap 3462a and second second flap 3462b can support the third package. Package carriage 3450 then rises to a position where the first tier corresponds to the second package and the second tier corresponds to the third package (i.e., reaches the first position).

Next, as illustrated in (a) in FIG. 63, control processor 3420 controls flap actuator 3455 to transition the state of first first flap 3461a and first second flap 3461b from the first release state to the first support state, so that the second package is supported by first first flap 3461a and first second flap 3461b. Control processor 3420 controls flap actuator 3455 to transition the state of second first flap 3462a and second second flap 3462b from the second release state to the second support state, so that the third package is supported by second first flap 3462a and second second flap 3462b. In this way, package carriage 3450 can collect the second package and the third package.

Next, as illustrated in (b) in FIG. 63, control processor 3420 controls first winch 3421a to reel in first wire 3421b. This raises package carriage 3450 loaded with the second package and the third package.

Next, as illustrated in (c) in FIG. 63, when transport vehicle 3400c arrives above the second location for unloading the second package, control processor 3420 controls first winch 3421a to reel out first wire 3421b. This places package carriage 3450 in the second location. After placing package carriage 3450 at the second location, control processor 3420 controls flap actuator 3455 to transition the state of first first flap 3461a and first second flap 3461b from the first support state to the first release state. Placing the second package at the second location in this way allows transport vehicle 3400c to deliver the second package to the second location (for example, the receiver).

Next, as illustrated in (d) in FIG. 63, control processor 3420 controls flap actuator 3455 to transition the state of second first flap 3462a and second second flap 3462b from the second support state to the second release state. This places the third package above the second package.

Next, as illustrated in (a) in FIG. 64, control processor 3420 controls first winch 3421a to reel in first wire 3421b. Here, control processor 3420 controls first winch 3421a to reel in first wire 3421b to a position where the first tier of package carriage 3450 corresponds to the third package, that is, to a position where first first flap 3461a and first second flap 3461b can support the third package. Package carriage 3450 then rises to a position where the first tier corresponds to the third package (i.e., reaches the first position).

Next, as illustrated in (b) in FIG. 64, control processor 3420 controls flap actuator 3455 to transition the state of first first flap 3461a and first second flap 3461b from the first release state to the first support state, so that the third package is supported by first first flap 3461a and first second flap 3461b. In this way, package carriage 3450 can collect the third package.

Next, as illustrated in (c) in FIG. 64, control processor 3420 controls first winch 3421a to reel in first wire 3421b. This raises package carriage 3450 loaded with the third package.

Next, as illustrated in (d) in FIG. 64, when transport vehicle 3400c arrives above the third location for unloading the third package, control processor 3420 controls first winch 3421a to reel out first wire 3421b. This places package carriage 3450 in the third location. After placing package carriage 3450 at the third location, control processor 3420 controls flap actuator 3455 to transition the state of first first flap 3461a and first second flap 3461b from the first support state to the first release state. Placing the third package at the third location in this way allows transport vehicle 3400c to deliver the third package to the third location (for example, the receiver). Control processor 3420 controls first winch 3421a to reel in first wire 3421b. This raises package carriage 3450.

### Operation Example 2

Next, specific operations of transport vehicle 3400c will be described with reference to FIG. 65 through FIG. 67. FIG. 65 illustrates package carriage 3450, having collected a third package, collecting a second package. FIG. 66 illustrates package carriage 3450, having collected the first package and the second package, starting to collect a third package. FIG. 67 illustrates package carriage 3450, having started collecting the third package, collecting the third package.

The present operation example assumes that the first package, the second package, and the third package are collected at different locations. The present operation example pertains to package carriage 3450 capable of accommodating three packages.

First, as illustrated in (a) in FIG. 65, package carriage 3450 descends and covers the third package placed in the third location.

Next, as illustrated in (b) in FIG. 65, after package carriage 3450 covers the third package placed in the third location, control processor 3420 controls at least one actuator to transition the state of first first flap 3461a and first second flap 3461b from the first release state to the first support state. With this, the third package is accommodated in package carriage 3450 by being supported by first first flap 3461a and first second flap 3461b. Stated differently, package carriage 3450 can collect the third package. Transport vehicle 3400c then moves to collect the second package.

Next, as illustrated in (c) in FIG. 65, package carriage 3450 loaded with the second package moves to a location above the second package.

Next, as illustrated in (d) in FIG. 65, when transport vehicle 3400c arrives above the second package for retrieving the second package, control processor 3420 controls first winch 3421a to reel out first wire 3421b. This places package carriage 3450 over the second package.

Next, as illustrated in (e) in FIG. 65, after placing package carriage 3450 over the second package, control processor 3420 controls flap actuator 3455 to transition the state of first first flap 3461a and first second flap 3461b from the first support state to the first release state. This places the third package above the second package.

Next, as illustrated in (a) in FIG. 66, control processor 3420 controls first winch 3421a to reel out first wire 3421b. This causes package carriage 3450 to descend and cover the second package and the third package placed in the second location (i.e., to reach the second position).

Next, as illustrated in (b) in FIG. 66, control processor 3420 controls flap actuator 3455 to transition the state of first first flap 3461a and first second flap 3461b from the first release state to the first support state, so that the second package is supported by first first flap 3461a and first second flap 3461b. Control processor 3420 controls flap actuator 3455 to transition the state of second first flap 3462a and second second flap 3462b from the second release state to the second support state, so that the third package is supported by second first flap 3462a and second second flap 3462b. In this way, package carriage 3450 can collect the second package and the third package. Transport vehicle 3400c then moves to collect the first package.

Next, as illustrated in (c) in FIG. 66, package carriage 3450 loaded with the second package and the third package moves to a location above the first package.

Next, as illustrated in (d) in FIG. 66, when transport vehicle 3400c arrives above the first package for retrieving the first package, control processor 3420 controls first winch 3421a to reel out first wire 3421b. This places package carriage 3450 over the first package.

Next, as illustrated in (a) in FIG. 67, after placing package carriage 3450 over the first package, control processor 3420 controls flap actuator 3455 to transition the state of first first flap 3461a and first second flap 3461b from the first support state to the first release state, and transition the state of second first flap 3462a and second second flap 3462b from the second support state to the second release state. This places the second package and the third package above the first package.

Next, as illustrated in (b) in FIG. 67, control processor 3420 controls first winch 3421a to reel out first wire 3421b. This causes package carriage 3450 to descend and cover the first package, the second package, and the third package placed in the first location (i.e., to reach the second position).

Next, as illustrated in (d) and (e) in FIG. 67, control processor 3420 controls flap actuator 3455 to transition the state of first first flap 3461a and first second flap 3461b from the first release state to the first support state, so that the first package is supported by first first flap 3461a and first second flap 3461b. Control processor 3420 controls flap actuator 3455 to transition the state of second first flap 3462a and second second flap 3462b from the second release state to the second support state, so that the second package is supported by second first flap 3462a and second second flap 3462b. Control processor 3420 controls flap actuator 3455 to transition the state of third first flap 3463a and third second flap 3463b from the third release state to the third support state, so that the third package is supported by third first flap 3463a and third second flap 3463b. In this way, package carriage 3450 can collect the first package, the second package, and the third package. Transport vehicle 3400c delivers the first package, the second package, and the third package to their respective receivers.

### Advantageous Effects

Next, advantageous effects achieved by transport vehicle 3400c will be described.

Transport vehicle 3400c according to the present embodiment transports packages and includes: package carriage 3450 connected to first wire 3421b; first winch 3421a capable of reeling out and in first wire 3421b; first first flap 3461a, first second flap 3461b, second first flap 3462a, and second second flap 3462b each connected to the inner wall of package carriage 3450; at least one actuator that actuates first first flap 3461a, first second flap 3461b, second first flap 3462a, and second second flap 3462b; and a controller (control processor 3420). Second first flap 3462a is positioned above first first flap 3461a. Second second flap 3462b is positioned above first second flap 3461b. First first flap 3461a and first second flap 3461b can transition between a first support state in which a package that has entered package carriage 3450 is supported by first first flap 3461a and first second flap 3461b, and a first release state in which the package is not supported by first first flap 3461a and first second flap 3461b. Second first flap 3462a and second second flap 3462b can transition between a second support state in which a package that has entered package carriage 3450 is supported by second first flap 3462a and second second flap 3462b, and a second release state in which the package is not supported by second first flap 3462a and second second flap 3462b.

Accordingly, when transport vehicle 3400c has arrived at the receiver, by transitioning from the first support state in which the package is supported by first first flap 3461a and first second flap 3461b to the first release state, the package can be delivered to the receiver.

When transport vehicle 3400c has arrived at the collector, by transitioning first first flap 3461a and first second flap 3461b from the first release state to the first support state, the package can be collected.

By using second first flap 3462a and second second flap 3462b, a plurality of packages can be delivered to the receiver or collected.

As a result, with this transport vehicle 3400c, increasing the transport volume makes it possible to increase the number of package deliveries and inhibit congestion of transport vehicle 3400c traveling on rail 7.

In transport vehicle 3400c according to the present embodiment, when transport vehicle 3400c arrives above the first location for unloading the first package while the first package is supported by first first flap 3461a and first second flap 3461b and the second package positioned above the first package is supported by second first flap 3462a and second second flap 3462b, the controller controls first winch 3421a to reel out first wire 3421b, thereby placing package carriage 3450 at the first location. After placing package carriage 3450 at the first location, the controller controls at least one actuator to transition the state of first first flap 3461a and first second flap 3461b from the first support state to the first release state, and further transition the state of second first flap 3462a and second second flap 3462b from the second support state to the second release state, thereby placing the first package at the first location. After placing the first package at the first location, the controller controls first winch 3421a to reel in first wire 3421b, thereby moving package carriage 3450 upward to reach the first position. After package carriage 3450 reaches the first position, the controller controls at least one actuator to transition the state of first first flap 3461a and first second flap 3461b from the first release state to the first support state, so that the second package is accommodated in package carriage 3450 by being supported by first first flap 3461a and first second flap 3461b. When transport vehicle 3400c including package carriage 3450 containing the second package arrives above the second location for unloading the second package, the controller controls first winch 3421a to reel out first wire 3421b, thereby placing package carriage 3450 at the second location. After package carriage 3450 is placed in the second location, the controller controls at least one actuator to transition the state of first first flap 3461a and first second flap 3461b from the first support state to the first release state, thereby placing the second package in the second location.

With this, when package carriage 3450 is loaded with the first package and the second package, the first package (the first package loaded on the first tier) stacked below the second package in package carriage 3450 can be delivered to the first location. After delivering the first package, after moving package carriage 3450 upward to reach the first position, by transitioning first first flap 3461a and first second flap 3461b from the first release state to the first support state, the second package can be transferred to the first tier. Therefore, the second package can be smoothly delivered to the second location.

With this transport vehicle 3400c, increasing the transport volume makes it possible to increase the number of package deliveries and inhibit congestion of transport vehicle 3400c traveling on rail 7.

In transport vehicle 3400c according to the present embodiment, when transport vehicle 3400c arrives above the third location for collecting the third package, the controller controls first winch 3421a to reel out first wire 3421b, thereby placing package carriage 3450 over so as to cover the third package placed at the third location. After package carriage 3450 is placed over so as to cover the third package placed at the third location, the controller controls at least one actuator to transition the state of first first flap 3461a and first second flap 3461b from the first release state to the first support state, so that the third package is accommodated in package carriage 3450 by being supported by first first flap 3461a and first second flap 3461b. When transport vehicle 3400c including package carriage 3450 containing the third package arrives above the fourth location for collecting the fourth package, the controller controls first winch 3421a to reel out first wire 3421b, thereby positioning package carriage 3450 above the fourth package placed at the fourth location. After package carriage 3450 is positioned above the fourth package placed in the fourth location, the controller controls at least one actuator to transition the state of first first flap 3461a and first second flap 3461b from the first support state to the first release state, thereby placing the third package above the fourth package. After placing the third package on the fourth package, the controller controls first winch 3421a to reel out first wire 3421b, thereby moving package carriage 3450 downward to reach the second position. After package carriage 3450 reaches the second position, the controller controls at least one actuator to transition the state of first first flap 3461a and first second flap 3461b from the first release state to the first support state, so that the fourth package is accommodated in package carriage 3450 by being supported by first first flap 3461a and first second flap 3461b, and further transition the state of second first flap 3462a and second second flap 3462b from the second release state to the second support state, so that the third package is accommodated in package carriage 3450 by being supported by second first flap 3462a and second second flap 3462b.

With this, when package carriage 3450 is loaded with the third package, when collecting the fourth package, after moving package carriage 3450 upward to reach the second position, by transitioning the state of second first flap 3462a and second second flap 3462b from the second release state to the second support state, the fourth package can be accommodated on the second tier, and by transitioning the state of first first flap 3461a and first second flap 3461b from the first release state to the first support state, the third package can be accommodated on the first tier. Therefore, the third package and the fourth package can be delivered.

In this transport vehicle 3400c, increasing the transport volume makes it possible to increase the number of package deliveries and inhibit congestion of transport vehicle 3400c traveling on rail 7.

### (Other Variations)

Although the present disclosure has been described above based on various embodiments, the present disclosure is not limited to these embodiments.

The unmanned transport system according to the embodiment described above may be applied to an autonomous aerial vehicle instead of an unmanned aerial vehicle, for example. In this case, the term "unmanned aerial vehicle" or "drone" used in the foregoing descriptions is replaced with "autonomous aerial vehicle" as appropriate. Alternatively, the techniques described above may be applied to any aerial vehicle regardless of whether the aerial vehicle is manned or unmanned or regardless of whether the aerial vehicle is autonomously driven or manually driven.

Each element included in the system according to the above embodiments may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

The processors functioning as the elements in the system are typically implemented as an LSI circuit, which is an integrated circuit. These processors may be realized as individual chips, or a portion or all of the processors may be realized collectively as a single chip.

Moreover, circuit integration is not limited to LSI; the processors may be realized as dedicated circuits or generic processors. A field programmable gate array (FPGA) that is programmable after the LSI circuit is manufactured, or a reconfigurable processor whose connections and settings regarding circuit cells in the LSI circuit are reconfigurable, may be used.

Each element may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

All of the values used above are mere examples used for illustrative purposes; the embodiments of the present disclosure are not limited to the exemplary values.

The block diagrams illustrate one example of the division of functional blocks; a plurality of functional blocks may be realized as a single functional block, a single functional block may be broken up into a plurality of functional blocks, and part of one function may be transferred to another functional block. The functions of a plurality of functional blocks having similar functions may be processed by a single piece of hardware or software in parallel or by time-division.

The order in which the steps in the flowcharts are executed are mere examples in order to specifically describe the present disclosure, and may include orders other than those exemplified. Moreover, some of the steps may be executed at the same time as (in parallel with) other steps.

### [Additional Comments]

An unmanned aerial vehicle is an unmanned aerial vehicle that delivers a package, and the unmanned aerial vehicle includes a plurality of rotary wings, a plurality of first motors that respectively rotate the plurality of rotary wings, a main body that supports the plurality of first motors, a connector that is to be connected to a rail provided at a position spaced apart from a ground surface with the main body hanging from the connector, a movable block that sets an inclination of an virtual plane containing the plurality of rotary wings relative to a support direction in which the connector is supported on the rail, and a control circuit that controls the plurality of first motors and the movable block. The connector includes a first end connected to the main body and a second end to be slidably connected to the rail. The support direction extends from the first end toward the second end of the connector. When the second end of the connector is connected to the rail, the control circuit (i) sets a rotation rate of the plurality of first motors to a rotation rate that is lower than a minimum rotation rate necessary for causing the unmanned aerial vehicle to float and that is higher than a minimum rotation rate necessary for propelling the unmanned aerial vehicle in a direction in which the rail extends and (ii) causes the movable block to increase an angle formed by a normal direction of the virtual plane relative to the support direction of the connector.

According to this configuration, the unmanned aerial vehicle can move along the rail while the connector is connected to the rail. In the case of (i), the control circuit controls the rotation rate of the plurality of first motors so as to achieve the rotation rate that is lower than the minimum rotation rate necessary for causing the unmanned aerial vehicle to hover and that is higher than the minimum rotation rate necessary for propelling the unmanned aerial vehicle. Thus, the unmanned aerial vehicle can move along the rail at an appropriate speed. In the case of (ii), the control circuit controls the actuator so as to change the inclination of the virtual plane containing the plurality of rotary wings relative to the support direction of the connector. This makes it possible to regulate the speed of the unmanned aerial vehicle.

A delivery system may include an unmanned aerial vehicle, a plurality of support pillars, and a rail spanning between two adjacent support pillars among the plurality of support pillars.

The movable block may be located between the main body and the connector.

This configuration allows the movable block to change the angle of the connector relative to the main body with ease.

For example, in a case where the connector is disposed at or around the center of gravity of the main body, the movable block is also disposed at or around the center of gravity of the main body. This configuration makes it possible to balance the center of gravity of the unmanned aerial vehicle.

The unmanned aerial vehicle further includes a pair of wings.

According to this configuration, for example, the unmanned aerial vehicle can be rotated in the horizontal direction if the pair of wings are yaw wings, or the unmanned aerial vehicle can be rotated in the vertical direction if the pair of wings are pitch wings. Therefore, the traveling direction of the unmanned aerial vehicle can be steered freely, and the unmanned aerial vehicle can be moved stably.

After the control circuit has increased the angle with the movable block, the control circuit may disengage the connector from the rail if the propelling speed of the unmanned aerial vehicle has exceeded a predetermined value.

This configuration can keep the connector from making contact with the rail, and thus the safety of the unmanned aerial vehicle can be increased.

If the connector is being disengaged from the rail, the control circuit may cause the movable block to reduce the angle and control the rotation rate of the plurality of first motors so as to achieve a rotation rate higher than the minimum rotation rate necessary for causing the unmanned aerial vehicle to hover.

According to this configuration, when the connector is disengaged from the rail, reducing the angle allows the unmanned aerial vehicle to hover to a predetermined height from the ground surface. This can keep the unmanned aerial vehicle from making contact with an object, and thus the safety of the unmanned aerial vehicle can be increased.

The control circuit may control the rotation rate of the plurality of first motors so as to increase the angle to greater than 15 degrees in (ii).

With these, the speed of the unmanned aerial vehicle can be appropriate.

The control circuit may control the rotation rate of the plurality of first motors so as to increase the angle to greater than 45 degrees in (ii).

The control circuit may control the rotation rate of the plurality of first motors so as to increase the angle to greater than 65 degrees in (ii).

The control circuit may control the rotation rate of the plurality of first motors so as to increase the angle to greater than 80 degrees in (ii).

The connector may include a support portion swingably connected to the main body and a first arm connected to one end of the support portion.

This configuration allows the first arm to swing along with a swinging movement of the support portion. Therefore, the first arm can connect itself to the rail more easily.

The first arm may be a hanger for hanging the unmanned aerial vehicle from the rail.

According to this configuration, the first arm can be hung on the rail when the unmanned aerial vehicle has stopped. Therefore, a package can be placed at a receiver with the unmanned aerial vehicle hanging from the rail.

The connector may further include a wheel for rotatable contact with the rail that is connected to the first arm.

According to this configuration, when the unmanned aerial vehicle becomes connected to the rail, the unmanned aerial vehicle can move along the rail with the wheel making contact with the rail. The wheel starts rotating upon friction with the rail. Therefore, the unmanned aerial vehicle can travel on the rail solely with the propelling force produced by the rotation of the rotary wings in the traveling direction. Thus, this configuration renders it unnecessary for the unmanned aerial vehicle to use the rotary force of the rotary wings as a lifting force for lifting itself up. As a result, the energy consumed by the unmanned aerial vehicle can be reduced.

The connector may further include a second arm connected to one end of the support portion.

According to this configuration, not only the first arm but also the second arm can be connected to the rail. Therefore, the possibility that the unmanned aerial vehicle falls off from the rail can be reduced, and the safety in the system that includes the unmanned aerial vehicle can be further increased.

The first arm may be a first hanger for hanging the unmanned aerial vehicle from the rail. The second arm may be a second hanger for hanging the unmanned aerial vehicle from the rail. The connector may further include a first actuator that sets the angle of the first arm relative to the support portion and a second actuator that sets the angle of the second arm relative to the support portion.

This configuration makes it possible to hang the unmanned aerial vehicle from the rail reliably. Therefore, the possibility that the unmanned aerial vehicle falls off from the rail can be reduced, and the safety in the system that includes the unmanned aerial vehicle can be further increased.

The connector may further include a base disposed between the support portion and the first and second arms, and a third actuator that sets the angle of the base relative to the support portion.

According to this configuration, the height of the first arm relative to the main body or the height of the second arm relative to the main body can be changed only by changing the angle of the base. Therefore, the heights of the first arm and the second arm can be changed without tilting the main body, and thus the stability of the unmanned aerial vehicle can be maintained.

The first arm may include a first hook that extends from a first connected end connected to the first actuator to a first open end. The second arm may include a second hook that extends from a second connected end connected to the second actuator to a second open end. The first hook may include a first bent portion that is bent in a first direction and that is located between the first connected end and the first open end. The second hook may include a second bent portion that is bent in a second direction opposite the first direction and that is located between the second connected end and the second open end.

According to this configuration, the horizontal attitude of the main body can be maintained when the first hook is hung on the rail, and the horizontal attitude of the main body can be maintained also when the second hook is hung on the rail. Therefore, the first hook and the second hook can maintain an appropriate attitude of the unmanned aerial vehicle.

The first hook and the second hook make it easier to hook the unmanned aerial vehicle to the rail.

When the unmanned aerial vehicle is slidably hung from a first rail via first the hook, the control circuit may control the second actuator so as to hook the second hook onto a second rail that extends along and adjacent to the first rail and control the first actuator so as to disengage the first hook from the first rail.

According to this configuration, for example, when the first hook of the unmanned aerial vehicle is connected to the first rail and if the first hook is disengaged from the first rail after the second hook has become connected to the second rail, the unmanned aerial vehicle can switch the connection from the first rail to the second rail serving as another rail and move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

A delivery system may include an unmanned aerial vehicle, a plurality of support pillars, and the first rail and the second rail spanning between two adjacent support pillars among the plurality of support pillars.

When the unmanned aerial vehicle is slidably hung from a first rail via first the hook and the second hook, the control circuit may control the second actuator so as to disengage the second hook from the first rail and hook the second hook onto a second rail that extends along and adjacent to the first rail and control the first actuator so as to disengage the first hook from the first rail and hook the first hook onto the second rail.

According to this configuration, for example, when the first hook and the second hook of the unmanned aerial vehicle are connected to the first rail and if the first hook is disengaged from the first rail and connected to the second rail after the second hook has disengaged from the first rail and become connected to the second rail, the unmanned aerial vehicle can switch the connection from the first rail to the second rail serving as another rail and move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

When the second hook is to be hooked onto the second rail, the control circuit may tilt the main body or the support portion in a second direction so as to position the second connected end higher than the first connected end. When the first hook is to be disengaged from the first rail, the control circuit may tilt the main body or the support portion in a first direction so as to position the first connected end higher than the second connected end.

According to this configuration, by tilting the main body or the support portion, the first hook and the second hook can be hooked onto the rail with ease, or the first hook and the second hook can be disengaged from the rail with ease.

The unmanned aerial vehicle may further include a hanging wire that is connected to the main body and that hangs a package therefrom and a lift motor that can reel in the hanging wire. The control circuit may position the unmanned aerial vehicle at a position vertically above a storage device for storing a package with the connector being connected to the rail. Then, the control circuit may reel out the hanging wire by driving the lift motor and lower the package from the main body so as to store the package into the storage device.

According to this configuration, upon the unmanned aerial vehicle arriving at the destination point, the control circuit controls the lift motor so as to reel out the hanging wire. Thus, the unmanned aerial vehicle can lower the package and store the package into the storage device. Therefore, the unmanned aerial vehicle can deliver the package to the receiver.

While the control circuit is reeling out the hanging wire, the control circuit may adjust at least one of the position and the orientation of the main body in accordance with the position of the package relative to the storage device.

According to this configuration, even if the position of the unmanned aerial vehicle fails to match the position directly above the storage device, the control circuit can position the main body relative to the storage device by adjusting at least one of the position and the orientation of the main body. Therefore, the unmanned aerial vehicle can reliably lower the package and store the package into the storage device, which in turn makes it possible to reliably deliver the package to the receiver.

In particular, even if the unmanned aerial vehicle moves from a position directly above the storage device due to the wind or the like, the unmanned aerial vehicle can position the main body relative to the storage device.

When the position of the package is displaced in a third direction from the position vertically above the storage device, the control circuit may move the unmanned aerial vehicle in a fourth direction opposite the third direction, along the direction in which the rail extends.

According to this configuration, even if the position of the package has changed (moved) in the third direction via the hanging wire due to the wind or the like, the control circuit can change the position of the unmanned aerial vehicle in the fourth direction, which is the opposite direction of the third direction. Therefore, the unmanned aerial vehicle can reliably lower the package and store the package into the storage device, which in turn makes it possible to more reliably deliver the package to the receiver.

When the position of the package is displaced in a fifth direction from the position vertically above the storage device, the control circuit may swing the unmanned aerial vehicle about the rail and move the center of gravity of the unmanned aerial vehicle in a sixth direction, which is the opposite direction of the fifth direction.

According to this configuration, even if the package displaces (moves) in the fifth direction via the hanging wire due to the wind or the like, the control circuit can change the position of the unmanned aerial vehicle in the sixth direction, which is the opposite direction of the fifth direction, by moving the center of gravity of the unmanned aerial vehicle. Therefore, the unmanned aerial vehicle can reliably lower the package and store the package into the storage device, which in turn makes it possible to more reliably deliver the package to the receiver.

The unmanned aerial vehicle may further include a thruster device that is attachable to and detachable from a package, and the thruster device may include a plurality of propellers, a plurality of second motors that respectively rotate the plurality of propellers, and a support member that supports the plurality of second motors.

With this, even if the unmanned aerial vehicle is misaligned relative to a position directly above the storage device, the thruster device can guide the package to the storage device. Therefore, the unmanned aerial vehicle can reliably lower the package and store the package into the storage device, which in turn makes it possible to more reliably deliver the package to the receiver. Even in a situation in which the opening of the storage device is narrow and it is difficult to insert a package, the unmanned aerial vehicle can reliably insert the package into the storage device. This eliminates the need for a large area to land the unmanned aerial vehicle.

In particular, even if the unmanned aerial vehicle moves from a position directly above the storage device due to the wind or the like, the thruster device can store the package in the storage device.

The plurality of propellers may include a first propeller disposed on a first side portion of the support member and a second propeller disposed on a second side portion different than the first side portion of the support member.

With this, the position and orientation of the thruster device relative to the storage device can be adjusted. Therefore, with this unmanned aerial vehicle, the thruster device can more reliably store the package in the storage device.

The control circuit may control the thruster device to actuate at least one of the plurality of second motors during at least part of a period of time during which the hanging wire is being reeled out.

With this, when lowering the package from the unmanned aerial vehicle, the position and orientation of the thruster device relative to the storage device can be adjusted. Therefore, with this unmanned aerial vehicle, the package can be smoothly stored in the storage device.

In the delivery system, the plurality of support pillars may each be a utility pole.

According to this configuration, existing utility poles can be used as support pillars, and no new support pillars need to be installed for the rails. Therefore, this system can prevent a surge in the cost of installation.

The delivery system may further include a lead-in support pillar disposed within a predetermined site and a lead-in wire stretched to the rail. The height from the ground surface to a first connection point at which the lead-in wire and the lead-in support pillar are connected to each other may be lower than the height from the ground surface to a second connection point at which the lead-in wire and the rail are connected to each other.

According to this configuration, the rail is disposed at a position higher than the first connection point, and thus the unmanned aerial vehicle can move along a high position. Since the unmanned aerial vehicle travels along a position where the unmanned aerial vehicle is less likely to be recognized by people, the privacy of the user at the receiver and the privacy of people in a facility, such as a home, that is located so as to face a rail can be protected.

The utility pole may support a power transmission line, and the rail may be provided at a position that is lower than the power transmission line and higher than the leading end of the lead-in support pillar.

According to this configuration, since the rail is disposed under the power transmission line, the rail can be disposed at a position where the unmanned aerial vehicle will not make contact with the power transmission line, and the unmanned aerial vehicle can travel along the rail. Therefore, the safety of the unmanned aerial vehicle delivering packages can be ensured.

The plurality of support pillars may be streetlights.

According to this configuration, existing streetlights can be used as support pillars, and no new support pillars need to be installed for the rails. Therefore, this system can prevent a surge in the cost of installation.

The delivery system may further include a protective net stretched along a position vertically below the approaching region of the first rail and the second rail. The approaching region is a region where the distance between the first rail and the second rail is smaller than or equal to the width of the unmanned aerial vehicle.

According to this configuration, since the distance between the first rail and the second rail is smaller than the width (the size) of the main body, the unmanned aerial vehicle can make a switch from the first rail to the second rail with ease and then move along the second rail.

As the protective net is provided along a position vertically below the approaching region of the first rail and the second rail, even if the unmanned aerial vehicle becomes disengaged from the first rail and the second rail, the possibility that the unmanned aerial vehicle falls to the ground can be reduced. Therefore, the safety in the system that includes the unmanned aerial vehicle can be further increased.

The height of at least a portion of the second rail may be higher than the height of an adjacent first rail.

According to this configuration, when two unmanned aerial vehicles are traveling along the first rail in opposite directions, one unmanned aerial vehicle of the two unmanned aerial vehicles can take refuge on the second rail. In other words, the second rail can be used as a refuge track. This configuration can keep the unmanned aerial vehicles from colliding with each other or inhibit the congestion of unmanned aerial vehicles.

The angle may be at least -30 degrees and at most +30 degrees.

Since this inhibits an increase in the amount of thrust the device produces for hovering, for example, it is possible to inhibit the wire from becoming slack due the device suddenly rising.

The device may further include a protective member surrounding the plurality of propellers.

With this, since the protective member can protect the rotating propellers, the propellers can be prevented from coming into contact with other objects.

The device may further include a reel to which the other end of the wire is connected, and a lift motor that rotates the reel to reel out the wire. When the reel is positioned vertically above a storage device for storing the package, the controller starts actuating the plurality of motors after the length of the portion of the wire that has been reeled out exceeds a predetermined length.

With this, since the device starts adjusting its position relative to the predetermined position when the device approaches the storage device, it easier for the device to align itself relative to the predetermined position.

The predetermined length may be equivalent to half the distance from the storage device to the reel.

With this, since the device starts adjusting its position relative to the predetermined position when the device is positioned near the storage device, it even easier for the device to align itself relative to the predetermined position.

Each of the plurality of propellers may include a plurality of blades. A plurality of protrusions may be provided on the surface of each of the plurality of blades. The plurality of protrusions may form a striped pattern extending in the direction of rotation of the plurality of blades.

This makes it possible to reduce the influence of wind during flight of the device. This makes it even easier to align the device relative to the predetermined position, because the attitude of the device can be stabilized even in windy conditions.

A storage device may include: a container that defines a space for storing a package; a top lid that is provided on a top portion of the container and can open and close a top opening for inserting the package into the space through the top opening; and a side lid that is provided on a side portion of the container and can open and close a side opening for removing the package in the space through the side opening.

With this, a package can be placed into the space of the storage device from above the storage device, and a package stored in the space can be removed from the side of the storage device. Accordingly, a package can be easily removed.

A system may include a storage device and a lifting device that is attachable to and detachable from a package and can be lowered from vertically above the storage device. The lifting device may include a protrusion. The storage device may include a hole that is provided in the top portion and accommodates the insertion of the protrusion, and a mechanism for opening the top lid when the protrusion is inserted into the hole.

With this, when the lifting device stores the package in the storage device, the lifting device can be aligned with the top opening of the storage device by inserting the protrusion into the hole. As a result, the package can be stored with certainty in the space in the storage device.

An unmanned aerial vehicle may include: a plurality of rotary wings; a plurality of motors that respectively rotate the plurality of rotary wings; a main body that supports the plurality of motors; and a connector for connecting to a rail positioned separated from the ground surface while the main body is hanging. The connector may include: a fixed portion; a first arm including one end connected to the fixed portion and another end that opens and closes with respect to the fixed portion; a second arm including one end connected to the fixed portion and another end that opens and closes with respect to the fixed portion; a first actuator that opens and closes the first arm; a second actuator that opens and closes the second arm; and a controller that controls the first actuator and the second actuator. A first region enclosed by the first arm in the closed state and the fixed portion may be separated from a second region enclosed by the second arm in the closed state and the fixed portion.

With this, when the first arm of the unmanned aerial vehicle is connected to a first rail, which is one example of the rail, the first arm can be disconnected from the first rail after the second arm is connected to a second rail. This allows the unmanned aerial vehicle to switch connections from the first rail to the second rail, which is one example of another rail, and continue moving.

The fixed portion may extend upwardly from the main body and include a partition portion separating the first region and the second region.

With this, a single connector can be used to connect to two rails. Accordingly, the attitude of the connector can be maintained more stably than when two connectors are used.

The controller may control the first actuator and the second actuator so that at least one of the first arm and the second arm is in a closed state.

With this, if a rail is present in at least one of the closed first region and the closed second region, the unmanned aerial vehicle can securely hang from the rail.

When the controller receives an instruction to change the first arm from the closed state to the open state, the controller may determine whether the second arm is in the closed state or not. When the second arm is in the closed state, the controller may change the first arm to the open state. When the second arm is in the open state, the controller may maintain the first arm in the closed state.

With this, when a second rail is connected to the second arm in the closed state, a first rail can be connected to the first arm. When the second arm is in the open state, if a first rail is connected to the first arm in the closed state, the first arm can be maintained in the closed state without placing the first arm in the open state. In this way, the unmanned aerial vehicle can reliably hang from a rail, thereby inhibiting the unmanned aerial vehicle from falling.

When the controller receives an instruction to change the second arm from the closed state to the open state, the controller may determine whether the first arm is in the closed state or not. When the first arm is in the closed state, the controller may change the second arm to the open state. When the first arm is in the open state, the controller may maintain the second arm in the closed state.

With this, when a first rail is connected to the first arm in the closed state, a second rail can be connected to the second arm. When the first arm is in the open state, if a second rail is connected to the second arm in the closed state, the second arm can be maintained in the closed state without placing the second arm in the open state. In this way, the unmanned aerial vehicle can reliably hang from a rail, thereby inhibiting the unmanned aerial vehicle from falling.

The controller may further control the rotational speed of the plurality of motors, and when the first arm is in the open state, the second arm is in the closed state, and the second arm is hanging from the rail passing through the second region, the controller may increase a first rotational speed of a first motor, which is the motor closest to the first arm among the plurality of motors, to a rotational speed greater than a second rotational speed of a second motor, which is the motor closest to the second arm among the plurality of motors. Alternatively, when the second arm is in the open state, the first arm is in the closed state, and the first arm is hanging from the rail passing through the first region, the controller may increase the second rotational speed of the second motor, which is the motor closest to the second arm among the plurality of motors, to a rotational speed greater than the first rotational speed of the first motor, which is the motor closest to the first arm among the plurality of motors.

With this, if the second arm is in the closed state and the first arm is in the open state, the weight of the first arm moves the center of gravity to the first arm side. Therefore, by making the first rotational speed of the first motor on the first arm side greater than the second rotational speed of the second motor on the second arm side, an amount of buoyancy equivalent to the weight of the center of gravity displaced to the first arm side can be imparted to the unmanned aerial vehicle.

If the first arm is in the closed state and the second arm is in the open state, the weight of the second arm moves the center of gravity to the second arm side. Therefore, by making the second rotational speed of the second motor on the second arm side greater than the first rotational speed of the first motor on the first arm side, an amount of buoyancy equivalent to the weight of the center of gravity displaced to the second arm side can be imparted to the unmanned aerial vehicle.

As a result, the unmanned aerial vehicle can maintain the attitude of the main body of the unmanned aerial vehicle approximately parallel to the horizontal direction, even if the center of gravity is displaced from the center of the main body of the unmanned aerial vehicle.

The connector may further include a third actuator that changes the angle of the fixed portion relative to the main body. The controller may further control the third actuator. When the first arm is in the open state, the second arm is in the closed state, and the second arm is hanging from the rail passing through the second region, the controller may change the angle via the third actuator to position the second region directly above the center of the main body. When the second arm is in the open state, the first arm is in the closed state, and the first arm is hanging from the rail passing through the first region, the controller may change the angle via the third actuator to position the first region directly above the center of the main body.

With this, if the first arm is in the open state and the second arm hanging on the second rail is in the closed state, the first rail present in the first region may be let outside of the first region by simply changing the attitude (angle) of the fixed portion relative to the main body of the unmanned aerial vehicle.

If the second arm is in the open state and the first arm hanging on the first rail is in the closed state, the second rail present in the second region can be let outside of the second region by simply changing the attitude (angle) of the fixed portion relative to the main body of the unmanned aerial vehicle.

Thus, the first rail can be easily disconnected from the connector and the second rail can be easily disconnected from the connector by simply inclining the fixed portion relative to the main body. This also makes it easy to switch the connector connected to the first rail to the second rail or to switch the connector connected to the second rail to the first rail.

A system including the unmanned aerial vehicle and the rail, wherein the rail may be provided with a marker including predetermined information.

This allows the unmanned aerial vehicle to read the predetermined information indicated by the marker added to the rail. For example, the package can be more accurately delivered to the predetermined position by the predetermined information including an address or position information or the like.

A system including the unmanned aerial vehicle and the rail, wherein the rail may be provided with an uneven portion including predetermined information.

This allows the unmanned aerial vehicle to obtain predetermined information from the uneven portion added to the rail as it moves along the rail. For example, the package can be more accurately delivered to the predetermined position by the predetermined information including an address or position information or the like.

An unmanned aerial vehicle may include: a plurality of rotary wings; a plurality of motors that respectively rotate the plurality of rotary wings; a main body that supports the plurality of motors; a connector for connecting to a rail positioned separated from the ground surface while the main body is hanging; an actuator that changes the angle of the normal direction of a virtual plane including the plurality of rotary wings relative to a support direction in which the connector is supported by the rail; and a controller that controls the plurality of motors and the actuator. The connector may include a first end connected to the main body and a second end for slidably connecting to the rail. The support direction may be a direction from the first end of the connector toward the second end of the connector. In a first mode, the controller may align the normal direction of the virtual plane with the support direction via the actuator, and in a second mode, the controller may make the normal direction of the virtual plane orthogonal to the support direction via the actuator.

With this, the controller can change the attitude of the main body of the unmanned aerial vehicle relative to the support direction when traveling on the rail. For example, when the unmanned aerial vehicle is to travel on the rail, the second mode can be implemented, and when the unmanned aerial vehicle is to leave the rail, the first mode can be implemented. Accordingly, the unmanned aerial vehicle can change its flight mode as appropriate depending on the situation.

In a third mode, the controller may make the angle at least 10 degrees and at most 30 degrees via the actuator.

This allows the unmanned aerial vehicle to move along the rail without contact between the rail and the support member.

The unmanned aerial vehicle may further include a sensor that detects the inclination of the rail. The controller may change the angle according to the inclination of the rail.

With this, even when the rail is inclined relative to the horizontal direction, the unmanned aerial vehicle can move along the inclined rail.

The controller may align the normal direction of the virtual plane with the inclination of the rail via the actuator.

This allows the connector to move along the rail, thereby inhibiting the rail from coming into contact with the support member.

When the controller receives a first instruction to propel the unmanned aerial vehicle in a first direction along the rail, the controller may incline the normal direction of the virtual plane from the support direction toward a second direction, rotate the rotary wings of a first motor among the plurality of motors that is positioned in the first direction from the center of the main body in a first direction of rotation, and rotate the rotary wings of a second motor among the plurality of motors that is positioned in the second direction from the center of the main body in a second direction of rotation. The second direction may be the opposite of the first direction, and the second direction of rotation may be the opposite of the first direction of rotation.

This allows the unmanned aerial vehicle to move forward while maintaining the attitude of the unmanned aerial vehicle with respect to the main body relative to the support direction in a desired state.

When the controller obtains a second instruction to propel the unmanned aerial vehicle in the second direction along the rail, the controller may rotate the rotary wings of the first motor in the second direction of rotation and rotate the rotary wings of the second motor in the first direction of rotation.

With this, by reversing the directions of rotation of the first motor and the second motor, the unmanned aerial vehicle can move in reverse. For example, after the package is delivered, the unmanned aerial vehicle can return along the same rail along which it arrived.

When the controller obtains the second instruction, the controller may further incline the normal direction of the virtual plane from the support direction toward the first direction via the actuator, rotate the rotary wings of the first motor in the first direction of rotation, and rotate the rotary wings of the second motor in the second direction of rotation.

This allows the unmanned aerial vehicle to reverse the inclination of the main body of the unmanned aerial vehicle relative to the support direction. The inclination of the normal direction of the virtual plane changes from inclining toward the second direction to inclining toward the first direction relative to the support direction. This allows the unmanned aerial vehicle to move in reverse. For example, in this case as well, after the package is delivered, the unmanned aerial vehicle can return along the same rail along which it arrived.

The connector may include a fixed portion connected to a main body, an arm connected to the rail, and a second actuator that is disposed between the fixed portion and the arm and is rotatable about an axis of rotation parallel to the support direction. When the controller receives a second instruction to propel the unmanned aerial vehicle in the second direction along the rail, the controller may reverse the orientation of the main body by rotating the main body via the second actuator about the axis of rotation that is parallel to the support direction.

This makes it possible to invert the inclination of the main body of the unmanned aerial vehicle symmetrically with respect to the support direction by the fixed portion rotating relative to the arm about the axis of rotation that is parallel to the support direction. This allows the unmanned aerial vehicle to move in reverse. For example, in this case as well, after the package is delivered, the unmanned aerial vehicle can return along the same rail along which it arrived.

The connector may include an arm that is connected to the rail and can be opened and closed, and a third actuator that opens and closes the arm. When the controller receives a second instruction to propel the unmanned aerial vehicle in the second direction along the rail, the controller may change the arm from a closed state to an open state via the third actuator, control the plurality of motors to reverse the orientation of the main body about the support direction, and change the arm from the open state to the closed state via the third actuator.

With this, the unmanned aerial vehicle is temporarily disconnected from the rail, the orientation of the unmanned aerial vehicle is reversed, and then the connector of the unmanned aerial vehicle is reconnected to the rail. For example, in this case as well, after the package is delivered, the unmanned aerial vehicle can return along the same rail along which it arrived.

The connector may include an arm connected to the rail, and a roller that is provided on the inner peripheral surface of the arm and rotatably contacts the rail.

Accordingly, when the connector of the unmanned aerial vehicle is connected to the rail, the roller contacts the rail, allowing the unmanned aerial vehicle to move along the rail. The unmanned aerial vehicle is able to move along the rail using only its own propulsion in the traveling direction. Since the unmanned aerial vehicle does not have to expend energy on lift force to lift itself, the unmanned aerial vehicle can save energy.

The connector may include a pair of brake pads and a braking mechanism that changes the distance between the pair of brake pads so as to sandwich the rail between the pair of brake pads.

Accordingly, when the connector of the unmanned aerial vehicle is connected to the rail, the rail can be sandwiched between the pair of brake pads. This makes it easy to decelerate or stop the unmanned aerial vehicle that is moving.

When the controller obtains a stop instruction to stop the unmanned aerial vehicle, the controller may rotate the rotary wings of the first motor in the second direction of rotation and rotate the rotary wings of the second motor in the first direction of rotation.

This makes it possible to reverse the directions of rotation of the rotary wings of the first motor and the rotary wings of the second motor, in accordance with the stop instruction, relative to the directions of rotation of the rotary wings of the first motor and the rotary wings of the second motor when traveling forward. This makes it possible to stop movement of the unmanned aerial vehicle.

A storage device capable of storing a package delivered by an unmanned aerial vehicle may include: a container including a bottom portion and a side portion; a top lid provided above the container; and a load support member capable of supporting the load of the unmanned aerial vehicle carrying a package. The unmanned aerial vehicle may include a plurality of legs that can land on the load support member. The load support member may include a plurality of recesses that can support the plurality of legs. Each of the plurality of recesses may be a bowl-shaped or cone-shaped recess that opens upwardly.

With this, the plurality of recesses can engage with the plurality of legs to guide the plurality of legs when the unmanned aerial vehicle descends. As a result, the load support member can hold the unmanned aerial vehicle at a predetermined attitude. When the unmanned aerial vehicle delivers a package, the unmanned aerial vehicle can thus position itself vertically above the container. As a result, a package can be stored with certainty in the storage device.

A storage device capable of storing package delivered by an unmanned aerial vehicle may include: a container including a bottom portion and a side portion; a lid rotatably coupled to the container; a load support member capable of supporting the load of the unmanned aerial vehicle carrying a package; and one or more link rods coupled between the load support member and the lid. When the unmanned aerial vehicle applies a load to the load support member, the one or more link rods may transfer the load to the lid and open the lid.

With this, the lid of the container can be automatically opened simply by the unmanned aerial vehicle hanging from the load support member. Accordingly, the package delivered by the unmanned aerial vehicle can be stored in the container.

A method for storing a package delivered by an unmanned aerial vehicle into a storage device may include: supporting the unmanned aerial vehicle using a load support member of the storage device; storing the package in a container after a lid of the storage device opens and the package is lowered from the unmanned aerial vehicle via a wire; disconnecting the connection between the package and the wire; reeling in the wire; and separating the unmanned aerial vehicle from the load support member.

The lid may close to cover the top portion of the container when the load applied to the load support member is removed.

With this, the lid of the container can be automatically closed by the unmanned aerial vehicle flying away from the load support member.

The load support member may be disposed above the container.

With this, since the lid of the container is opened so long as the unmanned aerial vehicle is hanging from the load support member, the package delivered by the unmanned aerial vehicle can be easily stored in the container.

The load support member may be a suspension rod from which the unmanned aerial vehicle can hang.

With this, the load of the unmanned aerial vehicle hanging from the load support member can be reliably supported.

The suspension rod may include a V-shaped or U-shaped bend directly above the container.

This makes it easier to position the unmanned aerial vehicle because the unmanned aerial vehicle can easily be caught by the bend. Accordingly, since the lid of the container is opened so long as the unmanned aerial vehicle is hanging from the load support member, the package delivered by the unmanned aerial vehicle can be stored in the container even more easily.

The one or more link rods may include a first link rod, a second link rod, and a third link rod. A first end of the first link rod may be rotatably coupled to the suspension rod, a second end of the first link rod may be rotatably coupled to a third end of the second link rod, a fourth end of the second link rod may be rotatably coupled to a fifth end of the third link rod, and a sixth end of the third link rod may be rotatably coupled to the lid.

With this, when the unmanned aerial vehicle is hanging from the suspension rod, the suspension rod flexes vertically downward due to the load of the unmanned aerial vehicle. As a result, the load thereof is transferred, via the suspension rod, to the lid of the container via the first link rod, the second link rod, and the third link rod. Accordingly, the lid of the container can be reliably opened simply by the unmanned aerial vehicle hanging from the suspension rod. Accordingly, with this storage device, the package delivered by the unmanned aerial vehicle can be stored in the container more easily.

The storage device may further include a first axle that supports rotation of the load support member at a position between the two ends of the suspension rod, and a second axle that supports rotation of the third link rod at a position between the fifth end and the sixth end of the third link rod.

With this, the load of the unmanned aerial vehicle can be reliably transferred to the first link rod via the first axle. The load of the unmanned aerial vehicle transferred to the third link rod can be reliably transferred to the lid of the container via the second axle. This makes it possible to open the lid of the container.

The storage device may further include a support member that fixes the positions of the first axle and the second axle.

With this, the weight of the unmanned aerial vehicle hanging from the suspension rod can be reliably transferred to the lid of the container via the first link rod, the second link rod, and the third link rod, so that the lid of the container can be reliably opened.

The storage device may further include a door provided on the side portion of the container, and a first interlocking portion that locks the door when the lid is opened.

This inhibits a package from going through the door upon storing the package in the container. Locking the door makes it possible to inhibit forgetting to lock the door manually, which is excellent for convenience because it can inhibit theft of a package stored in the storage device.

The storage device may further include a second interlocking portion that locks the lid when the lid is closed.

With this, the lid can be automatically locked when the lid is closed. This reduces the frequency of having to lock the lid by hand. Locking the lid makes it possible to inhibit forgetting to lock the lid manually, which is excellent for convenience because it can inhibit theft of a package stored in the storage device.

A system may include the storage device and the unmanned aerial vehicle.

The unmanned aerial vehicle may include a first arm for hanging from the load support member.

With this, since the unmanned aerial vehicle can securely hang from the load support member, the unmanned aerial vehicle can maintain its attitude even if the actuation of a motor, for example, is stopped.

In the system, the unmanned aerial vehicle may include: a wire; a second arm that is connected to one end of the wire and holds a package; a reel that is connected to the other end of the wire and is capable of reeling in the wire; and a controller. The controller may reel out the wire to place the package into the container after the lid is opened, and after the package is placed on the bottom portion of the container, may cause the second arm to let go of the package and cause the reel to reel in the wire.

Accordingly, when the unmanned aerial vehicle is hanging from the load support member, the second arm and the package can be lowered toward the container by reeling out the wire. Once the package is placed on the bottom portion of the container, the second arm can be moved away from the package. Thus, the system can ensure that the package is stored inside the container.

In the system, the unmanned aerial vehicle may further include a camera capable of capturing images of the inside of the container.

This enables the unmanned aerial vehicle to confirm whether or not the package has been stored in the container. This can also prevent the second arm from separating from the package if the package is not correctly stored inside the container. After pulling up the package, the package can be stored in the container once again.

In the system, the controller may obtain an image of the inside of the storage device via the camera, and based on the image, execute an authenticated process that confirms that the unmanned aerial vehicle has stored the package.

This ensures the certainty that the package was stored in the container since the storing of the package into the storage device can be verified.

Based on the description of the above embodiments, the following techniques are disclosed.

A package transport vehicle according to one aspect of the present disclosure includes: a main body; a rail holder held by a rail located above the main body; a turntable that rotates the main body; a first slider portion that extends with respect to the main body; and a package holder that holds a package attached to the first slider portion. Note that the turntable may be provided between the main body and the rail holder.

With this, the first slider portion can carry the package holder holding the package to a position spaced away from the rail. Accordingly, a package can be delivered to the receiver without having to install separate rails at the receiver.

Moreover, since the first slider portion can carry a package, the package transport vehicle can be kept away from people. People are therefore less likely to feel stress from the sound or presence of the package transport vehicle. Accordingly, the package transport vehicle is less likely to cause anxiety when carrying a package.

A control method according to another aspect of the present disclosure is a method of controlling a package transport vehicle. The package transport vehicle includes: a main body; a rail holder held by a rail located above the main body; a turntable that is provided between the main body and the rail holder and rotates the main body; a first slider portion that extends with respect to the main body; and a package holder that holds a package attached to the first slider portion. The method includes: rotating the main body by the turntable; and extending the first slider portion with respect to the main body after the turntable rotates the main body.

This control method achieves the same advantageous effects as described above.

In the control method according to another aspect of the present disclosure, the first slider portion includes the package holder at one end of the first slider portion, and a counterweight of a predetermined weight at an other end of the first slider portion. In the rotating, the main body is rotated until a lengthwise direction of the frame approximately perpendicularly intersects an extending direction of the rail. In the extending, the first slider portion is extended from both ends of the frame in the lengthwise direction of the rectangular frame so as to maintain balance between a weight of the package and a weight of the counterweight. Note that the main body may include a frame that is rectangular in plan view. The main body may have a first length in the first direction that is longer than a second length in the second direction orthogonal to the first direction.

This control method achieves the same advantageous effects as described above.

In the control method according to another aspect of the present disclosure, the rail holder includes: a first rail holder located on one side of the frame in the lengthwise direction of the frame; a second rail holder located on an other side of the frame in the lengthwise direction of the frame; and a third rail holder located in a central region of the frame between the one side and the other side in the lengthwise direction of the frame. The package transport vehicle further includes: a second slider portion that is disposed between the first rail holder and the main body and extends with respect to the main body; and a third slider portion that is disposed between the second rail holder and the main body and extends with respect to the main body. The turntable is disposed between the third rail holder and the main body. In the rotating, the turntable is rotated after the second slider portion and the third slider portion are extended to separate the first rail holder and the second rail holder from the rail.

This control method achieves the same advantageous effects as described above. By adjusting the position of the counterweight with respect to the main body, it is possible to tilt the attitude of the package transport vehicle and extend the slider portion toward the receiver located higher or lower than the rail. Accordingly, the package can be delivered even to a receiver at a different height than the rail.

In the package transport vehicle according to another aspect of the present disclosure, the first slider portion extends with respect to the main body after the turntable rotates the main body.

With this, after rotating the first slider portion so as to face the receiver, the first slider portion can be extended with respect to the main body. This makes it possible to more precisely deliver the package to the receiver.

In the package transport vehicle according to another aspect of the present disclosure, the turntable rotates the main body until a lengthwise direction of the frame approximately perpendicularly intersects an extending direction of the rail. Note that the main body may include a frame that is rectangular in plan view. The main body may have a first length in the first direction that is longer than a second length in the second direction orthogonal to the first direction.

This makes it possible to change the attitude of the frame with respect to the turntable by rotating the turntable. It is therefore possible to adjust the direction of extension of the first slider portion with respect to the main body. This makes it possible to more precisely deliver the package to the receiver.

In the package transport vehicle according to another aspect of the present disclosure, the package holder may be a first winch capable of reeling out and in a first wire, and the package transport vehicle may further include: a package carriage connected to the first wire, for holding a package transported by the unmanned transport vehicle; a second winch connected to the package carriage and capable of reeling out and in a second wire; and an unmanned aerial vehicle connected to the second wire.

In the package transport vehicle according to another aspect of the present disclosure, the first slider portion: includes the package holder at one end of the first slider portion, and a counterweight of a predetermined weight at an other end of the first slider portion; and extends so as to maintain balance between a weight of the package and a weight of the counterweight.

With this, when the first slider portion is carrying a package, the attitude of the package transport vehicle can be adjusted via the counterweight and the package. Accordingly, the position of the counterweight relative to the main body can be adjusted so as to maintain the horizontal attitude of the main body, for example. This makes it possible to more precisely deliver the package to the receiver.

In the package transport vehicle according to another aspect of the present disclosure, the counterweight is a battery.

This makes it possible to adjust the attitude of the package transport vehicle using a device required by the package transport vehicle. This eliminates the need for a separate counterweight.

In the package transport vehicle according to another aspect of the present disclosure, the first slider portion: includes the package holder at one end of the first slider portion, and a rotary wing at an other end of the first slider portion; and extends so as to maintain balance between a weight of the package and a buoyancy of the rotary wing.

With this, even if the package is heavy, the package transport vehicle can deliver the package to a predetermined position at a predetermined height because it is difficult for the package transport vehicle to be in a tilted attitude with respect to the horizontal plane.

In the package transport vehicle according to another aspect of the present disclosure, the rail holder includes: a first holder held by the rail from above the rail; and a second holder held by the rail so as to push up on the rail from below.

With this, the rail holder can be connected to the rail so as to clamp the rail from above and below. This inhibits the package transport vehicle from disengaging from the rail, thus inhibiting the package transport vehicle from falling, which ensures the safety of the package transport vehicle.

In the package transport vehicle according to another aspect of the present disclosure, the rail holder includes: a first rail holder located on one side of the frame in the lengthwise direction of the frame; a second rail holder located on an other side of the frame in the lengthwise direction of the frame; and a third rail holder located in a central region of the frame between the one side and the other side in the lengthwise direction of the frame.

This inhibits the package transport vehicle from disengaging from the rail since the package transport vehicle is supported by the rail by three rail holders. With this, the package transport vehicle can be inhibited from falling, which ensures the safety of the package transport vehicle.

In the package transport vehicle according to another aspect of the present disclosure, the first rail holder includes a first rotating roller that contacts the rail and is actuated by an electric motor, the second rail holder includes a second rotating roller that contacts the rail and is actuated by an electric motor, the third rail holder includes a third rotating roller and a fourth rotating roller that contact the rail and are actuated by an electric motor.

This allows the package transport vehicle to move along the rail because the rotating rollers contact the rail. Moreover, since four rotating rollers contact the rail, the package transport vehicle can stably move along the rail.

The package transport vehicle according to another aspect of the present disclosure further includes: a second slider portion that is disposed between the first rail holder and the main body and extends with respect to the main body; and a third slider portion that is disposed between the second rail holder and the main body and extends with respect to the main body. The turntable is disposed between the third rail holder and the main body. The turntable rotates the main body after the second slider portion and the third slider portion extend and the first rail holder and the second rail holder are separated from the rail.

With this, with two rails of different heights, the package transport vehicle can switch from one rail to the other by extending the slider portion. This allows the package transport vehicle to turn right or left when traveling on the rail.

In the package transport vehicle according to another aspect of the present disclosure, the third rail holder holds the rail so as to push up on the rail from below, and the first rail holder and the second rail holder are held by the rail, above the rail.

With this, the first rail holder, the second rail holder, and the third rail holder can sandwich the rail, allowing the package transport vehicle to move stably along the rail.

The package transport vehicle according to another aspect of the present disclosure further includes a motor that rotates the rail holder so as to release a hold of the rail holder by the rail so as to avoid contact between a rail support portion that supports the rail and the rail holder when the package transport vehicle is traveling on the rail.

With this, when the package transport vehicle is traveling on the rail, it can avoid the rail support portion so as to not contact the rail holder. This allows the package transport vehicle to travel along the rail toward the receiver.

An unmanned aerial vehicle according to one aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device that is provided on the main body and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

With this, the main body can be connected to and hanging from the rail via the connecting device, thus preventing the unmanned aerial vehicle from falling even if the main rotary wings do not rotate.

Moreover, by the rotating auxiliary rotary wing while the connecting device is connected to and hanging from the rail, the unmanned aerial vehicle can move along the rail, and thus can move to the destination point. In this case, instead of actuating the main motor, the auxiliary motor can be actuated to move the unmanned aerial vehicle, thus reducing power consumption in the unmanned aerial vehicle.

In the unmanned aerial vehicle according to another aspect of the present disclosure, the at least one connecting device includes a first connecting device, a second connecting device, and a third connecting device. The first connecting device is positioned offset in the first direction from a center of the main body. The second connecting device is positioned offset in a direction opposite the first direction from the center of the main body. The third connecting device is positioned between the first connecting device and the second connecting device, near the center of the main body.

This enables the unmanned aerial vehicle to more safely switch from one rail on which it is traveling to another by using three connecting devices.

Using three connecting devices also enables the unmanned aerial vehicle to more stably connect to the rails. Therefore, with the unmanned aerial vehicle, safety can be ensured.

The unmanned aerial vehicle according to another aspect of the present disclosure further includes a turntable disposed between the third connecting device and the main body, and a ratchet including an engagement receiving portion that engages with an engagement portion of the turntable by being biased by the turntable.

With this configuration, the orientation of the unmanned aerial vehicle can be rotated by rotating the turntable. When rotated by a predetermined angle, the engagement portion of the turntable and the engagement receiving portion of the ratchet engage to control the rotation of the turntable. Since this allows the main body to be oriented as desired, the unmanned aerial vehicle can safely switch from one rail on which it is traveling to another.

In the control method according to another aspect of the present disclosure, the unmanned aerial vehicle includes a turntable disposed between the third connecting device and the main body of the unmanned aerial vehicle, and an orientation of the unmanned aerial vehicle is changed by rotating the main body relative to the turntable.

Since this configuration allows the main body to be oriented as desired, the unmanned aerial vehicle can safely switch from one rail on which it is traveling to another.

In the unmanned aerial vehicle according to another aspect of the present disclosure, a first surface area of a first minimum rectangle that circumscribes a first projected surface formed by projecting the unmanned aerial vehicle onto a first plane whose normal vector extends in the first direction is smaller than a second surface area of a second minimum rectangle that circumscribes a second projected surface formed by projecting the unmanned aerial vehicle onto a second plane whose normal vector extends in the second direction.

With this configuration, the main body is elongated in the lengthwise direction of the rail, so the unmanned aerial vehicle can stably travel along the rail.

In the unmanned aerial vehicle according to another aspect of the present disclosure, the plurality of main rotary wings include: a first main rotary wing; a second main rotary wing adjacent to the first main rotary wing in the second direction; a third main rotary wing adjacent to the first main rotary wing in the first direction; and a fourth main rotary wing adjacent to the second main rotary wing in the first direction and adjacent to the third main rotary wing in the second direction. A first distance between the first main rotary wing and the second main rotary wing is shorter than a second distance between the first main rotary wing and the third main rotary wing.

This configuration enables the first main rotary wing and the second main rotary wing to be arranged along the lengthwise direction of the rail and the third main rotary wing and the fourth main rotary wing to be arranged along the lengthwise direction of the rail. Accordingly, the attitude of the main body can be further stabilized when the unmanned aerial vehicle travels along the rail.

In the unmanned aerial vehicle according to another aspect of the present disclosure, a rotary shaft of the at least one auxiliary motor extends in the first direction.

This configuration enables the unmanned aerial vehicle to easily impart a propulsion force for causing the unmanned aerial vehicle to travel along the rail.

In the unmanned aerial vehicle according to another aspect of the present disclosure, the at least one auxiliary rotary wing is positioned lower than the virtual plane.

This configuration can keep the main rotary wing from making contact with the auxiliary rotary wing, and thus the safety of the unmanned aerial vehicle can be increased.

In the unmanned aerial vehicle according to another aspect of the present disclosure, a rotary shaft of the at least one auxiliary motor has an angle of inclination relative to the first direction that is variable in a plane whose normal vector extends in the second direction.

With this configuration, since the rotary shaft of the auxiliary motor is variable, the unmanned aerial vehicle can be rotated in the yaw direction (horizontal direction). This makes it possible to change the orientation of the unmanned aerial vehicle.

In the unmanned aerial vehicle according to another aspect of the present disclosure, each of the at least one connecting device includes: a fixed portion; a first arm including one end connected to the fixed portion and an other end that opens and closes relative to the fixed portion; a second arm including one end connected to the fixed portion and an other end that opens and closes relative to the fixed portion; a first actuator that opens and closes the first arm; and a second actuator that opens and closes the second arm. The control circuit controls the first actuator and the second actuator. The first arm is positioned in front of the second arm in the first direction.

With this, when the first arm of the unmanned aerial vehicle is connected to the first rail, the first arm can be disconnected from the first rail after the second arm is connected to a second rail, which is a different rail. This allows the unmanned aerial vehicle to switch connections (transfer) from the first rail to the second rail and continue moving.

In the unmanned aerial vehicle according to another aspect of the present disclosure, a first region enclosed by the first arm in a closed state and the fixed portion is separated from a second region enclosed by the second arm in a closed state and the fixed portion.

With this, a single connector can be used to simultaneously connect to two rails. This makes it possible to stabilize the attitude of the unmanned aerial vehicle.

In the unmanned aerial vehicle according to another aspect of the present disclosure, each of the at least one connecting device includes: an arm that is hangable from the at least one rail; and a roller that is provided on an inner peripheral surface of the arm and rotatably contacts the at least one rail.

Accordingly, when the connector of the unmanned aerial vehicle is connected to the rail, the roller contacts and rolls on the rail, allowing the unmanned aerial vehicle to move along the rail. In other words, the unmanned aerial vehicle is able to move along the rail using only its own propulsion in the traveling direction. Accordingly, since the unmanned aerial vehicle does not have to expend energy on lift force to lift itself, the unmanned aerial vehicle can save energy.

A system according to another aspect of the present disclosure includes: the unmanned aerial vehicle; a device including at least one first adapter connectable to at least one package to be delivered by the unmanned aerial vehicle and at least one second adapter attachable to and detachable from the unmanned aerial vehicle; and a wire that connects the unmanned aerial vehicle and the device. The unmanned aerial vehicle includes a reel to which one end of the wire is connected and a lift motor that reels out the wire.

With this, even if there is an obstacle in the vicinity of the predetermined position, the first device and the second device can be moved to avoid the obstacle. It is therefore possible to deliver the package to the predetermined position with certainty since the second device can be moved to a position vertically above the predetermined position.

In the system according to another aspect of the present disclosure, the device includes: a support member provided with the at least one first adapter; a plurality of motors disposed on a plurality of side surfaces of the support member; and a plurality of propellers actuated by the plurality of motors. An angle of each of rotary shafts of the plurality of motors relative to a virtual surface passing through a center of each of the plurality of propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position.

In the system according to another aspect of the present disclosure, the plurality of side surfaces include a first side surface and a second side surface that oppose each other in the first direction in an attached state in which the device is attached to the unmanned aerial vehicle, and a third side surface and a fourth side surface that oppose each other in the second direction in the attached state. The plurality of motors include a first motor disposed on the first side surface, a second motor disposed on the second side surface, a third motor disposed on the third side surface, and a fourth motor disposed on the fourth side surface. The plurality of propellers include a first propeller rotated by the first motor, a second propeller rotated by the second motor, a third propeller rotated by the third motor, and a fourth propeller rotated by the fourth motor.

With this, the device can be made to travel in a desired direction by actuating the first motor, the second motor, the third motor, and the fourth motor. This allows the device to finely adjust its position relative to a predetermined position accurately.

A control method according to one aspect of the present disclosure is a control method of controlling an unmanned aerial vehicle, the unmanned aerial vehicle including: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least three connecting devices that are provided on the main body and are hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor. A first connecting device is positioned offset in the first direction from a center of the main body, a second connecting device is positioned offset in a direction opposite the first direction from the center of the main body, and a third connecting device is positioned between the first connecting device and the second connecting device, near the center of the main body. The control method includes: when the unmanned aerial vehicle switches connection from a first rail to a second rail at an intersection of the first rail and the second rail: determining whether the first connecting device has approached the second rail; when it is determined that the first connecting device has approached the second rail, detaching the first connecting device from the first rail and propelling the unmanned aerial vehicle in the first direction by rotating the at least one auxiliary rotary wing; determining whether the first connecting device has passed the second rail; and when it is determined that the first connecting device has passed the second rail, detaching the second connecting device from the first rail, rotating the unmanned aerial vehicle until the first direction of the unmanned aerial vehicle is parallel to a direction of extension of the second rail, and after rotation of the unmanned aerial vehicle, connecting the first connecting device and the second connecting device to the second rail.

This configuration allows the unmanned aerial vehicle to reliably switch connections (transfer) from the first rail to the second rail.

In the control method according to another aspect of the present disclosure, when it is determined that the first connecting device has passed the second rail, the first connecting device is connected to the first rail and whether a center of gravity of the unmanned aerial vehicle is balanced is determined; and when it is determined that the center of gravity of the unmanned aerial vehicle is balanced, the first connecting device and the second connecting device are detached from the first rail, the unmanned aerial vehicle is rotated until the first direction of the unmanned aerial vehicle is parallel to a direction of extension of the second rail, and after rotation of the unmanned aerial vehicle, the first connecting device and the second connecting device are connected to the second rail.

With this, even if the second rail is inclined with respect to the first rail, for example, the unmanned aerial vehicle can reliably switch connections (transfer) from the first rail to the second rail by changing the balance of the center of gravity of the unmanned aerial vehicle.

In the control method according to another aspect of the present disclosure, after the first connecting device and the second connecting device are connected to the second rail after rotation of the unmanned aerial vehicle, an attitude of the third connecting device is matched to an attitude of each of the first connecting device and the second connecting device by detaching the third connecting device from the first rail and rotating the turntable.

With this configuration, when the third connecting device is detached from the first rail, the attitude of the third connecting device can be matched to the respective attitudes of the first connecting device and the second connecting device. This enables the third connecting device to be connected to the second rail together with the first connecting device and the second connecting device.

In the control method according to another aspect of the present disclosure, the unmanned aerial vehicle includes a rotary wing for rotation that is disposed in a position corresponding to the at least one auxiliary rotary wing in the first direction, and an orientation of the unmanned aerial vehicle is changed using a propulsion force of the rotary wing for rotation.

With this configuration, the traveling direction of the unmanned aerial vehicle can be easily changed by rotating the rotary wing.

A lifting system according to another aspect of the present disclosure may include: an unmanned aerial vehicle; a first device attachable to and detachable from the unmanned aerial vehicle; a first wire that connects the first device and the unmanned aerial vehicle; a first reel capable of reeling in the first wire; a second device attachable to and detachable from a package and attachable to and detachable from the first device; a second wire that connects the first device and the second device; a second reel capable of reeling in the second wire; and a controller. When the unmanned aerial vehicle is in a position separated from the ground, the controller may: detach the first device and the second device from the unmanned aerial vehicle; cause the first reel to reel out the first wire; detach the second device from the first device; and cause the second reel to reel out the second wire.

With this, even when it is difficult to carry the package to a predetermined position, such as when there is an obstacle vertically above the predetermined position, it is possible to move the first device and the second device so as to avoid the obstacle. It is therefore possible to deliver the package to the predetermined position with certainty since the second device can be moved to a position vertically above the predetermined position.

In the lifting system according to another aspect of the present disclosure, the first device may include: a first support member attachable to and detachable from the unmanned aerial vehicle; a plurality of first motors disposed on a plurality of side portions of the first support member; and a plurality of first propellers actuated by the plurality of first motors. The second device may include: a second support member attachable to and detachable from the first device; a plurality of second motors disposed on a plurality of side portions of the second support member; and a plurality of second propellers actuated by the plurality of second motors.

With this, the position of the first device relative to the unmanned aerial vehicle can be adjusted, and the position of the second device relative to the first device can be adjusted. This makes it possible to move the first device and the second device so as to avoid an obstacle. As a result, the package can be reliably delivered to the predetermined position.

In the lifting system according to another aspect of the present disclosure, the controller may: actuate at least one of the plurality of first motors or the plurality of second motors after detaching the first device and the second device from the unmanned aerial vehicle, and actuate the plurality of first motors and the plurality of second motors after detaching the second device from the first device.

This makes it possible to move the first device and the second device as a single unit to a destination position for avoiding the obstacle. Therefore, the controller can inhibit an increase in the processing burden of actuating and controlling the plurality of first motors and the plurality of second motors.

In the lifting system according to another aspect of the present disclosure, after detaching the second device from the first device, the controller may control the plurality of first motors and control the plurality of second motors differently than the plurality of first motors to make a first hanging direction and a second hanging direction mutually different, the first hanging direction being a direction in which the first wire extends between the unmanned aerial vehicle and the first device, and the second hanging direction being a direction in which the second wire extends between the first device and the second device.

With this, even if there is an obstacle vertically above the predetermined position, the first device and the second device can be positioned so as to reliably bypass the obstacle. As a result, with this lifting system, the package can be reliably delivered to the predetermined position.

In the lifting system according to another aspect of the present disclosure, after detaching the second device from the first device, the controller may control the plurality of first motors and control the plurality of second motors differently than the plurality of first motors to reduce or eliminate an amount of overlap between the first device and the second device in terms of area size in a view perpendicular to a ground surface.

With this, the relative positions of the first device and the second device can be changed so that the first device is not disposed vertically above the second device. Accordingly, even if there is an obstacle vertically above the predetermined position, the first device and the second device can be positioned so as to reliably bypass the obstacle. As a result, the package can be reliably delivered to the predetermined position.

In the lifting system according to another aspect of the present disclosure, after detaching the package from the second device, the controller may: reel in the second wire using the second reel; attach the second device to the first device; reel in the first wire using the first reel; and attach the first device and the second device to the unmanned aerial vehicle.

With this, after delivering the package to the predetermined position, the second device can be attached to the first device while reeling in the second wire, and the first device and the second device can be attached to the unmanned aerial vehicle while reeling in the first wire. As a result, it is possible to prevent the first wire and the second wire from being damaged or entangled due to contact with an obstacle or the like. This makes it possible to inhibit a decrease in the operating efficiency of the lifting system.

In the lifting system according to another aspect of the present disclosure, the unmanned aerial vehicle may include an arm capable of engaging a rail, and when the unmanned aerial vehicle is in a position separated from the ground and the arm is engaged with the rail, the controller may detach the first device and the second device from the unmanned aerial vehicle.

This makes it possible to hold the unmanned aerial vehicle onto the rail via the arm. As a result, even if the first device and the second device are detached from the unmanned aerial vehicle, the first device and the second device can be held via the first wire and the second wire. This makes it possible to inhibit the first device and the second device from falling.

Since the unmanned aerial vehicle can be held onto the rail without flying, energy consumption by the unmanned aerial vehicle can be reduced.

In the lifting system according to another aspect of the present disclosure, the lifting system may include: a third device attachable between and detachable from between the first device and the second device; a third wire that connects the first device and the third device; a third reel capable of reeling in the third wire; a fourth wire that connects the third device and the second device; and a fourth reel capable of reeling in the fourth wire.

With this, after delivering the package to the predetermined position, the second device can be attached to the third device while reeling in the fourth wire, the second device and the third device can be attached to the first device while reeling in the third wire, and the second device, the third device, and the first device can be attached to the unmanned aerial vehicle while reeling in the first wire. As a result, it is possible to prevent the first wire, the third wire, and the fourth wire from being damaged or entangled due to contact with an obstacle or the like. This makes it possible to inhibit a decrease in the operating efficiency of the lifting system.

In the lifting system according to another aspect of the present disclosure, an angle of each of rotary shafts of the plurality of first motors relative to a virtual surface passing through a center of each of the plurality of first propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position. It is possible to finely adjust the positions of the first device and the second device relative to the predetermined position by causing the first device and the second device to travel in the desired direction.

When the first device and the second device descend while the support member is hanging from the object via the wire, it is possible to finely adjust the positions of the first device and the second device so that the package aligns with the predetermined position when viewed from the vertical direction.

Accordingly, with the first device and the second device, the package can be placed in the predetermined position. In particular, when the first device and the second device are used outdoors, even if the first device and the second device are misaligned with the predetermined position due to wind or the like, the first device and the second device can move toward the predetermined position to compensate for the misalignment so that package can be placed at the predetermined position.

The lifting system according to another aspect of the present disclosure further includes one or more actuators that adjust the angle of each of the rotary shafts of the plurality of first motors relative to the virtual surface.

This makes it possible to adjust the attitudes of the plurality of first motors relative to the support member. Accordingly, this allows the first device and the second device to move horizontally and vertically. This allows for more accurate positioning of the package to align with the predetermined position.

In the lifting system according to another aspect of the present disclosure, the one or more actuators incline each of the rotary shafts so that the angle is 0 degrees in a first mode, and incline each of the rotary shafts so that the angle is an elevation angle in a second mode.

This makes it possible to individually control the attitude of each rotary shaft of one or more motors among the plurality of rotary shafts of the plurality of motors. Therefore, the positions of the first device and the second device can be fine-tuned more precisely because the attitude, traveling direction, etc., of the first device and the second device can be finely controlled to move the first device and the second device to a predetermined position.

In the lifting system according to another aspect of the present disclosure, the first wire is directly connected to at least one connection point of the first support member.

This makes it possible to hang the first support member via the first wire with only one connection point on the first support member. Accordingly, the configuration of the first wire can be simplified.

In the lifting system according to another aspect of the present disclosure, the first wire includes a first main wire and a plurality of first sub-wires. One ends of the plurality of first sub-wires are respectively directly connected to a plurality of connection points of the first support member, and other ends of the plurality of first sub-wires are connected to one end of the first main wire at a single common connection point. The first main wire hangs and supports the first support member from the unmanned aerial vehicle via the plurality of first sub-wires.

This makes it possible to connect the plurality of first sub-wires to the first support member in one-to-one correspondence via the plurality of connection points. Therefore, the attitude of the first support member while it is hanging by the first main wire and the first sub-wires can be stabilized.

In the lifting system according to another aspect of the present disclosure, the first support member includes a first frame that is polygonal, and the plurality of connection points are arranged at a plurality of portions of the first frame corresponding to a plurality of vertices.

With this, the attitude of the first support member while it is hanging by the first wire can be more reliably stabilized.

In the lifting system according to another aspect of the present disclosure, the first support member includes a first frame that is polygonal, and the at least one connection point is movable in a plane that is within the first frame and parallel to a virtual surface.

This makes it possible to change the position of the one connection point relative to the first support member. Accordingly, for example, even if the center of gravity of the first support member that is holding a package is displaced from the center, the position of the connection point can be changed so as to align the position of the connection point with the center of gravity. Therefore, the attitude of the first support member hanging from the first wire can be corrected to a desired attitude.

In the lifting system according to another aspect of the present disclosure, the plurality of side portions of the first support member includes a first side portion and a second side portion on opposite sides of at least one of the first support member or the package. The plurality of first motors include a first first motor provided on the first side portion and including a first rotary shaft, and a second first motor provided on the second side portion and including a second rotary shaft. The controller executes a third mode that rotates the first rotary shaft in a first direction of rotation and rotates the second rotary shaft in a second direction of rotation opposite the first direction of rotation, and a fourth mode that rotates the first rotary shaft and the second rotary shaft in the second direction of rotation.

With this, by making the direction of rotation of the first rotary shaft of the first motor and the direction of rotation of the second rotary shaft of the second motor opposite directions, the first device and the second device can produce a thrust that causes it to travel in a desired direction. This allows the first device and the second device to finely adjust its position relative to a predetermined position accurately.

In the lifting system according to another aspect of the present disclosure, the plurality of first motors further include a third first motor that is provided on the first side portion in a position adjacent to the first first motor in a virtual surface and includes a third rotary shaft, and a fourth first motor that is provided on the second side portion in a position adjacent to the second first motor in the virtual surface and includes a fourth rotary shaft. The controller rotates the third rotary shaft in the second direction of rotation and rotates the fourth rotary shaft in the first direction of rotation in the third mode, and rotates the third rotary shaft and the fourth rotary shaft in the first direction of rotation in the fourth mode.

With this, by making the direction of rotation of the third rotary shaft of the third motor and the direction of rotation of the fourth rotary shaft of the fourth motor opposite directions, the device can produce a thrust that causes it to travel in a desired direction. Since the directions of rotation of the first rotary shaft of the first motor and the second rotary shaft of the second motor can be controlled, the device can finely adjust its position relative to a predetermined position accurately.

In the lifting system according to another aspect of the present disclosure, the second device further includes a sensor that detects a position of a storage device for housing the package.

This enables the position of the device relative to the storage device to be accurately detected, allowing for more accurate and finer adjustment of the position of the device relative to the storage device.

An unmanned aerial vehicle according to another aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device (connector) that is provided on the main body, extends from the main body in a third direction intersecting the virtual plane, and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

In the unmanned aerial vehicle according to another aspect of the present disclosure, the plurality of main rotary wings include a fifth main rotary wing that rotates in coaxial inversion relative to the first main rotary wing, a sixth main rotary wing that rotates in coaxial inversion relative to the second main rotary wing, a seventh main rotary wing that rotates in coaxial inversion relative to the third main rotary wing, and an eighth main rotary wing that rotates in coaxial inversion relative to the fourth main rotary wing.

In the unmanned aerial vehicle according to another aspect of the present disclosure, the at least one auxiliary rotary wing and the at least one auxiliary motor are arranged at one end of the main body in the first direction.

In the unmanned aerial vehicle according to another aspect of the present disclosure, each of the at least one auxiliary rotary wing includes a plurality of blades each having a variable pitch angle, and the control circuit controls the pitch angle.

In the unmanned aerial vehicle according to another aspect of the present disclosure, each of the at least one auxiliary rotary wing includes a plurality of blades, and a distance between a rotary shaft of the at least one auxiliary motor and the virtual plane is longer than a length of each of the plurality of blades.

In the unmanned aerial vehicle according to another aspect of the present disclosure, each of the at least one auxiliary rotary wing is attached to the main body so as to be slidable in the third direction.

In the unmanned aerial vehicle according to another aspect of the present disclosure, the plurality of main rotary wings include two blades, and the control circuit stops the two blades in a position parallel to the first direction when stopping the plurality of main motors and operating the at least one auxiliary motor.

In the unmanned aerial vehicle according to another aspect of the present disclosure, the at least one connecting device includes a first connecting device and a second connecting device adjacent to the first connecting device in the first direction.

In the unmanned aerial vehicle according to another aspect of the present disclosure, the at least one rail includes a first rail and a second rail that extend parallel to each other, and the at least one connecting device includes a first arm hangable from the first rail and a second arm hangable from the second rail.

In the unmanned aerial vehicle according to another aspect of the present disclosure, each of the at least one connecting device includes: a fixed portion; a first arm including one end connected to the fixed portion and another end that opens and closes with respect to the fixed portion; a second arm including one end connected to the fixed portion and another end that opens and closes with respect to the fixed portion; a first actuator that opens and closes the first arm; and a second actuator that opens and closes the second arm. The control circuit controls the first actuator and the second actuator. A first region enclosed by the first arm in the closed state and the fixed portion are separated from a second region enclosed by the second arm in the closed state and the fixed portion.

In the unmanned aerial vehicle according to another aspect of the present disclosure, the fixed portion includes a partition portion that extends in the third direction and separates a first region and a second region.

A system according to another aspect of the present disclosure includes an unmanned aerial vehicle and a device including at least one first adapter connectable to at least one package to be delivered by the unmanned aerial vehicle and at least one second adapter attachable to and detachable from the unmanned aerial vehicle.

The system according to another aspect of the present disclosure further includes a wire that connects the unmanned aerial vehicle and the device, and the unmanned aerial vehicle further includes a reel to which one end of the wire is connected and a lift motor that reels out the wire.

In the system according to another aspect of the present disclosure, the control circuit detaches, from the unmanned aerial vehicle, the device to which the at least one package is attached, and causes the lift motor to reel out the wire.

In the system according to another aspect of the present disclosure, the control circuit disconnects the at least one package from the device, and causes the lift motor to reel in the wire.

In the system according to another aspect of the present disclosure, the at least one package includes a plurality of packages, and the at least one first adapter includes a plurality of first adapters individually attachable to and detachable from the plurality of packages.

An unmanned aerial vehicle according to another aspect of the present disclosure includes: a main body; a first movable body movably connected to the main body on a first side of the main body; a second movable body movably connected to the main body on a second side of the main body, the second side being opposite to the first side; a plurality of first motors arranged on the first movable body; a plurality of second motors arranged on the second movable body; a plurality of first rotary wings respectively rotated by the plurality of first motors; a plurality of second rotary wings respectively rotated by the plurality of second motors; and at least one connecting device that extends upward from the main body and is hangable from at least one rail spaced apart from a ground surface.

The unmanned aerial vehicle according to another aspect of the present disclosure further includes: a first actuator capable of changing a first angle of the first movable body relative to the main body; a second actuator capable of changing a second angle of the second movable body relative to the main body; and a control circuit that controls the plurality of first motors, the plurality of second motors, the first actuator, and the second actuator.

In the unmanned aerial vehicle according to another aspect of the present disclosure, the control circuit switches between the following modes (a) through (c) via the first actuator and the second actuator: (a) a first mode that places first rotary shafts of the plurality of first motors and second rotary shafts of the plurality of second motors in a vertical orientation; (b) a second mode that places the first rotary shafts in a first horizontal direction orientation and places the second rotary shafts in the vertical orientation; and (c) a third mode places the first rotary shafts in the first horizontal direction orientation and places the second rotary shafts in a second horizontal direction orientation opposite the first horizontal direction orientation.

In the unmanned aerial vehicle according to another aspect of the present disclosure, the first horizontal direction and the second horizontal direction each point outward from the main body.

A control method according to one aspect of the present disclosure is a control method of an unmanned aerial vehicle. The unmanned aerial vehicle holds a transported item requiring cold or heat retention. The control method includes: a first obtainment step of obtaining a destination position of the unmanned aerial vehicle; a second obtainment step that obtains a current position of the unmanned aerial vehicle; and a third obtainment step of obtaining an expected time at which the transported item is expected to reach a permissible upper temperature limit. When a time at which the unmanned aerial vehicle will reach the destination position from the current position is later than the expected time, the unmanned aerial vehicle is caused to move to the departure position, and when a time at which the unmanned aerial vehicle will reach the destination position from the current position is at or earlier than the expected time, the unmanned aerial vehicle is caused to move to the destination position.

With this, the unmanned aerial vehicle can deliver the transported item to the destination position or cancel transportation of the transported item and return to the departure position according to the expected time. Accordingly, the quality of the transported item can be protected and the availability of the unmanned aerial vehicle can be inhibited from reducing.

A control method according to one aspect of the present disclosure is a control method of an unmanned aerial vehicle. The unmanned aerial vehicle holds a transported item requiring cold or heat retention. The control method includes: a fourth obtainment step of obtaining a departure position of the unmanned aerial vehicle; a fifth obtainment step of obtaining a destination position of the unmanned aerial vehicle; and a sixth obtainment step of obtaining a current position of the unmanned aerial vehicle; a seventh obtainment step of obtaining a permissible upper temperature limit of the transported item. When a distance from the current position to the destination position is greater than a predetermined value, the unmanned aerial vehicle is caused to move to the departure position, and when the distance from the current position to the destination position is less than or equal to the predetermined value, the unmanned aerial vehicle is caused to move to the destination position. The predetermined value is a value at which a temperature of the transported item will reach the permissible upper temperature limit when the unmanned aerial vehicle is caused to move at a predetermined speed.

With this, the unmanned aerial vehicle can deliver the transported item to the destination position or cancel transportation of the transported item and return to the departure position according to the current position. Accordingly, the quality of the transported item can be protected and the availability of the unmanned aerial vehicle can be inhibited from reducing.

In the control method according to another aspect of the present disclosure, the predetermined value is calculated as V × (t_{Z} - t_{C}), where V is the predetermined speed, t_{Z} is a time at which the temperature of the transported item will reach the permissible upper temperature limit, and t_{C} is a time at the current position.

This enables monitoring of the temperature of the transported item to ensure that the transported item is delivered to the user at the appropriate temperature. This inhibits the delivery of a transported item to the user that deviates from the permissible upper temperature limit.

A control method according to another aspect of the present disclosure is a control method of a delivery box, and includes a measurement step of measuring an amount of power held by the delivery box, and a transmission step of, when the amount of power is greater than a predetermined value, measuring a weight of a package inside the delivery box, which is a transported item stored in the delivery box, and transmitting information indicating the weight of the package to a server.

With this configuration, the weight of the inside of the delivery box can be measured to determine whether or not a package is stored inside the delivery box.

In the control method according to another aspect of the present disclosure, the delivery box includes a door, and the control method further includes a power generation step of generating power by the opening and closing of the door, and storing the power.

With this configuration, power can be automatically generated by the action of the opening and closing of the door of the delivery box, whereby the delivery box can save energy.

The control method according to another aspect of the present disclosure further includes a transmission step of transmitting information pertaining to the opening and closing of the door to the server when the amount of power is greater than a predetermined value.

With this configuration, information pertaining to the opening and closing of door can be transmitted using power stored by power generation. With this, the delivery box can save energy.

An information provision method according to another aspect of the present disclosure is a method in a management system used for a service that delivers a product to a vending machine using an unmanned transport vehicle, and includes: obtaining request information requesting display of a vending machine usable as a pickup location for the product; generating, based on a database that manages reservation statuses of vending machines, a list that is related to a plurality of vending machines included in a predetermined area and includes first information indicating whether each of the plurality of vending machines is usable or not in each of deliverable time periods; and displaying, on a display of an information terminal, the list in response to the request information.

In information provision method according to another aspect of the present disclosure, the list further includes second information indicating a deadline by which the user is to pick up the product, and the second information is generated with reference to a reservation status of the vending machine in the predetermined time period or a reservation status used when the vending machine was used as a product pickup point in the past, based on the database that manages the reservation statuses of the vending machines.

An information provision method according to another aspect of the present disclosure is a method in a management system used for a service that delivers a product to a vending machine using an unmanned transport vehicle, and includes: obtaining request information requesting display of a product list of products sold at a first store; obtaining first store information indicating a product sold at the first store and inventory of the product; obtaining second store information indicating a product sold at a second store located within a predetermined distance from the first store and inventory of the product; generating, based on the first store information and the second store information, the product list including a first product in stock at the first store and a second product in stock at the second store and not in stock at the first store; and displaying the product list on a display of the information terminal.

In the information provision method according to another aspect of the present disclosure, the first product and the second product are displayed in different aspects when displaying the product list on the display of the information terminal.

In the information provision method according to another aspect of the present disclosure, the first product is displayed in a first color and the second product is displayed in a second color when displaying the product list on the display of the information terminal.

In the information provision method according to another aspect of the present disclosure, the first product is displayed in color and the second product is displayed in gray when displaying the product list on the display of the information terminal.

A vending machine according to another aspect of the present disclosure is used in a service that delivers a product to a vending machine using an unmanned transport vehicle, and includes: an enclosure including a first space and a second space; a floor plate that is located within the enclosure and is for placing the product; a movement mechanism that is located within the enclosure and includes a motor and moves the floor plate along a loop route by actuation of the motor; and a controller that is located within the enclosure and controls the movement mechanism. The loop route includes a first route that is located within the first space and moves the floor plate on which the product is placed in a downward vertical direction, and a second route that is located within the second space and moves the floor plate in an upward vertical direction.

In the vending machine according to another aspect of the present disclosure, in a view from the upward vertical direction, the second space is narrower than the first space.

In the vending machine according to another aspect of the present disclosure, the floor plate has a first form in the first space, and a second form different from the first form in the second space.

In the vending machine according to another aspect of the present disclosure, an upper surface of the floor plate is perpendicular to the vertical direction in the first form and parallel to the vertical direction in the second form.

In the vending machine according to another aspect of the present disclosure, the floor plate changes from the first form to the second form by rotating about a line including a center of gravity of the floor plate.

In the vending machine according to another aspect of the present disclosure, the floor plate is foldable, and changes from the first form to the second form by folding.

The vending machine according to another aspect of the present disclosure further includes a lock structure for fixing the floor plate in the first form.

In the vending machine according to another aspect of the present disclosure, the enclosure further includes a third space for storing the product when the user does not come to pick up the product, and after a predetermined amount of time, the controller controls the movement mechanism to move the floor plate that is located in the first space and on which the product is placed to the third space via a third route branched from the loop route.

In the vending machine according to another aspect of the present disclosure, the enclosure includes an openable and closable top lid located above in the vertical direction, and when the top lid is open, the product is placed within the vending machine via a wire that extends downward from the unmanned transport vehicle located vertically above the vending machine.

In the vending machine according to another aspect of the present disclosure, the enclosure includes an openable and closable top lid located above in the vertical direction, and when the top lid is open, the product is placed within the vending machine via a wire that extends downward from the unmanned transport vehicle located vertically above the vending machine.

A control method according to another aspect of the present disclosure is a control method in a management system used in a service that delivers a product sold at a store to a vending machine using an unmanned transport vehicle, and includes: obtaining information indicating product 1 ordered by the user from a information terminal possessed by the user, information indicating a receiver (delivery destination) of product 1, and information indicating delivery time 1 of product 1; obtaining, from a store terminal, a box ID for identifying a predetermined box in the store, the predetermined box being used for receipt of the ordered product 1 by the unmanned transport vehicle; managing the information indicating product 1, the information indicating the receiver of product 1, the information indicating delivery time 1 of product 1, and the box ID in association with each other; and transmitting the box ID and the information indicating the receiver of product 1 to the unmanned transport vehicle.

The control method according to another aspect of the present disclosure further includes, upon obtaining information indicating to change the delivery time of product 1 from delivery time 1 to delivery time 2 from the information terminal of the user, managing the information indicating product 1, the information indicating the receiver of product 1, information indicating delivery time 2 of product 1, and the box ID in association with each other.

A control method of an unmanned transport vehicle according to another aspect of the present disclosure is a method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user from the information terminal of the user; determining whether it is possible for the user to pick up the product from the vending machine at the scheduled time based on the position information and the scheduled time information; and after determining that it is possible for the user to pick up the product from the vending machine at the scheduled time, controlling an actuator of the unmanned transport vehicle and causing the unmanned transport vehicle to collect the product at a store that sells the product.

In the control method of the unmanned transport vehicle according to another aspect of the present disclosure, determining that it is possible for the user to pick up the product from the vending machine at the scheduled time when the current position of the information terminal is located within a predetermined area including the vending machine.

An information provision method according to another aspect of the present disclosure is an information provision method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user; determining whether it is possible for the user to pick up the product from the vending machine at the scheduled time based on the position information and the scheduled time information; and after determining that it is possible for the user to pick up the product from the vending machine at the scheduled time, transmitting, to a store that sells the product, information instructing to start preparation for the unmanned transport vehicle to collect the product.

In the information provision method of the unmanned transport vehicle according to another aspect of the present disclosure, determining that it is possible for the user to pick up the product from the vending machine at the scheduled time when the current position of the information terminal is located within a predetermined area including the vending machine.

A control method of an unmanned transport vehicle according to another aspect of the present disclosure is a method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user from the information terminal of the user; determining whether it is possible for the user to pick up the product from the vending machine at the scheduled time based on the position information and the scheduled time information; and after determining that it is possible for the user to pick up the product from the vending machine at the scheduled time, controlling an actuator of the unmanned transport vehicle and moving the product from the unmanned transport vehicle to inside the vending machine.

In the control method of the unmanned transport vehicle according to another aspect of the present disclosure, determining that it is possible for the user to pick up the product from the vending machine at the scheduled time when the current position of the information terminal is located within a predetermined area including the vending machine.

An information provision method according to another aspect of the present disclosure is a method in a management system used for a service that delivers a product to a vending machine using an unmanned transport vehicle, and includes: obtaining request information requesting display of a vending machine usable as a pickup location for the product; obtaining weather information including an estimate of wind speed at a predetermined area; generating, based on the weather information and a database that manages the reservation statuses of vending machines, a list that is related to a plurality of vending machines included in the predetermined area and includes information indicating whether each of the plurality of vending machines is usable or not in each of deliverable time periods, wherein in the list, a predetermined vending machine is displayed as unusable in a predetermined time at which estimate of the wind speed in an area including the predetermined vending machine is greater than or equal to a predetermined wind speed; and displaying, on a display of an information terminal, the list in response to the request information.

A control method of an unmanned transport vehicle according to another aspect of the present disclosure is a method in a management system used in a service that delivers a product to a vending machine using an unmanned transport vehicle, and includes: obtaining scheduled time information indicating a scheduled time of pickup at the vending machine of a product ordered by a user from the information terminal of the user; obtaining weather information indicating an estimate of wind speed at an area including the vending machine; and when it is determined that the wind speed at the area including the vending machine is greater than a predetermined wind speed at the scheduled time based on the scheduled time information and the weather information, transmitting a message, to an information terminal possessed by the user, for confirming whether to change the delivery time or cancel the order.

A control method of an unmanned transport vehicle according to another aspect of the present disclosure is a method in a management system used in a service that delivers a product to a vending machine using an unmanned transport vehicle, and includes: obtaining fullness information of a first vending machine; and when it is determined that the first vending machine is currently full based on the fullness information, transmitting a notification to an information terminal possessed by the user prompting selection of a first option, a second option, or a third option. The first option is to pick up the product at a second vending machine different than the first vending machine, the second option is to change a pickup time of the product at the first vending machine, and the third option is to have the user directly receive the product.

The control method of the unmanned transport vehicle according to another aspect of the present disclosure further includes, in response to receipt of selection of the first option from the information terminal of the user, transmitting to the information terminal a scheduled time of delivery of the product to the second vending machine and transmitting to a store system an instruction to start picking the product.

The control method of the unmanned transport vehicle according to another aspect of the present disclosure further includes, in response to receipt of selection of the second option from the information terminal of the user, transmitting to the information terminal a changed pickup time.

The control method of the unmanned transport vehicle according to another aspect of the present disclosure further includes, in response to receipt of selection of the third option from the information terminal of the user, transmitting to the information terminal a message related to the user directly receiving the product and transmitting to a store system an instruction to start picking the product.

A control method of an unmanned transport vehicle according to another aspect of the present disclosure is a method in a management system used in a service that delivers a product to a vending machine using an unmanned transport vehicle, and includes: obtaining image data from a camera included in the unmanned transport vehicle at a predetermined area including the receiver; determining whether a person is in the predetermined area based on the image data; and when a person is determined to be in the predetermined area, outputting predetermined speech from a speaker included in the unmanned transport vehicle.

In the control method of the unmanned transport vehicle according to another aspect of the present disclosure, the predetermined speech indicates at least one of the following: the product will now be unloaded from the unmanned transport vehicle; to not come near; to move away; to not move; or to remain still.

An information provision method according to another aspect of the present disclosure is an information provision method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user; calculating a time at which the user should start going to the vending machine in order to receive the product from the vending machine at the scheduled time based on the position information and the scheduled time information; and outputting, via the information terminal, at or before the time, a notification informing the user to start going to the vending machine.

A vending machine according to another aspect of the present disclosure is used in a service that delivers a product to a vending machine using an unmanned transport vehicle, and includes: a display; an enclosure including an openable and closable top lid on which the display is provided; and a controller that sets a display mode of the display. The display mode includes a first display mode and second display mode. The first display mode enables ordering, via the display, of the product to be delivered to the vending machine by the unmanned transport vehicle. The second mode disables ordering, via the display, of the product. The controller sets the display to the second display mode when the top lid is opened and the product is being lowered into the vending machine from the unmanned transport vehicle.

An information provision method according to another aspect of the present disclosure is an information provision method in a management system used in a service that delivers a product to a vending machine using an unmanned transport vehicle, and includes: obtaining, from an information terminal possessed by the user, information indicating a product ordered from the user and information indicating the vending machine that is the receiver of the product; transmitting, to the unmanned transport vehicle, an instruction to deliver the product to the vending machine; after receiving information from the unmanned transport vehicle or the vending machine indicating that delivery of the product to the vending machine is complete, transmitting, to the information terminal, that the delivery of the product is complete; and displaying, on the information terminal, that the delivery of the product is complete.

An unmanned transport vehicle according to another aspect of the present disclosure includes an enclosure. The enclosure includes, in a view from upward vertical direction, a first side, a second side adjacent to the first side, a third side adjacent to the second side, and a fourth side adjacent to the third side and the first side. The enclosure includes a first top lid and a second top lid. The first top lid is connected at the first side and openable and closable. The second top lid is connected at the second side and openable and closable. When the first top lid and the second top lid are closed, the first top lid and the second top lid include an overlapping region.

In the unmanned transport vehicle according to another aspect of the present disclosure, the enclosure further includes a third top lid that is connected at the third side and is openable and closable. When the second top lid and the third top lid are closed, the second top lid and the third top lid include an overlapping region.

In the unmanned transport vehicle according to another aspect of the present disclosure, the enclosure further includes a fourth top lid that is connected at the fourth side and is openable and closable. When the first top lid, the third top lid, and the fourth top lid are closed, the first top lid and the fourth top lid include an overlapping region, and the third top lid and the fourth top lid include an overlapping region.

A control method according to another aspect of the present disclosure is a control method in a transport system including passing a product transported by a first unmanned transport vehicle traveling in the air to a second unmanned transport vehicle traveling on the ground, and includes: transmitting an arrival instruction to the first unmanned transport vehicle instructing the first unmanned transport vehicle to arrive at a first location at a first time; transmitting an arrival instruction to the second unmanned transport vehicle instructing the second unmanned transport vehicle to arrive at the first location at a second time before the first time; and passing the product transported by the first unmanned transport vehicle to the second unmanned transport vehicle at the first location.

A delivery box according to another aspect of the present disclosure is for passing a product transported by a first unmanned transport vehicle traveling in the air to a second unmanned transport vehicle traveling on the ground, and includes: an enclosure, a first entrance provided in an upper portion of the enclosure for inserting the product transported by the first unmanned transport vehicle; and a second entrance provided in a lower portion of the enclosure for the second unmanned transport vehicle to enter.

A method according to another aspect of the present disclosure is for inspecting a power line using an unmanned transport vehicle. The unmanned transport vehicle travels along a rail connected between utility poles. The power line is located above the rail. The method includes: calculating distance y from a camera to the power line, the camera for capturing an image of the power line and included in the unmanned transport vehicle, using height h1 from the ground surface to the rail, deflection x of the rail when the unmanned transport vehicle travels over the rail, and height h3 from the ground surface to the power line; and capturing an image of the power line with the camera using the distance y as the focal length of the camera.

An unmanned transport vehicle according to another aspect of the present disclosure includes: a vehicle main body; a first connector that is connectable to a rail and is coupled to the vehicle main body; a second connector that is connectable to the rail and is coupled to the vehicle main body at a position spaced apart from the first connector; and a third connector that is connectable to the rail and is disposed between the first connector and the second connector. The first connector includes a first roller that rotatably contacts the rail. The second connector includes a second roller that rotatably contacts the rail. The third connector includes a third roller that rotatably contacts the rail.

The unmanned transport vehicle according to another aspect of the present disclosure further includes a turntable that is rotatable with respect to the vehicle main body. The second connector is coupled to the turntable, extends toward the rail from the turntable, is movable in the vertical direction with respect to the upper surface of the vehicle main body, and rotates in accordance with the rotation of the turntable.

The unmanned transport vehicle according to another aspect of the present disclosure further includes: a slide rail provided on the turntable; a slider block provided on the third connector; and a motor that applies an actuating force that moves the slider block along the slide rail.

The unmanned transport vehicle according to another aspect of the present disclosure further includes: a sliding mechanism that includes a connector support portion that is provided on the vehicle main body and slides along a horizontal direction that is orthogonal to the lengthwise direction of the vehicle main body and a slide main body that slidably supports the connector support portion.

A right and left turning method for an unmanned transport vehicle according to another aspect of the present disclosure. The unmanned transport vehicle includes: a vehicle main body; a first connector that is connectable to a rail and is coupled to the vehicle main body; a second connector that is connectable to the rail and is coupled to the vehicle main body at a position spaced apart from the first connector; a third connector that is connectable to the rail and is disposed between the first connector and the second connector; and a turntable that is rotatable with respect to the vehicle main body. The third connector is coupled to the turntable. The method includes, when the unmanned transport vehicle turns right or left from a first rail to a second rail or from the second rail to the first rail, the first rail and the second rail included in the rail and intersecting or three-dimensionally intersecting: causing the vehicle main body to ascend and separating the first connector and the second connector from the first rail; causing the vehicle main body to descend and placing the first connector and the second connector lower than the first rail; rotating the turntable to rotate the vehicle main body to place the first connector and the second connector vertically below the second rail; causing the vehicle main body to ascend and placing the first connector and the second connector higher than the second rail to couple the first connector and the second connector to the second rail; causing the vehicle main body to ascend and separating the third connector from the first rail; rotating the turntable; and coupling the third connector to the second rail.

A delivery box according to another aspect of the present disclosure includes: a carriage configured to house a package; an elevator path in which the carriage is raised and lowered; a box configured to house the package; and an actuator that raises and lowers the carriage inside the elevator path. The elevator path includes a loading door that covers a loading opening formed vertically upward. When the carriage is raised by the actuator in the elevator path, the carriage pushes up the loading door to open the loading door.

A delivery box according to another aspect of the present disclosures includes: a carriage configured to house a package; an elevator path in which the carriage is raised and lowered; a box configured to house the package that is in communication with the inside of the elevator path via a loading opening; a loading door capable of opening and closing the loading opening; and an actuator that raises and lowers the carriage inside the elevator path. The carriage includes a pin and a pin actuator that projects the pin from the carriage. The inside of the box is in communication with the inside of the elevator path via the loading opening. When the carriage is lowered by the actuator in the elevator path, the pin opens the loading door by the pin actuator projecting the pin from the carriage.

A rail coupling according to another aspect of the present disclosure couples a first rail and a second rail, and includes: a first rail coupler that couples to the first rail; a first rail extension that is connected to the first rail coupler and extends in a horizontal direction orthogonal to the lengthwise direction of the first rail; a second rail coupler that couples to the second rail; and a second rail extension that is connected to the second rail coupler, extends in a horizontal direction orthogonal to the lengthwise direction of the second rail, and is connected to the first rail extension. When the unmanned transport vehicle makes a right turn at an intersection or three-dimensional intersection of the first rail and the second rail which intersect or three-dimensionally intersect, the rail coupling is arranged on the left side in the traveling direction of the unmanned transport vehicle, and when the unmanned transport vehicle makes a left turn, the rail coupling is arranged on the right side in the traveling direction of the unmanned transport vehicle.

An unmanned aerial vehicle according to another aspect of the present disclosure includes: a vehicle main body; a first connector that is connectable to a rail and is coupled to the vehicle main body; a second connector that is connectable to the rail and is coupled to the vehicle main body at a position spaced apart from the first connector; and a third connector that is connectable to the rail and is disposed between the first connector and the second connector. When the unmanned aerial vehicle makes a right turn, the first connector and the second connector are arranged on the right side of the rail in the traveling direction of the unmanned transport vehicle, and the rail coupling is on the opposite side of the rail, and when the unmanned aerial vehicle makes a left turn, the first connector and the second connector are arranged on the left side of the rail in the traveling direction of the unmanned transport vehicle, and the rail coupling is on the opposite side of the rail.

In the unmanned aerial vehicle according to another aspect of the present disclosure, when the unmanned aerial vehicle makes a right turn, the third connector is arranged on the right side of the rail in the traveling direction of the unmanned transport vehicle, and the rail coupling is on the opposite side of the rail. The rail includes a first rail and a second rail. When the unmanned transport vehicle transfers from the first rail to the second rail or from the second rail to the first rail, the third connector separates from the first rail or the second rail and couples to the second rail or the first rail by extending.

In the unmanned aerial vehicle according to another aspect of the present disclosure, when the unmanned aerial vehicle makes a left turn, the third connector is arranged on the left side of the rail in the traveling direction of the unmanned transport vehicle, and the rail coupling is on the opposite side of the rail. The rail includes a first rail and a second rail. When the unmanned transport vehicle transfers from the first rail to the second rail or from the second rail to the first rail, the third connector separates from the first rail or the second rail and couples to the second rail or the first rail by extending.

A control method according to one aspect of the present disclosure is a control method in a system including a display device, and includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; and controlling the display device to display the first bottom image in a placement area for placing the first product.

With this, since the display device can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor.

Therefore, with this control method, it is possible to easily presume the location where the first product is placed and inhibit a surge in the cost of the system.

A system according to another aspect of the present disclosure executes the above-described control method.

This achieves the same above-described advantageous effects achieved by the control method.

A program according to another aspect of the present disclosure is a program for causing the system to execute the control method.

This achieves the same above-described advantageous effects achieved by the control method.

In the control method according to another aspect of the present disclosure, the first database further associates and manages the product IDs and images, each of which shows the external appearance of the product corresponding to the product ID. The control method obtains the first bottom image and a first exterior image, which is an image showing the external appearance of the first product, based on the first database and the obtained first product ID, and controls the display device to display the first bottom image and the first exterior image in the placement area.

With this, since the display device can display the first bottom image and the first exterior image, the correct first product can be placed at the location where the first bottom image and the first exterior image are displayed. Therefore, by enabling smooth picking operations, etc., of stocked products, this system can inhibit a surge in the cost of energy, including the system, and human resources.

In the control method according to another aspect of the present disclosure, the system further includes a robot arm. The robot arm includes a displacement portion that can lift a target first product, which is one or more first products placed in the placement area, and change the position of the first product. The displacement portion is actuated by a first actuator. The control method further includes: determining a method for lifting the first product using the displacement portion using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and after the first product is placed at the first location in the placement area, controlling the first actuator to lift the first product in the placement area using the displacement portion according to the determined method.

With this, the robot arm can lift the first product placed in the placement area of the display device and move it to another location. Accordingly, this allows the stocked first product to be displayed in a predetermined location and allows the first product displayed to be removed and shipped.

The control method according to another aspect of the present disclosure further includes: when the first product is placed on the placement area, determining whether the first product is correctly placed at the first location in the placement area; if the first product is determined to be correctly placed at the first location, controlling the display device to display an image on the display device indicating that the first product is correctly placed at the first location; and if the first product is determined to be not correctly placed at the first location, controlling the display device to display an image on the display device indicating that the first product is not correctly placed at the first location.

With this, if the first product is correctly placed at the first location, an image indicating that the first product is correctly placed at the first location can be displayed. If the first product is not correctly placed at the first location, an image indicating that the first product is not correctly placed at the first location can be displayed. Accordingly, a worker can easily recognize whether the first product is correctly placed or not.

In the control method according to another aspect of the present disclosure, the system further includes a loudspeaker. The control method further includes: when the first product is placed on the placement area, determining whether the first product is correctly placed at the first location in the placement area; if the first product is determined to be correctly placed at the first location, controlling the loudspeaker to output audio indicating that the first product is correctly placed at the first location; and if the first product is determined to be not correctly placed, controlling the loudspeaker to output audio indicating that the first product is not correctly placed at the first location.

With this, if the first product is correctly placed at the first location, audio indicating that the first product is correctly placed at the first location can be output. If the first product is not correctly placed at the first location, audio indicating that the first product is not correctly placed at the first location can be output. Accordingly, a worker can easily recognize whether the first product is correctly placed or not.

The control method according another aspect of the present disclosure determines whether the first product is correctly placed based on image information obtained from the camera.

With this, it is possible to determine whether the first product is correctly placed or not using a camera. Additionally, it is possible to accurately determine whether the first product is correctly placed or not based on image information.

In the control method according to another aspect of the present disclosure, the displacement portion includes a gripping portion capable of holding the first product by pinching the first product, a suction portion capable of holding the first product by sucking in air, or a magnetic portion capable of holding the first product by attracting the first product through magnetic force.

With this, any type of first product can be lifted.

In the control method according to another aspect of the present disclosure, the displacement portion is a device for holding by pinching. Determining a method for lifting the first product using the displacement portion includes determining a first part, which is a part for lifting the first product. The control method includes, after the first product is placed at the first location in the placement area, controlling the first actuator to lift the first part of the first product in the placement area using the displacement portion.

With this, by determining a part of the first product by which to lift the first product and lifting the first product, it is possible to inhibit the lifted first product from dropping.

In the control method according to another aspect of the present disclosure, the system further includes a belt conveyor for moving the robot arm. The belt conveyor is actuated by a second actuator. The control method further includes: actuating the second actuator to move the robot arm on the belt conveyor to a first predetermined location after the first product is lifted by the displacement portion; and after the robot arm on the belt conveyor has moved to the first predetermined location, actuating the first actuator to move the first product lifted by the displacement portion to a second predetermined location.

This allows the robot arm that has lifted the first product to move with the first product on the belt conveyor. This allows the robot arm to move the first product to the second predetermined location even if the distance from the placement area to the second predetermined location is far.

In the control method according to another aspect of the present disclosure, the system further includes a loudspeaker. The control method further includes: determining whether the first product lifted by the displacement portion has been dropped, based on the sensing result obtained from the sensor; and after it is determined that the first product has been dropped, controlling the loudspeaker to output audio indicating that the first product has been dropped.

With this, if the first product lifted by the robot arm is dropped, audio indicating that the first product has been dropped can be output. Since a worker can easily recognize whether the first product is correctly placed or not, the worker can take measures such as collecting the dropped first product.

The control method according to another aspect of the present disclosure further includes: determining whether the first product lifted by the displacement portion has been dropped, based on the sensing result obtained from the sensor; and after it is determined that the first product has been dropped, controlling the display device to output an image indicating that the first product has been dropped.

With this, if the first product lifted by the robot arm is dropped, an image indicating that the first product has been dropped can be displayed. Since a worker can easily recognize whether the first product is correctly placed or not, the worker can take measures such as collecting the dropped first product.

A control method according to one aspect of the present disclosure is a control method in a system including a robot arm and a display device. The robot arm includes a displacement portion which can lift a target and change the position of the target. The displacement portion is actuated by a first actuator. The system further includes a belt conveyor for moving the robot arm. The belt conveyor is actuated by a second actuator. The control method includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; controlling the display device to display the first bottom image in a placement area for placing the product; obtaining a second product ID identifying a second product, based on sensing data obtained from the sensor; obtaining a second bottom image showing a shape of a bottom of the second product, based on the first database and the obtained second product ID; controlling the display device to display the second bottom image in the placement area; determining a method for lifting the first product using the displacement portion using (i) a second database that associates and manages product IDs and 3D data, each item of 3D data being of the product corresponding to the product ID, (ii) the first product ID, and (iii) first location information, which is information indicating a first location in the placement area where the first bottom image is displayed; after the first product is placed at the first location in the placement area, controlling the first actuator to lift the first product in the placement area using the displacement portion according to the determined method; after lifting the first product, controlling the first actuator to move the first product lifted by the displacement portion to a cache area for temporary placement of the first product, wherein the cache area moves with the robot arm in accordance with the actuation of the second actuator; determining a method for lifting the second product using the displacement portion using the second database, the second product ID, and second location information, which is information indicating a second location in the placement area where the second bottom image is displayed; after the second product is placed at the second location in the placement area, controlling the first actuator to lift the second product on the placement area using the displacement portion according to the determined method; after lifting the second product, controlling the first actuator to move the second product lifted by the displacement portion to a cache area for temporary placement of the second product.

For example, if there is no cache area, the robot arm must lift the first product one at a time, move to a predetermined location for placing the first product, and then return after the move.

In contrast, with the present embodiment, it is possible to place a plurality of products on the cache area. This allows the robot arm to collect a plurality of products in a short period of time, efficiently move them to a predetermined location, and place the products after the move.

Since the display device can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor. The same applies to the second product. Accordingly, with this control method, it is possible to easily identify the location where the first product and the second product are placed and inhibit a surge in the cost of the system.

The robot arm can lift the first product placed in the placement area of the display device according to the 3D data of the first product, and can also move the first product to the cache area. After lifting the first product, robot arm 2620 can subsequently lift another second product according to the 3D data of that second product, and can also move that second product to the cache area. Thus, a plurality of products can be placed in the cache area in succession. This makes it possible to place a plurality of stocked products (first and second products) in the cache area, thus allowing a plurality of products to be moved at once. This allows a plurality of products to be displayed in a predetermined location and a plurality of displayed products to be removed and shipped.

Therefore, by enabling smooth picking operations, etc., of stocked products, this system can inhibit a surge in the cost of energy, including the system, and human resources.

In the control method according to another aspect of the present disclosure, the cache area corresponds to the area of the part connected to the robot arm.

With this, since the robot arm can be placed in the cache area, the first and second products along with the robot arm can be moved to a second predetermined location, and thus a plurality of products can be displayed in a predetermined location and a plurality of displayed products can be removed and shipped. This makes it possible to inhibit an increase in the time required to display and ship a plurality of products.

In the control method according to another aspect of the present disclosure, the cache area corresponds to an area on the upper surface of a platform that moves with the robot arm via the belt conveyor.

With this, the robot arm can easily place the first and second products it lifted onto the upper surface of the platform.

In the control method according to another aspect of the present disclosure, the system further includes a showcase. The showcase includes a plurality of shelves for placing a first product, the plurality of shelves forming a plurality of levels in the up-down direction, and an actuator that changes the position in the up-down of each of the plurality of shelves. The plurality of shelves include a first shelf and a second shelf located one level below the first shelf. When the system obtains a first signal for requesting a larger spacing in the up-down direction between the first shelf and the second shelf, the system controls the actuator to change the spacing from a first spacing to a second spacing greater than the first spacing.

With this, in the plurality of shelves, even if the first product placed on the shelf is placed at the back of the shelf and hidden by another first product, the robot arm can lift the first product at the back of the shelf by increasing the spacing in the up-down direction between the first shelf and the second shelf. This allows the first product to be displayed in such a way that the space above the shelf is effectively utilized, since the first product can be lifted no matter where the first product is placed on the shelf.

In the control method according to another aspect of the present disclosure, the display device is a display for displaying, in the placement area, the first bottom image of the first product, and the placement area corresponds to the area on the display where the first bottom image is displayed.

This enables the first bottom image to be displayed using a general-purpose display.

In the control method according to another aspect of the present disclosure, the area on the display where the first bottom image is displayed includes a touch panel.

With this, by simply placing the stocked first product in the area where the first bottom image is displayed on the display, this can be used when determining whether the first product has been placed correctly.

In the control method according to another aspect of the present disclosure, the display device is a projector for projecting the first bottom image onto a screen, and the placement area corresponds to the area on the screen where the first bottom image is projected.

With this, it is possible to determine whether the first product has been placed correctly or not using a projector.

In the control method according to another aspect of the present disclosure, which is a control method of a system including an unmanned transport vehicle, a package carriage for putting a package transported by the unmanned transport vehicle into is connected to a wire extending downward from a main body of the unmanned transport vehicle. The package carriage includes an attitude control device that controls an attitude of the package carriage suspended by the wire by controlling a rotary member. An accommodation space for accommodating the package is formed in the package carriage. The control method includes: obtaining a sensing result from a sensor capable of detecting the attitude of the package carriage; and based on the obtained sensing result, controlling the rotary member of the attitude control device to orient the package carriage to a target attitude.

With this, even if the attitude of the package carriage is tilted relative to the horizontal direction or rotates around the vertical direction, the attitude control device can control the rotary member to orient the package carriage to the target attitude. As a result, the package can be delivered to the recipient's delivery reception box.

A system according to another aspect of the present disclosure executes the control method.

This system achieves the same advantageous effects as described above.

A program according to another aspect of the present disclosure is a program for causing the system to execute the control method.

This program achieves the same advantageous effects as described above.

In the control method according to another aspect of the present disclosure, in the package carriage, the attitude control device is located above the accommodation space.

With this, since the package is located below the attitude control device, the package can be easily removed from the package carriage when lowering the package carriage by suspension.

In the control method according to another aspect of the present disclosure, in the package carriage, the attitude control device is located below the accommodation space.

With this, since the attitude control device for heavy objects is below the package, the attitude of the package carriage can be stabilized when lowering the package carriage by suspension.

In the control method according to another aspect of the present disclosure, the wire is configured to be freely reeled out and in by the actuation of a motor, and the wire extends to a length at least five times the height of the unmanned transport vehicle by the actuation of the motor.

In this way, when the wire is lengthily extended, even if the attitude of the package carriage is tilted relative to the horizontal direction or rotates around the vertical direction, the attitude control device can control the rotary member to orient the package carriage to the target attitude. As a result, the package can be delivered to the recipient's delivery reception box.

In the control method according to another aspect of the present disclosure, the system further includes: a motor; a winder that adjusts the length of the wire extending from the main body of the unmanned transport vehicle to the package carriage by reeling in or out the wire via actuation by the motor; a support structure for supporting the package carriage; and a first actuator for actuating the support structure. By actuating the first actuator, the support structure can be transitioned between a first state in which the support structure supports the package carriage without the tension of the wire and a second state in which the package carriage is suspended by the tension of the wire.

With this, for example, the support structure can the support package carriage when the unmanned transport vehicle is delivering a package. When the unmanned transport vehicle is unloading a package, it can be lowered using the tension of the wire. Thus, the unmanned transport vehicle does not need to be lowered using the tension of the wire when delivering a package, which can inhibit the degradation of the wire. Since the support structure supports the package, the package can be optimally supported even while the unmanned transport vehicle is traveling.

In the control method according to another aspect of the present disclosure, the method further includes: controlling the motor of the winder to reel in the wire until a length of the wire extending from the main body to the package carriage becomes a first length; after the length of the wire has become the first length, controlling the first actuator to transition the support structure from the second state to the first state; and after the support structure has transitioned to the first state, controlling the motor of the winder to reel out the wire until the length of the wire extending from the main body to the package carriage becomes a second length longer than the first length.

With this, the length of the wire can be set to the second length so that the package carriage is supported by the support structure. Thus, the support structure can support the package carriage when the unmanned transport vehicle is delivering a package, which can inhibit the degradation of the wire. Since the support structure supports the package, the package can be optimally supported even while the unmanned transport vehicle is traveling.

In the control method according to another aspect of the present disclosure, the support structure includes a first door structure and a second door structure pivotably connected to the main body. The first state corresponds to a state in which the first door structure and the second door structure have been pivoted close to the package carriage, and the second state corresponds to a state in which the first door structure and the second door structure have been pivoted away from the package carriage. In the first state, a first part of the first door structure and a second part of the second door structure are positioned below the package carriage. When the length of the wire extending from the main body to the package carriage becomes the second length, the package carriage is supported by the first part and the second part.

With this, when the first door structure and the second door structure are in the first state, the first part of the first door structure and the second part of the second door structure can support the package carriage. Thus, the unmanned transport vehicle does not need to be lowered using the tension of the wire when delivering a package, which can inhibit the degradation of the wire. Since the support structure supports the package, the package can be optimally supported even while the unmanned transport vehicle is traveling.

In the control method according to another aspect of the present disclosure, the unmanned transport vehicle transports a package by traveling along a rail. The unmanned transport vehicle further includes: a wheel for traveling along the rail; an arm connected to the main body of the unmanned transport vehicle and the wheel; and a second actuator for actuating the arm. The unmanned transport vehicle is capable of transitioning between a third state and a fourth state via actuation of the second actuator. In the third state, the distance between the main body and the rail is a first distance, and in the fourth state, the distance between the main body and the rail is a second distance greater than the first distance.

With this, the state of the unmanned transport vehicle can be switched between the third state and the fourth state depending on whether the unmanned transport vehicle is traveling or unloading a package.

In the control method according to another aspect of the present disclosure, while the unmanned transport vehicle is traveling, the second actuator is controlled to place the unmanned transport vehicle in the third state, and while the unmanned transport vehicle is unloading the package, the second actuator is controlled to place the unmanned transport vehicle in the fourth state.

With this, when the unmanned transport vehicle is traveling, the distance between the main body and the rail decreases while the distance between the main body and the ground surface increases, making it easier for the main body to avoid obstacles. While the unmanned transport vehicle is unloading a package, the control processor controls the arm actuator to place the unmanned transport vehicle in the fourth state. When the unmanned transport vehicle is unloading a package, the distance between the main body and the rail increases while the distance between the main body and the ground surface decreases, making unloading easier.

In the control method according to another aspect of the present disclosure, the system further includes a delivery reception box for receiving a package from an unmanned transport vehicle. The delivery reception box includes: an enclosure; a guide structure located at an upper part of the enclosure, for receiving the package in the package carriage that descends via the wire from the unmanned transport vehicle located above the delivery reception box; and a third actuator for moving the guide structure. When the package carriage and the package descend via the wire, the third actuator is controlled to move the guide structure to cause the package carriage and the guide structure to overlap in a view from above in the vertical direction, based on position information indicating a position of the package carriage.

With this, even if the package carriage shifts due to wind or the like when the unmanned transport vehicle is lowering a package, since the guide structure moves so that the guide structure and the package carriage overlap, the guide structure can guide the package carriage. Therefore, the delivery reception box can receive a package from the package carriage.

In the control method according to another aspect of the present disclosure, the system further includes a delivery reception box for receiving a package from an unmanned transport vehicle. The delivery reception box includes: an enclosure including a first floor for placing the package; a second floor located in the enclosure, for placing the package; a first movement mechanism located in the enclosure and including an actuator for moving the package placed on the first floor; and a second movement mechanism that is located in the enclosure, includes an actuator, and moves the second floor along a path via actuation of the actuator. After the package in the package carriage that descends via the wire from the unmanned transport vehicle located above the delivery reception box is placed on the first floor, the actuator of the first movement mechanism is controlled to move the package from the first floor to the second floor, and after the package has been moved to the second floor, the actuator of the second movement mechanism is controlled to move the second floor along the path.

With this, even if the package carriage shifts due to wind or the like when the unmanned transport vehicle is lowering a package, the package can be received from the package carriage on the first floor. Since the package placed on the first floor can be moved to the second floor by the first movement mechanism, the package can be moved to a predetermined location within the enclosure.

In the control method according to another aspect of the present disclosure, in a view from above in the vertical direction, the enclosure includes a first first side, a first second side adjacent to the first first side, a first third side adjacent to the first second side, and a first fourth side adjacent to the first third side and the first first side, and the enclosure includes a first flap connected to the first first side and configured to open and close an opening of the enclosure, and a second flap connected to the first third side and configured to open and close the opening of the enclosure.

With this, first flap and second flap can be arranged along the first first side and first third side of the enclosure. Therefore, when a package is being accommodated from the opening of the enclosure, even if the package carriage shifts due to wind or the like when the unmanned transport vehicle is lowering a package, the first flap and the second flap can guide the package.

In the control method according to another aspect of the present disclosure, the first first side and the first third side have a same length, the first second side and the first fourth side have a same length, the first first side is longer than the first second side, and the delivery reception box is arranged facing a road. In a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road. The first flap includes a second first side and a second second side adjacent to the second first side, the second first side is connected to the first first side, the second flap includes a third first side and a third second side adjacent to the third first side, the third first side is connected to the first third side, and the second second side is longer than the third second side.

With this, because the first flap including the second second side that is longer than the third second side can be arranged adjacent to the road side, even if the package carriage shifts due to wind or the like when the unmanned transport vehicle is lowering a package, the first flap and the second flap can guide the package. This makes it possible to inhibit packages from falling onto the road.

In the control method according to another aspect of the present disclosure, the system further includes a delivery reception box for receiving the package from the unmanned transport vehicle. The delivery reception box includes: an enclosure; and a carriage movement mechanism that is located in the enclosure, includes a carriage structure and an actuator, and moves the carriage structure along a path by actuation by the actuator. When the package carriage and the package descend via the wire, the actuator of the carriage movement mechanism is controlled to move the carriage structure to cause the package carriage and the carriage structure to overlap in a view from above in the vertical direction, based on position information indicating a position of the package carriage. After the package has been moved from the package carriage to the carriage structure, the actuator of the carriage movement mechanism is controlled to move the carriage structure along the path.

With this, even if the package carriage shifts due to wind or the like when the unmanned transport vehicle is lowering a package, since the guide structure moves so that the guide structure and the package carriage overlap, the guide structure can guide the package carriage. Therefore, the delivery reception box can receive a package from the package carriage. The carriage structure can move the received package to a predetermined location. This allows a package to be placed in a predetermined location.

In the control method according to another aspect of the present disclosure, the target attitude includes an attitude in which an up-down direction parallel to the vertical direction and an up-down direction of the package carriage match.

With this, the package carriage can be corrected to the target attitude, which allows the package to be delivered to the recipient's delivery reception box.

### ADDITIONAL STATEMENTS

(1) Below, features of the unmanned transport vehicle, control method, reception box, and showcase described based on the above embodiments are disclosed.

<1> An unmanned transport vehicle including:
   a main body;
   a package carriage located below the main body, for putting a package to be transported into;
   a wire that connects the main body and the package carriage;
   a winder that includes a motor and adjusts the length of the wire extending from the main body to the package carriage by reeling in or out the wire via actuation of the motor;
   a support structure for supporting the package carriage;
   a first actuator for actuating the support structure; and
   a controller that controls the winder and the first actuator, wherein
   the controller can actuate the first actuator to change the support structure between a first state for supporting the package carriage by the support structure without the tension of the wire and a second state for suspending the package carriage by the tension of the wire.
<2> A unmanned transport vehicle for transporting a package by traveling along a rail, the unmanned transport vehicle including:
   a main body;
   a wheel for traveling on the rail;
   an arm connected to the main body and the wheel;
   a second actuator for actuating the arm; and
   a controller that controls the second actuator, wherein
   the controller controls the second actuator to transition the unmanned transport vehicle between a first state and a second state, the first state being a state in which the distance between the main body and the rail is short and the second state being a state in which the distance between the main body and the rail is long.
<3> The unmanned transport vehicle according to <2>, wherein
   the controller:
   controls the second actuator to place the unmanned transport vehicle in the first state while the unmanned transport vehicle is traveling; and
   controls the second actuator to place the unmanned transport vehicle in the second state while the unmanned transport vehicle is unloading the package.
<4> A delivery reception box for receiving a package from a unmanned transport vehicle, wherein a package carriage for putting a package into is connected to a wire extending downward from a main body of the unmanned transport vehicle, the delivery reception box including:
   an enclosure;
   a guide structure located at an upper part of the enclosure, for receiving the package in the package carriage that descends via the wire from the unmanned transport vehicle located above the delivery reception box;
   a third actuator for moving the guide structure; and
   a controller that controls the actuator, wherein
   the controller:
      when the package carriage and the package descend via the wire, obtains position information indicating a position of the package carriage, and based on the position information, controls the third actuator to move the guide structure to cause the package carriage and the guide structure to overlap in a view from above in the vertical direction.
<5> A delivery reception box for receiving a package from a unmanned transport vehicle, wherein a package carriage for putting a package into is connected to a wire extending downward from a main body of the unmanned transport vehicle, the delivery reception box including:
   an enclosure;
   a first floor located in the enclosure, for placing the package;
   a second floor located in the enclosure, for placing the package;
   a first movement mechanism located in the enclosure and including an actuator for moving the package placed on the first floor;
   a second movement mechanism that is located in the enclosure, includes an actuator, and moves the second floor along a path via actuation of the actuator; and
   a controller that controls the actuator of the first movement mechanism and the actuator of the second movement mechanism, wherein
   the controller:
      after the package in the package carriage that descends via the wire from the unmanned transport vehicle located above the delivery reception box is placed on the first floor, controls the actuator of the first movement mechanism to move the package from the first floor to the second floor, and
      after the package has been moved to the second floor, controls the actuator of the second movement mechanism to move the second floor along the path.
<6> The delivery reception box according to <5>, wherein
   in a view from above in the vertical direction, the enclosure includes a first first side, a first second side adjacent to the first first side, a first third side adjacent to the first second side, and a first fourth side adjacent to the first third side and the first first side, and
   the enclosure includes a first flap connected to the first first side and configured to open and close, and a third flap connected to the first third side and configured to open and close.
<7> The delivery reception box according to <6>, wherein
   the first first side and the first third side have a same length, the first second side and the first fourth side have a same length,
   the first first side is longer than the first second side,
   the delivery reception box is arranged facing a road,
   in a view of the road, the delivery reception box, and the rail from above in the vertical direction, the first first side is parallel to the rail, and the delivery reception box is further arranged to have the rail, the first first side, and the first third side arranged in listed order in a direction moving away from a centerline of the road,
   the first flap includes a second first side and a second second side adjacent to the second first side, and the first first side is connected to the second first side,
   the second flap includes a third first side and a third second side adjacent to the third first side, and the first third side is connected to the third first side, and
   the second second side is longer than the third second side.
<8> A delivery reception box for receiving a package from a unmanned transport vehicle, wherein a package carriage for putting a package into is connected to a wire extending downward from a main body of the unmanned transport vehicle, the delivery reception box including:
   an enclosure;
   a carriage movement mechanism that is located in the enclosure, includes a carriage structure and an actuator, and moves the carriage structure along a path by actuation by the actuator; and
   a controller that controls an actuator of the carriage movement mechanism, wherein
   the controller:
      when the package carriage and the package descend via the wire, obtains position information indicating a position of the package carriage, and based on the position information, controls the actuator of the carriage movement mechanism to move the carriage structure to cause the package carriage and the carriage structure to overlap in a view from above in the vertical direction; and
      after the package has been moved from the package carriage to the carriage structure, controls the actuator of the carriage movement mechanism to move the carriage structure along the path.
<9> A showcase including:
   a plurality of shelves for placing a product, the plurality of shelves forming a plurality of levels in a vertical direction;
   an actuator that changes the vertical position of each of the plurality of shelves;
   a signal obtainer that obtains a signal from outside the showcase; and
   a controller that controls the actuator, wherein
   the plurality of shelves include a first shelf and a second shelf located one level below the first shelf, and
   when the controller obtains the first signal obtained by the signal obtainer, the first signal being for requesting a larger vertical spacing between the first shelf and the second shelf, the controller controls the actuator to change the spacing from a first spacing to a second spacing greater than the first spacing.
<10> The showcase according to <9>, wherein
   the first signal is transmitted based on an instruction from a controller that controls the robot arm, and
   the space resulting from changing the spacing from the first spacing to the second spacing prevents a product placed on the second shelf from contacting the first shelf and allows the robot arm to move between the first shelf and the second shelf.
<11> The showcase according to <10>, further including:
   a signal transmitter that transmits a signal to an outside of the showcase, wherein
   after changing the spacing from the first spacing to the second spacing, the controller causes the signal transmitter to transmit a signal to the robot arm indicating that the spacing has been changed to the second spacing.
<12> The showcase according to any one of <9> to <11>, wherein
   after a third product placed on the second shelf has been picked up by the robot arm that has moved into the space resulting from changing the spacing from the first spacing to the second spacing, and the third product picked up by the robot arm has been moved outside the showcase through the space, the controller further controls the actuator to change the spacing between the first shelf and the second shelf in the up-down direction from the second spacing to a third spacing narrower than the second spacing.

Note that whether "a third product placed on the second shelf has been picked up by the robot arm that has moved into the space resulting from changing the spacing from the first spacing to the second spacing, and the third product picked up by the robot arm has been moved outside the showcase through the space" may be determined based on, for example, a sensing result obtained from a sensor, or a signal transmitted based on an instruction from a controller that controls the robot arm and indicates that the third product has moved outside the showcase. For example, the sensor may be a weight sensor provided on the second shelf, or a camera. The sensor may be a camera provided on the robot arm, or a camera provided in the store. For example, after the third product having been lifted has been detected based on a sensing result from a weight sensor provided on the second shelf, the third product may be determined to have been moved outside the showcase after elapse of a predetermined amount of time.

<13>
The showcase according to <12>, wherein
the first spacing and the third spacing are equal.

(2) Below, features of the control method, system, and program described based on the above embodiments are disclosed.

<1> A control method in a system including a display device, the control method including:
   obtaining a first product ID identifying a first product, based on sensing data obtained from a sensor;
   obtaining a first bottom image showing a shape of a bottom of the first product, based on (i) a first database that associates and manages product IDs and images, each of which shows a shape of a bottom surface of the product corresponding to the product ID, and (ii) the obtained first product ID; and
   controlling the display device to display the first bottom image in a placement area for placing the first product.
<2> The control method according to <1>, wherein
   the first database further associates and manages product IDs and images, each which of which shows the external appearance of the product corresponding to the product ID, and
   the control method further includes: obtaining the first bottom image and a first exterior image showing the external appearance of the first product, based on the first database and the obtained first product ID; and
   controlling the display device to display the first bottom image and the first exterior image in the placement area.
<3> The control method according to <1> or <2>, wherein
   the system further includes a robot arm,
   the robot arm includes a displacement portion that can lift a target first product, which is one or more first products placed in the placement area, and change a position of the first product,
   the displacement portion is actuated by the first actuator, and
   the control method further includes: determining a method for lifting the first product using the displacement portion using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and
   after the first product is placed at the first location in the placement area, controlling the first actuator to lift the first product on the placement area using the displacement portion according to the determined method.
<4> The control method according to any one of <1> to <3>, further including:
   when the first product is placed in the placement area, determining whether the first product is correctly placed at the first location in the placement area;
   when the first product is determined to be correctly placed at the first location, controlling the display device to display an image on the display device indicating that the first product is correctly placed at the first location; and
   when the first product is determined to be not correctly placed at the first location, controlling the display device to display an image on the display device indicating that the first product is not correctly placed at the first location.
<5> The control method according to any one of <1> to <4>, wherein
   the system further includes a loudspeaker, and
   the control method further includes:
      when the first product is placed in the placement area, determining whether the first product is correctly placed at the first location in the placement area;
      when the first product is determined to be correctly placed at the first location, controlling the loudspeaker to output audio indicating that the first product is correctly placed at the first location; and
      when the first product is determined to be not correctly placed, controlling the loudspeaker to output audio indicating that the first product is not correctly placed at the first location.
<6> The control method according to <4> or <5>, further including:
   determining whether the first product is correctly placed based on image information obtained from a camera.
<7> The control method according to <3>, wherein
   the displacement portion includes a gripping portion capable of holding the first product by pinching the first product, a suction portion capable of holding the first product by sucking in air, or a magnetic portion capable of holding the first product by attracting the first product through magnetic force.
<8> The control method according to <7>, wherein
   the displacement portion is a device for holding by pinching,
   determining a method for lifting the first product using the displacement portion includes determining a first part which is a part for lifting the first product, and
   the control method further includes, after the first product is placed at the first location in the placement area, controlling the first actuator to lift the first part of the first product on the placement area using the displacement portion.
<9> The control method according to any one of <3> or <7> or <8>, wherein
   the system further includes a belt conveyor for moving the robot arm, the belt conveyor being actuated by a second actuator, and
   the control method further includes:
      after the first product is lifted by the displacement portion, actuating the second actuator to move the robot arm on the belt conveyor to a first predetermined location; and
      after the robot arm on the belt conveyor has moved to the first predetermined location, actuating the first actuator to move the first product lifted by the displacement portion to a second predetermined location.
<10> The control method according to any one of <3>, <7>, <8>, or <9>, wherein
   the system further includes a loudspeaker, and
   the control method further includes:
      determining whether the first product lifted by the displacement portion has been dropped, based on a sensing result obtained from a sensor; and
      after it is determined that the first product has been dropped, controlling the loudspeaker to output audio indicating that the first product has been dropped.
<11> The control method according to any one of <3>, <7>, <8>, <9>, or <10>, further including:
   determining whether the first product lifted by the displacement portion has been dropped, based on a sensing result obtained from a sensor; and
   after it is determined that the first product has been dropped, controlling the display device to output an image indicating that the first product has been dropped.
<12> A control method in a system including a robot arm and a display device, the robot arm including a displacement portion which can lift a target and change a position of the target, the displacement portion being actuated by a first actuator, the system further including a belt conveyor for moving the robot arm, the belt conveyor being actuated by the actuator, the control method including:
   obtaining a first product ID identifying a first product, based on sensing data obtained from a sensor;
   obtaining a first bottom image showing a shape of a bottom of the first product, based on (i) a first database that associates and manages product IDs and images, each of which shows a shape of a bottom surface of the product corresponding to the product ID, and (ii) the obtained first product ID;
   controlling the display device to display the first bottom image in a placement area for placing the product;
   obtaining a second product ID identifying a second product, based on sensing data obtained from a sensor;
   obtaining a second bottom image showing a shape of a bottom of the second product, based on the first database and the obtained second product ID;
   controlling the display device to display the second bottom image in the placement area;
   determining a method for lifting the first product using the displacement portion using (i) a second database that associates and manages product IDs and 3D data, each item of 3D data being of the product corresponding to the product ID, (ii) the first product ID, and (iii) first location information which is information indicating a first location in the placement area where the first bottom image is to be displayed;
   after the first product is placed at the first location in the placement area, controlling the first actuator to lift the first product on the placement area using the displacement portion according to the determined method;
   after the first product has been lifted, controlling the first actuator to move the first product lifted by the displacement portion onto a cache area for temporary placement of the first product, the cache area moving with the robot arm in accordance with actuation of the second actuator;
   determining a method for lifting the second product using the displacement portion using (i) the second database, (ii) the second product ID, and (iii) second location information which is information indicating a second location in the placement area where the second bottom image is to be displayed;
   after the second product is placed at the second location in the placement area, controlling the first actuator to lift the second product on the placement area using the displacement portion according to the determined method; and
   after the second product has been lifted, controlling the first actuator to move the second product lifted by the displacement portion onto a cache area for temporary placement of the second product.
<13> The control method according to <12>, wherein
   the cache area corresponds to an area of a part connected to the robot arm.
<14> The control method according to <12> or <13>, wherein
   the cache area corresponds to an area on an upper surface of a platform that moves with the robot arm via the belt conveyor.
<15> The control method according to any one of <1> to <14>, wherein
   the system further includes a showcase,
   the showcase includes:
      a plurality of shelves for placing a product, the plurality of shelves forming a plurality of levels in a vertical direction; and
      an actuator that changes a vertical position of each of the plurality of shelves,
   the plurality of shelves include a first shelf and a second shelf located one level below the first shelf, and
   when the showcase obtains a first signal for requesting a larger vertical spacing between the first shelf and the second shelf, the showcase controls the actuator to change the spacing from a first spacing to a second spacing greater than the first spacing.
<16> The control method according to any one of <1> to <15>, wherein
   the display device is a display for displaying, in the placement area, the first bottom image of the first product, and
   the placement area corresponds to the area on the display where the first bottom image is displayed.
<17> The control method according to <16>, wherein
   the area on the display where the first bottom image is displayed includes a touch panel.
<18> The control method according to any one of <1> to <17>, wherein
   the display device is a projector for projecting the first bottom image onto a screen, and the placement area corresponds to an area on the screen where the first bottom image is projected.
<19> A system that executes the control method according to any one of <1> to <18>.
<20> A program for causing the system to execute the control method according to any one of <1> to <18>.

(3) Below, features of the control method, system, and program described based on the above embodiments are disclosed.

<1> A control method in a system including an unmanned transport vehicle, a package carriage for putting a package to be transported by the unmanned transport vehicle into being connected to a wire extending downward from a main body of the unmanned transport vehicle, the package carriage including an attitude control device that controls an attitude of the package carriage suspended by the wire by controlling a rotary member, the package carriage including an accommodation space for accommodating the package, the control method including:
   obtaining a sensing result from a sensor capable of detecting the attitude of the package carriage; and
   based on the sensing result obtained, controlling the rotary member of the attitude control device to orient the package carriage to a target attitude.
<2> The control method according to <1>, wherein
   in the package carriage, the attitude control device is located above the accommodation space.
<3> The control method according to <1>, wherein
   in the package carriage, the attitude control device is located below the accommodation space.
<4> The control method according to any one of <1> to <3>, wherein
   the wire is configured to be freely reeled out and in by actuation of a motor, and
   the wire extends to a length at least five times a height of the unmanned transport vehicle via the actuation of the motor.
<5> The control method according to any one of <1> to <4>, wherein
   the system further includes:
      a winder that includes a motor and adjusts the length of the wire extending from a main body of the unmanned transport vehicle to the package carriage by reeling in or out the wire via actuation of the motor;
      a support structure for supporting the package carriage; and
      a first actuator for actuating the support structure, and
   the support structure is transitionable between a first state and a second state by actuation by the first actuator, the first state being a state in which the package carriage is supported by the support structure without the tension of the wire, the second state being a state in which the package carriage is suspended by the tension of the wire.
<6> The control method according to <5>, further including:
   controlling the motor of the winder to reel in the wire until a length of the wire extending from the main body to the package carriage becomes a first length;
   after the wire has become the first length, controlling the first actuator to transition the support structure from the second state to the first state; and
   after the support structure has transitioned to the first state, controlling the motor of the winder to reel out the wire until the length of the wire extending from the main body to the package carriage becomes a second length longer than the first length;
<7> The control method according to <6>, wherein
   the support structure includes a first door structure and a second door structure that are pivotably connected to the main body,
   the first state corresponds to a state in which the first door structure and the second door structure have been pivoted close to the package carriage,
   the second state corresponds to a state in which the first door structure and the second door structure have been pivoted away from the package carriage,
   in the first state, a first part of the first door structure and a second part of the second door structure are located below the package carriage, and
   when the length of the wire extending from the main body to the package carriage becomes the second length, the package carriage is supported by the first part and the second part.
<8> The control method according to any one of <1> to <7>, wherein
   the unmanned transport vehicle transports a package by traveling along a rail,
   the unmanned transport vehicle further includes:
      a wheel for traveling on the rail;
      an arm connected to a main body of the unmanned transport vehicle and the wheel; and
      a second actuator for actuating the arm, and
   the unmanned transport vehicle is capable of transitioning between a third state and a fourth state via actuation of the second actuator, the third state being a state in which the distance between the main body and the rail is a first distance and the fourth state being a state in which the distance between the main body and the rail is a second distance greater than the first distance.
<9> The control method according to <8>, wherein
   while the unmanned transport vehicle is traveling, the second actuator is controlled to place the unmanned transport vehicle in the third state, and
   while the unmanned transport vehicle is unloading the package, the second actuator is controlled to place the unmanned transport vehicle in the fourth state.
<10> The control method according to any one of <1> to <9>, wherein
   the system further includes a delivery reception box for receiving a package from an unmanned transport vehicle,
   the delivery reception box includes:
      an enclosure;
      a guide structure located at an upper part of the enclosure, for receiving the package in the package carriage that descends via the wire from the unmanned transport vehicle located above the delivery reception box; and
      a third actuator for moving the guide structure, and
   when the package carriage and the package descend via the wire, the third actuator is controlled to move the guide structure to cause the package carriage and the guide structure to overlap in a view from above in the vertical direction, based on position information indicating a position of the package carriage.
<11> The control method according to any one of <1> to <10>, wherein
   the system further includes a delivery reception box for receiving a package from an unmanned transport vehicle,
   the delivery reception box includes:
      an enclosure including a first floor for placing the package;
      a second floor located in the enclosure, for placing the package;
      a first movement mechanism located in the enclosure and including an actuator for moving the package placed on the first floor; and
      a second movement mechanism that is located in the enclosure, includes an actuator, and moves the second floor along a path via actuation of the actuator,
   after the package in the package carriage that descends via the wire from the unmanned transport vehicle located above the delivery reception box is placed on the first floor, controls the actuator of the first movement mechanism to move the package from the first floor to the second floor, and
   after the package has been moved to the second floor, the actuator of the second movement mechanism is controlled to move the second floor along the path.
<12> The control method according to <11>, wherein
   in a view from above in the vertical direction, the enclosure includes a first first side, a first second side adjacent to the first first side, a first third side adjacent to the first second side, and a first fourth side adjacent to the first third side and the first first side, and
   the enclosure includes a first flap connected to the first first side and configured to open and close an opening of the enclosure, and a second flap connected to the first third side and configured to open and close the opening of the enclosure.
<13> The control method according to <12>, wherein
   the first first side and the first third side have a same length,
   the first second side and the first fourth side have a same length,
   the first first side is longer than the first second side,
   the delivery reception box is arranged facing a road,
   in a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road,
   the first flap includes a second first side and a second second side adjacent to the second first side,
   the second first side is connected to the first first side,
   the second flap includes a third first side and a third second side adjacent to the third first side,
   the third first side is connected to the first third side, and
   the second second side is longer than the third second side.
<14> The control method according to any one of <1> to <12>, wherein
   the system further includes a delivery reception box for receiving a package from an unmanned transport vehicle,
   the delivery reception box includes:
      an enclosure; and
      a carriage movement mechanism that is located in the enclosure, includes a carriage structure and an actuator, and moves the carriage structure along a path by actuation by the actuator,
   when the package carriage and the package descend via the wire, the actuator of the carriage movement mechanism is controlled to move the carriage structure to cause the package carriage and the carriage structure to overlap in a view from above in the vertical direction, based on position information indicating a position of the package carriage, and
   after the package has been moved from the package carriage to the carriage structure, the actuator of the carriage movement mechanism is controlled to move the carriage structure along the path.
<15> The control method according to any one of <1> to <14>, wherein
   the target attitude includes an attitude in which an up-down direction parallel to the vertical direction and an up-down direction of the package carriage match.
<16> A system that executes the control method according to any one of <1> to <15>.
<17> A program for causing the system to execute the control method according to any one of <1> to <15>.

(4) Below, features of the system including the unmanned transport vehicle described based on the above embodiments are disclosed.

<1> A system including an unmanned transport vehicle, the system including:
   the unmanned transport vehicle;
   a first winch connected to the unmanned transport vehicle and capable of reeling out and in a wire;
   a package carriage connected to the wire, for putting a package to be transported by the unmanned transport vehicle into; and
   a support structure connected to the unmanned transport vehicle, for supporting the package carriage, wherein
   in the unmanned transport vehicle, the package carriage is capable of transitioning between a first state in which the package carriage is supported by the support structure and a second state in which the package carriage is not supported by the support structure and is suspended by the wire.
<2> The system according to <1>, wherein
   the unmanned transport vehicle transports the package carriage by traveling along a rail, and
   the package carriage is in the first state when the unmanned transport vehicle is traveling along the rail and in the second state when the package carriage is being lowered toward a destination point located vertically below the unmanned transport vehicle via the wire.
<3> The system according to <1> or <2>, wherein
   the unmanned transport vehicle further includes:
   a wheel for traveling on the rail;
   an arm connected to a main body of the unmanned transport vehicle and the wheel.
<4> The system according to any one of <1> to <3>, wherein
   the unmanned transport vehicle further includes:
      an actuator for actuating the arm, and
   the unmanned transport vehicle is capable of transitioning between a first distance state and a second distance state via actuation of the actuator, the first distance state being a state in which a distance between the main body and the rail is a first distance and the second distance state being a state in which the distance between the main body and the rail is a second distance greater than the first distance.

(5) Below, features of the system including the unmanned transport vehicle described based on the above embodiments are disclosed.

<1> A system including an unmanned transport vehicle, the system including:
   the unmanned transport vehicle;
   a first winch connected to the unmanned transport vehicle and capable of reeling out and in a wire;
   a package carriage connected to the wire, for putting a package to be transported by the unmanned transport vehicle into;
   a support structure connected to the unmanned transport vehicle, for supporting the package carriage; and
   a controller, wherein
   the package carriage includes an attitude control device that controls an attitude of the package carriage suspended by the wire by controlling a rotary member,
   the package carriage includes an accommodation space for accommodating the package,
   the controller:
      obtains a sensing result from a sensor capable of detecting an attitude of the package carriage; and
      based on the sensing result obtained, controls the rotary member of the attitude control device to orient the package carriage to a target attitude, and
   the unmanned transport vehicle is capable of transitioning between a first state in which the package carriage is supported by the support structure and a second state in which the package carriage is not supported by the support structure and is suspended by the wire.
<2> The system according to <1>, wherein
   the support structure includes a first part and a second part,
   the first part and the second part of the support structure are disposed a predetermined length apart,
   the package carriage includes a third part and a fourth part,
   the third part and the fourth part of the package carriage are the predetermined length apart,
   in the first state, the first part of the support structure and the third part of the package carriage are coupled and the second part of the support structure and the fourth part of the package carriage are coupled, and
   to transition the unmanned transport vehicle to the first state, the controller (1) controls the first winch to reel in the wire until a length of the wire extending from the unmanned transport vehicle to the package carriage becomes a first length which positions the third part of the package carriage higher than the first part of the support structure and positions the fourth part of the package carriage higher than the second part of the support structure, (2) controls the attitude control device to rotate the package carriage to position the third part of the package carriage directly above the first part of the support structure and position the fourth part of the package carriage directly above the second part of the support structure, and (3) controls the first winch to reel out the wire to couple the third part of the package carriage to the first part of the support structure and couple the fourth part of the package carriage to the second part of the support structure.
<3> The system according to <1> or <2>, wherein
   the support structure includes: a first metal structure that extends from a first one end connected to the unmanned transport vehicle towards the first part of the support structure located vertically downwards, turns back at the first part of the support structure, and then extends to a first other end located in the vertically downward direction; and a second metal structure that extends from a second one end connected to the unmanned transport vehicle towards the second part of the support structure located vertically downwards, turns back at the second part of the support structure, and then extends to a second other end located in the vertical upward direction,
   the first metal structure includes a first portion,
   the second metal structure includes a second portion, and
   in a view of the support structure from above in the vertical direction, the support structure is arranged such that a straight line connecting the first other end and the second other end intersects a straight line connecting the center point of the first part of the support structure and the center point of the second part of the support structure.
<4> The system according to <3>, wherein
   the first one end and the second one end are a same end.

(6) Below, features of the system including the unmanned transport vehicle described based on the above embodiments are disclosed.

<1> A system including an unmanned transport vehicle, the system including:
   the unmanned transport vehicle;
   a first winch connected to the unmanned transport vehicle and capable of reeling out and in a first wire;
   a package carriage connected to the first wire, for putting a package to be transported by the unmanned transport vehicle into;
   a second winch connected to the package carriage and capable of reeling out and in a second wire; and
   an unmanned aerial vehicle connected to the second wire.
<2> The system according to <1>, wherein
   the first winch is provided below the unmanned transport vehicle, and the second winch is provided below the package carriage.
<3> The system according to <1> further including:
   a protective case for protecting the unmanned aerial vehicle, wherein
   the unmanned aerial vehicle is fixed to the protective case, and
   the unmanned aerial vehicle is connected to the second wire via the protective case.
<4> The system according to <3>, wherein
   the protective case covers the unmanned aerial vehicle in entirety.

(7) Below, features of the system including the unmanned transport vehicle described based on the above embodiments are disclosed.

<1> A system including an unmanned transport vehicle, the system including:
   the unmanned transport vehicle;
      a first winch connected to the unmanned transport vehicle and capable of reeling out and in a first wire;
      a package carriage connected to the first wire, for putting a package to be transported by the unmanned transport vehicle into;
   a second winch connected to the package carriage and capable of reeling out and in a second wire;
   an unmanned aerial vehicle connected to the second wire;
   a delivery reception box; and
   a controller, wherein
   the delivery reception box includes:
      an enclosure;
      the box structure that defines an entrance through which the unmanned aerial vehicle is able to pass and is for restraining the unmanned aerial vehicle;
      a first actuator that opens and closes a lid of the box structure; and
      a second actuator for moving the box structure along a first path from a standby position above the enclosure,
   the box structure includes the lid capable of opening and closing the entrance,
   the lid includes a first lid and a second lid,
   when the first lid and the second lid are closed, a hole is defined by a part of the first lid and a part of the second lid,
   the controller:
      controls the unmanned aerial vehicle to insert the unmanned transport vehicle into the box structure in a state in which the lid is open;
      controls the first actuator to close the first lid and the second lid after the unmanned transport vehicle is inserted in the box structure, wherein in a state in which the first lid and the second lid are closed, the second wire is inserted through the hole, the hole is smaller than the unmanned transport vehicle, and the unmanned transport vehicle is restrained by the box structure, unable to pass through the hole; and
      after the first lid and the second lid have been closed, actuates the first winch and a second winch connected to the package carriage and capable of reeling out and in the second wire, to adjust a length of the first wire and a length of the second wire and move the package carriage towards a location above the lid of the box structure.
<2> The system according to <1>, wherein
   the delivery reception box further includes a plurality of package compartments facing the first path, and
   after the package carriage has moved onto the lid of the box structure, the controller further controls the second actuator to move the package carriage on the box structure in front of one of the plurality of package compartments in order to move the package inside the box structure into the package compartment.
<3> The system according to <1> or <2>, wherein
   the controller further:
   after the package in the package carriage has been moved to the package compartment, controls the second actuator to move the box structure on which the package carriage is placed toward the standby position;
   after the box structure has moved to the standby position, actuates the first winch and the second winch to adjust a length of the first wire and a length of the second wire and move the package carriage towards the unmanned transport vehicle; and
   after the package carriage has moved towards the unmanned transport vehicle, controls the first actuator to open the first lid and the second lid to release the unmanned aerial vehicle from the box structure.
<4> The system according to any one of <1> to <3>, further including:
   a protective case for protecting the unmanned aerial vehicle, wherein
   the unmanned aerial vehicle is fixed to the protective case, and
   the unmanned aerial vehicle is connected to the second wire via the protective case.

(8) Below, features of the delivery reception box described based on the above embodiments are disclosed.

<1> A delivery reception box including:
   an enclosure including an opening for receiving a transported object transported by an unmanned transport vehicle; and
   a guide structure located above the opening, for guiding the transported object toward the opening, wherein
   within the delivery reception box is provided a transport space that extends vertically downward from the opening so as to span from the guide structure to the enclosure, and in which the transported object can be moved up and down via a wire extended from the unmanned transport vehicle, and
   in a view of the delivery reception box in a direction perpendicular to the vertical direction, the guide structure occupies a first region and a second region of the delivery reception box, the first region being a tapered region that narrows from up to down vertically, the second region being connected to the first region, located vertically below the first region, and having a curved surface shape that bulges towards the transport space.
<2> The delivery reception box according to <1>, wherein
   the curved surface shape is an arc shape that bulges towards the transport space.
<3> The delivery reception box according to <1> or <2>, wherein
   when the delivery reception box is viewed from a direction perpendicular to the vertical direction, the side surface of the first region of the guide structure is at an angle greater than or equal to 45° relative to the horizontal plane.
<4> The delivery reception box according to any one of <1> to <3>, further including:
   a transport body;
   a first actuator capable of moving the transport body in the horizontal direction; and
   a controller that controls the first actuator, wherein
   the transport body is capable of moving between a first position facing the transport space and a second position included in the transport space, by being actuated by the first actuator, and the transport body forms a package compartment in the first position, and
   the controller:
      when receiving the transported object from the unmanned transport vehicle, controls the first actuator to move the transport body from the first position to the second position; and
      after receiving the transported object, controls the first actuator to move the transport body from the second position to the first position.
<5> The delivery reception box according to any one of <1> to <4>, further including:
   a door that leads to the package compartment, wherein
   after detecting that a package entered through the door, the controller controls the first actuator to move the transport body from the first position to the second position, after which the package is collected by the unmanned transport vehicle.

(9) Below, features of the unmanned transport vehicle described based on the above embodiments are disclosed.

<1> An unmanned transport vehicle including:
   a first main body;
   at least one first connecting device capable of suspending the first main body from a rail located above the first main body;
   a second main body located below the first main body;
   a second connecting device that rotatably connects the first main body and the second main body; and
   a damper that is connected to the first main body and the second main body and absorbs vibrations occurring between the first main body and the second main body.
<2> The unmanned transport vehicle according to <1>, wherein
   the damper is slidably connected to the first main body.

(10) Below, features of the unmanned transport vehicle described based on the above embodiments are disclosed.

<1>
An unmanned transport vehicle including:
a main body;
at least one first connecting device capable of suspending the main body from a rail located above the main body;
a first actuator that rotates the main body with respect to the rail;
a first slider configured to be extendable in a first direction along a lengthwise direction of the main body, with respect to the main body;
a second slider configured to be extendable in a direction opposite to the first direction, with respect to the main body;
a second actuator that actuates the first slider;
a third actuator that actuates the second slider; and
a controller that controls the first actuator, the second actuator, and the third actuator, wherein
when a first package carriage configured to accommodate a first package is connected to the first slider and a second package carriage configured to accommodate a second package is connected to the second slider, the controller controls the second actuator and the third actuator so as to extend the first slider and the second slider in such a manner that a rotational moment generated by the first slider and a rotational moment generated by the second slider offset each other.

(11) Below, features of the unmanned transport vehicle described based on the above embodiments are disclosed.

<1>
A control method for an unmanned transport vehicle, the control method including:
transporting the unmanned transport vehicle towards the delivery reception device after obtaining any one of the following: (1) a signal indicating that a user has received the product at the delivery reception device and a signal transmitted from the delivery reception device indicating that an empty box has been returned; (2) a signal indicating that the user has canceled receipt of the product; or (3) a signal indicating that a receipt period or a receipt time for the user to receive the product has passed.

(12) Below, features of the control method described based on the above embodiments are disclosed.

<1> A control method for an information terminal connected to a management system used in a service for delivering a product from a collection device using an unmanned transport vehicle, the control method including:
   displaying, on a display of the information terminal, an image including a candidate for a time and a location for a user to request collection; and
   transmitting first information including a first time and a first place selected by the user to the management system.
<2> A control method in a management system used in a service for delivering a product from a collection device using an unmanned transport vehicle, the control method including:
   receiving, from the information terminal, information including a first time and a first place selected by the user; and
   based on the information including the first time and the first place, transmitting an instruction to the unmanned transport vehicle that instructs the unmanned transport vehicle to arrive at the first place by the first time.

(13) Below, features of the unmanned transport vehicle described based on the above embodiments are disclosed.

<1> A showcase including:
   a plurality of shelves forming a plurality of levels in a vertical direction;
   a first actuator that moves a first shelf included in the plurality of shelves in the horizontal direction; and
   a controller, wherein
   the first shelf is capable of moving between a first position and a second position that is forward of the first position by being actuated by the first actuator, and
   when the controller obtains a signal instructing that the first shelf is to be moved forward, the controller controls the first actuator to move the first shelf from the first position to the second position.
<2> The showcase according to <1>, further including:
   a first curtain that extends from an upper area to a lower area of the showcase;
   a second curtain that extends from the lower area to the upper area of the showcase; and
   a second actuator that actuates the first curtain and the second curtain, wherein
   an opening of the showcase is covered by a bottom end of the first curtain and a top end of the second curtain contacting each other,
   when the opening of the showcase is covered, if the controller obtains a signal instructing that the first shelf is to be moved forward, the controller controls the second actuator to form a first gap between the bottom end of the first curtain and the top end of the second curtain, and controls the first actuator to move the first shelf from a first position to a second position through the first gap.

(14) Below, features of the unmanned transport vehicle described based on the above embodiments are disclosed.

<1> A showcase system including:
   a plurality of shelves forming a plurality of levels in a vertical direction;
   a first actuator that moves a first shelf included in the plurality of shelves in the horizontal direction;
   a displacement portion that can lift a target product, which is one or more products placed on the first shelf, and change a position of the target product;
   an arm actuator that actuates the displacement portion; and
   a controller, wherein
   the first shelf is capable of moving between a first position and a second position that is forward of the first position by being actuated by the first actuator, and
   when the controller obtains a signal instructing to remove a first product on the first shelf, the controller (1) controls the first actuator to move the first shelf from the first position to the second position, and (2) controls the arm actuator to displace the position of the first product on the first shelf using the displacement portion.
<2> The showcase system according to <1>, further including:
   a first curtain that extends from an upper area to a lower area of the showcase;
   a second curtain that extends from the lower area to the upper area of the showcase; and
   a second actuator that actuates the first curtain and the second curtain, wherein
   the opening of the showcase is covered by a bottom end of the first curtain and a top end of the second curtain contacting each other,
   when the opening of the showcase is covered, if the controller obtains a signal instructing to remove the first product on the first shelf, the controller (1) controls the second actuator to form a first gap between the bottom end of the first curtain and the top end of the second curtain, (2) controls the first actuator to move the first shelf from the first position to the second position through the first gap, and (3) controls the arm actuator to displace the position of the first product on the first shelf using the displacement portion.
<3> The showcase system according to <1> or <2>, wherein
   the displacement portion includes a gripping portion capable of holding the first product by pinching the first product, a suction portion capable of holding the first product by sucking in air, or a magnetic portion capable of holding the first product by attracting the first product through magnetic force.

(15) Below, features of the transport vehicle described based on the above embodiments are disclosed.

### <Technique 1>

A transport vehicle that transports a package, the transport vehicle including:
a first arm;
a second arm;
a first wheel connected to the first arm;
a second wheel connected to the second arm;
at least one actuator that actuates the first wheel, the second wheel, the first arm, and the second arm; and
a controller, wherein
when the transport vehicle is slidably hung from a first rail via the first wheel and the second wheel, the controller controls the at least one actuator to disengage the first wheel from the first rail and place the first wheel on a second rail, and disengage the second wheel from the first rail and place the second wheel on the second rail.

### <Technique 2>

The transport vehicle according to Technique 1, wherein
the first arm is capable of moving in an up-down direction and capable of rotating around an axis extending in a lengthwise direction of the first arm by being actuated by the at least one actuator, and
the second arm is capable of moving in an up-down direction and capable of rotating around an axis extending in a lengthwise direction of the second arm by being actuated by the at least one actuator.

### <Technique 3>

The transport vehicle according to Technique 1 or 2, wherein
the first rail extends horizontally along an exterior wall of a facility, and
the second rail extends along a ceiling of a balcony of the facility in a direction that perpendicularly intersects a lengthwise direction of the first rail.

### <Technique 4>

The transport vehicle according to any one of Techniques 1 to 3, wherein
when the transport vehicle is slidably hung from the first rail via the first wheel and the second wheel, the controller controls the at least one actuator to, after disengaging the second wheel from the first rail, rotate the first wheel on the first rail to move the second wheel closer to the second rail and place the second wheel on the second rail.

### <Technique 5>

The transport vehicle according to any one of Techniques 1 to 4, further including:
a first package carriage connected to a first wire;
a second package carriage connected to a second wire;
a first winch capable of reeling out and in the first wire; and
a second winch capable of reeling out and in the second wire, wherein
the controller:
   after the transport vehicle moves along the second rail and arrives at a first location, controls the first winch to (i) reel out the first wire to lower and deliver a first package inside the first package carriage into a delivery box, or collect the first package inside the delivery box into the first package carriage, and (ii) reel in the first wire to return the first package carriage to the first location and position the first package carriage above the delivery box; and
   after delivering or collecting the first package and after the transport vehicle moves along the second rail and arrives at a second location, controls the second winch to (i) reel out the second wire to lower and deliver a second package into the delivery box, or collect the second package inside the delivery box into the second package carriage, and (ii) reel in the second wire to return the second package carriage to the second location and position the second package carriage above the delivery box.

### <Technique 6>

The transport vehicle according to any one of Techniques 1 to 4, further including:
a vehicle main body;
a first package carriage connected to the vehicle main body via a first wire;
a second package carriage connected to the vehicle main body via a second wire;
a rotary member that rotates the vehicle main body;
a first winch capable of reeling out and in the first wire; and
a second winch capable of reeling out and in the second wire, wherein
the controller:
   after the transport vehicle moves along the second rail and arrives at a first location, controls the first winch to (i) reel out the first wire to lower and deliver a first package inside the first package carriage into a delivery box, or collect the first package inside the delivery box into the first package carriage, and (ii) reel in the first wire to return the first package carriage to the first location and position the first package carriage above the delivery box;
   after delivering or collecting the first package, controls the rotary member to rotate the vehicle main body; and
   after rotating the vehicle main body and after the second package carriage is positioned above the delivery box, controls the second winch to reel out the second wire to lower and deliver a second package into the delivery box, or collect the second package inside the delivery box into the second package carriage.

### <Technique 7>

The transport vehicle according to Technique 5 or 6, wherein
the delivery box is arranged at a location other than an emergency space located in front of an emergency door on a balcony of a facility.

(16) Below, features of the transport vehicle described based on the above embodiments are disclosed.

### <Technique 1>

A transport vehicle that transports a package, the transport vehicle including:
a first arm;
a second arm;
a first wheel connected to the first arm;
a second wheel connected to the second arm;
a vehicle main body connected to the first arm and the second arm;
a first slider that extends with respect to the vehicle main body;
a second slider that extends with respect to the vehicle main body;
a first package carriage connected to the first slider via a first wire;
a second package carriage connected to the second slider via a second wire;
at least one actuator that actuates the first wheel, the second wheel, the first arm, the second arm, the first slider, and the second slider; and
a controller, wherein
the first arm is capable of moving in an up-down direction relative to the vehicle main body by being actuated by the at least one actuator,
the second arm is capable of rotating with respect to the vehicle main body around an axis extending in the lengthwise direction of the second arm by being actuated by the at least one actuator, and
when the transport vehicle is slidably suspended from the first rail by the first wheel and the second wheel, the controller controls the at least one actuator to disengage the first wheel from the first rail, and when the transport vehicle is suspended from the first rail by only the second wheel, rotates the second arm with respect to the vehicle main body around an axis extending in the lengthwise direction of the second arm, and after rotating the second arm with respect to the vehicle main body, extends the first slider and the second slider.

(17) Below, features of the elevator described based on the above embodiments are disclosed.

### <Technique 1>

An elevator for moving a transport vehicle on a first rail, the elevator including:
a first member with a cross-section that forms a convex shape protruding upward, and extends in a first direction;
at least one actuator that moves the first member in a vertical direction or a horizontal direction; and
a controller, wherein
the transport vehicle includes:
   an arm; and
   a wheel connected to the arm,
the controller:
   after the transport vehicle is hung from the first member by the wheel, controls the at least one actuator to move the first member and place it so as to cover the first rail; and
   after the wheel rotates and moves from the first member onto the first rail and the transport vehicle is hung from the first rail by the wheel, controls the at least one actuator to move the first member away from the first rail.

### <Technique 2>

The elevator according to Technique 1, wherein
the first member further includes at least one stopper,
the at least one stopper can transition between a first state in which the wheel is prevented from moving in the first direction on the first member, and a second state in which the wheel is allowed to move in the first direction on the first member,
after the transport vehicle is hung from the first member by the wheel, and before moving the first member, the at least one stopper is placed in the first state, and
after the first member is placed on the first rail, the stopper is placed in the second state.

### <Technique 3>

The elevator according to Technique 1 or 2, wherein
the transport vehicle further includes a braking mechanism capable of stopping the rotation of the wheel,
after the transport vehicle is hung from the first member by the wheel, and before moving the first member, the rotation of the wheel is stopped by the braking mechanism, and
after the first member, on which the wheel is riding, is placed on the first rail, the stopping of the rotation of the wheel by the braking mechanism is released.

(18) Below, features of the transport vehicle described based on the above embodiments are disclosed.

### <Technique 1>

A transport vehicle that transports a package, the transport vehicle including:
a package carriage connected to a first wire;
a first winch capable of reeling out and in the first wire;
a first first flap, a first second flap, a second first flap, and a second second flap each connected to an inner wall of the package carriage;
at least one actuator that actuates the first first flap, the first second flap, the second first flap, and the second second flap; and
a controller, wherein
the second first flap is positioned above the first first flap,
the second second flap is positioned above the first second flap,
the first first flap and the first second flap can transition between a first support state in which the package that has entered the package carriage is supported by the first first flap and the first second flap, and a first release state in which the package is not supported by the first first flap and the first second flap, and
the second first flap and the second second flap can transition between a second support state in which the package that has entered the package carriage is supported by the second first flap and the second second flap, and a second release state in which the package is not supported by the second first flap and the second second flap.

### <Technique 2>

The transport vehicle according to Technique 1, wherein
when the first package is supported by the first first flap and the first second flap, the second package positioned above the first package is supported by the second first flap and the second second flap, and the transport vehicle arrives above a first location for unloading the first package,
the controller:
   controls the first winch to reel out the first wire to place the package carriage at the first location;
   after placing the package carriage at the first location, controls the at least one actuator to transition a state of the first first flap and the first second flap from a first support state to a first release state and further transition a state of the second first flap and the second second flap from a second support state to a second release state to place the first package at the first location;
   after placing the first package at the first location, controls the first winch to reel in the first wire to move the package carriage upward to reach the first position;
   after the package carriage reaches the first position, controls the at least one actuator to transition the state of the first first flap and the first second flap from the first release state to the first support state to accommodate the second package in the package carriage by being supported by the first first flap and the first second flap;
   when the transport vehicle including the package carriage containing the second package arrives above a second location for unloading the second package, controls the first winch to reel out the first wire to place the package carriage at the second location; and
   after the package carriage is placed in the second location, controls the at least one actuator to transition the state of the first first flap and the first second flap from the first support state to the first release state to place the second package in the second location.

### <Technique 3>

The transport vehicle according to Technique 1, wherein
when the transport vehicle arrives above a third location for collecting the third package,
the controller:
   controls the first winch to reel out the first wire to cover the third package placed at the third location with the package carriage;
   after the package carriage is placed to cover the third package placed at the third location, controls the at least one actuator to transition the state of the first first flap and the first second flap from the first release state to a first support state to accommodate the third package in the package carriage by being supported by the first first flap and the first second flap;
   when the transport vehicle including the package carriage containing the third package arrives above a fourth location for collecting a fourth package, controls the first winch to reel out the first wire to position the package carriage above the fourth package placed at the fourth location;
   after the package carriage is positioned above the fourth package placed in the fourth location, controls the at least one actuator to transition the state of the first first flap and the first second flap from the first support state to the first release state to place the third package above the fourth package;
   after placing the third package above the fourth package, controls the first winch to reel out the first wire to move the package carriage downward to reach the second position; and
   after the package carriage reaches the second position, controls the at least one actuator to transition the state of the first first flap and the first second flap from the first release state to the first support state to accommodate the fourth package in the package carriage by being supported by the first first flap and the first second flap, and further transition the state of the second first flap and the second second flap from the second release state to the second support state to accommodate the third package in the package carriage by being supported by the second first flap and the second second flap.

(19) Below, features of the system or the like described based on the above embodiments are disclosed.

### <Technique 1>

A system including an unmanned transport vehicle, the system including:
the unmanned transport vehicle;
a first winch connected to the unmanned transport vehicle and capable of reeling out and in a wire;
a package carriage connected to the wire, for putting a package to be transported by the unmanned transport vehicle into; and
a controller, wherein
the package carriage includes an attitude control device including a flywheel that rotates around a rotary shaft extending in a vertical direction,
the package carriage includes an accommodation space for accommodating the package, and
the controller:
   obtains a sensing result from a sensor capable of detecting an attitude of the package carriage; and
   based on the sensing result obtained, controls rotation of the flywheel to rotate the package carriage around the rotary shaft and orient the package carriage to a target attitude.

### <Technique 2>

The system according to Technique 1, wherein
when viewed from above in the vertical direction, a position of the rotary shaft overlaps a position of the wire, and
in the package carriage, the attitude control device is located above the accommodation space.

### <Technique 3>

The system according to Technique 1 or 2, wherein
a position of the rotary shaft overlaps a position of the wire when viewed in the vertical direction from above, and
in the package carriage, the attitude control device is located below the accommodation space.

### <Technique 4>

The system according to any one of Techniques 1 to 3, wherein
the first winch is capable of extending the wire to a length at least five times a height of the unmanned transport vehicle.

### <Technique 5>

The system according to any one of Techniques 1 to 4, wherein
the unmanned transport vehicle transports the package carriage by traveling along a rail,
the unmanned transport vehicle further includes a support structure connected to the unmanned transport vehicle, for supporting the package carriage,
the unmanned transport vehicle and the package carriage are capable of transitioning between a first state in which the package carriage is supported by the support structure and a second state in which the package carriage is not supported by the support structure and is suspended by the wire, and
the unmanned transport vehicle and the package carriage are in the first state when the unmanned transport vehicle is traveling along the rail and in the second state when the package carriage is being lowered toward a destination point located vertically below the unmanned transport vehicle via the wire.

### <Technique 6>

The system according to Technique 5, wherein
the controller transitions the unmanned transport vehicle from the second state to the first state by controlling the first winch to reel in the wire, controlling the attitude control device to rotate the package carriage, and controlling the first winch to reel out the wire.

### <Technique 7>

The system according to Technique 5, wherein
the controller controls the first winch when the package carriage is in the second state to transition the package carriage from the second state to the first state.

### <Technique 8>

The system according to Technique 5, wherein
The support structure includes a first part and a second part,
the first part of the support structure and the second part of the support structure are a predetermined distance apart,
the package carriage includes a third part and a fourth part, and
the controller controls the first winch when the package carriage is in the second state to transition the package carriage to the first state by coupling the third part of the package carriage to the first part of the support structure and coupling the fourth part of the package carriage to the second part of the support structure.

### <Technique 9>

The system according to Technique 5, wherein
the support structure includes a first part and a second part,
the first part and the second part of the support structure are a predetermined length apart,
the package carriage includes a third part and a fourth part,
the third part and the fourth part of the package carriage are the predetermined length apart,
in the first state, the first part of the support structure and the third part of the package carriage are coupled and the second part of the support structure and the fourth part of the package carriage are coupled, and
to transition the unmanned transport vehicle and the package carriage to the first state, the controller (1) controls the first winch to reel in the wire until a length of the wire extending from the unmanned transport vehicle to the package carriage becomes a first length which positions the third part of the package carriage higher than the first part of the support structure and positions the fourth part of the package carriage higher than the second part of the support structure, (2) controls the attitude control device to rotate the package carriage to position the third part of the package carriage directly above the first part of the support structure and position the fourth part of the package carriage directly above the second part of the support structure, and (3) controls the first winch to reel out the wire to couple the third part of the package carriage to the first part of the support structure and couple the fourth part of the package carriage to the second part of the support structure.

### <Technique 10>

The system according to Technique 5, further including:
a first actuator for actuating the support structure, wherein
the support structure includes a first door structure and a second door structure that are pivotably connected to the unmanned transport vehicle,
the first door structure and the second door structure are transitionable between a first door state and a second door state by the first actuator being controlled,
the first door state corresponds to a state in which the first door structure and the second door structure have been pivoted close to the package carriage,
the second door state corresponds to a state in which the first door structure and the second door structure have been pivoted away from the package carriage, and
to transition the unmanned transport vehicle and the package carriage to the first state, the controller (1) controls the first winch to reel in the wire until a length of the wire extending from the unmanned transport vehicle to the package carriage becomes a second first length, (2) after the length of the wire is the second first length, controls the first actuator to transition the support structure from the second door state to the first door state, and (3) after the support structure is in the first door state, controls a motor of a winder to reel out the wire until the length of the wire extending from the unmanned transport vehicle to the package carriage becomes a second length longer than the second first length and the package carrier is supported via the first part of the first door structure located below the package carriage and the first part of the second door structure located below the package carriage.

### <Technique 11>

The system according to Technique 5, further including:
a first actuator for actuating the support structure, wherein
the support structure includes a first door structure and a second door structure that are pivotably connected to the unmanned transport vehicle,
the controller is configured to control the first actuator to transition the first door structure and the second door structure between a first door state and a second door state,
the first door state is a state in which the first door structure and the second door structure are capable of supporting the package carriage, and
the second door state is a state in which the package carriage is supported by the wire, and the first door structure and the second door structure are incapable of supporting the package carriage.

### <Technique 12>

The system according to Technique 10 or 11, wherein
the first door structure includes portion A extending in a first direction and portion B extending in a second direction, the portion B being fixed in a state incapable of pivoting with respect to the portion A,
when the first door structure is in the first door state, the first direction becomes approximately parallel to a vertical direction, and the second direction becomes approximately parallel to a horizontal direction, with the portion A of the first door structure positioned above the portion B,
the second door structure includes portion C extending in a third direction and portion D extending in a fourth direction, the portion D being fixed in a state incapable of pivoting with respect to the portion A, and
when the second door structure is in the first door state, the third direction becomes approximately parallel to a vertical direction, and the fourth direction becomes approximately parallel to a horizontal direction, with the portion C of the second door structure positioned above the portion D.

Thus, the first door structure includes portion A extending in the first direction and portion B extending in the second direction, and portions A and B are integrally fixed in a state incapable of pivoting with respect to each other. Furthermore, the second door structure includes portion C extending in the third direction and portion D extending in the fourth direction, and portions C and D are integrally fixed in a state incapable of pivoting with respect to each other.

Therefore, when the system is transporting the package carriage, even if power supply to the first actuator is cut off, since portion B of the first door structure and portion D of the second door structure are below the package carriage, it is possible to prevent the package carriage from falling.

### <Technique 13>

The system according to Technique 10 or 11, wherein
in the first door state, the controller controls the first actuator such that the first door structure and the second door structure sandwich both sides of the package carriage and support the lower surface of the package carriage.

### <Technique 14>

The system according to Technique 10 or 11, wherein
the first door structure includes portion A extending in a first direction and portion B extending in a second direction, the portion B being fixed in a state incapable of pivoting with respect to the portion A,
the second door structure includes portion C extending in a third direction and portion D extending in a fourth direction, the portion D being fixed in a state incapable of pivoting with respect to the portion A, and
in the first door state, the controller controls the first actuator such that the portion A and the portion C are arranged to sandwich the package carriage from both sides, and the portion B and the portion D are arranged below the package carriage.

### <Technique 15>

The system according to any one of Techniques 1 to 14, wherein
the unmanned transport vehicle transports the package by traveling along a rail,
the unmanned transport vehicle further includes:
   a wheel for traveling on the rail;
   an arm connected to a main body of the unmanned transport vehicle and the wheel; and
   a second actuator for actuating the arm, and
the unmanned transport vehicle is capable of transitioning between a first distance state and a second distance state via actuation of the second actuator, the first distance state being a state in which a distance between the main body and the rail is a first distance and the second distance state being a state in which the distance between the main body and the rail is a second distance greater than the first distance.

### <Technique 16>

The system according to Technique 15, wherein
while the unmanned transport vehicle is traveling, the second actuator is controlled to place the unmanned transport vehicle in the first distance state, and
while the unmanned transport vehicle is unloading the package, the second actuator is controlled to place the unmanned transport vehicle in the second distance state.

### <Technique 17>

The system according to any one of Techniques 1 to 16, further including:
a delivery reception box for receiving the package from the unmanned transport vehicle, wherein
the delivery reception box includes:
   an enclosure;
   a guide structure located at an upper part of the enclosure, for receiving the package in the package carriage that descends via the wire from the unmanned transport vehicle located above the delivery reception box; and
   a third actuator for moving the guide structure, and
when the package carriage and the package descend via the wire, the third actuator is controlled to move the guide structure to cause the package carriage and the guide structure to overlap in a view from above in the vertical direction, based on position information indicating a position of the package carriage.

### <Technique 18>

The system according to any one of Techniques 1 to 17, further including:
a delivery reception box for receiving the package from the unmanned transport vehicle, wherein
the delivery reception box includes:
   an enclosure including a first floor for placing the package;
   a second floor located in the enclosure, for placing the package;
   a first movement mechanism located in the enclosure and including an actuator for moving the package placed on the first floor; and
   a second movement mechanism that is located in the enclosure, includes an actuator, and moves the second floor along a path via actuation of the actuator,
after the package in the package carriage that descends via the wire from the unmanned transport vehicle located above the delivery reception box is placed on the first floor, the actuator of the first movement mechanism is controlled to move the package from the first floor to the second floor, and
after the package has been moved to the second floor, the actuator of the second movement mechanism is controlled to move the second floor along the path.

### <Technique 19>

The system according to Technique 18, wherein
in a view from above in the vertical direction, the enclosure includes a first first side, a first second side adjacent to the first first side, a first third side adjacent to the first second side, and a first fourth side adjacent to the first third side and the first first side, and
the enclosure includes a first flap connected to the first first side and configured to open and close an opening of the enclosure, and a second flap connected to the first third side and configured to open and close the opening of the enclosure.

### <Technique 20>

The system according to Technique 19, wherein
the first first side and the first third side have a same length,
the first second side and the first fourth side have a same length,
the first first side is longer than the first second side,
the delivery reception box is arranged facing a road,
in a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road,
the first flap includes a second first side and a second second side adjacent to the second first side,
the second first side is connected to the first first side,
the second flap includes a third first side and a third second side adjacent to the third first side,
the third first side is connected to the first third side, and
the second second side is longer than the third second side.

### <Technique 21>

The system according to any one of Techniques 1 to 20, further including:
a delivery reception box for receiving the package from the unmanned transport vehicle, wherein
the delivery reception box includes:
   an enclosure; and
   a carriage movement mechanism that is located in the enclosure, includes a carriage structure and an actuator, and moves the carriage structure along a path by actuation by the actuator,
when the package carriage and the package descend via the wire, the actuator of the carriage movement mechanism is controlled to move the carriage structure to cause the package carriage and the carriage structure to overlap in a view from above in the vertical direction, based on position information indicating a position of the package carriage, and
after the package has been moved from the package carriage to the carriage structure, the actuator of the carriage movement mechanism is controlled to move the carriage structure along the path.

### <Technique 22>

The system according to any one of Techniques 1 to 21, wherein
the target attitude includes an attitude in which an up-down direction parallel to the vertical direction and an up-down direction of the package carriage match.

### <Technique 23>

The system according to any one of Techniques 1 to 22, further including:
a delivery reception box, wherein
the delivery reception box includes:
   an enclosure including an opening for receiving a transported object transported by the unmanned transport vehicle; and
   a guide structure located above the opening, for guiding the transported object toward the opening,
within the delivery reception box is provided a transport space that extends vertically downward from the opening and in which the transported object can be moved up and down via the wire extended from the unmanned transport vehicle, and
in a view of the delivery reception box in a direction perpendicular to the vertical direction, the guide structure occupies a first region and a second region of the delivery reception box, the first region being a tapered region that narrows from up to down vertically, the second region being connected to the first region, located vertically below the first region, and having an arc shape that bulges towards the transport space.

### <Technique 24>

The system according to any one of Techniques 1 to 23, further including:
a second winch connected to the package carriage and capable of reeling out and in a second wire; and
an unmanned aerial vehicle connected to the second wire.

### <Technique 25>

The system according to any one of Techniques 1 to 24, further including:
an unmanned aerial vehicle connected to a second wire; and
a delivery reception box, wherein
the delivery reception box includes:
   an enclosure;
   a box structure that defines an entrance through which the unmanned aerial vehicle is able to pass and is for restraining the unmanned aerial vehicle;
   a first actuator that opens and closes a lid of the box structure; and
   a second actuator for moving the box structure along a first path from a standby position above the enclosure,
the box structure includes a lid capable of opening and closing the entrance,
the lid includes a first lid and a second lid,
when the first lid and the second lid are closed, a hole is defined by a part of the first lid and a part of the second lid, and
the controller:
   controls the unmanned aerial vehicle to insert the unmanned transport vehicle into the box structure in a state in which the lid is open;
   controls the first actuator to close the first lid and the second lid after the unmanned transport vehicle is inserted in the box structure, wherein in a state in which the first lid and the second lid are closed, the second wire is inserted through the hole, the hole is smaller than the unmanned transport vehicle, and the unmanned transport vehicle is restrained by the box structure, unable to pass through the hole; and
   after the first lid and the second lid have been closed, actuates the first winch and a second winch connected to the package carriage and capable of reeling out and in the second wire, to adjust a length of the first wire and a length of the second wire and move the package carriage towards a location above the lid of the box structure.

Although a lifting system has been described based on embodiments, the present disclosure is not limited to the embodiments. Various modifications to the present embodiment that may be conceived by those skilled in the art, as well as embodiments resulting from combinations of elements from different embodiments, may be included within the scope of one or more aspects.

### [Industrial Applicability]

The present disclosure is applicable to, for example, a package delivery system implemented via an unmanned aerial vehicle in an urban environment.

### [Reference Signs List]

7a first rail
7b second rail
3400, 3400a, 3400b, 3400c transport vehicle
3401 vehicle main body
3403 emergency door
3403a emergency space
3405 delivery box
3411 first arm
3411a first wheel
3412 second arm
3412a second wheel
3413 arm actuator (actuator)
3415 roller actuation motor (actuator)
3419 rotary member
3420 control processor (controller)
3434 controller
3421 first package carriage
3421a first winch
3421bfirst wire
3422 second package carriage
3422bsecond wire
3422a second winch

## Claims

1. A transport vehicle that transports a package, the transport vehicle comprising:
a first arm;
a second arm;
a first wheel connected to the first arm;
a second wheel connected to the second arm;
at least one actuator that actuates the first wheel, the second wheel, the first arm, and the second arm; and
a controller, wherein
when the transport vehicle is slidably hung from a first rail via the first wheel and the second wheel, the controller controls the at least one actuator to disengage the first wheel from the first rail and place the first wheel on a second rail, and disengage the second wheel from the first rail and place the second wheel on the second rail.

2. The transport vehicle according to claim 1, wherein
the first arm is capable of moving in an up-down direction and capable of rotating around an axis extending in a lengthwise direction of the first arm by being actuated by the at least one actuator, and
the second arm is capable of moving in an up-down direction and capable of rotating around an axis extending in a lengthwise direction of the second arm by being actuated by the at least one actuator.

3. The transport vehicle according to claim 1 or 2, wherein
the first rail extends horizontally along an exterior wall of a facility, and
the second rail extends along a ceiling of a balcony of the facility in a direction that perpendicularly intersects a lengthwise direction of the first rail.

4. The transport vehicle according to claim 1 or 2, wherein
when the transport vehicle is slidably hung from the first rail via the first wheel and the second wheel, the controller controls the at least one actuator to, after disengaging the second wheel from the first rail, rotate the first wheel on the first rail to move the second wheel closer to the second rail and place the second wheel on the second rail.

5. The transport vehicle according to claim 1 or 2, further comprising:
a first package carriage connected to a first wire;
a second package carriage connected to a second wire;
a first winch capable of reeling out and in the first wire; and
a second winch capable of reeling out and in the second wire, wherein
the controller:
after the transport vehicle moves along the second rail and arrives at a first location, controls the first winch to (i) reel out the first wire to lower and deliver a first package inside the first package carriage into a delivery box, or collect the first package inside the delivery box into the first package carriage, and (ii) reel in the first wire to return the first package carriage to the first location and position the first package carriage above the delivery box; and
after delivering or collecting the first package and after the transport vehicle moves along the second rail and arrives at a second location, controls the second winch to (i) reel out the second wire to lower and deliver a second package into the delivery box, or collect the second package inside the delivery box into the second package carriage, and (ii) reel in the second wire to return the second package carriage to the second location and position the second package carriage above the delivery box.

6. The transport vehicle according to claim 1 or 2, further comprising:
a vehicle main body;
a first package carriage connected to the vehicle main body via a first wire;
a second package carriage connected to the vehicle main body via a second wire;
a rotary member that rotates the vehicle main body;
a first winch capable of reeling out and in the first wire; and
a second winch capable of reeling out and in the second wire, wherein
the controller:
after the transport vehicle moves along the second rail and arrives at a first location, controls the first winch to (i) reel out the first wire to lower and deliver a first package inside the first package carriage into a delivery box, or collect the first package inside the delivery box into the first package carriage, and (ii) reel in the first wire to return the first package carriage to the first location and position the first package carriage above the delivery box;
after delivering or collecting the first package, controls the rotary member to rotate the vehicle main body; and
after rotating the vehicle main body and after the second package carriage is positioned above the delivery box, controls the second winch to reel out the second wire to lower and deliver a second package into the delivery box, or collect the second package inside the delivery box into the second package carriage.

7. The transport vehicle according to claim 5, wherein
the delivery box is arranged at a location other than an emergency space located in front of an emergency door on a balcony of a facility.
